(19) Europäisches Patentamt
European Patent Office
Office européen des brevets

(11) EP 4 632 459 A2

(12) **EUROPEAN PATENT APPLICATION**

(43) Date of publication:
**15.10.2025 Bulletin 2025/42**

(21) Application number: **25164496.9**

(22) Date of filing: **18.03.2025**

(51) International Patent Classification (IPC):
***G02B 13/00*** *(2006.01)* ***G02B 26/08*** *(2006.01)*
***G02B 9/64*** *(2006.01)* ***G02B 13/18*** *(2006.01)*
***G02B 15/14*** *(2006.01)* ***G02B 15/06*** *(2006.01)*
***G03B 17/17*** *(2021.01)* ***G03B 3/06*** *(2021.01)*
*G02B 15/15 (2006.01)* *G02B 5/04 (2006.01)*

(52) Cooperative Patent Classification (CPC):
**G02B 13/0065; G02B 9/64; G02B 13/0045; G02B 13/009; G02B 13/18; G02B 15/06; G02B 15/143; G02B 26/0816; G03B 3/06; G03B 17/17;** G02B 5/04; G02B 15/15

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2024 US 202463568515 P**
**31.05.2024 TW 113120360**

(71) Applicant: **LARGAN PRECISION CO., LTD.**
**Taichung City 408 (TW)**

(72) Inventors:
- **KE, Yu-Chun**
**408 Taichung City (TW)**
- **SHIH, Yu-Han**
**408 Taichung City (TW)**

(74) Representative: **Jakelski & Althoff Patentanwälte PartG mbB**
**Patentanwälte Partnerschaftsgesellschaft**
**Mollenbachstraße 37**
**71229 Leonberg (DE)**

(54) **IMAGE CAPTURING OPTICAL SYSTEM, IMAGING APPARATUS AND ELECTRONIC DEVICE**

(57) An image capturing optical system includes an image capturing optical lens assembly and at least two opening holes, respectively corresponding to a first mode and a second mode. The image capturing optical lens assembly includes, in order from an object side to an image side, an object-side lens group, a first light path folding element and a joint lens group. The object-side lens group is a first mode object-side lens group or a second mode object-side lens group, the joint lens group sequentially includes a middle lens group and a last lens group.

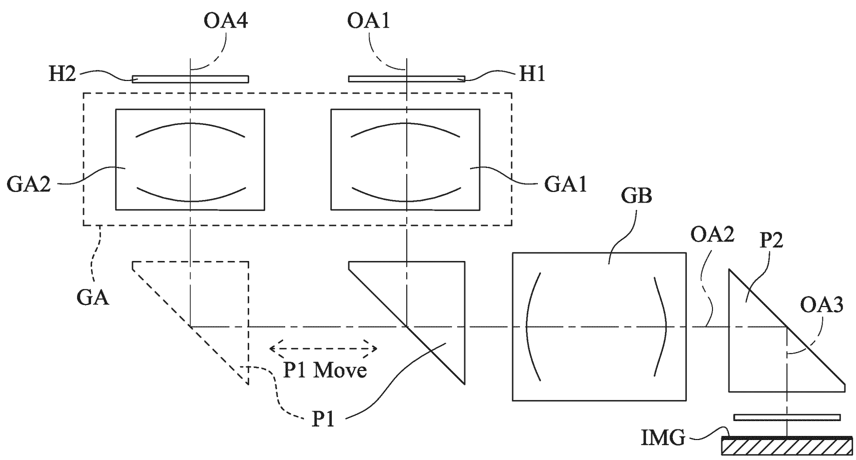


Fig. 14A

EP 4 632 459 A2

## Description

## BACKGROUND

### Technical Field

The present disclosure relates to an image capturing optical system and an imaging apparatus. More particularly, the present disclosure relates to an image capturing optical system and an imaging apparatus with compact size and applicable to electronic devices.

### Description of Related Art

With recent technology of semiconductor process advances, performances of image sensors are enhanced, so that the smaller pixel size can be achieved. Therefore, optical lens assemblies with high image quality have become an indispensable part of many modern electronics. With rapid developments of technology, applications of the electronic devices equipped with optical lens assemblies become wider, and there is a bigger variety of requirements for the optical lens assemblies. However, in a conventional optical lens assembly, it is hard to balance among image quality, sensitivity, aperture size, volume or field of view. Therefore, the present disclosure provides an optical lens assembly with high image quality to meet the requirements.

In recent years, with the demands of compact electronic devices, conventional photographing lens assembly is unable to satisfy both requirements of high-end specification and compactness, especially the micro lens assembly with a large aperture stop or a telephoto feature. The conventional telephoto lens assemblies cannot satisfy the requirements (due to the excessive total track length, the small aperture stop, the poor image quality or lacking of compactness), so that the arrangements with different optical properties or the ability to fold the optical axis are needed. Due to the thickness limitations of electronic devices, lens barrels or lens elements of some optical lens assemblies will be cut to reduce the single-axis length, which is favorable for saving the module space. In addition, reflective elements can be used to provide different optical paths for the system, which gives the optical lens assembly more flexible spaces to perform the telephoto effect of long focal length.

## SUMMARY

According to one aspect of the present disclosure, an image capturing optical system includes an image capturing optical lens assembly and at least two opening holes, respectively corresponding to a first mode and a second mode. The image capturing optical lens assembly includes, in order from an object side to an image side, an object-side lens group, a first light path folding element and a joint lens group, wherein the object-side lens group is a first mode object-side lens group or a second mode object-side lens group, the joint lens group sequentially includes a middle lens group and a last lens group. When the image capturing optical lens assembly in the first mode, the light is received by one of the at least two opening holes, and the image capturing optical lens assembly includes, in order along an optical path, the first mode object-side lens group, the first light path folding element and the joint lens group. When the image capturing optical lens assembly is in the second mode, the light is received by another one of the at least two opening holes, and the image capturing optical lens assembly includes, in order along the optical path, the second mode object-side lens group, the first light path folding element and the joint lens group. The first light path folding element moves along the optical path, which makes the image capturing optical lens assembly switch between the first mode and the second mode. The first mode object-side lens group, the second mode object-side lens group, the middle lens group and the last lens group all include at least one lens element, each of the at least one lens element has an object-side surface facing toward the object side and an image-side surface facing toward the image side. At least two of the lens elements in the image capturing optical lens assembly are preferably made of plastic material.

According to the image capturing optical system of the foregoing aspect, at least one of the first mode and the second mode can have a plurality of capturing states, the plurality of capturing states can respectively capture images at a distance longer than an object distance of 1000 mm and within an object distance of 350 mm, the lens element of the image capturing optical lens assembly closest to an image surface can include at least one inflection point.

According to the image capturing optical system of the foregoing aspect, there can be without additional one or more lens elements inserted between the joint lens group and an image surface; when an object distance is set as a capturing state of infinite, the image capturing optical lens assembly is switch between the first mode and the second mode, a moving distance along the optical path of the first light path folding element related to the last lens group is TPM12, and an axial length in the first light path folding element is CTP1, the following condition can be satisfied: $0.65 < TPM12/CTP1 < 2.70$.

According to the image capturing optical system of the foregoing aspect, when a maximum image height of the image capturing optical lens assembly in the first mode is ImgH1, and a maximum image height of the image capturing optical lens assembly in the second mode is ImgH2, the following condition can be satisfied: 1.50 < ImgH1/ImgH2 < 3.00.

According to the image capturing optical system of the foregoing aspect, there can be a second light path folding element between the last lens group and an image surface, a maximum lens element number of the first mode object-side lens group can be two, a maximum lens element number of the second mode object-side lens group can be three, a lens element number of the joint lens group can be six.

According to the image capturing optical system of the foregoing aspect, the lens element of the image capturing optical lens assembly closest to the object side can be a positive lens element, the lens element of the joint lens group closest to the object side can be a positive lens element, a difference between maximum field of views of the first mode and the second mode can be at least 2.0 times or more than 2.0 times.

According to the image capturing optical system of the foregoing aspect, the first mode object-side lens group and the second mode object-side lens group can be both fixed related to the last lens group, the middle lens group can move along the optical path related to the last lens group.

According to the image capturing optical system of the foregoing aspect, in the first mode and the second mode, when an object distance is set as a capturing state of infinite, a sum of three values of a total focal length of the image capturing optical lens assembly respectively divided by focal lengths of the three lens elements closest to an image surface is ΣPGn, the following condition can be satisfied: -5.00 < ΣPGn < 1.80.

According to the image capturing optical system of the foregoing aspect, the first mode and the second mode can use the same image sensor, the lens element of the image capturing optical lens assembly closest to an image surface can be a negative lens element.

According to the image capturing optical system of the foregoing aspect, at least one of the lens elements in the image capturing optical lens assembly can include at least one critical point; when the image capturing optical lens assembly is in a single mode, an axial distance between a lens element surface of the object-side lens group closest to the object side and a lens element surface of the object-side lens group closest to the image side is DGA, the following condition can be satisfied: DGA < 4.50 mm.

According to the image capturing optical system of the foregoing aspect, at least three of the lens elements in the image capturing optical lens assembly can be made of plastic material; in all modes and all states of the image capturing optical lens assembly, when a maximum of axial distances between a lens element surface closest to the object side to an image surface is TLmax, in all central thicknesses of all the lens elements in the image capturing optical lens assembly, a maximum value of lens element central thickness is CTmax, and in all modes and all states of the image capturing optical lens assembly, a minimum of optical effective radii of the lens element surface closest to the object side is YGAR1min, the following conditions can be satisfied: TLmax < 80 mm; CTmax < 3.0 mm; and 3.80 mm < YGAR1min.

According to the image capturing optical system of the foregoing aspect, the first light path folding element and the second light path folding element can be both prisms, there can be an air gap along an optical axis between adjacent two of the lens elements in the image capturing optical lens assembly.

According to another aspect of the present disclosure, an imaging apparatus includes the image capturing optical system of the aforementioned aspect and an image sensor, wherein the image sensor is disposed on an image surface of the image capturing optical system.

According to one another aspect of the present disclosure, an electronic device includes the imaging apparatus of the aforementioned aspect.

According to still another aspect of the present disclosure, an image capturing optical system includes an image capturing optical lens assembly, respectively corresponding to a first mode and a second mode. The image capturing optical lens assembly includes, in order from an object side to an image side, an object-side lens group and a joint lens group, wherein the object-side lens group is a first mode object-side lens group or a second mode object-side lens group, the joint lens group sequentially includes a middle lens group and a last lens group. When the image capturing optical lens assembly is in the first mode, there are, in order along an optical path, the first mode object-side lens group and the joint lens group. When the image capturing optical lens assembly is in the second mode, there are, in order along the optical path, the second mode object-side lens group and the joint lens group. The first mode object-side lens group, the second mode object-side lens group, the middle lens group and the last lens group all include at least one lens element, each of the at least one lens element has an object-side surface facing toward the object side and an image-side surface facing toward the image side. At least two of the lens elements in the image capturing optical lens assembly are preferably made of plastic material. A maximum lens element number of the first mode object-side lens group is preferably two, a maximum lens element number of the second mode object-side lens group is preferably two, a lens element number of the joint lens group is preferably six, the six lens elements are sequentially a first lens element, a second lens element, a third lens element, a fourth lens element, a fifth lens element and a sixth lens element. When a central thickness of the first lens element is CT1, a central thickness of the fifth lens element is CT5, and an axial distance between the first lens element and the second lens element is T12, the following condition is preferably satisfied: 1.60 < (CT1+T12)/CT5 < 11.0.

According to the image capturing optical system of the foregoing aspect, the lens element of the image capturing optical lens assembly closest to the object side can be a positive lens element, the fourth lens element can have negative refractive power, the image-side surface of the second lens element can be concave.

According to the image capturing optical system of the foregoing aspect, the image capturing optical lens assembly can only include the object-side lens group and the joint lens group; when the image capturing optical lens assembly is in a single mode, an axial distance between a lens element surface of the object-side lens group closest to the image side and a lens element surface of the joint lens group closest to the object side is TGAB, and in the joint lens group, an axial distance between a lens element surface closest to the object side and a lens element surface closest to the image side is DGB, the following condition can be satisfied: $0.75 < TGAB/DGB < 4.0$.

According to the image capturing optical system of the foregoing aspect, when a refractive index of the fifth lens element at a d-line is N5, a focal length of the first lens element is f1, a focal length of the second lens element is f2, and a focal length of the fourth lens element is f4, the following conditions can be satisfied: $1.20 \leq N5 \leq 1.65$; and $0.80 < (|f1|+|f2|)/|f4| < 2.0$.

According to the image capturing optical system of the foregoing aspect, when the central thickness of the first lens element is CT1, and a central thickness of the sixth lens element is CT6, the following condition can be satisfied: $0.35 < CT1/CT6 < 2.20$.

According to the image capturing optical system of the foregoing aspect, when the image capturing optical lens assembly is in a single mode, an axial distance between a lens element surface of the object-side lens group closest to the object side and a lens element surface of the object-side lens group closest to the image side is DGA, and in the first mode and the second mode, the central thickness of the first lens element is CT1, the following condition can be satisfied: $0.90 < DGA/CT1 < 3.00$.

According to the image capturing optical system of the foregoing aspect, the lens element of the image capturing optical lens assembly closest to an image surface can include at least one inflection point, the middle lens group sequentially can include one positive lens element, one negative lens element and another one positive lens element.

According to the image capturing optical system of the foregoing aspect, the last lens group can sequentially include a negative lens element and another one lens element, and there can be without additional one or more lens elements inserted between the last lens group and an image surface; the fifth lens element can have at least one inflection point; when a refractive index of the first lens element at a d-line is N1, a refractive index of the fifth lens element at the d-line is N5, an Abbe number of the first lens element is V1, and an Abbe number of the fifth lens element is V5, the following condition can be satisfied: $0.20 < 10 \times (N1/V1+N5/V5) < 1.35$.

According to the image capturing optical system of the foregoing aspect, between the object-side lens group and the joint lens group can have a first light path folding element, the first light path folding element can be in a way of rotating or a way of moving along the optical path to make the image capturing optical lens assembly switch between the first mode and the second mode.

According to the image capturing optical system of the foregoing aspect, when the axial distance between the first lens element and the second lens element is T12, and a focal length of the first lens element is f1, a focal length of the fourth lens element is f4, the following conditions can be satisfied: $0.08 < |10 \times T12/f4| < 1.50$; and $-1.20 < f1/f4 < 0.00$.

According to the image capturing optical system of the foregoing aspect, at least one of the first mode and the second mode can have a plurality of capturing states, the plurality of capturing states can respectively capture images at a distance longer than an object distance of 1000 mm and within an object distance of 250 mm.

According to the image capturing optical system of the foregoing aspect, the image-side surface of the third lens element can be convex; the first mode object-side lens group and the second mode object-side lens group can be both fixed related to the last lens group, the middle lens group can move along the optical path related to the last lens group.

According to the image capturing optical system of the foregoing aspect, a difference between maximum field of views of the first mode and the second mode can be at least 2.0 times or more than 2.0 times.

According to the image capturing optical system of the foregoing aspect, when the central thickness of the first lens element is CT1, the central thickness of the fifth lens element is CT5, a central thickness of the sixth lens element is CT6, the axial distance between the first lens element and the second lens element is T12, when the image capturing optical lens assembly is in a single mode, an axial distance between a lens element surface of the object-side lens group closest to the image side and a lens element surface of the joint lens group closest to the object side is TGAB, in the joint lens group, an axial distance between a lens element surface closest to the object side and a lens element surface closest to the image side is DGB, a focal length of the first lens element is f1, a focal length of the second lens element is f2, a focal length of the fourth lens element is f4, a refractive index of the first lens element at a d-line is N1, a refractive index of the fifth lens element at the d-line is N5, an Abbe number of the first lens element is V1, and an Abbe number of the fifth lens element is V5, the following conditions can be satisfied: $2.63 \leq (CT1+T12)/CT5 \leq 4.24$; $0.96 \leq TGAB/DGB \leq 3.04$; $0.90 < (|f1|+|f2|)/|f4| < 1.80$; $0.86 \leq CT1/CT6 \leq 1.46$; $0.15 \leq |10 \times T12/f4| \leq 0.30$; $-0.85 \leq f1/f4 \leq -0.67$; and $0.50 < 10 \times (N1/V1+N5/V5) < 1.20$.

According to the image capturing optical system of the foregoing aspect, when a refractive index of the first lens element at a d-line is N1, a refractive index of the fifth lens element at the d-line is N5, an Abbe number of the first lens element is V1, an Abbe number of the fifth lens element is V5, a focal length of the first lens element is f1, and a focal length of the third lens element is f3, a focal length of the fourth lens element is f4, the following conditions can be satisfied: $0.50 < 10\times(N1/V1+N5/V5) < 1.40$; and $0.60 < |f1/f3|+|f1/f4| < 3.00$.

## BRIEF DESCRIPTION OF THE DRAWINGS

The present disclosure can be more fully understood by reading the following detailed description of the embodiment, with reference made to the accompanying drawings as follows:

Fig. 1A is a schematic view of an imaging apparatus according to the 1st embodiment in a first state of a first mode of the present disclosure.

Fig. 1B is a schematic view of the imaging apparatus according to the 1st embodiment of Fig. 1A in the second state of the first mode.

Fig. 1C is a schematic view of the imaging apparatus according to the 1st embodiment of Fig. 1A in the third state of the first mode.

Fig. 1D is a schematic view of the imaging apparatus according to the 1st embodiment in a first state of a second mode of the present disclosure.

Fig. 2A shows, in order from left to right, spherical aberration curves, astigmatic field curves and a distortion curve of the imaging apparatus according to the 1st embodiment in the first state of the first mode.

Fig. 2B shows, in order from left to right, spherical aberration curves, astigmatic field curves and a distortion curve of the imaging apparatus according to the 1st embodiment in the second state of the first mode.

Fig. 2C shows, in order from left to right, spherical aberration curves, astigmatic field curves and a distortion curve of the imaging apparatus according to the 1st embodiment in the third state of the first mode.

Fig. 2D shows, in order from left to right, spherical aberration curves, astigmatic field curves and a distortion curve of the imaging apparatus according to the 1st embodiment in the first state of the second mode.

Fig. 3A is a schematic view of an imaging apparatus according to the 2nd embodiment in a first state of a first mode of the present disclosure.

Fig. 3B is a schematic view of the imaging apparatus according to the 2nd embodiment of Fig. 3A in the second state of the first mode.

Fig. 3C is a schematic view of the imaging apparatus according to the 2nd embodiment of Fig. 3A in the third state of the first mode.

Fig. 3D is a schematic view of the imaging apparatus according to the 2nd embodiment in a first state of a second mode of the present disclosure.

Fig. 4A shows, in order from left to right, spherical aberration curves, astigmatic field curves and a distortion curve of the imaging apparatus according to the 2nd embodiment in the first state of the first mode.

Fig. 4B shows, in order from left to right, spherical aberration curves, astigmatic field curves and a distortion curve of the imaging apparatus according to the 2nd embodiment in the second state of the first mode.

Fig. 4C shows, in order from left to right, spherical aberration curves, astigmatic field curves and a distortion curve of the imaging apparatus according to the 2nd embodiment in the third state of the first mode.

Fig. 4D shows, in order from left to right, spherical aberration curves, astigmatic field curves and a distortion curve of the imaging apparatus according to the 2nd embodiment in the first state of the second mode.

Fig. 5A is a schematic view of an imaging apparatus according to the 3rd embodiment in a first state of a first mode of the present disclosure.

Fig. 5B is a schematic view of the imaging apparatus according to the 3rd embodiment of Fig. 5A in the second state of the first mode.

Fig. 5C is a schematic view of the imaging apparatus according to the 3rd embodiment of Fig. 5A in the third state of the first mode.

Fig. 5D is a schematic view of the imaging apparatus according to the 3rd embodiment in a first state of a second mode of the present disclosure.

Fig. 5E is a schematic view of the imaging apparatus according to the 3rd embodiment of Fig. 5D in the second state of the second mode.

Fig. 6A shows, in order from left to right, spherical aberration curves, astigmatic field curves and a distortion curve of the imaging apparatus according to the 3rd embodiment in the first state of the first mode.

Fig. 6B shows, in order from left to right, spherical aberration curves, astigmatic field curves and a distortion curve of the imaging apparatus according to the 3rd embodiment in the second state of the first mode.

Fig. 6C shows, in order from left to right, spherical aberration curves, astigmatic field curves and a distortion curve of the imaging apparatus according to the 3rd embodiment in the third state of the first mode.

Fig. 6D shows, in order from left to right, spherical aberration curves, astigmatic field curves and a distortion curve of the imaging apparatus according to the 3rd embodiment in the first state of the second mode.

Fig. 6E shows, in order from left to right, spherical aberration curves, astigmatic field curves and a distortion curve of the imaging apparatus according to the 3rd embodiment in the second state of the second mode.

Fig. 7A is a schematic view of an imaging apparatus according to the 4th embodiment in a first state of a first mode of the present disclosure.

Fig. 7B is a schematic view of the imaging apparatus according to the 4th embodiment of Fig. 7A in the second state of the first mode.

Fig. 7C is a schematic view of the imaging apparatus according to the 4th embodiment of Fig. 7A in the third state of the first mode.

Fig. 7D is a schematic view of the imaging apparatus according to the 4th embodiment in a first state of a second mode of the present disclosure.

Fig. 8A shows, in order from left to right, spherical aberration curves, astigmatic field curves and a distortion curve of the imaging apparatus according to the 4th embodiment in the first state of the first mode.

Fig. 8B shows, in order from left to right, spherical aberration curves, astigmatic field curves and a distortion curve of the imaging apparatus according to the 4th embodiment in the second state of the first mode.

Fig. 8C shows, in order from left to right, spherical aberration curves, astigmatic field curves and a distortion curve of the imaging apparatus according to the 4th embodiment in the third state of the first mode.

Fig. 8D shows, in order from left to right, spherical aberration curves, astigmatic field curves and a distortion curve of the imaging apparatus according to the 4th embodiment in the first state of the second mode.

Fig. 9A is a schematic view of an imaging apparatus according to the 5th embodiment in a first state of a first mode of the present disclosure.

Fig. 9B is a schematic view of the imaging apparatus according to the 5th embodiment of Fig. 9A in the second state of the first mode.

Fig. 9C is a schematic view of the imaging apparatus according to the 5th embodiment in a first state of a second mode of the present disclosure.

Fig. 10A shows, in order from left to right, spherical aberration curves, astigmatic field curves and a distortion curve of the imaging apparatus according to the 5th embodiment in the first state of the first mode.

Fig. 10B shows, in order from left to right, spherical aberration curves, astigmatic field curves and a distortion curve of the imaging apparatus according to the 5th embodiment in the second state of the first mode.

Fig. 10C shows, in order from left to right, spherical aberration curves, astigmatic field curves and a distortion curve of the imaging apparatus according to the 5th embodiment in the first state of the second mode.

Fig. 11A is a schematic view of an imaging apparatus according to the 6th embodiment in a first state of a first mode of the present disclosure.

Fig. 11B is a schematic view of the imaging apparatus according to the 6th embodiment of Fig. 11A in the second state of the first mode.

Fig. 11C is a schematic view of the imaging apparatus according to the 6th embodiment in a first state of a second mode of the present disclosure.

Fig. 11D is a schematic view of the imaging apparatus according to the 6th embodiment of Fig. 11C in the second state of the second mode.

Fig. 12A shows, in order from left to right, spherical aberration curves, astigmatic field curves and a distortion curve of the imaging apparatus according to the 6th embodiment in the first state of the first mode.

Fig. 12B shows, in order from left to right, spherical aberration curves, astigmatic field curves and a distortion curve of the imaging apparatus according to the 6th embodiment in the second state of the first mode.

Fig. 12C shows, in order from left to right, spherical aberration curves, astigmatic field curves and a distortion curve of the imaging apparatus according to the 6th embodiment in the first state of the second mode.

Fig. 12D shows, in order from left to right, spherical aberration curves, astigmatic field curves and a distortion curve of the imaging apparatus according to the 6th embodiment in the second state of the second mode.

Fig. 13A is a schematic view of inflection points and critical points of the imaging apparatus according to the 1st embodiment of Fig. 1A in the first state of the first mode.

Fig. 13B is a schematic view of inflection points and critical points of the imaging apparatus according to the 1st embodiment of Fig. 1D in the first state of the second mode.

Fig. 13C is a schematic view of parameters of the imaging apparatus according to the 1st embodiment of Fig. 1A in the first state of the first mode.

Fig. 13D is a schematic view of parameters of the imaging apparatus according to the 1st embodiment of Fig. 1D in the first state of the second mode.

Fig. 14A is a switching schematic view of the first mode and the second mode in the image capturing optical system of the imaging apparatus according to the present disclosure.

Fig. 14B is another switching schematic view of the first mode and the second mode in the image capturing optical system of the imaging apparatus according to the present disclosure.

Fig. 14C is another switching schematic view of the first mode and the second mode in the image capturing optical system of the imaging apparatus according to the present disclosure.

Fig. 14D is another switching schematic view of the first mode and the second mode in the image capturing optical system of the imaging apparatus according to the present disclosure.

Fig. 15A is a schematic view of a non-circular aperture stop of the image capturing optical system in the imaging apparatus according to the present disclosure.

Fig. 15B is a schematic view of another non-circular aperture stop of the image capturing optical system in the imaging apparatus according to the present disclosure.

Fig. 16A is a schematic view of a non-circular lens element of the image capturing optical system in the imaging apparatus according to the present disclosure.

Fig. 16B is a schematic view of another non-circular lens element of the image capturing optical system in the imaging apparatus according to the present disclosure.

Fig. 17 is a three-dimensional schematic view of an imaging apparatus according to the 7th embodiment of the present disclosure.

Fig. 18A is a schematic view of one side of an electronic device according to the 8th embodiment of the present disclosure.

Fig. 18B is a schematic view of another side of the electronic device of Fig. 18A.

Fig. 18C is a system schematic view of the electronic device of Fig. 18A.

Fig. 19 is a schematic view of one side of an electronic device according to the 9th embodiment of the present disclosure.

Fig. 20 is a schematic view of one side of an electronic device according to the 10th embodiment of the present disclosure.

Fig. 21A is a schematic view of one side of an electronic device according to the 11th embodiment of the present disclosure.

Fig. 21B is a schematic view of another side of the electronic device of Fig. 21A.

## DETAILED DESCRIPTION

The present disclosure provides an image capturing optical system, which includes an image capturing optical lens assembly, respectively corresponding to a first mode and a second mode. The image capturing optical lens assembly includes, in order from an object side to an image side, an object-side lens group and a joint lens group, wherein the object-side lens group can be a first mode object-side lens group or a second mode object-side lens group. The joint lens group sequentially includes a middle lens group and a last lens group. When the image capturing optical lens assembly is in the first mode, there are, in order along an optical path, the first mode object-side lens group and the joint lens group. When the image capturing optical lens assembly is in the second mode, there are, in order along the optical path, the second mode object-side lens group and the joint lens group.

The image capturing optical system can further include at least two opening holes, which can be respectively corresponding to the first mode and the second mode. When the image capturing optical lens assembly is in the first mode, the light is received by one of the at least two opening holes, and the image capturing optical lens assembly includes, in order along the optical path, the first mode object-side lens group, a first light path folding element and the joint lens group. When the image capturing optical lens assembly is in the second mode, the light is received by another one of the at least two opening holes, and the image capturing optical lens assembly includes, in order along the optical path, the second mode object-side lens group, the first light path folding element and the joint lens group. Therefore, by using at least two different imaging modes and using a joint lens group between different modes, the number of lens elements can be reduced, the utilization rate of a single lens element can be greatly improved, and the flexibility of module space can be increased.

Moreover, the image capturing optical lens assembly can also include, in order from the object side to the image side, the object-side lens group, the first light path folding element and the joint lens group. The first mode object-side lens group, the second mode object-side lens group, the middle lens group and the last lens group all include at least one lens element. Each of the at least one lens element has an object-side surface facing toward the object side and an image-side surface facing toward the image side. Therefore, at least two lens groups can be configured to achieve a balance between different imaging modes, volumes, object distance ranges, image quality and ease of assembly.

The first light path folding element can move along the optical path, which makes the image capturing optical lens assembly be able to switch between the first mode and the second mode. Moreover, the first light path folding element can be in a way of rotating or a way of moving along the optical path to make the image capturing optical lens assembly be able to switch between the first mode and the second mode. A joint light path folding element is configured between different modes. Different lens groups can be connected by moving the light path folding element to switch between different modes, which provides the image capturing optical system with diversified optical path directions and gives the image capturing optical lens assembly more flexible space utilization.

A maximum lens element number of the first mode object-side lens group is two, a maximum lens element number of the second mode object-side lens group is three, a lens element number of the joint lens group is six. Moreover, the maximum lens element number of the first mode object-side lens group can be two, the maximum lens element number of the second mode object-side lens group can be two, the lens element number of the joint lens group can be six. Therefore, by limiting the configuration of the lens element number, the image capturing optical system can achieve a balance between volume and imaging quality.

At least one of the first mode and the second mode has a plurality of capturing states. The plurality of capturing states can respectively capture images at a distance longer than an object distance of 1000 mm and within an object distance of 350 mm, or capture images at a distance longer than the object distance of 1000 mm and within an object distance of 250 mm. Therefore, the image capturing optical lens assembly is capable of capturing images at different object distances, which is favorable for meeting the needs of various applications such as long-distance and close-up photography.

The first mode object-side lens group and the second mode object-side lens group are both fixed related to the last lens group, the middle lens group can move along the optical path related to the last lens group. Therefore, it is favorable for achieving focusing effects of different modes and different object distances, and simultaneously simplifying the complexity of optical design and mechanism.

The six lens elements of the aforementioned joint lens group are sequentially a first lens element, a second lens element, a third lens element, a fourth lens element, a fifth lens element and a sixth lens element. The fourth lens element has negative refractive power. Therefore, it is favorable for balancing the overall refractive power of the image capturing optical system, balancing the convergence or divergence of light, and improving the focusing quality of the entire field of view.

The image-side surface of the second lens element is concave. Therefore, it is favorable for receiving light in different modes and different states and balancing the spherical aberration of the image capturing optical system.

The image-side surface of the third lens element is convex. Therefore, it can effectively focus light during the focusing process and is favorable for balancing the overall length of the image capturing optical system.

The lens element of the image capturing optical lens assembly closest to an image surface includes at least one inflection point. Therefore, the angle and position of the light incident on the image surface can be adjusted, which is favorable for correcting the astigmatism and distortion.

At least one of the lens elements in the image capturing optical lens assembly includes at least one critical point. Therefore, the degree of change in the lens surface can be increased, which is favorable for compressing the volume and improving the image quality.

The fifth lens element has at least one inflection point. Therefore, the degree of change in the surface shape of the shared lens element can be increased, the passing direction of light can be balanced, and simultaneously controlling the range of the back focal length and correcting the image curvature.

When an object distance is set as a capturing state of infinite, and the image capturing optical lens assembly switches between the first mode and the second mode, a moving distance along the optical path of the first light path folding element related to the last lens group is TPM12, and an axial length in the first light path folding element is CTP1, the following condition is satisfied: $0.65 < TPM12/CTP1 < 2.70$. Therefore, the movement degree of the light path folding element during the mode switching process can be controlled to adjust the spatial configuration of the lens group, so that the image capturing optical lens assembly can provide stable image quality during the mode switching and focusing process. Moreover, the following condition can be satisfied: $0.90 < TPM12/CTP1 < 2.20$.

When a maximum image height of the image capturing optical lens assembly in the first mode is ImgH1, and a maximum image height of the image capturing optical lens assembly in the second mode is ImgH2, the following condition is satisfied: $1.50 < ImgH1/ImgH2 < 3.00$. Therefore, it is ensured that there are certain specification differences between different modes to expand the scope of application.

In the first mode and the second mode, when the object distance is set as the capturing state of infinite, a sum of three values of a total focal length of the image capturing optical lens assembly respectively divided by focal lengths of the three lens elements closest to the image surface is ΣPGn, the following condition is satisfied: $-5.00 < \Sigma PGn < 1.80$. Therefore, the refractive power at the rear end of the image capturing optical system can be controlled within a reasonable range, which is favorable for balancing the overall refractive power distribution of the image capturing optical system and adjusting the back focal length. Moreover, the following condition can be satisfied: $-4.00 < \Sigma PGn < -0.50$. Moreover, the following condition can be satisfied: $-3.80 < \Sigma PGn < -0.80$.

When a focal length of the first lens element is f1, a focal length of the second lens element is f2, and a focal length of the fourth lens element is f4, the following condition is satisfied: $0.80 < (|f1|+|f2|)/|f4| < 2.0$. Therefore, the refractive power configuration in the joint lens group can be adjusted, which is favorable for balancing the image quality in different modes and different shooting conditions. Moreover, the following condition can be satisfied: $0.90 < (|f1|+|f2|)/|f4| < 1.80$.

When the focal length of the first lens element is f1, and the focal length of the fourth lens element is f4, the following condition is satisfied: $-1.20 < f1/f4 < 0.00$. Therefore, the refractive power of the first lens element and the refractive power the fourth lens element can be coordinated with each other, which is favorable for balancing the image quality of the image capturing optical system when focusing at long distances and near distances. Moreover, the following condition can be satisfied: $-1.00 < f1/f4 < -0.20$. Moreover, the following condition can be satisfied: $-0.85 \leq f1/f4 \leq -0.67$.

When a central thickness of the first lens element is CT1, a central thickness of the fifth lens element is CT5, and an axial distance between the first lens element and the second lens element is T12, the following condition is satisfied: $1.60 < (CT1+T12)/CT5 < 11.0$. Therefore, the configuration of the joint lens group can be adjusted to balance the passing direction of light of different fields of view during the moving process, which is favorable for improving the assembly yield of the image capturing optical lens assembly. Moreover, the following condition can be satisfied: $1.80 < (CT1+T12)/CT5 < 7.50$. Moreover, the following condition can be satisfied: $2.63 \leq (CT1+T12)/CT5 \leq 4.24$.

When the image capturing optical lens assembly is in a single mode, an axial distance between a lens element surface of the object-side lens group closest to the image side and a lens element surface of the joint lens group closest to the object side is TGAB, and in the joint lens group, an axial distance between a lens element surface closest to the object side and a lens element surface closest to the image side is DGB, the following condition is satisfied: $0.75 < TGAB/DGB < 4.0$. Therefore, the volume of the joint lens group can be used to assist in adjusting the appropriate lens group distances, which is favorable for folding the optical path in different modes. Moreover, the following condition can be satisfied: $0.80 < TGAB/DGB < 3.60$. Moreover, the following condition can be satisfied: $0.96 \leq TGAB/DGB \leq 3.04$.

When the axial distance between the first lens element and the second lens element is T12, and the focal length of the fourth lens element is f4, the following condition is satisfied: $0.08 < |10 \times T12/f4| < 1.50$. Therefore, the distance between the first lens element and the second lens element and the refractive power of the fourth lens element can be coordinated with each other, which is favorable for corresponding imaging modes of different specifications of the image capturing optical lens assembly. Moreover, the following condition can be satisfied: $0.08 < |10 \times T12/f4| < 1.00$. Moreover, the following condition can be satisfied: $0.15 \leq |10 \times T12/f4| \leq 0.30$.

When the image capturing optical lens assembly is in the single mode, an axial distance between a lens element surface of the object-side lens group closest to the object side and a lens element surface of the object-side lens group closest to the image side is DGA, the following condition is satisfied: DGA < 4.50 mm. Therefore, the length of the object side of the image capturing optical lens assembly can be effectively compressed to accommodate a wider range of applications. Moreover, the following condition can be satisfied: 1.00 mm < DGA < 3.80 mm.

When in all modes and all states of the image capturing optical lens assembly, a maximum of axial distances between a lens element surface closest to the object side and the image surface is TLmax, the following condition is satisfied: TLmax < 80 mm. Therefore, the total length can be controlled to increase the module space of the electronic device. Moreover, the following condition can be satisfied: 15 mm < TLmax < 60 mm. Moreover, the following condition can be satisfied: 20 mm < TLmax < 50 mm. Moreover, the following condition can be satisfied: 25 mm < TLmax < 45 mm.

When in all central thicknesses of all the lens elements in the image capturing optical lens assembly, a maximum value of lens element central thickness is CTmax, the following condition is satisfied: CTmax < 3.0 mm. Therefore, it is favorable for reducing the space required for the lens group and effectively improving the space utilization. Moreover, the following condition can be satisfied: 1.0 mm < CTmax < 2.5 mm.

When in all modes and all states of the image capturing optical lens assembly, a minimum of optical effective radii of the lens element surface closest to the object side is YGAR1min, the following condition is satisfied: 3.80 mm < YGAR1min. Therefore, the area of incident light can be adjusted according to the specifications of different modes to ensure that the image has sufficient brightness. Moreover, the following condition can be satisfied: 4.00 mm < YGAR1min < 6.00 mm.

When the central thickness of the first lens element is CT1, and a central thickness of the sixth lens element is CT6, the following condition is satisfied: $0.35 < CT1/CT6 < 2.20$. Therefore, the center thickness of the first lens element and the center thickness of the sixth lens element can be balanced, which is favorable for reducing the sensitivity and reducing the manufacturing tolerance. Moreover, the following condition can be satisfied: $0.60 < CT1/CT6 < 1.80$. Moreover, the following condition can be satisfied: $0.86 \leq CT1/CT6 \leq 1.46$.

When the image capturing optical lens assembly is in the single mode, the axial distance between the lens element surface of the object-side lens group closest to the object side and the lens element surface of the object-side lens group closest to the image side is DGA, and in the first mode and the second mode, the central thickness of the first lens element is CT1, the following condition is satisfied: $0.90 < DGA/CT1 < 3.00$. Therefore, the ratio between the distance of the object-side lens group on the optical axis and the center thickness of the first lens element can be controlled, which is favorable for compressing the volume of the object side end of the image capturing optical lens assembly and taking into account the limitations of manufacturing the first lens element. Moreover, the following condition can be satisfied: $1.00 < DGA/CT1 < 2.50$.

When a refractive index of the fifth lens element at a d-line is N5, the following condition is satisfied: $1.20 \leq N5 \leq 1.65$. Therefore, the refractive index of the material of the fifth lens element can be adjusted, which is favorable for balancing the situation of light in each field of view passing through the fifth lens element at different wavelengths, different modes and different shooting conditions. Moreover, the following condition can be satisfied: $1.30 \leq N5 \leq 1.64$. Moreover, the following condition can be satisfied: $1.40 \leq N5 \leq 1.62$.

When a refractive index of the first lens element at the d-line is N1, the refractive index of the fifth lens element at the d-line is N5, an Abbe number of the first lens element is V1, and an Abbe number of the fifth lens element is V5, the following condition is satisfied: $0.20 < 10 \times (N1/V1+N5/V5) < 1.35$. Therefore, the material configuration of the first lens element and the fifth lens element can be adjusted, which is favorable for correcting the chromatic aberration in various modes and at a plurality of object distances, which improves the image quality. Moreover, the following condition can be satisfied: $0.35 < 10 \times (N1/V1+N5/V5) < 1.25$. Moreover, the following condition can be satisfied: $0.50 < 10 \times (N1/V1+N5/V5) < 1.20$. Moreover, the following condition can be satisfied: $0.50 < 10 \times (N1/V1+N5/V5) < 1.40$.

When the focal length of the first lens element is f1, a focal length of the third lens element is f3, and the focal length of the fourth lens element is f4, the following condition is satisfied: $0.60 < |f1/f3|+|f1/f4| < 3.00$. Therefore, the first lens element can be used to assist in adjusting the refractive power of the third lens element and the refractive power the fourth lens element, which is favorable for the overall design corresponding to different modes and different shooting states to balance the passing direction of light. Moreover, the following condition can be satisfied: $0.90 < |f1/f3|+|f1/f4| < 2.80$. Moreover, the following condition can be satisfied: $1.20 < |f1/f3|+|f1/f4| < 2.70$.

At least two of the lens elements in the image capturing optical lens assembly are made of plastic material. Therefore, the forming yield and manufacturing speed of the aspheric design can be improved, which is favorable for reducing the weight and production cost. Moreover, at least three of the lens elements can be made of plastic material. Moreover, at least four of the lens elements can be made of plastic material.

There is without additional one or more lens elements inserted between the joint lens group and the image surface, or, there is without additional one or more lens elements inserted between the last lens group and the image surface. Therefore, it is favorable for reducing the overall size and complexity of the imaging apparatus, and reducing the space required for the image capturing optical lens assembly.

There is a second light path folding element between the last lens group and the image surface. Therefore, different passing directions of light can be provided for the image capturing optical system to improve the space utilization, which is favorable for compactness of the image capturing optical lens assembly.

The lens element of the image capturing optical lens assembly closest to the object side is a positive lens element. Therefore, it is favorable for compressing the volume, controlling the shooting angle and increasing the amount of incident light.

The lens element of the joint lens group closest to the object side is a positive lens element. Therefore, it is favorable for receiving the light through the object-side lens group in various modes and reducing the overall volume of the image capturing optical system.

The first mode and the second mode use the same image sensor. Therefore, the functionality of shared components between different modes can be enhanced.

The lens element of the image capturing optical lens assembly closest to the image surface is a negative lens element. Therefore, it is favorable for balancing the incident angle of light on the image surface during the moving focusing process, and simultaneously controlling the back focus length.

The first light path folding element and the second light path folding element are both prisms. Therefore, the prisms can be used, which is favorable for reducing the difficulty of assembly.

There is an air gap along the optical axis between adjacent two of the lens elements in the image capturing optical lens assembly. Therefore, it is favorable for increasing the flexibility of optical design and improving the focusing quality by correcting aberrations with more control parameters.

The image capturing optical lens assembly only includes the object-side lens group and the joint lens group. Therefore, it is favorable for simplifying the complexity of the mechanism design, which is favorable for assembling the image capturing optical lens assembly and improving the manufacturing yield.

The middle lens group sequentially includes one positive lens element, one negative lens element and another one positive lens element. Therefore, it is favorable for balancing the refractive power configuration of the joint lens group, which can balance the image quality during actuation and reduce the sensitivity during the moving focusing process.

The last lens group sequentially includes a negative lens element and another one lens element. Therefore, the sufficient lens element number and the appropriate lens element configuration can be provided, so that the image capturing optical system can maintain an appropriate back focal length while correcting the off-axis aberrations.

A difference between maximum field of views (FOV) of the first mode and the second mode is at least 2.0 times or more than 2.0 times. Therefore, the viewing angle and the amount of incident light of the image capturing optical system can be changed according to different application states, which is favorable for providing a variety of depths of field to achieve different image presentation effects.

It should be mentioned that, in the present disclosure, the image capturing optical lens assembly can include at least one light path folding element, which can be a reflective element, such as a prism or a mirror, to make the space configuration more flexible. The light path folding element can be disposed between the imaged object and the image surface, which is favorable for compressing the volume of the image capturing optical lens assembly. The optical path can be reflected at least one time by the light path folding element. The angle between the reflective surface (the normal line thereof) and the optical axis is not limited to 45 degrees, and the angle can be adjusted according to the space configuration and other requirements. The angle between the optical axis vector of the near object end and the optical axis vector of the near image end can be arbitrary, and it is not limited to 0 degrees, 90 degrees or 180 degrees. Moreover, due to the reasons such as compressing the occupied volume, the length and the width of the mirror can be not equal, the length, and the width and the height of the mirror can be not equal. The surface shape of the light path folding element can be planar, spherical, aspheric or freeform surface according to the requirements of optical design, which is not limited thereto. The light path folding element can be assembled by one or more prisms according to the design requirements. The material of the prism can be selected according to the design requirements, such as glass material or plastic material. When the light path folding element is a single prism, light can be reflected once, twice, three times or more, and the single prism can have refractive power. The moving method of the light path folding element can be moving or rotating to make the image capturing optical lens assembly switch between the modes, which is not limited thereto. The image capturing optical lens assembly can selectively include three or more light path folding elements. The present disclosure is not limited to the type, number and position of the light path folding element disclosed in the drawings.

Fig. 14A is a switching schematic view of the first mode and the second mode in the image capturing optical system of the imaging apparatus according to the present disclosure. In Fig. 14A, when the image capturing optical lens assembly is in the first mode (Mode1), the image capturing optical lens assembly can include, in order from the imaged object (not shown) to the image surface IMG along the optical path, the opening hole H1, the first mode object-side lens group GA1, the first light path folding element P1, the joint lens group GB and the second light path folding element P2. Light can arrive at the image surface IMG from the imaged object along the direction of the first optical axis OA1, the second optical axis OA2 and the third optical axis OA3 sequentially. When the image capturing optical lens assembly is in the second mode (Mode2), the image capturing optical lens assembly can include, in order from the imaged object (not shown) to the image surface IMG along the optical path, the opening hole H2, the second mode object-side lens group GA2, the first light path folding element P1, the joint lens group GB and the second light path folding element P2. Light can arrive at the image surface IMG from the imaged object along the direction of the fourth optical axis OA4, the second optical axis OA2 and the third optical axis OA3 sequentially. In the image capturing optical system of Fig. 14A, the first light path folding element P1 moves along the second optical axis OA2, which makes the image capturing optical lens assembly switch between the first mode and the second mode.

Fig. 14B is another switching schematic view of the first mode and the second mode in the image capturing optical system of the imaging apparatus according to the present disclosure. In Fig. 14B, when the image capturing optical lens assembly is in the first mode (Mode1), the image capturing optical lens assembly can include, in order from the imaged object (not shown) to the image surface IMG along the optical path, the opening hole H1, the first mode object-side lens group GA1, the first light path folding element P1, the joint lens group GB and the second light path folding element P2. Light can arrive at the image surface IMG from the imaged object along the direction of the first optical axis OA1, the second optical axis OA2 and the third optical axis OA3 sequentially. When the image capturing optical lens assembly is in the second mode (Mode2), the image capturing optical lens assembly can include, in order from the imaged object (not shown) to the image surface IMG along the optical path, the opening hole H2, the second mode object-side lens group GA2, the first light path folding element P1, the joint lens group GB and the second light path folding element P2. Light can arrive at the image surface IMG from the imaged object along the direction of the fourth optical axis OA4, the second optical axis OA2 and the third optical axis OA3 sequentially. In the image capturing optical system of Fig. 14B, the first light path folding element P1 rotates, which makes the image capturing optical lens assembly switch between the first mode and the second mode.

Fig. 14C is another switching schematic view of the first mode and the second mode in the image capturing optical system of the imaging apparatus according to the present disclosure. In Fig. 14C, the image capturing optical lens assembly can include, in order from the imaged object (not shown) to the image surface IMG along the optical path, the opening hole H1, the object-side lens group GA and the joint lens group GB. Light can arrive at the image surface IMG from the imaged object along the direction of the first optical axis OA1. In the image capturing optical system of Fig. 14C, the object-side lens group GA can include the first mode object-side lens group GA1, the second mode object-side lens group GA2, the third mode object-side lens group GA3 and the object-side lens group (not shown) of other modes. Any one of the first mode object-side lens group GA1, the second mode object-side lens group GA2, the third mode object-side lens group GA3 and the object-side lens group of other modes can arrive at the first optical axis OA1 along a moving direction of the object-side lens group (GA Move), which makes the image capturing optical lens assembly switch between different modes.

Fig. 14D is another switching schematic view of the first mode and the second mode in the image capturing optical system of the imaging apparatus according to the present disclosure. In Fig. 14D, when the image capturing optical lens assembly is in the first mode (Mode1), the image capturing optical lens assembly can include, in order from the imaged object (not shown) to the image surface IMG along the optical path, the opening hole H1, the first mode object-side lens group GA1 and the joint lens group GB. Light can arrive at the image surface IMG from the imaged object along the direction of the first optical axis OA1. When the image capturing optical lens assembly is in the second mode (Mode2), the image capturing optical lens assembly can include, in order from the imaged object (not shown) to the image surface IMG along the optical path, the opening hole H2, the second mode object-side lens group GA2 and the joint lens group GB. Light can arrive at the image surface IMG from the imaged object along the direction of the second optical axis OA2. In the image capturing optical system of Fig. 14D, the joint lens group GB arrives at the first optical axis OA1 or the second axis OA2 along a moving direction of the joint lens group (GB Move), which makes the image capturing optical lens assembly switch between the first mode and the second mode.

In the present disclosure, the image capturing optical lens assembly can also have three or more modes.

In the present disclosure, the object distance is the axial distance between the imaged object and the object-side surface of the lens element closest to the object side in the image capturing optical lens assembly. When the object distance is longer than 10000 mm, it is regarded as a shooting state with an infinite object distance.

According to the image capturing optical system of the present disclosure, a critical point is a non-axial point of the lens surface where its tangent is perpendicular to the optical axis; an inflection point is a point on a lens surface with a curvature changing from positive to negative or from negative to positive. In the present disclosure, the numbers of critical points and inflection points are calculated only within the area of maximum effective radius.

In the present disclosure, some of the elements can be driven by the driving apparatus to instantly compensate the inclined image, so as to achieve optical image stabilizations (OIS).

In the present disclosure, at least one element can have a non-circular optical effective area.

Fig. 15A is a schematic view of a non-circular aperture stop of the image capturing optical system in the imaging apparatus according to the present disclosure, and Fig. 15B is a schematic view of another non-circular aperture stop of the image capturing optical system in the imaging apparatus according to the present disclosure. In Fig. 15A, the shape of the aperture stop can be an ellipse, which has a major axis X and a minor axis Y. The aperture stop has a major axis effective radius Ra on the major axis X and a minor axis effective radius Rb on the minor axis Y, and the major axis effective radius Ra is not equal to the minor axis effective radius Rb. In Fig. 15B, the shape of the aperture stop can be roughly an ellipse, which has a major axis X and a minor axis Y, and has cutting edges on both sides of the minor axis Y. The aperture stop has a major axis effective radius Ra on the major axis X and a minor axis effective radius Rb on the minor axis Y, and the major axis effective radius Ra is not equal to the minor axis effective radius Rb.

Fig. 16A is a schematic view of a non-circular lens element of the image capturing optical system in the imaging apparatus according to the present disclosure, and Fig. 16B is a schematic view of another non-circular lens element of the image capturing optical system in the imaging apparatus according to the present disclosure. In Fig. 16A, the shape of the lens element can be roughly an ellipse, which has a major axis X and a minor axis Y, and has cutting edges on both sides of the minor axis Y. In Fig. 16B, the shape of the lens element can be an octagon, which has a major axis X and a minor axis Y, and two pairs of opposite sides of the octagon fall on the major axis X and the minor axis Y respectively.

In the present disclosure, the moving elements (such as the lens groups, the image sensor and the light path folding elements, which is not limited thereto) in the image capturing optical lens assembly can be driven by the driving apparatus, so as to move obliquely or vertically to the optical axis. However, the present disclosure is not limited to the disclosed driving method.

According to the present disclosure, an imaging apparatus is provided. The imaging apparatus includes the aforementioned image capturing optical system and an image sensor, wherein the image sensor is disposed on the image surface of the aforementioned image capturing optical system. Through the design of sharing some of the lens groups in the image capturing optical system, and with the combination of reflective elements, various combinations within the lens groups are provided. It further improves the application flexibility of module spaces, which is favorable for arranging the telephoto lens assembly in various application devices, and showing the effects of a plurality of lens assembles or even different types of lens assembles. Furthermore, through the moving or combination in the lens groups, the number of lens elements can be possibly reduced. Moreover, through the grouping design of the joint lens groups, the utilization of a single lens element can be further enhanced. It makes the image capturing optical lens assembly be able to change the focal length under different conditions of shooting modes, and simultaneously obtain high image quality under telephoto and close-up shooting, which is favorable for improving the shooting flexibility of the image capturing optical lens assembly. Preferably, the imaging apparatus can further include a barrel member, a holder member or a combination thereof.

In the present disclosure, the imaging apparatus can be applied to the telephoto imaging apparatus including the light path folding element. The driving system thereof can have the functions such as zooming or auto-focusing, and the driving method thereof can be achieved by the driving systems such as screw, voice coil motor (VCM), spring type driving system or ball type driving system.

According to the present disclosure, an electronic device is provided, wherein the electronic device includes the aforementioned imaging apparatus. Therefore, it is favorable for enhancing the image quality. Preferably, the electronic device can further include, but not limited to, a control unit, a display, a storage unit, a random access memory unit (RAM) or a combination thereof.

Each of the aforementioned features of the image capturing optical system can be utilized in various combinations for achieving the corresponding effects.

According to the image capturing optical system of the present disclosure, the lens elements thereof can be made of glass or plastic materials. When the lens elements are made of glass materials, the distribution of the refractive power of the image capturing optical system may be more flexible to design. The glass lens element can either be made by grinding or molding. When the lens elements are made of plastic materials, manufacturing costs can be effectively reduced. Furthermore, surfaces of each lens element can be arranged to be spherical or aspheric (ASP), wherein it is easier to fabricate the spherical surface. If the surfaces are arranged to be aspheric, more controllable variables can be obtained for eliminating aberrations thereof, and to further decrease the required amount of lens elements in the image capturing optical system. Therefore, the total track length of the image capturing optical system can also be reduced. The aspheric surfaces may be formed by plastic injection molding or glass molding.

According to the image capturing optical system of the present disclosure, one or more of the lens material may optionally include an additive which provides light absorption or light interference so as to alter the lens transmittance in a specific range of wavelength for reducing unwanted stray light or color deviation. For example, the additive may optionally filter out light in the wavelength range of 600 nm - 800 nm for reducing excessive red light and/or near infra-red light, or may optionally filter out light in the wavelength range of 350 nm - 450 nm to reduce excessive blue light and/or near ultra-violet light from interfering the final image. The additive may be homogenously mixed with plastic material to be used in manufacturing a mixed-material lens element by injection molding. Furthermore, the additive may be added in the coating on the lens element surface to achieve the aforementioned effects.

According to the image capturing optical system of the present disclosure, when a surface of a lens element is aspheric, it indicates that the surface has an aspheric shape throughout its optically effective area or a portion(s) thereof.

According to the image capturing optical system of the present disclosure, when the lens element has a convex surface, it indicates that the surface can be convex in the paraxial region thereof. When the lens element has a concave surface, it indicates that the surface can be concave in the paraxial region thereof. According to the image capturing optical system of the present disclosure, the refractive power or the focal length of a lens element being positive or negative may refer to the refractive power or the focal length in a paraxial region of the lens element.

According to the image capturing optical system of the present disclosure, the image surface of the image capturing optical system, based on the corresponding image sensor, can be planar or curved. In particular, the image surface can be a concave curved surface facing towards the object side. According to the image capturing optical system of the present disclosure, at least one image correcting element (such as a field flattener) can be selectively disposed between the lens element closest to the image side of the image capturing optical system and the image surface on an imaging optical path so as to correct the image (such as the field curvature). Properties of the image correcting element, such as curvature, thickness, refractive index, position, surface shape (convex/concave, spherical/aspheric, diffractive and Fresnel, etc.) can be adjusted according to the requirements of the imaging apparatus. In general, the image correcting element is preferably a thin plano-concave element having a concave surface towards the object side and is disposed close to the image surface.

According to the image capturing optical system of the present disclosure, the image capturing optical system can include at least one stop, such as an aperture stop, a glare stop or a field stop. Said glare stop or said field stop is for eliminating the stray light and thereby improving the image resolution thereof.

According to the image capturing optical system of the present disclosure, an aperture stop can be configured as a front stop or a middle stop. A front stop disposed between the imaged object and the first lens element can provide a longer distance between an exit pupil of the image capturing optical system and the image surface, and thereby obtains a telecentric effect and improves the image-sensing efficiency of the image sensor, such as CCD or CMOS. A middle stop disposed between the first lens element and the image surface is favorable for enlarging the field of view of the image capturing optical system and thereby provides a wide field of view for the same.

According to the image capturing optical system of the present disclosure, an aperture adjusting unit can be properly configured. The aperture adjusting unit can be a mechanical part or a light control part, and the dimension and the shape of the aperture adjusting unit can be electrically controlled. The mechanical part can include a moveable component such as a blade group or a shielding plate. The light control part can include a screen component such as a light filter, electrochromic material, a liquid crystal layer or the like. The amount of incoming light or the exposure time of the image can be controlled by the aperture adjusting unit to enhance the image moderation ability. In addition, the aperture adjusting unit can be the aperture stop of the image capturing optical system according to the present disclosure so as to moderate the image properties such as depth of field or the exposure speed by changing f-number.

According to the image capturing optical system of the present disclosure, one or more optical element can be properly configured so as to limit the way of light passing through the image capturing optical system. The aforementioned optical element can be a filter, a polarizer, etc., and it is not limited thereto. Moreover, the aforementioned optical element can be a single piece of element, a complex assembly or presented in a form of membrane, which is not limited thereto. The aforementioned optical element can be disposed at the object side, at the image side or between the lens elements of the image capturing optical system so as to allow the specific light to pass through, which will meet the requirements of applications.

According to the image capturing optical system of the present disclosure, the image capturing optical system can include at least one optical lens element, optical element or carrier, and at least one surface thereof includes a low-reflective layer. The stray light caused by the light reflecting at the interface can be effectively reduced by the low-reflective layer. The low-reflective layer can be disposed at the non-effective area of the object-side surface, at the non-effective area of the image-side surface or at the surface connecting the object-side surface and the image-side surface of the optical lens element. The optical element can be a light blocking element, an annular spacing element, a barrel member, a cover glass, a blue glass, a filter, a color filter, a light path folding element, a prism or a mirror, etc. The carrier can be a lens carrier for the lens assembly, a micro lens disposed on the image sensor, peripheral components of the image sensor substrate or a glass for protecting the image sensor, etc.

According to the image capturing optical system of the present disclosure, the image capturing optical system can be utilized in 3D (three-dimensional) image capturing applications, in products such as digital cameras, mobile devices, digital tablets, smart TVs, surveillance systems, motion sensing input devices, driving recording systems, rearview camera systems, wearable devices, and unmanned aerial vehicles.

According to the above description of the present disclosure, the following specific embodiments are provided for further explanation.

<1st Embodiment - First Mode>

Fig. 1A is a schematic view of an imaging apparatus 1 according to the 1st embodiment in a first state of a first mode of the present disclosure, and Fig. 2A shows, in order from left to right, spherical aberration curves, astigmatic field curves and a distortion curve of the imaging apparatus 1 according to the 1st embodiment in the first state of the first mode. In Fig. 1A, the imaging apparatus 1 according to the 1st embodiment includes an image capturing optical lens assembly (its reference number is omitted) and an image sensor IS. In the first mode, the image capturing optical lens assembly includes, in order from an object side to an image side along an optical path, a stop S1, a first mode object-side lens group GA1, a first light path folding element P1, a joint lens group GB, a second light path folding element P2, a filter E7 and an image surface IMG, wherein the image sensor IS is disposed on the image surface IMG of the image capturing optical lens assembly. There is without additional one or more lens elements inserted between the joint lens group GB and the image surface IMG.

The first mode object-side lens group GA1 includes a lens element A11. The lens element A11 with positive refractive power has an object-side surface being convex in a paraxial region thereof and an image-side surface being concave in a paraxial region thereof. The lens element A11 is made of plastic material, and has the object-side surface and the image-side surface being both aspheric. Moreover, Fig. 13A is a schematic view of inflection points IP and critical points CP of the imaging apparatus 1 according to the 1st embodiment of Fig. 1A in the first state of the first mode. The object-side surface of the lens element A11 includes one inflection point IP (shown in Fig. 13A). The image-side surface of the lens element A11 includes one inflection point IP (shown in Fig. 13A) and one critical point CP (shown in Fig. 13A).

The first light path folding element P1 and the second light path folding element P2 are both prisms and made of glass material.

The joint lens group GB includes, in order from the object side to the image side along the optical path, a stop S2, a first lens element E1, a second lens element E2, a stop S3, a third lens element E3, a fourth lens element E4, a fifth lens element E5 and a six lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes a middle lens group Gm and a last lens group Gn. The first lens element E1, the second lens element E2, the third lens element E3 and the fourth lens element E4 belong to the middle lens group Gm, and the fifth lens element E5 and the sixth lens element E6 belong to the last lens group Gn.

The first lens element E1 with positive refractive power has an object-side surface being convex in a paraxial region thereof and an image-side surface being concave in a paraxial region thereof. The first lens element E1 is made of plastic material, and has the object-side surface and the image-side surface being both aspheric. Moreover, the object-side surface of the first lens element E1 includes one inflection point IP (shown in Fig. 13A), the image-side surface of the first lens element E1 includes one inflection point IP (shown in Fig. 13A).

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes one inflection point IP (shown in Fig. 13A) and one critical point CP (shown in Fig. 13A), the image-side surface of the second lens element E2 includes one inflection point IP (shown in Fig. 13A).

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the object-side surface of the third lens element E3 includes one inflection point **IP** (shown in Fig. 13A) and one critical point CP (shown in Fig. 13A).

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes two inflection points **IP** (shown in Fig. 13A), the image-side surface of the fourth lens element E4 includes one inflection point **IP** (shown in Fig. 13A).

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes one inflection point **IP** (shown in Fig. 13A) and one critical point CP (shown in Fig. 13A), the image-side surface of the fifth lens element E5 includes one inflection point **IP** (shown in Fig. 13A) and one critical point CP (shown in Fig. 13A).

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes one inflection point IP (shown in Fig. 13A) and one critical point CP (shown in Fig. 13A), the image-side surface of the sixth lens element E6 includes one inflection point IP (shown in Fig. 13A) and one critical point CP (shown in Fig. 13A).

The filter E7 is made of glass material and disposed between the second light path folding element P2 and the image surface IMG and will not affect a focal length of the image capturing optical lens assembly.

The equation of the aspheric surface profiles of the aforementioned lens elements is expressed as follows:

$$X(Y) = (Y^2/R)/(1 + sqrt(1 - (1 + k) \times (Y/R)^2)) + \sum_i (Ai) \times (Y^i)$$

; wherein,

X is a displacement in parallel with an optical axis from the intersection point of the aspheric surface and the optical axis to a point at a distance Y from the optical axis on the aspheric surface;
Y is the vertical distance from the point on the aspheric surface to the optical axis;
R is the curvature radius;
k is the conic coefficient; and
Ai is the i-th aspheric coefficient.

In the image capturing optical lens assembly of the 1st embodiment, the first mode thereof can include the first state, a second state and a third state. The optical properties of each state will be explained in the following paragraphs.

In the image capturing optical lens assembly of the 1st embodiment, when in the first state of the first mode, a focal length of the image capturing optical lens assembly is fM1-1, an f-number of the image capturing optical lens assembly is FnoM1-1, half of a maximum field of view of the image capturing optical lens assembly is HFOVM1-1, and the maximum field of view of the image capturing optical lens assembly is FOVM1-1, these parameters have the following values: fM1-1 = 18.61 mm; FnoM1-1 = 1.93; HFOVM1-1 = 15.3 degrees; and FOVM1-1 = 30.6 degrees.

In the image capturing optical lens assembly of the 1st embodiment, when in the first state of the first mode, an object distance of the image capturing optical lens assembly is infinite.

In the image capturing optical lens assembly of the 1st embodiment, when in the first state of the first mode, an axial distance between the imaged object and the stop S1 is D0, an axial distance between the first light path folding element P1 and the stop S2 is D1, and an axial distance between the fourth lens element E4 and the fifth lens element E5 is D2, the following conditions are satisfied: D0 = ∞; D1 = 4.258 mm; and D2 = 0.250 mm. It should be mentioned that, in other embodiments, the actual meaning of D0, D1 and D2 should be referred to the following tables.

Fig. 13C is a schematic view of parameters of the imaging apparatus 1 according to the 1st embodiment of Fig. 1A in the first state of the first mode. In Fig. 13C, according to the image capturing optical lens assembly of the 1st embodiment, when in the first state of the first mode, an axial distance between a lens element surface of the first mode object-side lens group GA1 closest to the object side and a lens element surface of the first mode object-side lens group GA1 closest to the image side is DGA (that is, DGA1), the following condition is satisfied: DGA = 1.70 mm.

In the image capturing optical lens assembly of the 1st embodiment, when in the first state of the first mode, the axial distance between the lens element surface of the first mode object-side lens group GA1 closest to the object side and the lens element surface of the first mode object-side lens group GA1 closest to the image side is DGA, and a central thickness of the first lens element E1 is CT1, the following condition is satisfied: DGA/CT1 = 1.26.

In the image capturing optical lens assembly of the 1st embodiment, when in the first state of the first mode, an axial distance between a lens element surface of the first mode object-side lens group GA1 closest to the image side and a lens element surface of the joint lens group GB closest to the object side is TGAB, and in the joint lens group GB, an axial distance between a lens element surface closest to the object side and a lens element surface closest to the image side is DGB, the following condition is satisfied: TGAB/DGB = 1.68.

In the image capturing optical lens assembly of the 1st embodiment, when in the first state of the first mode, when an object distance is set as a capturing state of infinite, a sum of three values of a total focal length of the image capturing optical lens assembly respectively divided by focal lengths of the three lens elements closest to the image surface IMG is ΣPGn, the following condition is satisfied: ΣPGn = -3.47.

Referring Fig. 1B and Fig. 2B, Fig. 1B is a schematic view of the imaging apparatus 1 according to the 1st embodiment of Fig. 1A in the second state of the first mode, and Fig. 2B shows, in order from left to right, spherical aberration curves, astigmatic field curves and a distortion curve of the imaging apparatus 1 according to the 1st embodiment in the second state of the first mode. In the image capturing optical lens assembly of the 1st embodiment, when in the second state of the first mode, a focal length of the image capturing optical lens assembly is fM1-2, an f-number of the image capturing optical lens assembly is FnoM1-2, half of a maximum field of view of the image capturing optical lens assembly is HFOVM1-2, and the maximum field of view of the image capturing optical lens assembly is FOVM1-2, these parameters have the following values: fM1-2 = 18.01 mm; FnoM1-2 = 1.97; HFOVM1-2 = 15.1 degrees; and FOVM1-2 = 30.2 degrees.

In the image capturing optical lens assembly of the 1st embodiment, when in the second state of the first mode, an object distance of the image capturing optical lens assembly is 800.000 mm.

In the image capturing optical lens assembly of the 1st embodiment, when in the second state of the first mode, an axial distance between the imaged object and the stop S1 is D0, an axial distance between the first light path folding element P1 and the stop S2 is D1, and the axial distance between the fourth lens element E4 and the fifth lens element E5 is D2, the following conditions are satisfied: D0 = 800.000 mm; D1 = 4.079 mm; and D2 = 0.429 mm.

In the image capturing optical lens assembly of the 1st embodiment, when in the second state of the first mode, an axial distance between a lens element surface of the first mode object-side lens group GA1 closest to the object side and a lens element surface of the first mode object-side lens group GA1 closest to the image side is DGA (that is, DGA1), the following condition is satisfied: DGA = 1.70 mm.

In the image capturing optical lens assembly of the 1st embodiment, when in the second state of the first mode, the axial distance between the lens element surface of the first mode object-side lens group GA1 closest to the object side and the lens element surface of the first mode object-side lens group GA1 closest to the image side is DGA, and the central thickness of the first lens element E1 is CT1, the following condition is satisfied: DGA/CT1 = 1.26.

In the image capturing optical lens assembly of the 1st embodiment, when in the second state of the first mode, an axial distance between a lens element surface of the first mode object-side lens group GA1 closest to the image side and a lens element surface of the joint lens group GB closest to the object side is TGAB, and in the joint lens group GB, an axial distance between a lens element surface closest to the object side and a lens element surface closest to the image side is DGB, the following condition is satisfied: TGAB/DGB = 1.61.

Fig. 1C is a schematic view of the imaging apparatus 1 according to the 1st embodiment of Fig. 1A in the third state of the first mode, and Fig. 2C shows, in order from left to right, spherical aberration curves, astigmatic field curves and a distortion curve of the imaging apparatus 1 according to the 1st embodiment in the third state of the first mode. In Fig. 1C and Fig. 2C, according to the image capturing optical lens assembly of the 1st embodiment, when in the third state of the first mode, a focal length of the image capturing optical lens assembly is fM1-3, an f-number of the image capturing optical lens assembly is FnoM1-3, half of a maximum field of view of the image capturing optical lens assembly is HFOVM1-3, and the maximum field of view of the image capturing optical lens assembly is FOVM1-3, these parameters have the following values: fM1-3 = 16.43 mm; FnoM1-3 = 2.14; HFOVM1-3 = 14.5 degrees; and FOVM1-3 = 29.0 degrees.

In the image capturing optical lens assembly of the 1st embodiment, when in the third state of the first mode, an object distance of the image capturing optical lens assembly is 200.000 mm.

In the image capturing optical lens assembly of the 1st embodiment, when in the third state of the first mode, an axial distance between the imaged object and the stop S1 is D0, an axial distance between the first light path folding element P1 and the stop S2 is D1, and the axial distance between the fourth lens element E4 and the fifth lens element E5 is D2, the following conditions are satisfied: D0 = 200.000 mm; D1 = 3.560 mm; and D2 = 0.948 mm.

In the image capturing optical lens assembly of the 1st embodiment, when in the third state of the first mode, an axial distance between a lens element surface of the first mode object-side lens group GA1 closest to the object side and a lens element surface of the first mode object-side lens group GA1 closest to the image side is DGA (that is, DGA1), the following condition is satisfied: DGA = 1.70 mm.

In the image capturing optical lens assembly of the 1st embodiment, when in the third state of the first mode, the axial distance between the lens element surface of the first mode object-side lens group GA1 closest to the object side and the lens element surface of the first mode object-side lens group GA1 closest to the image side is DGA, and the central thickness of the first lens element E1 is CT1, the following condition is satisfied: DGA/CT1 = 1.26.

In the image capturing optical lens assembly of the 1st embodiment, when in the third state of the first mode, an axial distance between a lens element surface of the first mode object-side lens group GA1 closest to the image side and a lens element surface of the joint lens group GB closest to the object side is TGAB, in the joint lens group GB, and an axial distance between a lens element surface closest to the object side and a lens element surface closest to the image side is DGB, the following condition is satisfied: TGAB/DGB = 1.44.

The detailed optical data of the 1st embodiment are shown in Table 1A and the aspheric surface data are shown in Table 1B below.

| Table 1A - 1st Embodiment - First Mode | | | | | | | | |
|---|---|---|---|---|---|---|---|---|
| Surface # | | Curvature Radius | | Thickness | Material | Index | Abbe # | Focal Length |
| 0 | Object | Infinity | | D0 | | | | |
| 1 | Stop | Plano | | 0.000 | | | | |
| 2 | Lens A11 | 9.6074 | ASP | 1.700 | Plastic | 1.545 | 56.1 | 32.92 |
| 3 | | 19.3950 | ASP | 1.721 | | | | |
| 4 | First Light Path Folding Element | Plano | | 7.000 | Glass | 1.911 | 35.2 | - |
| 5 | | Plano | | D1 | | | | |
| 6 | Stop | Plano | | -1.093 | | | | |
| 7 | Lens 1 | 4.8213 | ASP | 1.354 | Plastic | 1.545 | 56.1 | 9.80 |
| 8 | | 44.6806 | ASP | 0.342 | | | | |
| 9 | Lens 2 | 6.2604 | ASP | 0.450 | Plastic | 1.639 | 23.5 | -10.55 |
| 10 | | 3.1549 | ASP | 0.690 | | | | |
| 11 | Stop | Plano | | 0.085 | | | | |
| 12 | Lens 3 | 23.9831 | ASP | 1.233 | Plastic | 1.587 | 28.3 | 5.90 |
| 13 | | -3.9690 | ASP | 0.040 | | | | |
| 14 | Lens 4 | -3.8278 | ASP | 0.400 | Plastic | 1.661 | 20.4 | -11.58 |
| 15 | | -7.9817 | ASP | D2 | | | | |
| 16 | Lens 5 | -3.1125 | ASP | 0.400 | Plastic | 1.545 | 56.1 | -14.56 |
| 17 | | -5.3533 | ASP | 0.908 | | | | |
| 18 | Lens 6 | 8.7269 | ASP | 0.925 | Plastic | 1.545 | 56.1 | -31.81 |
| 19 | | 5.5874 | ASP | 0.500 | | | | |
| 20 | Second Light Path Folding Element | Plano | | 7.000 | Glass | 1.847 | 23.8 | - |
| 21 | | Plano | | 0.200 | | | | |
| 22 | Filter | Plano | | 0.210 | Glass | 1.517 | 64.2 | - |

(continued)

| Table 1A - 1st Embodiment - First Mode | | | | | | | |
|---|---|---|---|---|---|---|---|
| Surface # | | Curvature Radius | Thickness | Material | Index | Abbe # | Focal Length |
| 23 | | Plano | 0.360 | | | | |
| 24 | Image | Plano | - | | | | |
| Reference wavelength is 587.6 nm (d-line). | | | | | | | |
| Effective radius of Surface 1 (Stop S1) is 5.250 mm. | | | | | | | |
| Effective radius of Surface 6 (Stop S2) is 3.075 mm. | | | | | | | |
| Effective radius of Surface 11 (Stop S3) is 2.494 mm. | | | | | | | |

| Table 1B - Aspheric Coefficients | | | | | |
|---|---|---|---|---|---|
| Surface # | 2 | 3 | 7 | 8 | 9 |
| k = | 0.0000000E+00 | 0.0000000E+00 | 0.0000000E+00 | 0.0000000E+00 | 0.0000000E+00 |
| A4 = | -2.0556661E-04 | -2.5580928E-04 | 2.5512687E-04 | 4.5405368E-03 | -7.2309120E-03 |
| A6 = | 3.9686550E-06 | -7.1308842E-06 | -1.5337580E-05 | -3.2213190E-03 | -7.0289077E-03 |
| A8 = | -2.3677861E-06 | -5.6822325E-07 | 5.2786604E-05 | 2.2154829E-03 | 4.6723142E-03 |
| A10= | 3.2784755E-07 | 1.6196130E-07 | -4.1032014E-05 | -9.5124854E-04 | -1.1396318E-03 |
| A12= | -2.9272441E-08 | -2.2916414E-08 | 2.2179002E-05 | 2.9895866E-04 | -8.2047516E-05 |
| A14= | 1.6162227E-09 | 1.8068466E-09 | -7.4536186E-06 | -7.4140531E-05 | 1.4144834E-04 |
| A16= | -5.5063237E-11 | -8.6051022E-11 | 1.5395001E-06 | 1.3804835E-05 | -4.9306337E-05 |
| A18= | 1.0808958E-12 | 2.4437777E-12 | -1.9706690E-07 | -1.7110114E-06 | 1.0532961E-05 |
| A20= | -1.0321028E-14 | -3.8040090E-14 | 1.5260169E-08 | 1.1051698E-07 | -1.5853647E-06 |
| A22= | 2.6507070E-17 | 2.4872042E-16 | -6.5549372E-10 | 9.3398708E-10 | 1.6991758E-07 |
| A24= | | | 1.1991859E-11 | -7.2704008E-10 | -1.2265150E-08 |
| A26= | | | | 4.8968966E-11 | 5.2821455E-10 |
| A28= | | | | -1.1240879E-12 | -1.0156555E-11 |
| Surface # | 10 | 12 | 13 | 14 | 15 |
| k = | -1.0000000E+00 | 0.0000000E+00 | 0.0000000E+00 | 0.0000000E+00 | 0.0000000E+00 |
| A4 = | -6.7800976E-03 | 5.8406045E-03 | 1.9030447E-02 | 1.3545042E-02 | 4.5008624E-04 |
| A6 = | -8.4402977E-03 | -3.8845440E-03 | -1.9629396E-02 | -1.2267307E-02 | -2.1929646E-04 |
| A8 = | 5.8209818E-03 | 1.1906398E-03 | 1.6362145E-02 | 1.0206197E-02 | 2.4221553E-03 |
| A10= | -1.7621189E-03 | 2.8353833E-04 | -1.0931789E-02 | -6.0150487E-03 | -2.5874514E-03 |
| A12= | 1.3567812E-04 | -6.8367085E-04 | 6.0156462E-03 | 2.9109375E-03 | 1.6388070E-03 |
| A14= | 8.5685408E-05 | 4.9963190E-04 | -2.4940647E-03 | -1.0760276E-03 | -7.0937843E-04 |
| A16= | -3.8066244E-05 | -2.2617790E-04 | 7.4031971E-04 | 2.8099531E-04 | 2.1892151E-04 |
| A18= | 8.8195114E-06 | 6.8538217E-05 | -1.5509763E-04 | -4.9622512E-05 | -4.8736683E-05 |
| A20= | -1.3876787E-06 | -1.4032830E-05 | 2.2716054E-05 | 5.6185173E-06 | 7.7662673E-06 |
| A22= | 1.4709624E-07 | 1.9122877E-06 | -2.2732887E-06 | -3.5271385E-07 | -8.6163475E-07 |
| A24= | -9.2891176E-09 | -1.6606936E-07 | 1.4769818E-07 | 4.7371895E-09 | 6.2935007E-08 |
| A26= | 2.5952287E-10 | 8.3136313E-09 | -5.5839458E-09 | 7.9318710E-10 | -2.7058976E-09 |

(continued)

| Surface # | 10 | 12 | 13 | 14 | 15 |
|---|---|---|---|---|---|
| A28= | | -1.8251138E-10 | 9.2404171E-11 | -3.7315208E-11 | 5.1574173E-11 |
| Surface # | 16 | 17 | 18 | 19 | |
| k = | 0.0000000E+00 | 0.0000000E+00 | 0.0000000E+00 | 0.0000000E+00 | |
| A4 = | 5.5233838E-02 | 4.1685174E-02 | -1.8250154E-02 | -2.0853744E-02 | |
| A6 = | -1.6711231E-02 | -6.6306729E-03 | -1.7519617E-03 | 3.8067864E-03 | |
| A8 = | 9.1193659E-03 | -1.2042597E-03 | 5.9768231E-03 | -1.5484444E-03 | |
| A10= | -5.5801926E-03 | 2.5706796E-03 | -6.0163159E-03 | 7.2213851E-04 | |
| A12= | 2.8253935E-03 | -1.7555050E-03 | 3.7888242E-03 | -2.6379619E-04 | |
| A14= | -1.0636885E-03 | 7.5403147E-04 | -1.6163140E-03 | 6.9425420E-05 | |
| A16= | 2.9025293E-04 | -2.2323515E-04 | 4.8184696E-04 | -1.3117523E-05 | |
| A18= | -5.6757383E-05 | 4.6826753E-05 | -1.0167109E-04 | 1.7822727E-06 | |
| A20= | 7.8305621E-06 | -6.9754393E-06 | 1.5143369E-05 | -1.7270768E-07 | |
| A22= | -7.4044273E-07 | 7.2377408E-07 | -1.5594099E-06 | 1.1643171E-08 | |
| A24= | 4.5436303E-08 | -4.9808883E-08 | 1.0576810E-07 | -5.1833243E-10 | |
| A26= | -1.6207891E-09 | 2.0432691E-09 | -4.2550496E-09 | 1.3673789E-11 | |
| A28= | 2.5343612E-11 | -3.7759868E-11 | 7.6963047E-11 | -1.6147839E-13 | |

Table 1A shows the detailed optical data of Fig. 1A of the 1st embodiment in the first mode, wherein the curvature radius, thickness and the focal length are shown in millimeters (mm), surface numbers 0-24 represent the surfaces sequentially arranged from the object side to the image side, and the refractive index is measured in accordance with the reference wavelength. Table 1B shows the aspheric surface data of the 1st embodiment in the first mode, wherein k represents the conic coefficient of the equation of the aspheric surface profiles, and A4-A28 represent the aspheric coefficients of each surface ranging from the 4th order to the 28th order. The tables presented below for each embodiment correspond to the schematic view and aberration curves of each embodiment, and term definitions of the tables are the same as those in Table 1A and Table 1B of the 1st embodiment. Therefore, an explanation in this regard will not be provided again.

It should be mentioned that, the position of stop is not disclosed in Table 1A because the position of stop can be adjusted according to different object distances. That is, in each state, the image capturing optical lens assembly can have different object distances. In the first mode of the 1st embodiment, the position of stop of the first state is at surface 6, the position of stop of the second state is at surface 6, and the position of stop of the third state is at surface 11.

<1st Embodiment - Second Mode>

Fig. 1D is a schematic view of the imaging apparatus 1 according to the 1st embodiment in a first state of a second mode of the present disclosure, Fig. 2D shows, in order from left to right, spherical aberration curves, astigmatic field curves and a distortion curve of the imaging apparatus 1 according to the 1st embodiment in the first state of the second mode. In Fig. 1D, the imaging apparatus 1 according to the 1st embodiment includes the image capturing optical lens assembly (its reference number is omitted) and the image sensor IS. In the second mode, the image capturing optical lens assembly includes, in order from the object side to the image side along the optical path, the stop S1, a second mode object-side lens group GA2, the first light path folding element P1, the joint lens group GB, the second light path folding element P2, the filter E7 and the image surface IMG, wherein the image sensor IS is disposed on the image surface IMG of the image capturing optical lens assembly. There is without additional one or more lens elements inserted between the joint lens group GB and the image surface IMG.

The second mode object-side lens group GA2 includes, in order from the object side to the image side along the optical path, a lens element A21 and a lens element A22. There is without additional one or more lens elements inserted between the lens element A21 and the lens element A22, and there is an air gap on the optical axis between the lens element A21 and the lens element A22.

The lens element A21 with positive refractive power has an object-side surface being concave in a paraxial region thereof and an image-side surface being convex in a paraxial region thereof. The lens element A21 is made of plastic material, and has the object-side surface and the image-side surface being both aspheric. Moreover, Fig. 13B is a schematic view of inflection points **IP** and critical points CP of the imaging apparatus 1 according to the 1st embodiment of Fig. 1D in the first state of the second mode. The object-side surface of the lens element A21 includes one inflection point **IP** (shown in Fig. 13B) and one critical point CP (shown in Fig. 13B), the image-side surface of the lens element A21 includes one inflection point **IP** (shown in Fig. 13B) and one critical point CP (shown in Fig. 13B).

The lens element A22 with negative refractive power has an object-side surface being convex in a paraxial region thereof and an image-side surface being concave in a paraxial region thereof. The lens element A22 is made of glass material, and has the object-side surface and the image-side surface being both aspheric. Moreover, the object-side surface of the lens element A22 includes one inflection point **IP** (shown in Fig. 13B) and one critical point CP (shown in Fig. 13B), the image-side surface of the lens element A22 includes one inflection point IP (shown in Fig. 13B) and one critical point CP (shown in Fig. 13B).

The first light path folding element P1 and the second light path folding element P2 are both prisms and made of glass material.

The joint lens group GB includes, in order from the object side to the image side along the optical path, the stop S2, the first lens element E1, the second lens element E2, the stop S3, the third lens element E3, the fourth lens element E4, the fifth lens element E5 and the six lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes the middle lens group Gm and the last lens group Gn, the first lens element E1, the second lens element E2, the third lens element E3 and the fourth lens element E4 belong to the middle lens group Gm, and the fifth lens element E5 and the sixth lens element E6 belong to the last lens group Gn.

The first lens element E1 with positive refractive power has an object-side surface being convex in a paraxial region thereof and an image-side surface being concave in a paraxial region thereof. The first lens element E1 is made of plastic material, and has the object-side surface and the image-side surface being both aspheric.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes one inflection point **IP** (shown in Fig. 13B), the image-side surface of the second lens element E2 includes one inflection point **IP** (shown in Fig. 13B).

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the object-side surface of the third lens element E3 includes one inflection point **IP** (shown in Fig. 13B).

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the image-side surface of the fourth lens element E4 includes one inflection point **IP** (shown in Fig. 13B).

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes one inflection point **IP** (shown in Fig. 13B), the image-side surface of the fifth lens element E5 includes one inflection point IP (shown in Fig. 13B) and one critical point CP (shown in Fig. 13B).

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes one inflection point IP (shown in Fig. 13B) and one critical point CP (shown in Fig. 13B), the image-side surface of the sixth lens element E6 includes one inflection point IP (shown in Fig. 13B).

The filter E7 is made of glass material and disposed between the second light path folding element P2 and the image surface IMG and will not affect a focal length of the image capturing optical lens assembly.

The detailed optical data of the 1st embodiment are shown in Table 2A and the aspheric surface data are shown in Table 2B below.

| Table 2A - 1st Embodiment - Second Mode | | | | | | | |
|---|---|---|---|---|---|---|---|
| Surface # | | Curvature Radius | Thickness | Material | Index | Abbe # | Focal Length |
| 0 | Object | Infinity | D0 | | | | |

(continued)

| Table 2A - 1st Embodiment - Second Mode | | | | | | | | |
|---|---|---|---|---|---|---|---|---|
| Surface # | | Curvature Radius | | Thickness | Material | Index | Abbe # | Focal Length |
| 1 | Stop | Plano | | 0.550 | | | | |
| 2 | Lens A21 | -41.4059 | ASP | 1.199 | Plastic | 1.511 | 56.8 | 15.99 |
| 3 | | -6.8895 | ASP | 0.450 | | | | |
| 4 | Lens A22 | 19.1833 | ASP | 1.035 | Glass | 1.749 | 35.0 | -23.03 |
| 5 | | 8.8752 | ASP | 0.736 | | | | |
| 6 | First Light Path Folding Element | Plano | | 7.000 | Glass | 1.911 | 35.2 | - |
| 7 | | Plano | | D1 | | | | |
| 8 | Stop | Plano | | -0.422 | | | | |
| 9 | Lens 1 | 4.8213 | ASP | 1.354 | Plastic | 1.545 | 56.1 | 9.80 |
| 10 | | 44.6806 | ASP | 0.342 | | | | |
| 11 | Lens 2 | 6.2604 | ASP | 0.450 | Plastic | 1.639 | 23.5 | -10.55 |
| 12 | | 3.1549 | ASP | 0.690 | | | | |
| 13 | Stop | Plano | | 0.085 | | | | |
| 14 | Lens 3 | 23.9831 | ASP | 1.233 | Plastic | 1.587 | 28.3 | 5.90 |
| 15 | | -3.9690 | ASP | 0.040 | | | | |
| 16 | Lens 4 | -3.8278 | ASP | 0.400 | Plastic | 1.661 | 20.4 | -11.58 |
| 17 | | -7.9817 | ASP | D2 | | | | |
| 18 | Lens 5 | -3.1125 | ASP | 0.400 | Plastic | 1.545 | 56.1 | -14.56 |
| 19 | | -5.3533 | ASP | 0.908 | | | | |
| 20 | Lens 6 | 8.7269 | ASP | 0.925 | Plastic | 1.545 | 56.1 | -31.81 |
| 21 | | 5.5874 | ASP | 0.500 | | | | |
| 22 | Second Light Path Folding Element | Plano | | 7.000 | Glass | 1.847 | 23.8 | - |
| 23 | | Plano | | 0.200 | | | | |
| 24 | Filter | Plano | | 0.210 | Glass | 1.517 | 64.2 | - |
| 25 | | Plano | | 0.357 | | | | |
| 26 | Image | Plano | | - | | | | |
| Reference wavelength is 587.6 nm (d-line). | | | | | | | | |
| Effective radius of Surface 1 (Stop S1) is 4.468 mm. | | | | | | | | |
| Effective radius of Surface 8 (Stop S2) is 2.006 mm. | | | | | | | | |
| Effective radius of Surface 13 (Stop S3) is 2.494 mm. | | | | | | | | |

| Table 2B - Aspheric Coefficients | | | | | |
|---|---|---|---|---|---|
| Surface # | 2 | 3 | 4 | 5 | 9 |
| k = | 0.0000000E+00 | 0.0000000E+00 | 0.0000000E+00 | 0.0000000E+00 | 0.0000000E+00 |
| A4 = | -1.0732466E-02 | -8.5273797E-03 | 1.1511314E-02 | 1.2115226E-02 | 2.5512687E-04 |
| A6 = | -5.1290205E-04 | -3.2947738E-03 | -1.1102775E-02 | -9.3631362E-03 | -1.5337580E-05 |

(continued)

| Table 2B - Aspheric Coefficients | | | | | |
|---|---|---|---|---|---|
| Surface # | 2 | 3 | 4 | 5 | 9 |
| A8 = | 1.4928651E-03 | 3.7013087E-03 | 6.2071455E-03 | 4.2228826E-03 | 5.2786604E-05 |
| A10= | -5.1329224E-04 | -1.2917839E-03 | -2.0603750E-03 | -1.3310983E-03 | -4.1032014E-05 |
| A12= | 9.4768743E-05 | 2.5562705E-04 | 4.3065003E-04 | 2.8534318E-04 | 2.2179002E-05 |
| A14= | -1.1046479E-05 | -3.2702416E-05 | -5.9594035E-05 | -4.1826732E-05 | -7.4536186E-06 |
| A16= | 8.6216177E-07 | 2.8497947E-06 | 5.6087841E-06 | 4.2275079E-06 | 1.5395001E-06 |
| A18= | -4.6150284E-08 | -1.7219190E-07 | -3.6142520E-07 | -2.9413731E-07 | -1.9706690E-07 |
| A20= | 1.6938993E-09 | 7.1476181E-09 | 1.5721623E-08 | 1.3831685E-08 | 1.5260169E-08 |
| A22= | -4.1323232E-11 | -1.9537562E-10 | -4.4203575E-10 | -4.1989350E-10 | -6.5549372E-10 |
| A24= | 6.1145394E-13 | 3.1750108E-12 | 7.2647913E-12 | 7.4287433E-12 | 1.1991859E-11 |
| A26= | -4.1902186E-15 | -2.3258236E-14 | -5.3095371E-14 | -5.8190105E-14 | |
| Surface # | 10 | 11 | 12 | 14 | 15 |
| k = | 0.0000000E+00 | 0.0000000E+00 | -1.0000000E+00 | 0.0000000E+00 | 0.0000000E+00 |
| A4 = | 4.5405368E-03 | -7.2309120E-03 | -6.7800976E-03 | 5.8406045E-03 | 1.9030447E-02 |
| A6 = | -3.2213190E-03 | -7.0289077E-03 | -8.4402977E-03 | -3.8845440E-03 | -1.9629396E-02 |
| A8 = | 2.2154829E-03 | 4.6723142E-03 | 5.8209818E-03 | 1.1906398E-03 | 1.6362145E-02 |
| A10= | -9.5124854E-04 | -1.1396318E-03 | -1.7621189E-03 | 2.8353833E-04 | -1.0931789E-02 |
| A12= | 2.9895866E-04 | -8.2047516E-05 | 1.3567812E-04 | -6.8367085E-04 | 6.0156462E-03 |
| A14= | -7.4140531E-05 | 1.4144834E-04 | 8.5685408E-05 | 4.9963190E-04 | -2.4940647E-03 |
| A16= | 1.3804835E-05 | -4.9306337E-05 | -3.8066244E-05 | -2.2617790E-04 | 7.4031971E-04 |
| A18= | -1.7110114E-06 | 1.0532961E-05 | 8.8195114E-06 | 6.8538217E-05 | -1.5509763E-04 |
| A20= | 1.1051698E-07 | -1.5853647E-06 | -1.3876787E-06 | -1.4032830E-05 | 2.2716054E-05 |
| A22= | 9.3398708E-10 | 1.6991758E-07 | 1.4709624E-07 | 1.9122877E-06 | -2.2732887E-06 |
| A24= | -7.2704008E-10 | -1.2265150E-08 | -9.2891176E-09 | -1.6606936E-07 | 1.4769818E-07 |
| A26= | 4.8968966E-11 | 5.2821455E-10 | 2.5952287E-10 | 8.3136313E-09 | -5.5839458E-09 |
| A28= | -1.1240879E-12 | -1.0156555E-11 | | -1.8251138E-10 | 9.2404171E-11 |
| Surface # | 16 | 17 | 18 | 19 | 20 |
| k = | 0.0000000E+00 | 0.0000000E+00 | 0.0000000E+00 | 0.0000000E+00 | 0.0000000E+00 |
| A4 = | 1.3545042E-02 | 4.5008624E-04 | 5.5233838E-02 | 4.1685174E-02 | -1.8250154E-02 |
| A6 = | -1.2267307E-02 | -2.1929646E-04 | -1.6711231E-02 | -6.6306729E-03 | -1.7519617E-03 |
| A8 = | 1.0206197E-02 | 2.4221553E-03 | 9.1193659E-03 | -1.2042597E-03 | 5.9768231E-03 |
| A10= | -6.0150487E-03 | -2.5874514E-03 | -5.5801926E-03 | 2.5706796E-03 | -6.0163159E-03 |
| A12= | 2.9109375E-03 | 1.6388070E-03 | 2.8253935E-03 | -1.7555050E-03 | 3.7888242E-03 |
| A14= | -1.0760276E-03 | -7.0937843E-04 | -1.0636885E-03 | 7.5403147E-04 | -1.6163140E-03 |
| A16= | 2.8099531E-04 | 2.1892151E-04 | 2.9025293E-04 | -2.2323515E-04 | 4.8184696E-04 |
| A18= | -4.9622512E-05 | -4.8736683E-05 | -5.6757383E-05 | 4.6826753E-05 | -1.0167109E-04 |
| A20= | 5.6185173E-06 | 7.7662673E-06 | 7.8305621E-06 | -6.9754393E-06 | 1.5143369E-05 |
| A22= | -3.5271385E-07 | -8.6163475E-07 | -7.4044273E-07 | 7.2377408E-07 | -1.5594099E-06 |
| A24= | 4.7371895E-09 | 6.2935007E-08 | 4.5436303E-08 | -4.9808883E-08 | 1.0576810E-07 |

(continued)

| Surface # | 16 | 17 | 18 | 19 | 20 |
|---|---|---|---|---|---|
| A26= | 7.9318710E-10 | -2.7058976E-09 | -1.6207891E-09 | 2.0432691E-09 | -4.2550496E-09 |
| A28= | -3.7315208E-11 | 5.1574173E-11 | 2.5343612E-11 | -3.7759868E-11 | 7.6963047E-11 |
| Surface # | 21 | | | | |
| k = | 0.0000000E+00 | | | | |
| A4 = | -2.0853744E-02 | | | | |
| A6 = | 3.8067864E-03 | | | | |
| A8 = | -1.5484444E-03 | | | | |
| A10= | 7.2213851E-04 | | | | |
| A12= | -2.6379619E-04 | | | | |
| A14= | 6.9425420E-05 | | | | |
| A16= | -1.3117523E-05 | | | | |
| A18= | 1.7822727E-06 | | | | |
| A20= | -1.7270768E-07 | | | | |
| A22= | 1.1643171E-08 | | | | |
| A24= | -5.1833243E-10 | | | | |
| A26= | 1.3673789E-11 | | | | |
| A28= | -1.6147839E-13 | | | | |

It should be mentioned that, the position of stop is not disclosed in Table 2A because the position of stop can be adjusted according to different object distances. That is, in each state, the image capturing optical lens assembly can have different object distances. In the second mode of the 1st embodiment, the position of stop of the first state is at surface 8.

In the second mode of the 1st embodiment, the equation of the aspheric surface profiles of the aforementioned lens elements is the same as the equation in the first mode of the 1st embodiment. Furthermore, the parameters marked with "M2-1" in the following tables represents the parameters in "the first state of the second mode" (the symbol of M1-1 represents the first state of the first mode, the symbol of M1-2 represents the second state of the first mode, and so on), and "DGA2" is the DGA value of the second mode object-side lens group GA2. The definitions of the remaining parameters shown in the following table are the same as those stated in the first mode of the 1st embodiment with corresponding values for the second mode of the 1st embodiment, so an explanation in this regard will not be provided again.

Moreover, these parameters can be calculated from Table 2A and Table 2B as the following values and satisfy the following conditions:

| Table 2C | |
|---|---|
| | First State |
| fM2-1 [mm] | 24.52 |
| FnoM2-1 | 3.05 |
| HFOVM2-1 [deg.] | 5.9 |
| Object Distance [mm] | Infinity |
| D0 [mm] | Infinity |
| D1 [mm] | 13.642 |
| D2 [mm] | 0.250 |
| FOVM2-1 [deg.] | 11.8 |
| DGA(DGA2) | 2.68 |
| DGA/CT1 | 1.98 |

(continued)

| Table 2C | |
|---|---|
| | First State |
| TGAB/DGB | 2.96 |
| ΣPGn | -4.57 |

Moreover, Fig. 13D is a schematic view of parameters of the imaging apparatus 1 according to the 1st embodiment of Fig. 1D in the first state of the second mode. In Fig. 13C and 13D, according to the image capturing optical lens assembly of the 1st embodiment can further satisfy the following conditions:

In the image capturing optical lens assembly of the 1st embodiment, when the object distance is set as the capturing state of infinite, and the image capturing optical lens assembly switches between the first mode and the second mode, a moving distance along the optical path of the first light path folding element P1 related to the last lens group Gn is TPM12, and an axial length in the first light path folding element P1 is CTP1, the following condition is satisfied: TPM12/CTP1 = 1.44.

In the image capturing optical lens assembly of the 1st embodiment, when a maximum image height of the image capturing optical lens assembly in the first mode is ImgH1, which can be half of a total diagonal length of an effective sensing area of the image sensor, and a maximum image height of the image capturing optical lens assembly in the second mode is ImgH2, which can be the half of the total diagonal length of the effective sensing area of the image sensor, the following condition is satisfied: ImgH1/ImgH2 = 2.02.

In the image capturing optical lens assembly of the 1st embodiment, when a focal length of the first lens element E1 is f1, a focal length of the second lens element E2 is f2, a focal length of the third lens element E3 is f3, and a focal length of the fourth lens element E4 is f4, the following conditions are satisfied: $(|f1|+|f2|)/|f4| = 1.76$; $f1/f4 = -0.85$; and $|f1/f3|+|f1/f4| = 2.51$.

In the image capturing optical lens assembly of the 1st embodiment, when a refractive index of the first lens element E1 at a d-line is N1, a refractive index of the fifth lens element E5 at the d-line is N5, an Abbe number of the first lens element E1 is V1, and an Abbe number of the fifth lens element E5 is V5, the following condition is satisfied: $10\times(N1/V1+N5/V5) = 0.55$.

In the image capturing optical lens assembly of the 1st embodiment, when in all modes and all states of the image capturing optical lens assembly, a maximum of axial distances between a lens element surface closest to the object side and the image surface IMG is TLmax, the following condition is satisfied: TLmax = 38.98 mm.

In the image capturing optical lens assembly of the 1st embodiment, when in all central thicknesses of all the lens elements in the image capturing optical lens assembly, a maximum value of lens element central thickness is CTmax, the following condition is satisfied: CTmax = 1.70 mm.

In the image capturing optical lens assembly of the 1st embodiment, when in all modes and all states of the image capturing optical lens assembly, a minimum of optical effective radii of the lens element surface closest to the object side is YGAR1min, the following condition is satisfied: YGAR1min = 4.47 mm.

In the image capturing optical lens assembly of the 1st embodiment, when an axial distance between the first lens element E1 and the second lens element E2 is T12, in the present embodiment, an axial distance between adjacent two lens elements is an axial distance between two adjacent lens element surfaces of the adjacent two lens elements, and the focal length of the fourth lens element E4 is f4, the following condition is satisfied: $|10\times T12/f4| = 0.30$.

In the image capturing optical lens assembly of the 1st embodiment, when the central thickness of the first lens element E1 is CT1, and a central thickness of the sixth lens element E6 is CT6, the following condition is satisfied: CT1/CT6 = 1.46.

In the image capturing optical lens assembly of the 1st embodiment, when the central thickness of the first lens element E1 is CT1, a central thickness of the fifth lens element E5 is CT5, and the axial distance between the first lens element E1 and the second lens element E2 is T12, the following condition is satisfied: (CT1+T12)/CT5 = 4.24.

In the image capturing optical lens assembly of the 1st embodiment, when the refractive index of the fifth lens element E5 at the d-line is N5, the following condition is satisfied: N5 = 1.54.

<2nd Embodiment - First Mode>

Fig. 3A is a schematic view of an imaging apparatus 2 according to the 2nd embodiment in a first state of a first mode of the present disclosure, and Fig. 4A shows, in order from left to right, spherical aberration curves, astigmatic field curves and a distortion curve of the imaging apparatus 2 according to the 2nd embodiment in the first state of the first mode. In Fig. 3A, the imaging apparatus 2 according to the 2nd embodiment includes an image capturing optical lens assembly (its reference number is omitted) and an image sensor IS. In the first mode, the image capturing optical lens assembly includes, in order from an object side to an image side along an optical path, a stop S1, a first mode object-side lens group GA1, a first light path folding element P1, a joint lens group GB, a second light path folding element P2, a filter E7 and an image surface IMG, wherein the image sensor IS is disposed on the image surface IMG of the image capturing optical lens assembly. There is without additional one or more lens elements inserted between the joint lens group GB and the image surface IMG.

The first mode object-side lens group GA1 includes a lens element A11. The lens element A11 with positive refractive power has an object-side surface being convex in a paraxial region thereof and an image-side surface being convex in a paraxial region thereof. The lens element A11 is made of glass material, and has the object-side surface and the image-side surface being both aspheric. Moreover, the object-side surface of the lens element A11 includes one inflection point.

The first light path folding element P1 and the second light path folding element P2 are both prisms and made of glass material.

The joint lens group GB includes, in order from the object side to the image side along the optical path, a first lens element E1, a second lens element E2, a third lens element E3, a stop S2, a fourth lens element E4, a stop S3, a fifth lens element E5 and a sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes a middle lens group Gm and a last lens group Gn. The first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes three inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and two critical points, the image-side surface of the fifth lens element E5 includes two inflection points and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes two inflection points, the image-side surface of the sixth lens element E6 includes one inflection point and one critical point.

The filter E7 is made of glass material and disposed between the second light path folding element P2 and the image surface IMG and will not affect a focal length of the image capturing optical lens assembly.

The detailed optical data of the 2nd embodiment are shown in Table 3A and the aspheric surface data are shown in Table 3B below.

| Table 3A - 2nd Embodiment - First Mode | | | | | | | |
|---|---|---|---|---|---|---|---|
| Surface # | | Curvature Radius | Thickness | Material | Index | Abbe # | Focal Length |
| 0 | Object | Plano | D0 | | | | |

(continued)

| Table 3A - 2nd Embodiment - First Mode | | | | | | | | |
|---|---|---|---|---|---|---|---|---|
| Surface # | | Curvature Radius | | Thickness | Material | Index | Abbe # | Focal Length |
| 1 | Stop | Plano | | -0.548 | | | | |
| 2 | Lens A11 | 24.7388 | ASP | 1.549 | Glass | 1.497 | 81.6 | 37.12 |
| 3 | | -71.0784 | ASP | 1.590 | | | | |
| 4 | First Light Path Folding Element | Plano | | 8.200 | Glass | 1.911 | 35.2 | - |
| 5 | | Plano | | D1 | | | | |
| 6 | Lens 1 | 14.2390 | ASP | 1.036 | Plastic | 1.587 | 28.3 | 13.56 |
| 7 | | -17.5723 | ASP | 0.307 | | | | |
| 8 | Lens 2 | 7.3744 | ASP | 0.830 | Plastic | 1.661 | 20.4 | -10.45 |
| 9 | | 3.4053 | ASP | 1.106 | | | | |
| 10 | Lens 3 | 18.7256 | ASP | 1.461 | Plastic | 1.545 | 56.1 | 12.53 |
| 11 | | -10.4455 | ASP | -0.600 | | | | |
| 12 | Stop | Plano | | D2 | | | | |
| 13 | Lens 4 | -3.7188 | ASP | 0.666 | Plastic | 1.545 | 56.1 | -20.15 |
| 14 | | -5.9784 | ASP | 0.703 | | | | |
| 15 | Stop | Plano | | -0.150 | | | | |
| 16 | Lens 5 | -43.7008 | ASP | 0.510 | Plastic | 1.587 | 28.3 | -203.62 |
| 17 | | -69.1708 | ASP | 0.440 | | | | |
| 18 | Lens 6 | 6.1070 | ASP | 1.201 | Plastic | 1.545 | 56.1 | -191.65 |
| 19 | | 5.3694 | ASP | 1.000 | | | | |
| 20 | Second Light Path Folding Element | Plano | | 11.000 | Glass | 1.911 | 35.2 | - |
| 21 | | Plano | | 0.500 | | | | |
| 22 | Filter | Plano | | 0.400 | Glass | 1.517 | 64.2 | - |
| 23 | | Plano | | 0.444 | | | | |
| 24 | Image | Plano | | - | | | | |
| Reference wavelength is 587.6 nm (d-line). | | | | | | | | |
| Effective radius of Surface 1 (Stop S1) is 6.020 mm. | | | | | | | | |
| Effective radius of Surface 12 (Stop S2) is 3.630 mm. | | | | | | | | |
| Effective radius of Surface 15 (Stop S3) is 3.622 mm. | | | | | | | | |

| Table 3B - Aspheric Coefficients | | | | | |
|---|---|---|---|---|---|
| Surface # | 2 | 3 | 6 | 7 | 8 |
| k = | 0.0000000E+00 | 0.0000000E+00 | 0.0000000E+00 | 0.0000000E+00 | 0.0000000E+00 |
| A4 = | -9.1020109E-05 | -7.3365548E-05 | 6.5074849E-04 | 5.9225146E-03 | -3.9441867E-03 |
| A6 = | 1.6318847E-05 | 1.7728784E-05 | -1.0388572E-04 | -1.3431952E-03 | -2.6005535E-04 |
| A8 = | -3.3685605E-06 | -4.0214773E-06 | 5.7387483E-05 | 7.2886850E-04 | 6.7599375E-04 |
| A10= | 4.1418824E-07 | 5.5136145E-07 | 1.5041820E-06 | -2.4207609E-04 | -2.8444577E-04 |

(continued)

| Table 3B - Aspheric Coefficients | | | | | |
|---|---|---|---|---|---|
| Surface # | 2 | 3 | 6 | 7 | 8 |
| A12= | -3.2793592E-08 | -4.9359963E-08 | -6.3934646E-06 | 4.9385224E-05 | 6.5292523E-05 |
| A14= | 1.6925371E-09 | 2.9311146E-09 | 1.9949739E-06 | -6.5989260E-06 | -9.6629077E-06 |
| A16= | -5.7261744E-11 | -1.1663968E-10 | -3.3406957E-07 | 5.8632976E-07 | 9.6825376E-07 |
| A18= | 1.2453583E-12 | 3.0761742E-12 | 3.5491174E-08 | -3.3728094E-08 | -6.5869822E-08 |
| A20= | -1.6508062E-14 | -5.1640189E-14 | -2.5022124E-09 | 1.1310310E-09 | 2.9454360E-09 |
| A22= | 1.1819716E-16 | 5.0016440E-16 | 1.1705334E-10 | -1.2933970E-11 | -7.8996606E-11 |
| A24= | -3.3419908E-19 | -2.1317032E-18 | -3.4995948E-12 | -4.8637313E-13 | 9.3118208E-13 |
| A26= | | | 6.0628239E-14 | 1.9937058E-14 | 5.6269222E-15 |
| A28= | | | -4.6346159E-16 | -2.2097215E-16 | -1.9822491E-16 |
| Surface # | 9 | 10 | 11 | 13 | 14 |
| k = | -1.0000000E+00 | 0.0000000E+00 | 0.0000000E+00 | -1.0000000E+00 | 0.0000000E+00 |
| A4 = | -1.0344709E-02 | 4.7829486E-05 | 1.7838591E-04 | 2.9653340E-02 | 2.8882360E-02 |
| A6 = | 1.2694437E-03 | -3.0427346E-05 | -8.4725226E-05 | -6.5298331E-03 | -6.3847522E-03 |
| A8 = | 6.1594515E-05 | -2.9933701E-05 | 1.7899842E-07 | 1.9770455E-03 | 2.5487079E-03 |
| A10= | -7.0404479E-05 | 3.3251921E-05 | 1.4202544E-05 | -5.7981405E-04 | -8.2494296E-04 |
| A12= | 1.1336745E-05 | -1.1385568E-05 | -5.4124592E-06 | 1.2765722E-04 | 1.7560714E-04 |
| A14= | 1.8620595E-07 | 2.0106981E-06 | 1.0247385E-06 | -1.9703469E-05 | -2.4697416E-05 |
| A16= | -3.5179408E-07 | -2.0099947E-07 | -1.1595689E-07 | 2.0892018E-06 | 2.3234432E-06 |
| A18= | 6.4737070E-08 | 1.0198341E-08 | 8.1518050E-09 | -1.4687739E-07 | -1.4479286E-07 |
| A20= | -6.5196735E-09 | -2.9375009E-11 | -3.4737142E-10 | 6.1590965E-09 | 5.7367540E-09 |
| A22= | 4.1071480E-10 | -2.7042448E-11 | 8.1434406E-12 | -9.1788404E-11 | -1.3112636E-10 |
| A24= | -1.6218761E-11 | 1.4708526E-12 | -7.8979535E-14 | -4.1670197E-12 | 1.3400388E-12 |
| A26= | 3.6997355E-13 | -3.0830220E-14 | | 2.2782630E-13 | -9.5277846E-16 |
| A28= | -3.7399593E-15 | 1.9333845E-16 | | -3.3739801E-15 | |
| Surface # | 16 | 17 | 18 | 19 | |
| k = | 0.0000000E+00 | 0.0000000E+00 | 0.0000000E+00 | 0.0000000E+00 | |
| A4 = | -4.4495908E-03 | -1.1464554E-02 | -1.0518759E-02 | -7.8883782E-03 | |
| A6 = | 5.7164477E-04 | 5.4563832E-03 | 2.7394679E-03 | 3.1772932E-04 | |
| A8 = | 1.8687557E-03 | -7.1785993E-04 | -6.4515346E-04 | 1.9219027E-05 | |
| A10= | -9.2783377E-04 | 6.9769713E-05 | 1.0654953E-04 | -1.2877545E-05 | |
| A12= | 2.4215311E-04 | -3.2332217E-05 | -1.3690235E-05 | 2.3740574E-06 | |
| A14= | -4.3280444E-05 | 1.1546554E-05 | 1.5104953E-06 | -2.4783609E-07 | |
| A16= | 5.8028899E-06 | -2.2423729E-06 | -1.4573266E-07 | 1.4924068E-08 | |
| A18= | -5.9927415E-07 | 2.6820998E-07 | 1.1525729E-08 | -3.6636761E-10 | |
| A20= | 4.6928142E-08 | -2.0945143E-08 | -6.8803244E-10 | -1.5481396E-11 | |
| A22= | -2.6667579E-09 | 1.0780017E-09 | 2.8940352E-11 | 1.6948657E-12 | |
| A24= | 1.0256836E-10 | -3.5405740E-11 | -7.9934247E-13 | -6.5499300E-14 | |
| A26= | -2.3694029E-12 | 6.7471845E-13 | 1.2946945E-14 | 1.2680239E-15 | |

(continued)

| Surface # | 16 | 17 | 18 | 19 | |
|---|---|---|---|---|---|
| A28= | 2.4702899E-14 | -5.6908650E-15 | -9.3018719E-17 | -1.0249191E-17 | |

It should be mentioned that, the position of stop is not disclosed in Table 3A because the position of stop can be adjusted according to different object distances. That is, in each state, the image capturing optical lens assembly can have different object distances. In the first mode of the 2nd embodiment, the position of stop of the first state is at surface 1, the position of stop of a second state is at surface 12, and the position of stop of a third state is at surface 12.

In the first mode of the 2nd embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 2nd embodiment, so an explanation in this regard will not be provided again.

Fig. 3B is a schematic view of the imaging apparatus 2 according to the 2nd embodiment of Fig. 3A in the second state of the first mode, Fig. 3C is a schematic view of the imaging apparatus 2 according to the 2nd embodiment of Fig. 3A in the third state of the first mode, Fig. 4B shows, in order from left to right, spherical aberration curves, astigmatic field curves and a distortion curve of the imaging apparatus 2 according to the 2nd embodiment in the second state of the first mode, Fig. 4C shows, in order from left to right, spherical aberration curves, astigmatic field curves and a distortion curve of the imaging apparatus 2 according to the 2nd embodiment in the third state of the first mode. Moreover, these parameters can be calculated from Table 3A and Table 3B as the following values and satisfy the following conditions:

| Table 3C | | | | | |
|---|---|---|---|---|---|
| | First State | | Second State | | Third State |
| fM1-1 [mm] | 23.88 | fM1-2 [mm] | 21.79 | fM1-3 [mm] | 18.58 |
| FnoM1-1 | 1.98 | FnoM1-2 | 2.15 | FnoM1-3 | 2.49 |
| HFOVM1-1 [deg.] | 14.5 | HFOVM1-2 [deg.] | 14.5 | HFOVM1-3 [deg.] | 14.5 |
| Object Distance [mm] | Infinity | Object Distance [mm] | 299.452 | Object Distance [mm] | 99.952 |
| D0 [mm] | Infinity | D0 [mm] | 300.000 | D0 [mm] | 100.500 |
| D1 [mm] | 3.859 | D1 [mm] | 3.023 | D1 [mm] | 1.459 |
| D2 [mm] | 1.724 | D2 [mm] | 2.560 | D2 [mm] | 4.124 |
| FOVM1-1 [deg.] | 29.0 | FOVM1-2 [deg.] | 29.0 | FOVM1-3 [deg.] | 28.9 |
| DGA(DGA1) | 1.55 | DGA(DGA1) | 1.55 | DGA(DGA1) | 1.55 |
| DGA/CT1 | 1.50 | DGA/CT1 | 1.50 | DGA/CT1 | 1.50 |
| TGAB/DGB | 1.48 | TGAB/DGB | 1.27 | TGAB/DGB | 0.97 |
| ΣPGn | -1.43 | | | | |

<2nd Embodiment - Second Mode>

Fig. 3D is a schematic view of the imaging apparatus 2 according to the 2nd embodiment in a first state of a second mode of the present disclosure, Fig. 4D shows, in order from left to right, spherical aberration curves, astigmatic field curves and a distortion curve of the imaging apparatus 2 according to the 2nd embodiment in the first state of the second mode. In Fig. 3D, the imaging apparatus 2 according to the 2nd embodiment includes the image capturing optical lens assembly (its reference number is omitted) and the image sensor IS. In the second mode, the image capturing optical lens assembly includes, in order from the object side to the image side along the optical path, the stop S1, a second mode object-side lens group GA2, the first light path folding element P1, the joint lens group GB, the second light path folding element P2, the filter E7 and the image surface IMG, wherein the image sensor IS is disposed on the image surface IMG of the image capturing optical lens assembly. There is without additional one or more lens elements inserted between the joint lens group GB and the image surface IMG.

The second mode object-side lens group GA2 includes, in order from the object side to the image side along the optical path, a lens element A21 and a lens element A22. There is without additional one or more lens elements inserted between the lens element A21 and the lens element A22, and there is an air gap on the optical axis between the lens element A21 and the lens element A22.

The lens element A21 with positive refractive power has an object-side surface being convex in a paraxial region thereof and an image-side surface being concave in a paraxial region thereof. The lens element A21 is made of plastic material, and has the object-side surface and the image-side surface being both aspheric. Moreover, the image-side surface of the lens element A21 includes two inflection points and two critical points.

The lens element A22 with negative refractive power has an object-side surface being concave in a paraxial region thereof and an image-side surface being convex in a paraxial region thereof. The lens element A22 is made of plastic material, and has the object-side surface and the image-side surface being both aspheric. Moreover, the object-side surface of the lens element A22 includes one inflection point and one critical point, the image-side surface of the lens element A22 includes one inflection point and one critical point.

The first light path folding element P1 and the second light path folding element P2 are both prisms and made of glass material.

The joint lens group GB includes, in order from the object side to the image side along the optical path, the first lens element E1, the second lens element E2, the third lens element E3, the stop S2, the fourth lens element E4, the stop S3, the fifth lens element E5 and the sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes the middle lens group Gm and the last lens group Gn, the first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes two inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and one critical point, the image-side surface of the fifth lens element E5 includes one inflection point and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes one inflection point, the image-side surface of the sixth lens element E6 includes one inflection point.

The filter E7 is made of glass material and disposed between the second light path folding element P2 and the image surface IMG and will not affect a focal length of the image capturing optical lens assembly.

The detailed optical data of the 2nd embodiment are shown in Table 4A and the aspheric surface data are shown in Table 4B below.

| Table 4A - 2nd Embodiment - Second Mode | | | | | | | |
|---|---|---|---|---|---|---|---|
| Surface # | | Curvature Radius | Thickness | Material | Index | Abbe # | Focal Length |
| 0 | Object | Infinity | D0 | | | | |

(continued)

| Table 4A - 2nd Embodiment - Second Mode | | | | | | | | |
|---|---|---|---|---|---|---|---|---|
| Surface # | | Curvature Radius | | Thickness | Material | Index | Abbe # | Focal Length |
| 1 | Stop | Plano | | -0.626 | | | | |
| 2 | Lens A21 | 18.9793 | ASP | 1.012 | Plastic | 1.545 | 56.1 | 38.03 |
| 3 | | 221.3172 | ASP | 0.187 | | | | |
| 4 | Lens A22 | -55.2522 | ASP | 0.714 | Plastic | 1.661 | 20.4 | -232.39 |
| 5 | | -86.7623 | ASP | 1.082 | | | | |
| 6 | First Light | Plano | | 8.200 | Glass | 1.911 | 35.2 | - |
| | Path Folding Element | | | | | | | |
| 7 | | Plano | | D1 | | | | |
| 8 | Lens 1 | 14.2390 | ASP | 1.036 | Plastic | 1.587 | 28.3 | 13.56 |
| 9 | | -17.5723 | ASP | 0.307 | | | | |
| 10 | Lens 2 | 7.3744 | ASP | 0.830 | Plastic | 1.661 | 20.4 | -10.45 |
| 11 | | 3.4053 | ASP | 1.106 | | | | |
| 12 | Lens 3 | 18.7256 | ASP | 1.461 | Plastic | 1.545 | 56.1 | 12.53 |
| 13 | | -10.4455 | ASP | -0.600 | | | | |
| 14 | Stop | Plano | | D2 | | | | |
| 15 | Lens 4 | -3.7188 | ASP | 0.666 | Plastic | 1.545 | 56.1 | -20.15 |
| 16 | | -5.9784 | ASP | 0.703 | | | | |
| 17 | Stop | Plano | | -0.150 | | | | |
| 18 | Lens 5 | -43.7008 | ASP | 0.510 | Plastic | 1.587 | 28.3 | -203.62 |
| 19 | | -69.1708 | ASP | 0.440 | | | | |
| 20 | Lens 6 | 6.1070 | ASP | 1.201 | Plastic | 1.545 | 56.1 | -191.65 |
| 21 | | 5.3694 | ASP | 1.000 | | | | |
| 22 | Second Light Path Folding Element | Plano | | 11.000 | Glass | 1.911 | 35.2 | - |
| 23 | | Plano | | 0.500 | | | | |
| 24 | Filter | Plano | | 0.400 | Glass | 1.517 | 64.2 | - |
| 25 | | Plano | | 0.444 | | | | |
| 26 | Image | Plano | | - | | | | |
| Reference wavelength is 587.6 nm (d-line). | | | | | | | | |
| Effective radius of Surface 1 (Stop S1) is 4.950 mm. | | | | | | | | |
| Effective radius of Surface 14 (Stop S2) is 3.630 mm. | | | | | | | | |
| Effective radius of Surface 17 (Stop S3) is 3.622 mm. | | | | | | | | |

| Table 4B - Aspheric Coefficients | | | | | |
|---|---|---|---|---|---|
| Surface # | 2 | 3 | 4 | 5 | 8 |
| k = | 0.0000000E+00 | 0.0000000E+00 | 0.0000000E+00 | 0.0000000E+00 | 0.0000000E+00 |
| A4 = | -1.5353708E-03 | -3.8150772E-03 | -7.1587540E-05 | 1.7579436E-03 | 6.5074849E-04 |

(continued)

| Table 4B - Aspheric Coefficients | | | | | |
|---|---|---|---|---|---|
| Surface # | 2 | 3 | 4 | 5 | 8 |
| A6 = | 5.6100682E-04 | 1.9922746E-03 | 7.8808652E-04 | -3.4503724E-04 | -1.0388572E-04 |
| A8 = | -1.3968486E-04 | -6.2377218E-04 | -3.4011371E-04 | 4.2594022E-05 | 5.7387483E-05 |
| A10= | 2.5116178E-05 | 1.2512483E-04 | 7.6251122E-05 | -2.6712889E-06 | 1.5041820E-06 |
| A12= | -3.1681115E-06 | -1.6600132E-05 | -1.0580355E-05 | -1.9824674E-09 | -6.3934646E-06 |
| A14= | 2.7724636E-07 | 1.4877616E-06 | 9.6701569E-07 | 1.5826450E-08 | 1.9949739E-06 |
| A16= | -1.6677565E-08 | -9.0556551E-08 | -5.9381373E-08 | -1.4714408E-09 | -3.3406957E-07 |
| A18= | 6.7524981E-10 | 3.6896871E-09 | 2.4288597E-09 | 7.2172884E-11 | 3.5491174E-08 |
| A20= | -1.7557305E-11 | -9.6331144E-11 | -6.3514652E-11 | -2.0986984E-12 | -2.5022124E-09 |
| A22= | 2.6452789E-13 | 1.4566980E-12 | 9.6109351E-13 | 3.4278549E-14 | 1.1705334E-10 |
| A24= | -1.7540882E-15 | -9.7003117E-15 | -6.4030021E-15 | -2.4362926E-16 | -3.4995948E-12 |
| A26= | | | | | 6.0628239E-14 |
| A28= | | | | | -4.6346159E-16 |
| Surface # | 9 | 10 | 11 | 12 | 13 |
| k = | 0.0000000E+00 | 0.0000000E+00 | -1.0000000E+0 0 | 0.0000000E+00 | 0.0000000E+00 |
| A4 = | 5.9225146E-03 | -3.9441867E-03 | -1.0344709E-02 | 4.7829486E-05 | 1.7838591E-04 |
| A6 = | -1.3431952E-03 | -2.6005535E-04 | 1.2694437E-03 | -3.0427346E-05 | -8.4725226E-05 |
| A8 = | 7.2886850E-04 | 6.7599375E-04 | 6.1594515E-05 | -2.9933701E-05 | 1.7899842E-07 |
| A10= | -2.4207609E-04 | -2.8444577E-04 | -7.0404479E-05 | 3.3251921E-05 | 1.4202544E-05 |
| A12= | 4.9385224E-05 | 6.5292523E-05 | 1.1336745E-05 | -1.1385568E-05 | -5.4124592E-06 |
| A14= | -6.5989260E-06 | -9.6629077E-06 | 1.8620595E-07 | 2.0106981E-06 | 1.0247385E-06 |
| A16= | 5.8632976E-07 | 9.6825376E-07 | -3.5179408E-07 | -2.0099947E-07 | -1.1595689E-07 |
| A18= | -3.3728094E-08 | -6.5869822E-08 | 6.4737070E-08 | 1.0198341E-08 | 8.1518050E-09 |
| A20= | 1.1310310E-09 | 2.9454360E-09 | -6.5196735E-09 | -2.9375009E-11 | -3.4737142E-10 |
| A22= | -1.2933970E-11 | -7.8996606E-11 | 4.1071480E-10 | -2.7042448E-11 | 8.1434406E-12 |
| A24= | -4.8637313E-13 | 9.3118208E-13 | -1.6218761E-11 | 1.4708526E-12 | -7.8979535E-14 |
| A26= | 1.9937058E-14 | 5.6269222E-15 | 3.6997355E-13 | -3.0830220E-14 | |
| A28= | -2.2097215E-16 | -1.9822491E-16 | -3.7399593E-15 | 1.9333845E-16 | |
| Surface # | 15 | 16 | 18 | 19 | 20 |
| k = | -1.0000000E+0 0 | 0.0000000E+00 | 0.0000000E+00 | 0.0000000E+00 | 0.0000000E+00 |
| A4 = | 2.9653340E-02 | 2.8882360E-02 | -4.4495908E-03 | -1.1464554E-02 | -1.0518759E-02 |
| A6 = | -6.5298331E-03 | -6.3847522E-03 | 5.7164477E-04 | 5.4563832E-03 | 2.7394679E-03 |
| A8 = | 1.9770455E-03 | 2.5487079E-03 | 1.8687557E-03 | -7.1785993E-04 | -6.4515346E-04 |
| A10= | -5.7981405E-04 | -8.2494296E-04 | -9.2783377E-04 | 6.9769713E-05 | 1.0654953E-04 |
| A12= | 1.2765722E-04 | 1.7560714E-04 | 2.4215311E-04 | -3.2332217E-05 | -1.3690235E-05 |
| A14= | -1.9703469E-05 | -2.4697416E-05 | -4.3280444E-05 | 1.1546554E-05 | 1.5104953E-06 |
| A16= | 2.0892018E-06 | 2.3234432E-06 | 5.8028899E-06 | -2.2423729E-06 | -1.4573266E-07 |
| A18= | -1.4687739E-07 | -1.4479286E-07 | -5.9927415E-07 | 2.6820998E-07 | 1.1525729E-08 |
| A20= | 6.1590965E-09 | 5.7367540E-09 | 4.6928142E-08 | -2.0945143E-08 | -6.8803244E-10 |

(continued)

| Surface # | 15 | 16 | 18 | 19 | 20 |
|---|---|---|---|---|---|
| A22= | -9.1788404E-11 | -1.3112636E-10 | -2.6667579E-09 | 1.0780017E-09 | 2.8940352E-11 |
| A24= | -4.1670197E-12 | 1.3400388E-12 | 1.0256836E-10 | -3.5405740E-11 | -7.9934247E-13 |
| A26= | 2.2782630E-13 | -9.5277846E-16 | -2.3694029E-12 | 6.7471845E-13 | 1.2946945E-14 |
| A28= | -3.3739801E-15 | | 2.4702899E-14 | -5.6908650E-15 | -9.3018719E-17 |
| Surface # | 21 | | | | |
| k = | 0.0000000E+00 | | | | |
| A4 = | -7.8883782E-03 | | | | |
| A6 = | 3.1772932E-04 | | | | |
| A8 = | 1.9219027E-05 | | | | |
| A10= | -1.2877545E-05 | | | | |
| A12= | 2.3740574E-06 | | | | |
| A14= | -2.4783609E-07 | | | | |
| A16= | 1.4924068E-08 | | | | |
| A18= | -3.6636761E-10 | | | | |
| A20= | -1.5481396E-11 | | | | |
| A22= | 1.6948657E-12 | | | | |
| A24= | -6.5499300E-14 | | | | |
| A26= | 1.2680239E-15 | | | | |
| A28= | -1.0249191E-17 | | | | |

It should be mentioned that, the position of stop is not disclosed in Table 4A because the position of stop can be adjusted according to different object distances. That is, in each state, the image capturing optical lens assembly can have different object distances. In the second mode of the 2nd embodiment, the position of stop of the first state is at surface 1.

In the second mode of the 2nd embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 2nd embodiment, so an explanation in this regard will not be provided again.

Moreover, these parameters can be calculated from Table 4A and Table 4B as the following values and satisfy the following conditions:

| Table 4C | |
|---|---|
| | First State |
| fM2-1 [mm] | 30.72 |
| FnoM2-1 | 3.10 |
| HFOVM2-1 [deg.] | 5.7 |
| Object Distance [mm] | Infinity |
| D0 [mm] | Infinity |
| D1 [mm] | 14.045 |
| D2 [mm] | 1.390 |
| FOVM2-1 [deg.] | 11.4 |
| DGA(DGA2) | 1.91 |
| DGA/CT1 | 1.85 |

(continued)

| Table 4C | |
|---|---|
| | First State |
| TGAB/DGB | 2.62 |
| ΣPGn | -1.84 |

Moreover, the image capturing optical lens assembly of the 2nd embodiment can further satisfy the conditions in the following Table 4D:

| Table 4D | |
|---|---|
| TPM12/CTP1 | 1.20 |
| ImgH1/ImgH2 | 2.00 |
| (\|f1\|+\|f2\|)/\|f4\| | 1.19 |
| f1/f4 | -0.67 |
| \|f1/f3\|+\|f1/f4\| | 1.76 |
| 10×(N1/V1+N5/V5) | 1.12 |
| TLmax [mm] | 47.48 |
| CTmax [mm] | 1.55 |
| YGAR1min [mm] | 4.83 |
| \|10×T12/f4\| | 0.15 |
| CT1/CT6 | 0.86 |
| (CT1+T12)/CT5 | 2.63 |
| N5 | 1.59 |

<3rd Embodiment - First Mode>

Fig. 5A is a schematic view of an imaging apparatus 3 according to the 3rd embodiment in a first state of a first mode of the present disclosure, and Fig. 6A shows, in order from left to right, spherical aberration curves, astigmatic field curves and a distortion curve of the imaging apparatus 3 according to the 3rd embodiment in the first state of the first mode. In Fig. 5A, the imaging apparatus 3 according to the 3rd embodiment includes an image capturing optical lens assembly (its reference number is omitted) and an image sensor IS. In the first mode, the image capturing optical lens assembly includes, in order from an object side to an image side along an optical path, a stop S1, a first mode object-side lens group GA1, a first light path folding element P1, a joint lens group GB, a second light path folding element P2, a filter E7 and an image surface IMG, wherein the image sensor IS is disposed on the image surface IMG of the image capturing optical lens assembly. There is without additional one or more lens elements inserted between the joint lens group GB and the image surface IMG.

The first mode object-side lens group GA1 includes a lens element A11. The lens element A11 with positive refractive power has an object-side surface being convex in a paraxial region thereof and an image-side surface being convex in a paraxial region thereof. The lens element A11 is made of glass material, and has the object-side surface and the image-side surface being both aspheric. Moreover, the object-side surface of the lens element A11 includes one inflection point.

The first light path folding element P1 and the second light path folding element P2 are both prisms and made of glass material.

The joint lens group GB includes, in order from the object side to the image side along the optical path, a first lens element E1, a second lens element E2, a third lens element E3, a stop S2, a fourth lens element E4, a stop S3, a fifth lens element E5 and a sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes a middle lens group Gm and a last lens group Gn. The first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes three inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and one critical point, the image-side surface of the fifth lens element E5 includes two inflection points and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes two inflection points, the image-side surface of the sixth lens element E6 includes one inflection point and one critical point.

The filter E7 is made of glass material and disposed between the second light path folding element P2 and the image surface IMG and will not affect a focal length of the image capturing optical lens assembly.

The detailed optical data of the 3rd embodiment are shown in Table 5A and the aspheric surface data are shown in Table 5B below.

| Table 5A - 3rd Embodiment - First Mode | | | | | | | | |
|---|---|---|---|---|---|---|---|---|
| Surface # | | Curvature Radius | | Thickness | Material | Index | Abbe # | Focal Length |
| 0 | Object | Infinity | | D0 | | | | |
| 1 | Stop | Plano | | -0.552 | | | | |
| 2 | Lens A11 | 25.2734 | ASP | 1.530 | Glass | 1.497 | 81.6 | 37.99 |
| 3 | | -73.2316 | ASP | 1.709 | | | | |
| 4 | First Light Path Folding Element | Plano | | 8.200 | Glass | 1.911 | 35.2 | - |
| 5 | | Plano | | D1 | | | | |
| 6 | Lens 1 | 15.0388 | ASP | 1.134 | Plastic | 1.587 | 28.3 | 14.07 |
| 7 | | -17.8345 | ASP | 0.320 | | | | |
| 8 | Lens 2 | 7.3809 | ASP | 0.851 | Plastic | 1.661 | 20.4 | -10.62 |
| 9 | | 3.4311 | ASP | 1.094 | | | | |
| 10 | Lens 3 | 17.2746 | ASP | 1.522 | Plastic | 1.545 | 56.1 | 12.23 |
| 11 | | -10.5195 | ASP | -0.550 | | | | |
| 12 | Stop | Plano | | D2 | | | | |

(continued)

| Table 5A - 3rd Embodiment - First Mode | | | | | | | | |
|---|---|---|---|---|---|---|---|---|
| Surface # | | Curvature Radius | | Thickness | Material | Index | Abbe # | Focal Length |
| 13 | Lens 4 | -3.6896 | ASP | 0.675 | Plastic | 1.545 | 56.1 | -20.04 |
| 14 | | -5.9317 | ASP | 0.708 | | | | |
| 15 | Stop | Plano | | -0.200 | | | | |
| 16 | Lens 5 | -45.0705 | ASP | 0.550 | Plastic | 1.587 | 28.3 | -212.28 |
| 17 | | -70.9130 | ASP | 0.513 | | | | |
| 18 | Lens 6 | 6.1128 | ASP | 1.228 | Plastic | 1.545 | 56.1 | -195.20 |
| 19 | | 5.3710 | ASP | 1.000 | | | | |
| 20 | Second Light Path Folding Element | Plano | | 11.000 | Glass | 1.911 | 35.2 | - |
| 21 | | Plano | | 0.500 | | | | |
| 22 | Filter | Plano | | 0.400 | Glass | 1.517 | 64.2 | - |
| 23 | | Plano | | 0.505 | | | | |
| 24 | Image | Plano | | - | | | | |
| Reference wavelength is 587.6 nm (d-line). | | | | | | | | |
| Effective radius of Surface 1 (Stop S1) is 6.080 mm. | | | | | | | | |
| Effective radius of Surface 12 (Stop S2) is 3.667 mm. | | | | | | | | |
| Effective radius of Surface 15 (Stop S3) is 3.610 mm. | | | | | | | | |

| Table 5B - Aspheric Coefficients | | | | | |
|---|---|---|---|---|---|
| Surface # | 2 | 3 | 6 | 7 | 8 |
| k = | 0.0000000E+00 | 0.0000000E+00 | 0.0000000E+00 | 0.0000000E+00 | 0.0000000E+00 |
| A4 = | -8.8177794E-05 | -7.8884526E-05 | 8.8151075E-04 | 6.1062225E-03 | -3.7970934E-03 |
| A6 = | 1.7082128E-05 | 2.1334669E-05 | -2.2515604E-04 | -1.4354024E-03 | -2.1908893E-04 |
| A8 = | -3.5260351E-06 | -4.6969803E-06 | 1.1410408E-04 | 7.4249888E-04 | 6.4545134E-04 |
| A10= | 4.4162170E-07 | 6.3326384E-07 | -2.5557305E-05 | -2.5981900E-04 | -2.9808770E-04 |
| A12= | -3.5929839E-08 | -5.5807739E-08 | 2.1092925E-06 | 5.9115329E-05 | 7.7380555E-05 |
| A14= | 1.9318135E-09 | 3.2725890E-09 | 2.9571728E-07 | -9.1342091E-06 | -1.3243014E-05 |
| A16= | -6.9406352E-11 | -1.2900996E-10 | -1.0789306E-07 | 9.7730258E-07 | 1.5679080E-06 |
| A18= | 1.6476487E-12 | 3.3806144E-12 | 1.4816758E-08 | -7.2741658E-08 | -1.3017315E-07 |
| A20= | -2.4821664E-14 | -5.6525588E-14 | -1.1929959E-09 | 3.7332648E-09 | 7.5462386E-09 |
| A22= | 2.1518641E-16 | 5.4629840E-16 | 6.0410758E-11 | -1.2866042E-10 | -2.9886404E-10 |
| A24= | -8.2055886E-19 | -2.3254285E-18 | -1.8977465E-12 | 2.8168719E-12 | 7.7011603E-12 |
| A26= | | | 3.3890113E-14 | -3.4910571E-14 | -1.1628594E-13 |
| A28= | | | -2.6344552E-16 | 1.8224097E-16 | 7.8024426E-16 |
| Surface # | 9 | 10 | 11 | 13 | 14 |
| k = | -1.0000000E+00 | 0.0000000E+00 | 0.0000000E+00 | -1.0000000E+00 | 0.0000000E+00 |
| A4 = | -1.0377057E-02 | -2.1623113E-04 | 1.3291386E-04 | 2.8722701E-02 | 2.7042925E-02 |
| A6 = | 1.4427071E-03 | 7.3267009E-05 | -1.3330643E-04 | -6.1011233E-03 | -5.0856241E-03 |

(continued)

| Surface # | 9 | 10 | 11 | 13 | 14 |
|---|---|---|---|---|---|
| A8 = | 5.9643364E-05 | 1.5794494E-05 | 8.1362050E-05 | 1.8225391E-03 | 1.9005788E-03 |
| A10= | -1.2584724E-04 | -6.5335924E-06 | -2.4859000E-05 | -5.5861580E-04 | -6.2566675E-04 |
| A12= | 4.1032171E-05 | 1.1070177E-06 | 4.8166651E-06 | 1.3622331E-04 | 1.4207345E-04 |
| A14= | -7.8716323E-06 | -2.5855324E-07 | -6.3934822E-07 | -2.4795208E-05 | -2.2758961E-05 |
| A16= | 1.0140622E-06 | 6.8264021E-08 | 5.9070288E-08 | 3.3464628E-06 | 2.6583709E-06 |
| A18= | -9.0564093E-08 | -1.2508640E-08 | -3.7305073E-09 | -3.3348957E-07 | -2.2795860E-07 |
| A20= | 5.6316249E-09 | 1.4759284E-09 | 1.5363329E-10 | 2.4185568E-08 | 1.4026681E-08 |
| A22= | -2.4081099E-10 | -1.1109549E-10 | -3.7361908E-12 | -1.2384188E-09 | -5.8483252E-10 |
| A24= | 6.8236631E-12 | 5.1497604E-12 | 4.1244381E-14 | 4.2333336E-11 | 1.4721546E-11 |
| A26= | -1.1692866E-13 | -1.3370129E-13 | | -8.6497852E-13 | -1.6801813E-13 |
| A28= | 9.2985049E-16 | 1.4863609E-15 | | 7.9745275E-15 | |
| Surface # | 16 | 17 | 18 | 19 | |
| k = | 0.0000000E+00 | 0.0000000E+00 | 0.0000000E+00 | 0.0000000E+00 | |
| A4 = | -5.5979234E-03 | -1.1012568E-02 | -9.8877840E-03 | -7.6883060E-03 | |
| A6 = | 2.0780356E-03 | 5.2514774E-03 | 2.3880952E-03 | 2.3250791E-04 | |
| A8 = | 9.0169407E-04 | -5.8247675E-04 | -5.5465666E-04 | 7.1675660E-05 | |
| A10= | -5.6886876E-04 | -8.1032633E-05 | 9.3268200E-05 | -3.2213603E-05 | |
| A12= | 1.5213262E-04 | 4.4963146E-05 | -1.1967855E-05 | 7.1242959E-06 | |
| A14= | -2.5813476E-05 | -1.0185277E-05 | 1.2160827E-06 | -1.0465249E-06 | |
| A16= | 2.9840072E-06 | 1.5583550E-06 | -9.9187811E-08 | 1.0804845E-07 | |
| A18= | -2.3037400E-07 | -1.7045829E-07 | 6.4627180E-09 | -7.9435331E-09 | |
| A20= | 1.0596888E-08 | 1.3198618E-08 | -3.2771408E-10 | 4.1305549E-10 | |
| A22= | -1.6107463E-10 | -7.0203335E-10 | 1.2311201E-11 | -1.4816930E-11 | |
| A24= | -1.0023741E-11 | 2.4322530E-11 | -3.1761014E-13 | 3.4801176E-13 | |
| A26= | 5.7615558E-13 | -4.9357506E-13 | 4.9617289E-15 | -4.8035764E-15 | |
| A28= | -9.2802511E-15 | 4.4480253E-15 | -3.5102923E-17 | 2.9443597E-17 | |

It should be mentioned that, the position of stop is not disclosed in Table 5A because the position of stop can be adjusted according to different object distances. That is, in each state, the image capturing optical lens assembly can have different object distances. In the first mode of the 3rd embodiment, the position of stop of the first state is at surface 1, the position of stop of a second state is at surface 12, and the position of stop of a third state is at surface 12.

In the first mode of the 3rd embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 3rd embodiment, so an explanation in this regard will not be provided again.

Fig. 5B is a schematic view of the imaging apparatus 3 according to the 3rd embodiment of Fig. 5A in the second state of the first mode, Fig. 5C is a schematic view of the imaging apparatus 3 according to the 3rd embodiment of Fig. 5A in the third state of the first mode, Fig. 6B shows, in order from left to right, spherical aberration curves, astigmatic field curves and a distortion curve of the imaging apparatus 3 according to the 3rd embodiment in the second state of the first mode, Fig. 6C shows, in order from left to right, spherical aberration curves, astigmatic field curves and a distortion curve of the imaging apparatus 3 according to the 3rd embodiment in the third state of the first mode. Moreover, these parameters can be calculated from Table 5A and Table 5B as the following values and satisfy the following conditions:

| Table 5C | | | | | |
|---|---|---|---|---|---|
| | First State | | Second State | | Third State |
| fM1-1 [mm] | 24.12 | fM1-2 [mm] | 21.99 | fM1-3 [mm] | 18.73 |
| FnoM1-1 | 1.98 | FnoM1-2 | 2.15 | FnoM1-3 | 2.49 |
| HFOVM1-1 [deg.] | 14.3 | HFOVM1-2 [deg.] | 14.4 | HFOVM1-3 [deg.] | 14.4 |
| Object Distance [mm] | Infinity | Object Distance [mm] | 299.448 | Object Distance [mm] | 99.948 |
| D0 [mm] | Infinity | D0 [mm] | 300.000 | D0 [mm] | 100.500 |
| D1 [mm] | 3.907 | D1 [mm] | 3.071 | D1 [mm] | 1.507 |
| D2 [mm] | 1.662 | D2 [mm] | 2.498 | D2 [mm] | 4.062 |
| FOVM1-1 [deg.] | 28.6 | FOVM1-2 [deg.] | 28.8 | FOVM1-3 [deg.] | 28.7 |
| DGA(DGA1) | 1.53 | DGA(DGA1) | 1.53 | DGA(DGA1) | 1.53 |
| DGA/CT1 | 1.35 | DGA/CT1 | 1.35 | DGA/CT1 | 1.35 |
| TGAB/DGB | 1.45 | TGAB/DGB | 1.25 | TGAB/DGB | 0.96 |
| ΣPGn | -1.44 | | | | |

<3rd Embodiment - Second Mode>

Fig. 5D is a schematic view of the imaging apparatus 3 according to the 3rd embodiment in a first state of a second mode of the present disclosure, Fig. 6D shows, in order from left to right, spherical aberration curves, astigmatic field curves and a distortion curve of the imaging apparatus 3 according to the 3rd embodiment in the first state of the second mode. In Fig. 5D, the imaging apparatus 3 according to the 3rd embodiment includes the image capturing optical lens assembly (its reference number is omitted) and the image sensor IS. In the second mode, the image capturing optical lens assembly includes, in order from the object side to the image side along the optical path, the stop S1, a second mode object-side lens group GA2, the first light path folding element P1, the joint lens group GB, the second light path folding element P2, the filter E7 and the image surface IMG, wherein the image sensor IS is disposed on the image surface IMG of the image capturing optical lens assembly. There is without additional one or more lens elements inserted between the joint lens group GB and the image surface IMG.

The second mode object-side lens group GA2 includes, in order from the object side to the image side along the optical path, a lens element A21 and a lens element A22. There is without additional one or more lens elements inserted between the lens element A21 and the lens element A22, and there is an air gap on the optical axis between the lens element A21 and the lens element A22.

The lens element A21 with positive refractive power has an object-side surface being convex in a paraxial region thereof and an image-side surface being convex in a paraxial region thereof. The lens element A21 is made of plastic material, and has the object-side surface and the image-side surface being both aspheric. Moreover, the image-side surface of the lens element A21 includes one inflection point and one critical point.

The lens element A22 with negative refractive power has an object-side surface being concave in a paraxial region thereof and an image-side surface being convex in a paraxial region thereof. The lens element A22 is made of plastic material, and has the object-side surface and the image-side surface being both aspheric. Moreover, the object-side surface of the lens element A22 includes one inflection point and one critical point, the image-side surface of the lens element A22 includes one inflection point and one critical point.

The first light path folding element P1 and the second light path folding element P2 are both prisms and made of glass material.

The joint lens group GB includes, in order from the object side to the image side along the optical path, the first lens element E1, the second lens element E2, the third lens element E3, the stop S2, the fourth lens element E4, the stop S3, the fifth lens element E5 and the sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes the middle lens group Gm and the last lens group Gn, the first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes two inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and one critical point, the image-side surface of the fifth lens element E5 includes one inflection point and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes one inflection point, the image-side surface of the sixth lens element E6 includes one inflection point.

The filter E7 is made of glass material and disposed between the second light path folding element P2 and the image surface IMG and will not affect a focal length of the image capturing optical lens assembly.

The detailed optical data of the 3rd embodiment are shown in Table 6A and the aspheric surface data are shown in Table 6B below.

| Table 6A - 3rd Embodiment - Second Mode | | | | | | | | |
|---|---|---|---|---|---|---|---|---|
| Surface # | | Curvature Radius | | Thickness | Material | Index | Abbe # | Focal Length |
| 0 | Object | Infinity | | D0 | | | | |
| 1 | Stop | Plano | | -0.640 | | | | |
| 2 | Lens A21 | 22.2736 | ASP | 0.990 | Plastic | 1.545 | 56.1 | 36.26 |
| 3 | | -172.3488 | ASP | 0.190 | | | | |
| 4 | Lens A22 | -75.5724 | ASP | 0.922 | Plastic | 1.661 | 20.4 | -164.29 |
| 5 | | -250.0796 | ASP | 1.006 | | | | |
| 6 | First Light Path Folding Element | Plano | | 8.200 | Glass | 1.911 | 35.2 | - |
| 7 | | Plano | | D1 | | | | |
| 8 | Lens 1 | 15.0388 | ASP | 1.134 | Plastic | 1.587 | 28.3 | 14.07 |
| 9 | | -17.8345 | ASP | 0.320 | | | | |
| 10 | Lens 2 | 7.3809 | ASP | 0.851 | Plastic | 1.661 | 20.4 | -10.62 |
| 11 | | 3.4311 | ASP | 1.094 | | | | |
| 12 | Lens 3 | 17.2746 | ASP | 1.522 | Plastic | 1.545 | 56.1 | 12.23 |
| 13 | | -10.5195 | ASP | -0.550 | | | | |
| 14 | Stop | Plano | | D2 | | | | |
| 15 | Lens 4 | -3.6896 | ASP | 0.675 | Plastic | 1.545 | 56.1 | -20.04 |

(continued)

| Table 6A - 3rd Embodiment - Second Mode | | | | | | | | |
|---|---|---|---|---|---|---|---|---|
| Surface # | | Curvature Radius | | Thickness | Material | Index | Abbe # | Focal Length |
| 16 | | -5.9317 | ASP | 0.708 | | | | |
| 17 | Stop | Plano | | -0.200 | | | | |
| 18 | Lens 5 | -45.0705 | ASP | 0.550 | Plastic | 1.587 | 28.3 | -212.28 |
| 19 | | -70.9130 | ASP | 0.513 | | | | |
| 20 | Lens 6 | 6.1128 | ASP | 1.228 | Plastic | 1.545 | 56.1 | -195.20 |
| 21 | | 5.3710 | ASP | 1.000 | | | | |
| 22 | Second Light Path Folding Element | Plano | | 11.000 | Glass | 1.911 | 35.2 | - |
| 23 | | Plano | | 0.500 | | | | |
| 24 | Filter | Plano | | 0.400 | Glass | 1.517 | 64.2 | - |
| 25 | | Plano | | 0.505 | | | | |
| 26 | Image | Plano | | - | | | | |
| Reference wavelength is 587.6 nm (d-line). | | | | | | | | |
| Effective radius of Surface 1 (Stop S1) is 4.940 mm. | | | | | | | | |
| Effective radius of Surface 14 (Stop S2) is 3.667 mm. | | | | | | | | |
| Effective radius of Surface 17 (Stop S3) is 3.610 mm. | | | | | | | | |

| Table 6B - Aspheric Coefficients | | | | | |
|---|---|---|---|---|---|
| Surface # | 2 | 3 | 4 | 5 | 8 |
| k = | 0.0000000E+00 | 0.0000000E+00 | 0.0000000E+00 | 0.0000000E+00 | 0.0000000E+00 |
| A4 = | -9.6902121E-05 | 3.9239187E-04 | 8.0307211E-04 | 4.5736602E-04 | 8.8151075E-04 |
| A6 = | 2.4774917E-04 | -8.8119181E-07 | -5.1649867E-04 | -3.5088169E-04 | -2.2515604E-04 |
| A8 = | -7.9461305E-05 | -5.4357861E-06 | 1.7672442E-04 | 1.3323101E-04 | 1.1410408E-04 |
| A10= | 1.3295403E-05 | -4.1070445E-07 | -3.4453678E-05 | -2.7536483E-05 | -2.5557305E-05 |
| A12= | -1.3186573E-06 | 3.3607501E-07 | 4.2528916E-06 | 3.5672989E-06 | 2.1092925E-06 |
| A14= | 7.8598674E-08 | -5.4987122E-08 | -3.4688160E-07 | -3.0508449E-07 | 2.9571728E-07 |
| A16= | -2.5541387E-09 | 4.7102443E-09 | 1.8932212E-08 | 1.7501752E-08 | -1.0789306E-07 |
| A18= | 2.2246523E-11 | -2.4072528E-10 | -6.8348818E-10 | -6.6668121E-10 | 1.4816758E-08 |
| A20= | 1.3198250E-12 | 7.4108582E-12 | 1.5646927E-11 | 1.6173835E-11 | -1.1929959E-09 |
| A22= | -4.5400167E-14 | -1.2746643E-13 | -2.0550163E-13 | -2.2609164E-13 | 6.0410758E-11 |
| A24= | 4.5233337E-16 | 9.4504160E-16 | 1.1781804E-15 | 1.3850603E-15 | -1.8977465E-12 |
| A26= | | | | | 3.3890113E-14 |
| A28= | | | | | -2.6344552E-16 |
| Surface # | 9 | 10 | 11 | 12 | 13 |
| k = | 0.0000000E+00 | 0.0000000E+00 | -1.0000000E+00 | 0.0000000E+00 | 0.0000000E+00 |
| A4 = | 6.1062225E-03 | -3.7970934E-03 | -1.0377057E-02 | -2.1623113E-04 | 1.3291386E-04 |
| A6 = | -1.4354024E-03 | -2.1908893E-04 | 1.4427071E-03 | 7.3267009E-05 | -1.3330643E-04 |
| A8 = | 7.4249888E-04 | 6.4545134E-04 | 5.9643364E-05 | 1.5794494E-05 | 8.1362050E-05 |

(continued)

| Surface # | 9 | 10 | 11 | 12 | 13 |
|---|---|---|---|---|---|
| A10= | -2.5981900E-04 | -2.9808770E-04 | -1.2584724E-04 | -6.5335924E-06 | -2.4859000E-05 |
| A12= | 5.9115329E-05 | 7.7380555E-05 | 4.1032171E-05 | 1.1070177E-06 | 4.8166651E-06 |
| A14= | -9.1342091E-06 | -1.3243014E-05 | -7.8716323E-06 | -2.5855324E-07 | -6.3934822E-07 |
| A16= | 9.7730258E-07 | 1.5679080E-06 | 1.0140622E-06 | 6.8264021E-08 | 5.9070288E-08 |
| A18= | -7.2741658E-08 | -1.3017315E-07 | -9.0564093E-08 | -1.2508640E-08 | -3.7305073E-09 |
| A20= | 3.7332648E-09 | 7.5462386E-09 | 5.6316249E-09 | 1.4759284E-09 | 1.5363329E-10 |
| A22= | -1.2866042E-10 | -2.9886404E-10 | -2.4081099E-10 | -1.1109549E-10 | -3.7361908E-12 |
| A24= | 2.8168719E-12 | 7.7011603E-12 | 6.8236631E-12 | 5.1497604E-12 | 4.1244381E-14 |
| A26= | -3.4910571E-14 | -1.1628594E-13 | -1.1692866E-13 | -1.3370129E-13 | |
| A28= | 1.8224097E-16 | 7.8024426E-16 | 9.2985049E-16 | 1.4863609E-15 | |
| Surface # | 15 | 16 | 18 | 19 | 20 |
| k = | -1.0000000E+00 | 0.0000000E+00 | 0.0000000E+00 | 0.0000000E+00 | 0.0000000E+00 |
| A4 = | 2.8722701E-02 | 2.7042925E-02 | -5.5979234E-03 | -1.1012568E-02 | -9.8877840E-03 |
| A6 = | -6.1011233E-03 | -5.0856241E-03 | 2.0780356E-03 | 5.2514774E-03 | 2.3880952E-03 |
| A8 = | 1.8225391E-03 | 1.9005788E-03 | 9.0169407E-04 | -5.8247675E-04 | -5.5465666E-04 |
| A10= | -5.5861580E-04 | -6.2566675E-04 | -5.6886876E-04 | -8.1032633E-05 | 9.3268200E-05 |
| A12= | 1.3622331E-04 | 1.4207345E-04 | 1.5213262E-04 | 4.4963146E-05 | -1.1967855E-05 |
| A14= | -2.4795208E-05 | -2.2758961E-05 | -2.5813476E-05 | -1.0185277E-05 | 1.2160827E-06 |
| A16= | 3.3464628E-06 | 2.6583709E-06 | 2.9840072E-06 | 1.5583550E-06 | -9.9187811E-08 |
| A18= | -3.3348957E-07 | -2.2795860E-07 | -2.3037400E-07 | -1.7045829E-07 | 6.4627180E-09 |
| A20= | 2.4185568E-08 | 1.4026681E-08 | 1.0596888E-08 | 1.3198618E-08 | -3.2771408E-10 |
| A22= | -1.2384188E-09 | -5.8483252E-10 | -1.6107463E-10 | -7.0203335E-10 | 1.2311201E-11 |
| A24= | 4.2333336E-11 | 1.4721546E-11 | -1.0023741E-11 | 2.4322530E-11 | -3.1761014E-13 |
| A26= | -8.6497852E-13 | -1.6801813E-13 | 5.7615558E-13 | -4.9357506E-13 | 4.9617289E-15 |
| A28= | 7.9745275E-15 | | -9.2802511E-15 | 4.4480253E-15 | -3.5102923E-17 |
| Surface # | 21 | | | | |
| k = | 0.0000000E+00 | | | | |
| A4 = | -7.6883060E-03 | | | | |
| A6 = | 2.3250791E-04 | | | | |
| A8 = | 7.1675660E-05 | | | | |
| A10= | -3.2213603E-05 | | | | |
| A12= | 7.1242959E-06 | | | | |
| A14= | -1.0465249E-06 | | | | |
| A16= | 1.0804845E-07 | | | | |
| A18= | -7.9435331E-09 | | | | |
| A20= | 4.1305549E-10 | | | | |
| A22= | -1.4816930E-11 | | | | |
| A24= | 3.4801176E-13 | | | | |
| A26= | -4.8035764E-15 | | | | |

(continued)

| Surface # | 21 | | | | |
|---|---|---|---|---|---|
| A28= | 2.9443597E-17 | | | | |

It should be mentioned that, the position of stop is not disclosed in Table 6A because the position of stop can be adjusted according to different object distances. That is, in each state, the image capturing optical lens assembly can have different object distances. In the second mode of the 3rd embodiment, the position of stop of the first state is at surface 1, and the position of stop of a second state is at surface 1.

In the second mode of the 3rd embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 3rd embodiment, so an explanation in this regard will not be provided again.

Fig. 5E is a schematic view of the imaging apparatus 3 according to the 3rd embodiment of Fig. 5D in the second state of the second mode, Fig. 6E shows, in order from left to right, spherical aberration curves, astigmatic field curves and a distortion curve of the imaging apparatus 3 according to the 3rd embodiment in the second state of the second mode. Moreover, these parameters can be calculated from Table 6A and Table 6B as the following values and satisfy the following conditions:

| Table 6C | | | |
|---|---|---|---|
| | First State | | Second State |
| fM2-1 [mm] | 30.69 | fM2-2 [mm] | 29.31 |
| FnoM2-1 | 3.11 | FnoM2-2 | 3.06 |
| HFOVM2-1 [deg.] | 5.7 | HFOVM2-2 [deg.] | 5.8 |
| Object Distance [mm] | Infinity | Object Distance [mm] | 999.360 |
| D0 [mm] | Infinity | D0 [mm] | 1000.000 |
| D1 [mm] | 14.006 | D1 [mm] | 13.593 |
| D2 [mm] | 1.387 | D2 [mm] | 1.799 |
| FOVM2-1 [deg.] | 11.4 | FOVM2-2 [deg.] | 11.6 |
| DGA(DGA2) | 2.10 | DGA(DGA2) | 2.10 |
| DGA/CT1 | 1.85 | DGA/CT1 | 1.85 |
| TGAB/DGB | 2.51 | TGAB/DGB | 2.36 |
| ΣPGn | -1.83 | | |

Moreover, the image capturing optical lens assembly of the 3rd embodiment can further satisfy the conditions in the following Table 6D:

| Table 6D | |
|---|---|
| TPM12/CTP1 | 1.20 |
| ImgH1/ImgH2 | 2.00 |
| (\|f1\|+\|f2\|)/\|f4\| | 1.23 |
| f1/f4 | -0.70 |
| \|f1/f3\|+\|f1/f4\| | 1.85 |
| 10×(N1/V1+N5/V5) | 1.12 |
| TLmax [mm] | 47.95 |
| CTmax [mm] | 1.53 |
| YGAR1min [mm] | 4.89 |

(continued)

| Table 6D | |
|---|---|
| $\|10\times T12/f4\|$ | 0.16 |
| CT1/CT6 | 0.92 |
| (CT1 + T12)/CT5 | 2.64 |
| N5 | 1.59 |

<4th Embodiment - First Mode>

Fig. 7A is a schematic view of an imaging apparatus 4 according to the 4th embodiment in a first state of a first mode of the present disclosure, and Fig. 8A shows, in order from left to right, spherical aberration curves, astigmatic field curves and a distortion curve of the imaging apparatus 4 according to the 4th embodiment in the first state of the first mode. In Fig. 7A, the imaging apparatus 4 according to the 4th embodiment includes an image capturing optical lens assembly (its reference number is omitted) and an image sensor IS. In the first mode, the image capturing optical lens assembly includes, in order from an object side to an image side along an optical path, a stop S1, a first mode object-side lens group GA1, a first light path folding element P1, a joint lens group GB, a second light path folding element P2, a filter E7 and an image surface IMG, wherein the image sensor IS is disposed on the image surface IMG of the image capturing optical lens assembly. There is without additional one or more lens elements inserted between the joint lens group GB and the image surface IMG.

The first mode object-side lens group GA1 includes a lens element A11. The lens element A11 with positive refractive power has an object-side surface being convex in a paraxial region thereof and an image-side surface being convex in a paraxial region thereof. The lens element A11 is made of glass material, and has the object-side surface and the image-side surface being both aspheric. Moreover, the object-side surface of the lens element A11 includes one inflection point.

The first light path folding element P1 and the second light path folding element P2 are both prisms and made of glass material.

The joint lens group GB includes, in order from the object side to the image side along the optical path, a stop S2, a first lens element E1, a second lens element E2, a stop S3, a third lens element E3, a fourth lens element E4, a stop S4, a fifth lens element E5 and a sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes a middle lens group Gm and a last lens group Gn. The first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes two inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes two inflection points.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and two critical points, the image-side surface of the fifth lens element E5 includes two inflection points and one critical point.

The sixth lens element E6 with positive refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes two inflection points, the image-side surface of the sixth lens element E6 includes three inflection points and one critical point.

The filter E7 is made of glass material and disposed between the second light path folding element P2 and the image surface IMG and will not affect a focal length of the image capturing optical lens assembly.

The detailed optical data of the 4th embodiment are shown in Table 7A and the aspheric surface data are shown in Table 7B below.

| Table 7A - 4th Embodiment - First Mode | | | | | | | | |
|---|---|---|---|---|---|---|---|---|
| Surface # | | Curvature Radius | | Thickness | Material | Index | Abbe # | Focal Length |
| 0 | Object | Infinity | | D0 | | | | |
| 1 | Stop | Plano | | 0.025 | | | | |
| 2 | Lens A11 | 18.6394 | ASP | 1.705 | Glass | 1.497 | 81.6 | 35.28 |
| 3 | | -287.0438 | ASP | 1.404 | | | | |
| 4 | First Light Path Folding Element | Plano | | 8.000 | Glass | 1.911 | 35.2 | - |
| 5 | | Plano | | D1 | | | | |
| 6 | Stop | Plano | | 0.000 | | | | |
| 7 | Lens 1 | 10.1597 | ASP | 1.205 | Plastic | 1.551 | 44.8 | 12.22 |
| 8 | | -19.1002 | ASP | 0.479 | | | | |
| 9 | Lens 2 | 8.6186 | ASP | 0.722 | Plastic | 1.615 | 25.3 | -9.11 |
| 10 | | 3.2865 | ASP | 1.320 | | | | |
| 11 | Stop | Plano | | -0.300 | | | | |
| 12 | Lens 3 | 15.1253 | ASP | 1.488 | Plastic | 1.529 | 45.4 | 11.91 |
| 13 | | -10.4382 | ASP | D2 | | | | |
| 14 | Lens 4 | -3.5380 | ASP | 0.656 | Plastic | 1.544 | 56.0 | -22.66 |
| 15 | | -5.2866 | ASP | 0.611 | | | | |
| 16 | Stop | Plano | | -0.100 | | | | |
| 17 | Lens 5 | -27.4686 | ASP | 0.526 | Plastic | 1.614 | 26.0 | -51.55 |
| 18 | | -209.8932 | ASP | 0.295 | | | | |
| 19 | Lens 6 | 5.5948 | ASP | 1.355 | Plastic | 1.551 | 44.8 | 307.63 |
| 20 | | 5.2882 | ASP | 1.000 | | | | |
| 21 | Second Light Path Folding Element | Plano | | 9.800 | Glass | 1.911 | 35.2 | - |
| 22 | | Plano | | 0.450 | | | | |
| 23 | Filter | Plano | | 0.300 | Glass | 1.517 | 64.2 | - |
| 24 | | Plano | | 0.155 | | | | |
| 25 | Image | Plano | | - | | | | |
| Reference wavelength is 587.6 nm (d-line). | | | | | | | | |
| Effective radius of Surface 1 (Stop S1) is 6.120 mm. | | | | | | | | |

(continued)

| Table 7A - 4th Embodiment - First Mode | | | | | | | |
|---|---|---|---|---|---|---|---|
| Surface # | | Curvature Radius | Thickness | Material | Index | Abbe # | Focal Length |
| Effective radius of Surface 6 (Stop S2) is 4.338 mm. | | | | | | | |
| Effective radius of Surface 11 (Stop S3) is 3.495 mm. | | | | | | | |
| Effective radius of Surface 16 (Stop S4) is 3.673 mm. | | | | | | | |

| Table 7B - Aspheric Coefficients | | | | | |
|---|---|---|---|---|---|
| Surface # | 2 | 3 | 7 | 8 | 9 |
| k = | 0.0000000E+00 | 0.0000000E+00 | 0.0000000E+00 | 0.0000000E+00 | 0.0000000E+00 |
| A4 = | -7.4846063E-06 | -4.4394251E-08 | 9.1300448E-04 | 6.1674610E-03 | -4.6745517E-03 |
| A6 = | -1.1763597E-05 | -1.4356573E-05 | -2.0862829E-04 | -5.1740611E-04 | 1.3673836E-03 |
| A8 = | 2.3767141E-06 | 3.3595964E-06 | 9.9724919E-05 | -9.7087413E-05 | -6.0454541E-04 |
| A10= | -3.1026886E-07 | -5.1801885E-07 | -3.1990362E-05 | 1.2357581E-04 | 2.8976897E-04 |
| A12= | 2.5096873E-08 | 5.0617730E-08 | 9.3853606E-06 | -4.8892133E-05 | -1.0362195E-04 |
| A14= | -1.2978329E-09 | -3.2555219E-09 | -2.3596312E-06 | 1.0928336E-05 | 2.4469789E-05 |
| A16= | 4.2276641E-11 | 1.3891779E-10 | 4.3393622E-07 | -1.5539387E-06 | -3.8542012E-06 |
| A18= | -8.1733095E-13 | -3.8852003E-12 | -5.4850332E-08 | 1.4654549E-07 | 4.1299886E-07 |
| A20= | 7.7813855E-15 | 6.8267567E-14 | 4.6768348E-09 | -9.2386619E-09 | -3.0265959E-08 |
| A22= | -8.2640826E-18 | -6.8195532E-16 | -2.6386766E-10 | 3.8201109E-10 | 1.4944485E-09 |
| A24= | -2.9286428E-19 | 2.9454459E-18 | 9.4352545E-12 | -9.8167176E-12 | -4.7567163E-11 |
| A26= | | | -1.9361202E-13 | 1.3902767E-13 | 8.8168915E-13 |
| A28= | | | 1.7365469E-15 | -7.9280772E-16 | -7.2327910E-15 |
| Surface # | 10 | 12 | 13 | 14 | 15 |
| k = | -1.0000000E+00 | 0.0000000E+00 | 0.0000000E+00 | -1.0000000E+00 | 0.0000000E+00 |
| A4 = | -1.1336712E-02 | -7.6693196E-04 | 1.0755080E-04 | 3.0484158E-02 | 2.9243471E-02 |
| A6 = | 2.7515930E-03 | 7.4124536E-04 | -2.6440806E-04 | -7.1936533E-03 | -7.6623420E-03 |
| A8 = | -9.6592693E-04 | -4.9865506E-04 | 1.9045870E-04 | 2.4793424E-03 | 3.6258415E-03 |
| A10= | 4.0970619E-04 | 2.5244585E-04 | -7.0010223E-05 | -8.2503784E-04 | -1.3085521E-03 |
| A12= | -1.4660386E-04 | -8.2960776E-05 | 1.6335917E-05 | 2.0315964E-04 | 3.1069596E-04 |
| A14= | 3.6520470E-05 | 1.7861889E-05 | -2.5824511E-06 | -3.5050079E-05 | -4.9870336E-05 |
| A16= | -6.1854772E-06 | -2.5991104E-06 | 2.8033029E-07 | 4.2155573E-06 | 5.5615212E-06 |
| A18= | 7.1877045E-07 | 2.6008140E-07 | -2.0593870E-08 | -3.4982379E-07 | -4.3466312E-07 |
| A20= | -5.7418838E-08 | -1.7920169E-08 | 9.8007281E-10 | 1.9353021E-08 | 2.3508682E-08 |
| A22= | 3.1051771E-09 | 8.3712858E-10 | -2.7350501E-11 | -6.5398368E-10 | -8.4317154E-10 |
| A24= | -1.0886539E-10 | -2.5491168E-11 | 3.4138251E-13 | 1.0241553E-11 | 1.8129485E-11 |
| A26= | 2.2398093E-12 | 4.6274478E-13 | | 4.6767756E-14 | -1.7746949E-13 |
| A28= | -2.0607964E-14 | -3.8796863E-15 | | -2.8676825E-15 | |
| Surface # | 17 | 18 | 19 | 20 | |
| k = | 0.0000000E+00 | 0.0000000E+00 | 0.0000000E+00 | 0.0000000E+00 | |

(continued)

| Surface # | 17 | 18 | 19 | 20 | |
|---|---|---|---|---|---|
| A4 = | -3.9727045E-03 | -1.0363846E-02 | -9.6907510E-03 | -6.7516561E-03 | |
| A6 = | -8.5295200E-04 | 4.2689342E-03 | 2.2981056E-03 | 2.5382968E-05 | |
| A8 = | 2.8531454E-03 | -2.4224839E-04 | -6.2234131E-04 | 2.9855897E-05 | |
| A10= | -1.2785640E-03 | -1.7973868E-06 | 1.5005113E-04 | 3.2590944E-06 | |
| A12= | 3.1749081E-04 | -3.9775637E-05 | -3.1343137E-05 | -2.7611244E-06 | |
| A14= | -5.3730296E-05 | 1.6623882E-05 | 5.0728175E-06 | 5.6959070E-07 | |
| A16= | 6.7738529E-06 | -3.2425616E-06 | -5.9455410E-07 | -6.5520254E-08 | |
| A18= | -6.6197206E-07 | 3.8111210E-07 | 4.9289623E-08 | 4.7891034E-09 | |
| A20= | 5.0018806E-08 | -2.9080850E-08 | -2.8524338E-09 | -2.3009997E-10 | |
| A22= | -2.8069883E-09 | 1.4589720E-09 | 1.1264263E-10 | 7.2031754E-12 | |
| A24= | 1.0866991E-10 | -4.6636718E-11 | -2.8935372E-12 | -1.4003315E-13 | |
| A26= | -2.5593018E-12 | 8.6377655E-13 | 4.3597314E-14 | 1.5109894E-15 | |
| A28= | 2.7409073E-14 | -7.0701721E-15 | -2.9249065E-16 | -6.7490088E-18 | |

It should be mentioned that, the position of stop is not disclosed in Table 7A because the position of stop can be adjusted according to different object distances. That is, in each state, the image capturing optical lens assembly can have different object distances. In the first mode of the 4th embodiment, the position of stop of the first state is at surface 1, the position of stop of a second state is at surface 6, and the position of stop of a third state is at surface 6.

In the first mode of the 4th embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 4th embodiment, so an explanation in this regard will not be provided again.

Fig. 7B is a schematic view of the imaging apparatus 4 according to the 4th embodiment of Fig. 7A in the second state of the first mode, Fig. 7C is a schematic view of the imaging apparatus 4 according to the 4th embodiment of Fig. 7A in the third state of the first mode, Fig. 8B shows, in order from left to right, spherical aberration curves, astigmatic field curves and a distortion curve of the imaging apparatus 4 according to the 4th embodiment in the second state of the first mode, Fig. 8C shows, in order from left to right, spherical aberration curves, astigmatic field curves and a distortion curve of the imaging apparatus 4 according to the 4th embodiment in the third state of the first mode. Moreover, these parameters can be calculated from Table 7A and Table 7B as the following values and satisfy the following conditions:

| Table 7C | | | | | |
|---|---|---|---|---|---|
| | First State | | Second State | | Third State |
| fM1-1 [mm] | 22.77 | fM1-2 [mm] | 20.78 | fM1-3 [mm] | 17.73 |
| FnoM1-1 | 1.86 | FnoM1-2 | 2.06 | FnoM1-3 | 2.40 |
| HFOVM1-1 [deg.] | 15.4 | HFOVM1-2 [deg.] | 15.5 | HFOVM1-3 [deg.] | 15.5 |
| Object Distance [mm] | Infinity | Object Distance [mm] | 300.025 | Object Distance [mm] | 100.025 |
| D0 [mm] | Infinity | D0 [mm] | 300.000 | D0 [mm] | 100.000 |
| D1 [mm] | 3.853 | D1 [mm] | 3.016 | D1 [mm] | 1.453 |
| D2 [mm] | 0.959 | D2 [mm] | 1.796 | D2 [mm] | 3.359 |
| FOVM1-1 [deg.] | 30.8 | FOVM1-2 [deg.] | 31.0 | FOVM1-3 [deg.] | 31.0 |
| DGA(DGA1) | 1.71 | DGA(DGA1) | 1.71 | DGA(DGA1) | 1.71 |
| DGA/CT1 | 1.41 | DGA/CT1 | 1.41 | DGA/CT1 | 1.41 |
| TGAB/DGB | 1.44 | TGAB/DGB | 1.24 | TGAB/DGB | 0.93 |

(continued)

| Table 7C | | | | | | |
|---|---|---|---|---|---|---|
| | First State | | Second State | | Third State |
| ΣPGn | -1.37 | | | | |

<4th Embodiment - Second Mode>

Fig. 7D is a schematic view of the imaging apparatus 4 according to the 4th embodiment in a first state of a second mode of the present disclosure, Fig. 8D shows, in order from left to right, spherical aberration curves, astigmatic field curves and a distortion curve of the imaging apparatus 4 according to the 4th embodiment in the first state of the second mode. In Fig. 7D, the imaging apparatus 4 according to the 4th embodiment includes the image capturing optical lens assembly (its reference number is omitted) and the image sensor IS. In the second mode, the image capturing optical lens assembly includes, in order from the object side to the image side along the optical path, the stop S1, a second mode object-side lens group GA2, the first light path folding element P1, the joint lens group GB, the second light path folding element P2, the filter E7 and the image surface IMG, wherein the image sensor IS is disposed on the image surface IMG of the image capturing optical lens assembly. There is without additional one or more lens elements inserted between the joint lens group GB and the image surface IMG.

The second mode object-side lens group GA2 includes, in order from the object side to the image side along the optical path, a lens element A21 and a lens element A22. There is without additional one or more lens elements inserted between the lens element A21 and the lens element A22, and there is an air gap on the optical axis between the lens element A21 and the lens element A22.

The lens element A21 with positive refractive power has an object-side surface being concave in a paraxial region thereof and an image-side surface being convex in a paraxial region thereof. The lens element A21 is made of glass material, and has the object-side surface and the image-side surface being both aspheric. Moreover, the object-side surface of the lens element A21 includes one inflection point and one critical point, the image-side surface of the lens element A21 includes one inflection point and one critical point.

The lens element A22 with negative refractive power has an object-side surface being concave in a paraxial region thereof and an image-side surface being concave in a paraxial region thereof. The lens element A22 is made of plastic material, and has the object-side surface and the image-side surface being both aspheric. Moreover, the object-side surface of the lens element A22 includes three inflection points and two critical points, the image-side surface of the lens element A22 includes two inflection points and one critical point.

The first light path folding element P1 and the second light path folding element P2 are both prisms and made of glass material.

The joint lens group GB includes, in order from the object side to the image side along the optical path, the stop S2, the first lens element E1, the second lens element E2, the stop S3, the third lens element E3, the fourth lens element E4, the stop S4, the fifth lens element E5 and the sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes the middle lens group Gm and the last lens group Gn, the first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes two inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes two inflection points.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes one inflection point and one critical point, the image-side surface of the fifth lens element E5 includes one inflection point and one critical point.

The sixth lens element E6 with positive refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes one inflection point, the image-side surface of the sixth lens element E6 includes one inflection point.

The filter E7 is made of glass material and disposed between the second light path folding element P2 and the image surface IMG and will not affect a focal length of the image capturing optical lens assembly.

The detailed optical data of the 4th embodiment are shown in Table 8A and the aspheric surface data are shown in Table 8B below.

| Table 8A - 4th Embodiment - Second Mode | | | | | | | | |
|---|---|---|---|---|---|---|---|---|
| Surface # | | Curvature Radius | | Thickness | Material | Index | Abbe # | Focal Length |
| 0 | Object | Infinity | | D0 | | | | |
| 1 | Stop | Plano | | 0.180 | | | | |
| 2 | Lens A21 | -49.1932 | ASP | 1.604 | Glass | 1.470 | 66.9 | 29.63 |
| 3 | | -10.9741 | ASP | 0.506 | | | | |
| 4 | Lens A22 | -884.3911 | ASP | 1.480 | Plastic | 1.614 | 25.6 | -87.95 |
| 5 | | 57.5295 | ASP | 0.320 | | | | |
| 6 | First Light Path Folding Element | Plano | | 8.000 | Glass | 1.911 | 35.2 | - |
| 7 | | Plano | | D1 | | | | |
| 8 | Stop | Plano | | 0.000 | | | | |
| 9 | Lens 1 | 10.1597 | ASP | 1.205 | Plastic | 1.551 | 44.8 | 12.22 |
| 10 | | -19.1002 | ASP | 0.479 | | | | |
| 11 | Lens 2 | 8.6186 | ASP | 0.722 | Plastic | 1.615 | 25.3 | -9.11 |
| 12 | | 3.2865 | ASP | 1.320 | | | | |
| 13 | Stop | Plano | | -0.300 | | | | |
| 14 | Lens 3 | 15.1253 | ASP | 1.488 | Plastic | 1.529 | 45.4 | 11.91 |
| 15 | | -10.4382 | ASP | D2 | | | | |
| 16 | Lens 4 | -3.5380 | ASP | 0.656 | Plastic | 1.544 | 56.0 | -22.66 |
| 17 | | -5.2866 | ASP | 0.611 | | | | |
| 18 | Stop | Plano | | -0.100 | | | | |
| 19 | Lens 5 | -27.4686 | ASP | 0.526 | Plastic | 1.614 | 26.0 | -51.55 |
| 20 | | -209.8932 | ASP | 0.295 | | | | |
| 21 | Lens 6 | 5.5948 | ASP | 1.355 | Plastic | 1.551 | 44.8 | 307.63 |
| 22 | | 5.2882 | ASP | 1.000 | | | | |
| 23 | Second Light Path Folding Element | Plano | | 9.800 | Glass | 1.911 | 35.2 | - |

(continued)

| Table 8A - 4th Embodiment - Second Mode | | | | | | | |
|---|---|---|---|---|---|---|---|
| Surface # | | Curvature Radius | Thickness | Material | Index | Abbe # | Focal Length |
| 24 | | Plano | 0.450 | | | | |
| 25 | Filter | Plano | 0.300 | Glass | 1.517 | 64.2 | - |
| 26 | | Plano | 0.156 | | | | |
| 27 | Image | Plano | - | | | | |
| Reference wavelength is 587.6 nm (d-line). | | | | | | | |
| Effective radius of Surface 1 (Stop S1) is 5.181 mm. | | | | | | | |
| Effective radius of Surface 8 (Stop S2) is 4.338 mm. | | | | | | | |
| Effective radius of Surface 13 (Stop S3) is 3.495 mm. | | | | | | | |
| Effective radius of Surface 18 (Stop S4) is 3.673 mm. | | | | | | | |

| Table 8B - Aspheric Coefficients | | | | | |
|---|---|---|---|---|---|
| Surface # | 2 | 3 | 4 | 5 | 9 |
| k = | 0.0000000E+00 | 0.0000000E+00 | 0.0000000E+00 | 0.0000000E+00 | 0.0000000E+00 |
| A4 = | 2.8903927E-03 | 1.3190660E-02 | 9.4168411E-03 | 1.1157329E-03 | 9.1300448E-04 |
| A6 = | -1.4807794E-03 | -7.5472192E-03 | -6.3498951E-03 | -1.4243872E-03 | -2.0862829E-04 |
| A8 = | 3.6579632E-04 | 2.1380458E-03 | 1.9065265E-03 | 4.6745965E-04 | 9.9724919E-05 |
| A10= | -4.7036770E-05 | -3.4563624E-04 | -3.2621761E-04 | -8.6630003E-05 | -3.1990362E-05 |
| A12= | 3.0464673E-06 | 3.4455491E-05 | 3.4419891E-05 | 1.0010882E-05 | 9.3853606E-06 |
| A14= | -3.7527339E-08 | -2.1601731E-06 | -2.3012869E-06 | -7.6079085E-07 | -2.3596312E-06 |
| A16= | -9.2653819E-09 | 8.0885223E-08 | 9.4782862E-08 | 3.8905347E-08 | 4.3393622E-07 |
| A18= | 7.7315894E-10 | -1.3372786E-09 | -2.0473519E-09 | -1.3372754E-09 | -5.4850332E-08 |
| A20= | -3.0174644E-11 | -2.1180845E-11 | 1.3510639E-12 | 3.0089502E-11 | 4.6768348E-09 |
| A22= | 6.5518911E-13 | 1.5455286E-12 | 1.0789982E-12 | -4.1599303E-13 | -2.6386766E-10 |
| A24= | -7.5379995E-15 | -3.0402452E-14 | -2.4279416E-14 | 3.0795123E-15 | 9.4352545E-12 |
| A26= | 3.5293096E-17 | 2.2104803E-16 | 1.8092596E-16 | -8.4916313E-18 | -1.9361202E-13 |
| A28= | | | | | 1.7365469E-15 |
| Surface # | 10 | 11 | 12 | 14 | 15 |
| k = | 0.0000000E+00 | 0.0000000E+00 | -1.0000000E+00 | 0.0000000E+00 | 0.0000000E+00 |
| A4 = | 6.1674610E-03 | -4.6745517E-03 | -1.1336712E-02 | -7.6693196E-04 | 1.0755080E-04 |
| A6 = | -5.1740611E-04 | 1.3673836E-03 | 2.7515930E-03 | 7.4124536E-04 | -2.6440806E-04 |
| A8 = | -9.7087413E-05 | -6.0454541E-04 | -9.6592693E-04 | -4.9865506E-04 | 1.9045870E-04 |
| A10= | 1.2357581E-04 | 2.8976897E-04 | 4.0970619E-04 | 2.5244585E-04 | -7.0010223E-05 |
| A12= | -4.8892133E-05 | -1.0362195E-04 | -1.4660386E-04 | -8.2960776E-05 | 1.6335917E-05 |
| A14= | 1.0928336E-05 | 2.4469789E-05 | 3.6520470E-05 | 1.7861889E-05 | -2.5824511E-06 |
| A16= | -1.5539387E-06 | -3.8542012E-06 | -6.1854772E-06 | -2.5991104E-06 | 2.8033029E-07 |
| A18= | 1.4654549E-07 | 4.1299886E-07 | 7.1877045E-07 | 2.6008140E-07 | -2.0593870E-08 |
| A20= | -9.2386619E-09 | -3.0265959E-08 | -5.7418838E-08 | -1.7920169E-08 | 9.8007281E-10 |

(continued)

| Surface # | 10 | 11 | 12 | 14 | 15 |
|---|---|---|---|---|---|
| A22= | 3.8201109E-10 | 1.4944485E-09 | 3.1051771E-09 | 8.3712858E-10 | -2.7350501E-11 |
| A24= | -9.8167176E-12 | -4.7567163E-11 | -1.0886539E-10 | -2.5491168E-11 | 3.4138251E-13 |
| A26= | 1.3902767E-13 | 8.8168915E-13 | 2.2398093E-12 | 4.6274478E-13 | |
| A28= | -7.9280772E-16 | -7.2327910E-15 | -2.0607964E-14 | -3.8796863E-15 | |
| Surface # | 16 | 17 | 19 | 20 | 21 |
| k = | -1.0000000E+00 | 0.0000000E+00 | 0.0000000E+00 | 0.0000000E+00 | 0.0000000E+00 |
| A4 = | 3.0484158E-02 | 2.9243471E-02 | -3.9727045E-03 | -1.0363846E-02 | -9.6907510E-03 |
| A6 = | -7.1936533E-03 | -7.6623420E-03 | -8.5295200E-04 | 4.2689342E-03 | 2.2981056E-03 |
| A8 = | 2.4793424E-03 | 3.6258415E-03 | 2.8531454E-03 | -2.4224839E-04 | -6.2234131E-04 |
| A10= | -8.2503784E-04 | -1.3085521E-03 | -1.2785640E-03 | -1.7973868E-06 | 1.5005113E-04 |
| A12= | 2.0315964E-04 | 3.1069596E-04 | 3.1749081E-04 | -3.9775637E-05 | -3.1343137E-05 |
| A14= | -3.5050079E-05 | -4.9870336E-05 | -5.3730296E-05 | 1.6623882E-05 | 5.0728175E-06 |
| A16= | 4.2155573E-06 | 5.5615212E-06 | 6.7738529E-06 | -3.2425616E-06 | -5.9455410E-07 |
| A18= | -3.4982379E-07 | -4.3466312E-07 | -6.6197206E-07 | 3.8111210E-07 | 4.9289623E-08 |
| A20= | 1.9353021E-08 | 2.3508682E-08 | 5.0018806E-08 | -2.9080850E-08 | -2.8524338E-09 |
| A22= | -6.5398368E-10 | -8.4317154E-10 | -2.8069883E-09 | 1.4589720E-09 | 1.1264263E-10 |
| A24= | 1.0241553E-11 | 1.8129485E-11 | 1.0866991E-10 | -4.6636718E-11 | -2.8935372E-12 |
| A26= | 4.6767756E-14 | -1.7746949E-13 | -2.5593018E-12 | 8.6377655E-13 | 4.3597314E-14 |
| A28= | -2.8676825E-15 | | 2.7409073E-14 | -7.0701721E-15 | -2.9249065E-16 |
| Surface # | 22 | | | | |
| k = | 0.0000000E+00 | | | | |
| A4 = | -6.7516561E-03 | | | | |
| A6 = | 2.5382968E-05 | | | | |
| A8 = | 2.9855897E-05 | | | | |
| A10= | 3.2590944E-06 | | | | |
| A12= | -2.7611244E-06 | | | | |
| A14= | 5.6959070E-07 | | | | |
| A16= | -6.5520254E-08 | | | | |
| A18= | 4.7891034E-09 | | | | |
| A20= | -2.3009997E-10 | | | | |
| A22= | 7.2031754E-12 | | | | |
| A24= | -1.4003315E-13 | | | | |
| A26= | 1.5109894E-15 | | | | |
| A28= | -6.7490088E-18 | | | | |

It should be mentioned that, the position of stop is not disclosed in Table 8A because the position of stop can be adjusted according to different object distances. That is, in each state, the image capturing optical lens assembly can have different object distances. In the second mode of the 4th embodiment, the position of stop of the first state is at surface 1.

In the second mode of the 4th embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 4th embodiment, so an explanation in this regard will not be provided again.

Moreover, these parameters can be calculated from Table 8A and Table 8B as the following values and satisfy the following conditions:

| Table 8C | |
|---|---|
| | First State |
| fM2-1 [mm] | 30.05 |
| FnoM2-1 | 2.90 |
| HFOVM2-1 [deg.] | 5.3 |
| Object Distance [mm] | Infinity |
| D0 [mm] | Infinity |
| D1 [mm] | 15.125 |
| D2 [mm] | 0.534 |
| FOVM2-1 [deg.] | 10.6 |
| DGA(DGA2) | 3.59 |
| DGA/CT1 | 2.98 |
| TGAB/DGB | 2.67 |
| ΣPGn | -1.81 |

Moreover, the image capturing optical lens assembly of the 4th embodiment can further satisfy the conditions in the following Table 8D:

| Table 8D | |
|---|---|
| TPM12/CTP1 | 1.36 |
| ImgH1/ImgH2 | 2.26 |
| (\|f1\|+\|f2\|)/\|f4\| | 0.94 |
| f1/f4 | -0.54 |
| \|f1/f3\|+\|f1/\|f4\| | 1.57 |
| 10×(N1/V1+N5/V5) | 0.97 |
| TLmax [mm] | 47.53 |
| CTmax [mm] | 1.71 |
| YGAR1min [mm] | 4.82 |
| \|10×T12/f4\| | 0.21 |
| CT1/CT6 | 0.89 |
| (CT1 + T12)/CT5 | 3.20 |
| N5 | 1.61 |

<5th Embodiment - First Mode>

Fig. 9A is a schematic view of an imaging apparatus 5 according to the 5th embodiment in a first state of a first mode of the present disclosure, and Fig. 10A shows, in order from left to right, spherical aberration curves, astigmatic field curves and a distortion curve of the imaging apparatus 5 according to the 5th embodiment in the first state of the first mode. In Fig. 9A, the imaging apparatus 5 according to the 5th embodiment includes an image capturing optical lens assembly (its reference number is omitted) and an image sensor IS. In the first mode, the image capturing optical lens assembly includes, in order from an object side to an image side along an optical path, a stop S1, a first mode object-side lens group GA1, a first light path folding element P1, a joint lens group GB, a second light path folding element P2, a filter E7 and an image surface IMG, wherein the image sensor IS is disposed on the image surface IMG of the image capturing optical lens assembly. There is without additional one or more lens elements inserted between the joint lens group GB and the image surface IMG.

The first mode object-side lens group GA1 includes a lens element A11. The lens element A11 with positive refractive power has an object-side surface being convex in a paraxial region thereof and an image-side surface being convex in a paraxial region thereof. The lens element A11 is made of glass material, and has the object-side surface and the image-side surface being both aspheric. Moreover, the object-side surface of the lens element A11 includes one inflection point.

The first light path folding element P1 and the second light path folding element P2 are both prisms and made of glass material.

The joint lens group GB includes, in order from the object side to the image side along the optical path, a first lens element E1, a second lens element E2, a third lens element E3, a stop S2, a fourth lens element E4, a stop S3, a fifth lens element E5 and a sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes a middle lens group Gm and a last lens group Gn. The first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes two inflection points, the image-side surface of the first lens element E1 includes three inflection points and three critical points.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes two inflection points, the image-side surface of the second lens element E2 includes one inflection point.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and one critical point, the image-side surface of the fifth lens element E5 includes two inflection points and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes two inflection points, the image-side surface of the sixth lens element E6 includes one inflection point and one critical point.

The filter E7 is made of glass material and disposed between the second light path folding element P2 and the image surface IMG and will not affect a focal length of the image capturing optical lens assembly.

The detailed optical data of the 5th embodiment are shown in Table 9A and the aspheric surface data are shown in Table 9B below.

| Table 9A - 5th Embodiment - First Mode | | | | | | | |
|---|---|---|---|---|---|---|---|
| Surface # | | Curvature Radius | Thickness | Material | Index | Abbe # | Focal Length |
| 0 | Object | Infinity | D0 | | | | |

(continued)

| Table 9A - 5th Embodiment - First Mode | | | | | | | | |
|---|---|---|---|---|---|---|---|---|
| Surface # | | Curvature Radius | | Thickness | Material | Index | Abbe # | Focal Length |
| 1 | Stop | Plano | | -0.544 | | | | |
| 2 | Lens A11 | 25.6790 | ASP | 1.556 | Glass | 1.497 | 81.6 | 37.34 |
| 3 | | -65.5973 | ASP | 1.579 | | | | |
| 4 | First Light Path Folding Element | Plano | | 8.200 | Glass | 1.835 | 42.7 | - |
| 5 | | Plano | | D1 | | | | |
| 6 | Lens 1 | 11.8090 | ASP | 1.144 | Plastic | 1.587 | 28.3 | 12.91 |
| 7 | | -20.4179 | ASP | 0.237 | | | | |
| 8 | Lens 2 | 11.2702 | ASP | 0.947 | Plastic | 1.639 | 23.5 | -8.76 |
| 9 | | 3.6183 | ASP | 0.877 | | | | |
| 10 | Lens 3 | 13.3242 | ASP | 1.677 | Plastic | 1.545 | 56.1 | 10.83 |
| 11 | | -10.1273 | ASP | -0.165 | | | | |
| 12 | Stop | Plano | | D2 | | | | |
| 13 | Lens 4 | -3.7782 | ASP | 0.680 | Plastic | 1.545 | 56.1 | -21.37 |
| 14 | | -5.9479 | ASP | 0.683 | | | | |
| 15 | Stop | Plano | | -0.110 | | | | |
| 16 | Lens 5 | -31.3714 | ASP | 0.550 | Plastic | 1.661 | 20.4 | -134.57 |
| 17 | | -48.8171 | ASP | 0.404 | | | | |
| 18 | Lens 6 | 6.1077 | ASP | 1.358 | Plastic | 1.545 | 56.1 | -210.85 |
| 19 | | 5.3446 | ASP | 1.000 | | | | |
| 20 | Second Light Path Folding Element | Plano | | 11.000 | Glass | 1.911 | 35.2 | - |
| 21 | | Plano | | 0.500 | | | | |
| 22 | Filter | Plano | | 0.310 | Glass | 1.517 | 64.2 | - |
| 23 | | Plano | | 0.610 | | | | |
| 24 | Image | Plano | | - | | | | |
| Reference wavelength is 587.6 nm (d-line). | | | | | | | | |
| Effective radius of Surface 1 (Stop S1) is 6.080 mm. | | | | | | | | |
| Effective radius of Surface 12 (Stop S2) is 3.686 mm. | | | | | | | | |
| Effective radius of Surface 15 (Stop S3) is 3.610 mm. | | | | | | | | |

| Table 9B - Aspheric Coefficients | | | | | |
|---|---|---|---|---|---|
| Surface # | 2 | 3 | 6 | 7 | 8 |
| k = | 0.0000000E+00 | 0.0000000E+00 | 0.0000000E+00 | 0.0000000E+00 | 0.0000000E+00 |
| A4 = | -2.8821396E-05 | -1.3244646E-05 | 5.1976085E-04 | 4.6017280E-03 | -3.9425830E-03 |
| A6 = | 9.0244084E-07 | 2.2414169E-06 | -1.1690737E-04 | -7.3553286E-04 | -1.2353632E-04 |
| A8 = | -8.6095291E-07 | -1.1987210E-06 | 1.0815391E-04 | 5.2221855E-04 | 6.3532665E-04 |
| A10= | 1.7227967E-07 | 2.2057484E-07 | -3.6816964E-05 | -2.1660734E-04 | -3.2471591E-04 |

(continued)

| Table 9B - Aspheric Coefficients | | | | | |
|---|---|---|---|---|---|
| Surface # | 2 | 3 | 6 | 7 | 8 |
| A12= | -1.9486993E-08 | -2.3978272E-08 | 7.7320990E-06 | 5.4878678E-05 | 9.2236992E-05 |
| A14= | 1.3644601E-09 | 1.6416322E-09 | -1.0983958E-06 | -9.2025249E-06 | -1.7087480E-05 |
| A16= | -6.1871165E-11 | -7.3282150E-11 | 1.0837953E-07 | 1.0564752E-06 | 2.1724726E-06 |
| A18= | 1.8226084E-12 | 2.1316208E-12 | -7.6214683E-09 | -8.4236550E-08 | -1.9294129E-07 |
| A20= | -3.3742922E-14 | -3.9011747E-14 | 3.9278284E-10 | 4.6660150E-09 | 1.1958860E-08 |
| A22= | 3.5715711E-16 | 4.0827775E-16 | -1.5101776E-11 | -1.7668013E-10 | -5.0723573E-10 |
| A24= | -1.6513426E-18 | -1.8655601E-18 | 4.2158861E-13 | 4.3832417E-12 | 1.4038640E-11 |
| A26= | | | -7.5930035E-15 | -6.4621589E-14 | -2.2849516E-13 |
| A28= | | | 6.4630853E-17 | 4.3265432E-16 | 1.6590984E-15 |
| Surface # | 9 | 10 | 11 | 13 | 14 |
| k = | -1.0000000E+00 | 0.0000000E+00 | 0.0000000E+00 | -1.0000000E+00 | 0.0000000E+00 |
| A4 = | -8.9127630E-03 | 8.3077124E-04 | 6.3531400E-04 | 2.7820195E-02 | 2.6136581E-02 |
| A6 = | 6.5224658E-04 | -2.6153715E-04 | -2.9443970E-04 | -5.7428239E-03 | -4.9317636E-03 |
| A8 = | 2.9287621E-04 | 6.3901869E-05 | 1.3851364E-04 | 1.7464575E-03 | 2.0824888E-03 |
| A10= | -2.0361875E-04 | 1.2186794E-06 | -4.5030563E-05 | -5.4571321E-04 | -7.7126569E-04 |
| A12= | 6.4356888E-05 | -9.3046016E-06 | 1.0051749E-05 | 1.3212741E-04 | 1.9792953E-04 |
| A14= | -1.2706121E-05 | 3.8639852E-06 | -1.5387294E-06 | -2.3207399E-05 | -3.6180548E-05 |
| A16= | 1.6718280E-06 | -8.5975897E-07 | 1.6015192E-07 | 2.9358136E-06 | 4.8300644E-06 |
| A18= | -1.4848684E-07 | 1.2047585E-07 | -1.1060752E-08 | -2.6567187E-07 | -4.6881946E-07 |
| A20= | 8.7780097E-09 | -1.1082415E-08 | 4.8252167E-10 | 1.6846618E-08 | 3.2067163E-08 |
| A22= | -3.3025103E-10 | 6.6832351E-10 | -1.1987811E-11 | -7.1683231E-10 | -1.4548656E-09 |
| A24= | 7.1247350E-12 | -2.5448367E-11 | 1.2913612E-13 | 1.8809579E-11 | 3.9047670E-11 |
| A26= | -6.5902226E-14 | 5.5513023E-13 | | -2.5346953E-13 | -4.6708183E-13 |
| A28= | -3.8642728E-17 | -5.2890368E-15 | | 9.9092502E-16 | |
| Surface # | 16 | 17 | 18 | 19 | |
| k = | 0.0000000E+00 | 0.0000000E+00 | 0.0000000E+00 | 0.0000000E+00 | |
| A4 = | -4.9606603E-03 | -9.2411458E-03 | -9.2950182E-03 | -6.8156637E-03 | |
| A6 = | 1.9073671E-03 | 3.9297062E-03 | 2.0247928E-03 | -1.6746103E-04 | |
| A8 = | 7.9444852E-04 | -6.8437453E-05 | -4.7364016E-04 | 1.7057743E-04 | |
| A10= | -5.0184080E-04 | -2.3813188E-04 | 9.8605388E-05 | -4.4259731E-05 | |
| A12= | 1.3614840E-04 | 8.7158832E-05 | -1.9130181E-05 | 7.0855247E-06 | |
| A14= | -2.4392483E-05 | -1.9955168E-05 | 3.0550495E-06 | -7.9728836E-07 | |
| A16= | 3.1797959E-06 | 3.3296482E-06 | -3.6229190E-07 | 6.6496244E-08 | |
| A18= | -3.0509666E-07 | -4.0290950E-07 | 3.0683824E-08 | -4.2164904E-09 | |
| A20= | 2.0930786E-08 | 3.4334753E-08 | -1.8244669E-09 | 2.0300525E-10 | |
| A22= | -9.7232188E-10 | -1.9896798E-09 | 7.4406628E-11 | -7.1883484E-12 | |
| A24= | 2.7990401E-11 | 7.4341273E-11 | -1.9835290E-12 | 1.7491303E-13 | |
| A26= | -4.1996305E-13 | -1.6127374E-12 | 3.1146590E-14 | -2.5787595E-15 | |

(continued)

| Surface # | 16 | 17 | 18 | 19 | |
|---|---|---|---|---|---|
| A28= | 2.0094819E-15 | 1.5428898E-14 | -2.1849399E-16 | 1.7149208E-17 | |

It should be mentioned that, the position of stop is not disclosed in Table 9A because the position of stop can be adjusted according to different object distances. That is, in each state, the image capturing optical lens assembly can have different object distances. In the first mode of the 5th embodiment, the position of stop of the first state is at surface 1, and the position of stop of a second state is at surface 12.

In the first mode of the 5th embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 5th embodiment, so an explanation in this regard will not be provided again.

Fig. 9B is a schematic view of the imaging apparatus 5 according to the 5th embodiment of Fig. 9A in the second state of the first mode, Fig. 10B shows, in order from left to right, spherical aberration curves, astigmatic field curves and a distortion curve of the imaging apparatus 5 according to the 5th embodiment in the second state of the first mode. Moreover, these parameters can be calculated from Table 9A and Table 9B as the following values and satisfy the following conditions:

| Table 9C | | | |
|---|---|---|---|
| | First State | | Second State |
| fM1-1 [mm] | 24.11 | fM1-2 [mm] | 20.22 |
| FnoM1-1 | 1.98 | FnoM1-2 | 2.32 |
| HFOVM1-1 [deg.] | 14.3 | HFOVM1-2 [deg.] | 14.4 |
| Object Distance [mm] | Infinity | Object Distance [mm] | 149.456 |
| D0 [mm] | Infinity | D0 [mm] | 150.000 |
| D1 [mm] | 3.956 | D1 [mm] | 2.297 |
| D2 [mm] | 1.222 | D2 [mm] | 2.870 |
| FOVM1-1 [deg.] | 28.6 | FOVM1-2 [deg.] | 28.8 |
| DGA(DGA1) | 1.56 | DGA(DGA1) | 1.56 |
| DGA/CT1 | 1.36 | DGA/CT1 | 1.36 |
| TGAB/DGB | 1.44 | TGAB/DGB | 1.08 |
| ΣPGn | -1.42 | | |

<5th Embodiment - Second Mode>

Fig. 9C is a schematic view of the imaging apparatus 5 according to the 5th embodiment in a first state of a second mode of the present disclosure, Fig. 10C shows, in order from left to right, spherical aberration curves, astigmatic field curves and a distortion curve of the imaging apparatus 5 according to the 5th embodiment in the first state of the second mode. In Fig. 9C, the imaging apparatus 5 according to the 5th embodiment includes the image capturing optical lens assembly (its reference number is omitted) and the image sensor IS. In the second mode, the image capturing optical lens assembly includes, in order from the object side to the image side along the optical path, the stop S1, a second mode object-side lens group GA2, the first light path folding element P1, the joint lens group GB, the second light path folding element P2, the filter E7 and the image surface IMG, wherein the image sensor IS is disposed on the image surface IMG of the image capturing optical lens assembly. There is without additional one or more lens elements inserted between the joint lens group GB and the image surface IMG.

The second mode object-side lens group GA2 includes, in order from the object side to the image side along the optical path, a lens element A21 and a lens element A22. There is without additional one or more lens elements inserted between the lens element A21 and the lens element A22, and there is an air gap on the optical axis between the lens element A21 and the lens element A22.

The lens element A21 with positive refractive power has an object-side surface being convex in a paraxial region thereof and an image-side surface being convex in a paraxial region thereof. The lens element A21 is made of plastic material, and has the object-side surface and the image-side surface being both aspheric. Moreover, the image-side surface of the lens element A21 includes three inflection points and one critical point.

The lens element A22 with negative refractive power has an object-side surface being concave in a paraxial region thereof and an image-side surface being convex in a paraxial region thereof. The lens element A22 is made of plastic material, and has the object-side surface and the image-side surface being both aspheric. Moreover, the object-side surface of the lens element A22 includes five inflection points, the image-side surface of the lens element A22 includes one inflection point and one critical point.

The first light path folding element P1 and the second light path folding element P2 are both prisms and made of glass material.

The joint lens group GB includes, in order from the object side to the image side along the optical path, the first lens element E1, the second lens element E2, the third lens element E3, the stop S2, the fourth lens element E4, the stop S3, the fifth lens element E5 and the sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes the middle lens group Gm and the last lens group Gn, the first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes three inflection points and two critical points.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes two inflection points, the image-side surface of the second lens element E2 includes one inflection point.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes one inflection point and one critical point, the image-side surface of the fifth lens element E5 includes one inflection point and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes one inflection point, the image-side surface of the sixth lens element E6 includes one inflection point.

The filter E7 is made of glass material and disposed between the second light path folding element P2 and the image surface IMG and will not affect a focal length of the image capturing optical lens assembly.

The detailed optical data of the 5th embodiment are shown in Table 10A and the aspheric surface data are shown in Table 10B below.

| Table 10A - 5th Embodiment - Second Mode | | | | | | | |
|---|---|---|---|---|---|---|---|
| Surface # | | Curvature Radius | Thickness | Material | Index | Abbe # | Focal Length |
| 0 | Object | Infinity | D0 | | | | |

(continued)

| Table 10A - 5th Embodiment - Second Mode | | | | | | | | | |
|---|---|---|---|---|---|---|---|---|---|
| Surface # | | Curvature Radius | | Thickness | Material | Index | Abbe # | Focal Length |
| 1 | Stop | Plano | | -0.5370 | | | | |
| 2 | Lens A21 | 25.9133 | ASP | 0.990 | Plastic | 1.545 | 56.1 | 35.35 |
| 3 | | -74.0925 | ASP | 0.167 | | | | |
| 4 | Lens A22 | -63.5083 | ASP | 1.009 | Plastic | 1.661 | 20.4 | -151.29 |
| 5 | | -175.3137 | ASP | 0.979 | | | | |
| 6 | First Light Path Folding Element | Plano | | 8.200 | Glass | 1.835 | 42.7 | - |
| 7 | | Plano | | D1 | | | | |
| 8 | Lens 1 | 11.8090 | ASP | 1.144 | Plastic | 1.587 | 28.3 | 12.91 |
| 9 | | -20.4179 | ASP | 0.237 | | | | |
| 10 | Lens 2 | 11.2702 | ASP | 0.947 | Plastic | 1.639 | 23.5 | -8.76 |
| 11 | | 3.6183 | ASP | 0.877 | | | | |
| 12 | Lens 3 | 13.3242 | ASP | 1.677 | Plastic | 1.545 | 56.1 | 10.83 |
| 13 | | -10.1273 | ASP | 0.000 | | | | |
| 14 | Stop | Plano | | D2 | | | | |
| 15 | Lens 4 | -3.7782 | ASP | 0.680 | Plastic | 1.545 | 56.1 | -21.37 |
| 16 | | -5.9479 | ASP | 0.683 | | | | |
| 17 | Stop | Plano | | -0.110 | | | | |
| 18 | Lens 5 | -31.3714 | ASP | 0.550 | Plastic | 1.661 | 20.4 | -134.57 |
| 19 | | -48.8171 | ASP | 0.404 | | | | |
| 20 | Lens 6 | 6.1077 | ASP | 1.358 | Plastic | 1.545 | 56.1 | -210.85 |
| 21 | | 5.3446 | ASP | 1.000 | | | | |
| 22 | Second Light Path Folding Element | Plano | | 11.000 | Glass | 1.911 | 35.2 | - |
| 23 | | Plano | | 0.500 | | | | |
| 24 | Filter | Plano | | 0.310 | Glass | 1.517 | 64.2 | - |
| 25 | | Plano | | 0.610 | | | | |
| 26 | Image | Plano | | - | | | | |
| Reference wavelength is 587.6 nm (d-line). | | | | | | | | |
| Effective radius of Surface 1 (Stop S1) is 4.930 mm. | | | | | | | | |
| Effective radius of Surface 14 (Stop S2) is 3.686 mm. | | | | | | | | |
| Effective radius of Surface 17 (Stop S3) is 3.610 mm. | | | | | | | | |

| Table 10B - Aspheric Coefficients | | | | | |
|---|---|---|---|---|---|
| Surface # | 2 | 3 | 4 | 5 | 8 |
| k = | 0.0000000E+00 | 0.0000000E+00 | 0.0000000E+00 | 0.0000000E+00 | 0.0000000E+00 |
| A4 = | -6.8254230E-04 | -1.2484404E-03 | -1.0169995E-03 | -5.6960138E-04 | 5.1976085E-04 |
| A6 = | 9.3418412E-04 | 1.7869690E-03 | 7.2529303E-04 | 5.2436888E-05 | -1.1690737E-04 |

(continued)

| Table 10B - Aspheric Coefficients | | | | | |
|---|---|---|---|---|---|
| Surface # | 2 | 3 | 4 | 5 | 8 |
| A8 = | -3.8479207E-04 | -7.8124014E-04 | -2.7010271E-04 | 4.3366316E-05 | 1.0815391E-04 |
| A10= | 8.5504000E-05 | 1.8220911E-04 | 6.0911990E-05 | -1.5510587E-05 | -3.6816964E-05 |
| A12= | -1.1739301E-05 | -2.6053467E-05 | -8.7195793E-06 | 2.5788685E-06 | 7.7320990E-06 |
| A14= | 1.0535949E-06 | 2.4244674E-06 | 8.2234554E-07 | -2.5835095E-07 | -1.0983958E-06 |
| A16= | -6.3069202E-08 | -1.5012108E-07 | -5.1884368E-08 | 1.6667701E-08 | 1.0837953E-07 |
| A18= | 2.5000915E-09 | 6.1469941E-09 | 2.1703768E-09 | -6.9931372E-10 | -7.6214683E-09 |
| A20= | -6.3074652E-11 | -1.6004680E-10 | -5.7790657E-11 | 1.8484455E-11 | 3.9278284E-10 |
| A22= | 9.1763765E-13 | 2.4012348E-12 | 8.8682542E-13 | -2.8009964E-13 | -1.5101776E-11 |
| A24= | -5.8620610E-15 | -1.5809102E-14 | -5.9690677E-15 | 1.8576915E-15 | 4.2158861E-13 |
| A26= | | | | | -7.5930035E-15 |
| A28= | | | | | 6.4630853E-17 |
| Surface # | 9 | 10 | 11 | 12 | 13 |
| k = | 0.0000000E+00 | 0.0000000E+00 | -1.0000000E+00 | 0.0000000E+00 | 0.0000000E+00 |
| A4 = | 4.6017280E-03 | -3.9425830E-03 | -8.9127630E-03 | 8.3077124E-04 | 6.3531400E-04 |
| A6 = | -7.3553286E-04 | -1.2353632E-04 | 6.5224658E-04 | -2.6153715E-04 | -2.9443970E-04 |
| A8 = | 5.2221855E-04 | 6.3532665E-04 | 2.9287621E-04 | 6.3901869E-05 | 1.3851364E-04 |
| A10= | -2.1660734E-04 | -3.2471591E-04 | -2.0361875E-04 | 1.2186794E-06 | -4.5030563E-05 |
| A12= | 5.4878678E-05 | 9.2236992E-05 | 6.4356888E-05 | -9.3046016E-06 | 1.0051749E-05 |
| A14= | -9.2025249E-06 | -1.7087480E-05 | -1.2706121E-05 | 3.8639852E-06 | -1.5387294E-06 |
| A16= | 1.0564752E-06 | 2.1724726E-06 | 1.6718280E-06 | -8.5975897E-07 | 1.6015192E-07 |
| A18= | -8.4236550E-08 | -1.9294129E-07 | -1.4848684E-07 | 1.2047585E-07 | -1.1060752E-08 |
| A20= | 4.6660150E-09 | 1.1958860E-08 | 8.7780097E-09 | -1.1082415E-08 | 4.8252167E-10 |
| A22= | -1.7668013E-10 | -5.0723573E-10 | -3.3025103E-10 | 6.6832351E-10 | -1.1987811E-11 |
| A24= | 4.3832417E-12 | 1.4038640E-11 | 7.1247350E-12 | -2.5448367E-11 | 1.2913612E-13 |
| A26= | -6.4621589E-14 | -2.2849516E-13 | -6.5902226E-14 | 5.5513023E-13 | |
| A28= | 4.3265432E-16 | 1.6590984E-15 | -3.8642728E-17 | -5.2890368E-15 | |
| Surface # | 15 | 16 | 18 | 19 | 20 |
| k = | -1.0000000E+00 | 0.0000000E+00 | 0.0000000E+00 | 0.0000000E+00 | 0.0000000E+00 |
| A4 = | 2.7820195E-02 | 2.6136581E-02 | -4.9606603E-03 | -9.2411458E-03 | -9.2950182E-03 |
| A6 = | -5.7428239E-03 | -4.9317636E-03 | 1.9073671E-03 | 3.9297062E-03 | 2.0247928E-03 |
| A8 = | 1.7464575E-03 | 2.0824888E-03 | 7.9444852E-04 | -6.8437453E-05 | -4.7364016E-04 |
| A10= | -5.4571321E-04 | -7.7126569E-04 | -5.0184080E-04 | -2.3813188E-04 | 9.8605388E-05 |
| A12= | 1.3212741E-04 | 1.9792953E-04 | 1.3614840E-04 | 8.7158832E-05 | -1.9130181E-05 |
| A14= | -2.3207399E-05 | -3.6180548E-05 | -2.4392483E-05 | -1.9955168E-05 | 3.0550495E-06 |
| A16= | 2.9358136E-06 | 4.8300644E-06 | 3.1797959E-06 | 3.3296482E-06 | -3.6229190E-07 |
| A18= | -2.6567187E-07 | -4.6881946E-07 | -3.0509666E-07 | -4.0290950E-07 | 3.0683824E-08 |
| A20= | 1.6846618E-08 | 3.2067163E-08 | 2.0930786E-08 | 3.4334753E-08 | -1.8244669E-09 |
| A22= | -7.1683231E-10 | -1.4548656E-09 | -9.7232188E-10 | -1.9896798E-09 | 7.4406628E-11 |

(continued)

| Surface # | 15 | 16 | 18 | 19 | 20 |
|---|---|---|---|---|---|
| A24= | 1.8809579E-11 | 3.9047670E-11 | 2.7990401E-11 | 7.4341273E-11 | -1.9835290E-12 |
| A26= | -2.5346953E-13 | -4.6708183E-13 | -4.1996305E-13 | -1.6127374E-12 | 3.1146590E-14 |
| A28= | 9.9092502E-16 | | 2.0094819E-15 | 1.5428898E-14 | -2.1849399E-16 |
| Surface # | 21 | | | | |
| k = | 0.0000000E+00 | | | | |
| A4 = | -6.8156637E-03 | | | | |
| A6 = | -1.6746103E-04 | | | | |
| A8 = | 1.7057743E-04 | | | | |
| A10= | -4.4259731E-05 | | | | |
| A12= | 7.0855247E-06 | | | | |
| A14= | -7.9728836E-07 | | | | |
| A16= | 6.6496244E-08 | | | | |
| A18= | -4.2164904E-09 | | | | |
| A20= | 2.0300525E-10 | | | | |
| A22= | -7.1883484E-12 | | | | |
| A24= | 1.7491303E-13 | | | | |
| A26= | -2.5787595E-15 | | | | |
| A28= | 1.7149208E-17 | | | | |

It should be mentioned that, the position of stop is not disclosed in Table 10A because the position of stop can be adjusted according to different object distances. That is, in each state, the image capturing optical lens assembly can have different object distances. In the second mode of the 5th embodiment, the position of stop of the first state is at surface 1.

In the second mode of the 5th embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 5th embodiment, so an explanation in this regard will not be provided again.

Moreover, these parameters can be calculated from Table 10A and Table 10B as the following values and satisfy the following conditions:

| Table 10C | |
|---|---|
| | First State |
| fM2-1 [mm] | 30.76 |
| FnoM2-1 | 3.12 |
| HFOVM2-1 [deg.] | 5.7 |
| Object Distance [mm] | Infinity |
| D0 [mm] | Infinity |
| D1 [mm] | 14.049 |
| D2 [mm] | 0.828 |
| FOVM2-1 [deg.] | 11.4 |
| DGA(DGA2) | 2.17 |
| DGA/CT1 | 1.89 |
| TGAB/DGB | 2.50 |

(continued)

| Table 10C | |
|---|---|
| | First State |
| ΣPGn | -1.81 |

Moreover, the image capturing optical lens assembly of the 5th embodiment can further satisfy the conditions in the following Table 10D:

| Table 10D | |
|---|---|
| TPM12/CTP1 | 1.20 |
| ImgH1/ImgH2 | 2.00 |
| (\|f1\|+\|f2\|)/\|f4\| | 1.01 |
| f1/f4 | -0.60 |
| \|f1/f3\|+\|f1/\|f4\| | 1.80 |
| 10×(N1/V1+N5/V5) | 1.38 |
| TLmax [mm] | 48.09 |
| CTmax [mm] | 1.68 |
| YGAR1min [mm] | 4.93 |
| \|10×T12/f4\| | 0.11 |
| CT1/CT6 | 0.84 |
| (CT1 + T12)/CT5 | 2.51 |
| N5 | 1.66 |

<6th Embodiment - First Mode>

Fig. 11A is a schematic view of an imaging apparatus 6 according to the 6th embodiment in a first state of a first mode of the present disclosure, and Fig. 12A shows, in order from left to right, spherical aberration curves, astigmatic field curves and a distortion curve of the imaging apparatus 6 according to the 6th embodiment in the first state of the first mode. In Fig. 11A, the imaging apparatus 6 according to the 6th embodiment includes an image capturing optical lens assembly (its reference number is omitted) and an image sensor IS. In the first mode, the image capturing optical lens assembly includes, in order from an object side to an image side along an optical path, a stop S1, a first mode object-side lens group GA1, a first light path folding element P1, a joint lens group GB, a second light path folding element P2, a filter E7 and an image surface IMG, wherein the image sensor IS is disposed on the image surface IMG of the image capturing optical lens assembly. There is without additional one or more lens elements inserted between the joint lens group GB and the image surface IMG.

The first mode object-side lens group GA1 includes a lens element A11. The lens element A11 with positive refractive power has an object-side surface being convex in a paraxial region thereof and an image-side surface being convex in a paraxial region thereof. The lens element A11 is made of glass material, and has the object-side surface and the image-side surface being both aspheric. Moreover, the object-side surface of the lens element A11 includes one inflection point.

The first light path folding element P1 and the second light path folding element P2 are both prisms and made of glass material.

The joint lens group GB includes, in order from the object side to the image side along the optical path, a first lens element E1, a second lens element E2, a third lens element E3, a stop S2, a fourth lens element E4, a stop S3, a fifth lens element E5 and a sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes a middle lens group Gm and a last lens group Gn. The first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes three inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes two inflection points.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and one critical point, the image-side surface of the fifth lens element E5 includes two inflection points and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes two inflection points, the image-side surface of the sixth lens element E6 includes one inflection point and one critical point.

The filter E7 is made of glass material and disposed between the second light path folding element P2 and the image surface IMG and will not affect a focal length of the image capturing optical lens assembly.

The detailed optical data of the 6th embodiment are shown in Table 11A and the aspheric surface data are shown in Table 11B below.

| Table 11A - 6th Embodiment - First Mode | | | | | | | | |
|---|---|---|---|---|---|---|---|---|
| Surface # | | Curvature Radius | | Thickness | Material | Index | Abbe # | Focal Length |
| 0 | Object | Infinity | | D0 | | | | |
| 1 | Stop | Plano | | -0.577 | | | | |
| 2 | Lens A11 | 24.5723 | ASP | 1.585 | Glass | 1.497 | 81.6 | 37.46 |
| 3 | | -75.2400 | ASP | 1.532 | | | | |
| 4 | First Light Path Folding Element | Plano | | 8.200 | Glass | 1.835 | 42.7 | - |
| 5 | | Plano | | D1 | | | | |
| 6 | Lens 1 | 10.2236 | ASP | 1.286 | Plastic | 1.587 | 28.3 | 12.65 |
| 7 | | -25.8821 | ASP | 0.215 | | | | |
| 8 | Lens 2 | 11.3579 | ASP | 0.908 | Plastic | 1.639 | 23.5 | -8.53 |
| 9 | | 3.5678 | ASP | 0.926 | | | | |
| 10 | Lens 3 | 13.8066 | ASP | 1.591 | Plastic | 1.545 | 56.1 | 11.27 |
| 11 | | -10.6180 | ASP | -0.390 | | | | |
| 12 | Stop | Plano | | D2 | | | | |
| 13 | Lens 4 | -3.8360 | ASP | 0.702 | Plastic | 1.545 | 56.1 | -22.79 |

(continued)

| Table 11A - 6th Embodiment - First Mode | | | | | | | | |
|---|---|---|---|---|---|---|---|---|
| Surface # | | Curvature Radius | | Thickness | Material | Index | Abbe # | Focal Length |
| 14 | | -5.9086 | ASP | 0.677 | | | | |
| 15 | Stop | Plano | | -0.170 | | | | |
| 16 | Lens 5 | -40.9067 | ASP | 0.558 | Plastic | 1.615 | 25.3 | -130.85 |
| 17 | | -83.6167 | ASP | 0.288 | | | | |
| 18 | Lens 6 | 5.8714 | ASP | 1.307 | Plastic | 1.545 | 56.1 | -379.18 |
| 19 | | 5.2609 | ASP | 1.000 | | | | |
| 20 | Second Light Path Folding Element | Plano | | 11.000 | Glass | 1.911 | 35.2 | - |
| 21 | | Plano | | 0.500 | | | | |
| 22 | Filter | Plano | | 0.310 | Glass | 1.517 | 64.2 | - |
| 23 | | Plano | | 0.605 | | | | |
| 24 | Image | Plano | | - | | | | |
| Reference wavelength is 587.6 nm (d-line). | | | | | | | | |
| Effective radius of Surface 1 (Stop S1) is 6.078 mm. | | | | | | | | |
| Effective radius of Surface 12 (Stop S2) is 3.640 mm. | | | | | | | | |
| Effective radius of Surface 15 (Stop S3) is 3.694 mm. | | | | | | | | |

| Table 11B - Aspheric Coefficients | | | | | |
|---|---|---|---|---|---|
| Surface # | 2 | 3 | 6 | 7 | 8 |
| k = | 0.0000000E+00 | 0.0000000E+00 | 0.0000000E+00 | 0.0000000E+00 | 0.0000000E+00 |
| A4 = | -2.2510700E-05 | -3.4709029E-06 | 5.1316415E-04 | 4.5866621E-03 | -4.7186507E-03 |
| A6 = | -4.6072464E-06 | -6.3504745E-06 | -7.0898339E-05 | -9.3113992E-04 | -1.5719264E-04 |
| A8 = | 7.1704196E-07 | 1.1168810E-06 | 6.2202334E-05 | 7.7994901E-04 | 9.5697087E-04 |
| A10= | -7.0922942E-08 | -1.3018160E-07 | -1.5233211E-05 | -3.4303986E-04 | -4.9403192E-04 |
| A12= | 3.5048061E-09 | 9.0571680E-09 | 7.8654945E-07 | 8.8983468E-05 | 1.3830095E-04 |
| A14= | -5.0811841E-11 | -3.9140987E-10 | 4.4449021E-07 | -1.5018296E-05 | -2.4939258E-05 |
| A16= | -3.9248073E-12 | 9.9092995E-12 | -1.2834174E-07 | 1.7216561E-06 | 3.0664971E-06 |
| A18= | 2.5536429E-13 | -1.1232046E-13 | 1.7660039E-08 | -1.3631060E-07 | -2.6244718E-07 |
| A20= | -6.8243234E-15 | -6.9258677E-16 | -1.4832261E-09 | 7.4346347E-09 | 1.5632996E-08 |
| A22= | 9.1028569E-17 | 3.2976561E-17 | 7.9699361E-11 | -2.7287818E-10 | -6.3517384E-10 |
| A24= | -4.9760441E-19 | -2.5999974E-19 | -2.6861589E-12 | 6.3816948E-12 | 1.6761426E-11 |
| A26= | | | 5.1903378E-14 | -8.4612098E-14 | -2.5831443E-13 |
| A28= | | | -4.3957973E-16 | 4.7065067E-16 | 1.7579039E-15 |
| Surface # | 9 | 10 | 11 | 13 | 14 |
| k = | -1.0000000E+00 | 0.0000000E+00 | 0.0000000E+00 | -1.0000000E+00 | 0.0000000E+00 |
| A4 = | -9.8465800E-03 | 5.4348075E-04 | 8.6296488E-04 | 2.8900092E-02 | 2.8241546E-02 |
| A6 = | 6.9334405E-04 | -3.4491894E-04 | -5.8741329E-04 | -7.3554536E-03 | -6.9454836E-03 |
| A8 = | 5.2485894E-04 | 1.2762235E-04 | 2.9122625E-04 | 2.6039875E-03 | 2.8064969E-03 |

(continued)

| Surface # | 9 | 10 | 11 | 13 | 14 |
|---|---|---|---|---|---|
| A10= | -3.2074635E-04 | -4.8380251E-06 | -9.1445436E-05 | -8.3723269E-04 | -8.9496823E-04 |
| A12= | 9.4260910E-05 | -1.2556692E-05 | 1.9201338E-05 | 2.0295175E-04 | 1.9900543E-04 |
| A14= | -1.7383926E-05 | 5.0705869E-06 | -2.7412263E-06 | -3.6077168E-05 | -3.1973013E-05 |
| A16= | 2.1357523E-06 | -1.0461160E-06 | 2.6599182E-07 | 4.7145058E-06 | 3.8153162E-06 |
| A18= | -1.7653210E-07 | 1.3480240E-07 | -1.7258409E-08 | -4.5199115E-07 | -3.3670371E-07 |
| A20= | 9.6053527E-09 | -1.1413123E-08 | 7.1786695E-10 | 3.1358398E-08 | 2.1234518E-08 |
| A22= | -3.2121039E-10 | 6.3661790E-10 | -1.7367160E-11 | -1.5281959E-09 | -8.9704714E-10 |
| A24= | 5.3964926E-12 | -2.2588571E-11 | 1.8693922E-13 | 4.9478688E-11 | 2.2561352E-11 |
| A26= | -6.2372581E-15 | 4.6334733E-13 | | -9.5312060E-13 | -2.5391723E-13 |
| A28= | -7.9579818E-16 | -4.1938300E-15 | | 8.2457135E-15 | |
| Surface # | 16 | 17 | 18 | 19 | |
| k = | 0.0000000E+00 | 0.0000000E+00 | 0.0000000E+00 | 0.0000000E+00 | |
| A4 = | -2.0902519E-03 | -9.2104307E-03 | -1.0049841E-02 | -7.0202572E-03 | |
| A6 = | -4.2762911E-04 | 3.7254399E-03 | 2.2131623E-03 | -2.5661661E-04 | |
| A8 = | 1.7153299E-03 | -1.6899093E-04 | -5.3701242E-04 | 2.0632582E-04 | |
| A10= | -7.2164086E-04 | -1.0919215E-04 | 1.1909519E-04 | -5.2805999E-05 | |
| A12= | 1.7190411E-04 | 3.4545014E-05 | -2.3892723E-05 | 8.6108839E-06 | |
| A14= | -2.8789594E-05 | -7.3125287E-06 | 3.7836512E-06 | -1.0065142E-06 | |
| A16= | 3.5949071E-06 | 1.2422100E-06 | -4.3750942E-07 | 8.7610869E-08 | |
| A18= | -3.3214881E-07 | -1.5428277E-07 | 3.6168160E-08 | -5.7158315E-09 | |
| A20= | 2.1888690E-08 | 1.3088299E-08 | -2.1152225E-09 | 2.7523776E-10 | |
| A22= | -9.7544291E-10 | -7.3219463E-10 | 8.5549004E-11 | -9.4423104E-12 | |
| A24= | 2.7076032E-11 | 2.5831679E-11 | -2.2764507E-12 | 2.1671097E-13 | |
| A26= | -3.9936952E-13 | -5.2148527E-13 | 3.5836988E-14 | -2.9561648E-15 | |
| A28= | 2.0356062E-15 | 4.5992450E-15 | -2.5266360E-16 | 1.7935250E-17 | |

It should be mentioned that, the position of stop is not disclosed in Table 11A because the position of stop can be adjusted according to different object distances. That is, in each state, the image capturing optical lens assembly can have different object distances. In the first mode of the 6th embodiment, the position of stop of the first state is at surface 1, and the position of stop of a second state is at surface 12.

In the first mode of the 6th embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 6th embodiment, so an explanation in this regard will not be provided again.

Fig. 11B is a schematic view of the imaging apparatus 6 according to the 6th embodiment of Fig. 11A in the second state of the first mode, Fig. 12B shows, in order from left to right, spherical aberration curves, astigmatic field curves and a distortion curve of the imaging apparatus 6 according to the 6th embodiment in the second state of the first mode. Moreover, these parameters can be calculated from Table 11A and Table 11B as the following values and satisfy the following conditions:

| Table 11C | | | |
|---|---|---|---|
| | First State | | Second State |
| fM1-1 [mm] | 24.12 | fM1-2 [mm] | 19.49 |

(continued)

| Table 11C | | | |
|---|---|---|---|
| | First State | | Second State |
| FnoM1-1 | 1.98 | FnoM1-2 | 2.43 |
| HFOVM1-1 [deg.] | 14.3 | HFOVM1-2 [deg.] | 14.3 |
| Object Distance [mm] | Infinity | Object Distance [mm] | 119.423 |
| D0 [mm] | Infinity | D0 [mm] | 120.000 |
| D1 [mm] | 3.924 | D1 [mm] | 1.670 |
| D2 [mm] | 1.602 | D2 [mm] | 3.857 |
| FOVM1-1 [deg.] | 28.6 | FOVM1-2 [deg.] | 28.6 |
| DGA(DGA1) | 1.59 | DGA(DGA1) | 1.59 |
| DGA/CT1 | 1.23 | DGA/CT1 | 1.23 |
| TGAB/DGB | 1.44 | TGAB/DGB | 0.97 |
| ΣPGn | -1.31 | | |

<6th Embodiment - Second Mode>

Fig. 11C is a schematic view of the imaging apparatus 6 according to the 6th embodiment in a first state of a second mode of the present disclosure, Fig. 12C shows, in order from left to right, spherical aberration curves, astigmatic field curves and a distortion curve of the imaging apparatus 6 according to the 6th embodiment in the first state of the second mode. In Fig. 11C, the imaging apparatus 6 according to the 6th embodiment includes the image capturing optical lens assembly (its reference number is omitted) and the image sensor IS. In the second mode, the image capturing optical lens assembly includes, in order from the object side to the image side along the optical path, the stop S1, a second mode object-side lens group GA2, the first light path folding element P1, the joint lens group GB, the second light path folding element P2, the filter E7 and the image surface IMG, wherein the image sensor IS is disposed on the image surface IMG of the image capturing optical lens assembly. There is without additional one or more lens elements inserted between the joint lens group GB and the image surface IMG.

The second mode object-side lens group GA2 includes, in order from the object side to the image side along the optical path, a lens element A21 and a lens element A22. There is without additional one or more lens elements inserted between the lens element A21 and the lens element A22, and there is an air gap on the optical axis between the lens element A21 and the lens element A22.

The lens element A21 with positive refractive power has an object-side surface being convex in a paraxial region thereof and an image-side surface being convex in a paraxial region thereof. The lens element A21 is made of plastic material, and has the object-side surface and the image-side surface being both aspheric. Moreover, the image-side surface of the lens element A21 includes one inflection point and one critical point.

The lens element A22 with negative refractive power has an object-side surface being concave in a paraxial region thereof and an image-side surface being convex in a paraxial region thereof. The lens element A22 is made of glass material, and has the object-side surface and the image-side surface being both spherical.

The first light path folding element P1 and the second light path folding element P2 are both prisms and made of glass material.

The joint lens group GB includes, in order from the object side to the image side along the optical path, the first lens element E1, the second lens element E2, the third lens element E3, the stop S2, the fourth lens element E4, the stop S3, the fifth lens element E5 and the sixth lens element E6. The joint lens group GB includes six lens elements (E1, E2, E3, E4, E5, E6) without additional one or more lens elements inserted between the first lens element E1 and the sixth lens element E6, and there is an air gap on the optical axis between each of adjacent lens elements of the six lens elements. The joint lens group GB sequentially includes the middle lens group Gm and the last lens group Gn, the first lens element E1, the second lens element E2 and the third lens element E3 belong to the middle lens group Gm, and the fourth lens element E4, the fifth lens element E5 and the sixth lens element E6 belong to the last lens group Gn.

The first lens element E1 with positive refractive power has an object-side surface being convex in a paraxial region thereof and an image-side surface being convex in a paraxial region thereof. The first lens element E1 is made of plastic material, and has the object-side surface and the image-side surface being both aspheric. Moreover, the object-side surface of the first lens element E1 includes one inflection point, the image-side surface of the first lens element E1 includes two inflection points and one critical point.

The second lens element E2 with negative refractive power has an object-side surface being convex in a paraxial region thereof and an image-side surface being concave in a paraxial region thereof. The second lens element E2 is made of plastic material, and has the object-side surface and the image-side surface being both aspheric. Moreover, the object-side surface of the second lens element E2 includes two inflection points.

The third lens element E3 with positive refractive power has an object-side surface being convex in a paraxial region thereof and an image-side surface being convex in a paraxial region thereof. The third lens element E3 is made of plastic material, and has the object-side surface and the image-side surface being both aspheric. Moreover, the image-side surface of the third lens element E3 includes one inflection point.

The fourth lens element E4 with negative refractive power has an object-side surface being concave in a paraxial region thereof and an image-side surface being convex in a paraxial region thereof. The fourth lens element E4 is made of plastic material, and has the object-side surface and the image-side surface being both aspheric. Moreover, the object-side surface of the fourth lens element E4 includes one inflection point and one critical point, the image-side surface of the fourth lens element E4 includes one inflection point and one critical point.

The fifth lens element E5 with negative refractive power has an object-side surface being concave in a paraxial region thereof and an image-side surface being convex in a paraxial region thereof. The fifth lens element E5 is made of plastic material, and has the object-side surface and the image-side surface being both aspheric. Moreover, the object-side surface of the fifth lens element E5 includes two inflection points and one critical point, the image-side surface of the fifth lens element E5 includes one inflection point and one critical point.

The sixth lens element E6 with negative refractive power has an object-side surface being convex in a paraxial region thereof and an image-side surface being concave in a paraxial region thereof. The sixth lens element E6 is made of plastic material, and has the object-side surface and the image-side surface being both aspheric. Moreover, the object-side surface of the sixth lens element E6 includes one inflection point, the image-side surface of the sixth lens element E6 includes one inflection point.

The filter E7 is made of glass material and disposed between the second light path folding element P2 and the image surface IMG and will not affect a focal length of the image capturing optical lens assembly.

The detailed optical data of the 6th embodiment are shown in Table 12A and the aspheric surface data are shown in Table 12B below.

| Table 12A - 6th Embodiment - Second Mode | | | | | | | | |
|---|---|---|---|---|---|---|---|---|
| Surface # | | Curvature Radius | | Thickness | Material | Index | Abbe # | Focal Length |
| 0 | Object | Infinity | | D0 | | | | |
| 1 | Stop | Plano | | -0.5290 | | | | |
| 2 | Lens A21 | 27.1830 | ASP | 1.024 | Plastic | 1.545 | 56.1 | 35.73 |
| 3 | | -67.6977 | ASP | 0.153 | | | | |
| 4 | Lens A22 | -101.1894 | SPH | 0.700 | Glass | 1.923 | 20.9 | -158.55 |
| 5 | | -329.1853 | SPH | 1.091 | | | | |
| 6 | First Light Path Folding Element | Plano | | 8.200 | Glass | 1.835 | 42.7 | - |
| 7 | | Plano | | D1 | | | | |
| 8 | Lens 1 | 10.2236 | ASP | 1.286 | Plastic | 1.587 | 28.3 | 12.65 |
| 9 | | -25.8821 | ASP | 0.215 | | | | |
| 10 | Lens 2 | 11.3579 | ASP | 0.908 | Plastic | 1.639 | 23.5 | -8.53 |
| 11 | | 3.5678 | ASP | 0.926 | | | | |
| 12 | Lens 3 | 13.8066 | ASP | 1.591 | Plastic | 1.545 | 56.1 | 11.27 |
| 13 | | -10.6180 | ASP | -0.390 | | | | |
| 14 | Stop | Plano | | D2 | | | | |
| 15 | Lens 4 | -3.8360 | ASP | 0.702 | Plastic | 1.545 | 56.1 | -22.79 |
| 16 | | -5.9086 | ASP | 0.677 | | | | |

(continued)

| Table 12A - 6th Embodiment - Second Mode | | | | | | | | |
|---|---|---|---|---|---|---|---|---|
| Surface # | | Curvature Radius | | Thickness | Material | Index | Abbe # | Focal Length |
| 17 | Stop | Plano | | -0.170 | | | | |
| 18 | Lens 5 | -40.9067 | ASP | 0.558 | Plastic | 1.615 | 25.3 | -130.85 |
| 19 | | -83.6167 | ASP | 0.288 | | | | |
| 20 | Lens 6 | 5.8714 | ASP | 1.307 | Plastic | 1.545 | 56.1 | -379.18 |
| 21 | | 5.2609 | ASP | 1.000 | | | | |
| 22 | Second Light Path Folding Element | Plano | | 11.000 | Glass | 1.911 | 35.2 | - |
| 23 | | Plano | | 0.500 | | | | |
| 24 | Filter | Plano | | 0.310 | Glass | 1.517 | 64.2 | - |
| 25 | | Plano | | 0.605 | | | | |
| 26 | Image | Plano | | - | | | | |
| Reference wavelength is 587.6 nm (d-line). | | | | | | | | |
| Effective radius of Surface 1 (Stop S1) is 4.934 mm. | | | | | | | | |
| Effective radius of Surface 14 (Stop S2) is 3.640 mm. | | | | | | | | |
| Effective radius of Surface 17 (Stop S3) is 3.694 mm. | | | | | | | | |

| Table 12B - Aspheric Coefficients | | | | | |
|---|---|---|---|---|---|
| Surface # | 2 | 3 | 8 | 9 | 10 |
| k = | 0.0000000E+00 | 0.0000000E+00 | 0.0000000E+00 | 0.0000000E+00 | 0.0000000E+00 |
| A4 = | -9.1904979E-05 | -8.3388718E-05 | 5.1316415E-04 | 4.5866621E-03 | -4.7186507E-03 |
| A6 = | 1.1237212E-04 | 1.1642192E-04 | -7.0898339E-05 | -9.3113992E-04 | -1.5719264E-04 |
| A8 = | -4.4197280E-05 | -4.6889285E-05 | 6.2202334E-05 | 7.7994901E-04 | 9.5697087E-04 |
| A10= | 1.0334963E-05 | 1.1221403E-05 | -1.5233211E-05 | -3.4303986E-04 | -4.9403192E-04 |
| A12= | -1.5178131E-06 | -1.6862009E-06 | 7.8654945E-07 | 8.8983468E-05 | 1.3830095E-04 |
| A14= | 1.4584912E-07 | 1.6573926E-07 | 4.4449021E-07 | -1.5018296E-05 | -2.4939258E-05 |
| A16= | -9.3053628E-09 | -1.0814250E-08 | -1.2834174E-07 | 1.7216561E-06 | 3.0664971E-06 |
| A18= | 3.9077426E-10 | 4.6437113E-10 | 1.7660039E-08 | -1.3631060E-07 | -2.6244718E-07 |
| A20= | -1.0379241E-11 | -1.2610584E-11 | -1.4832261E-09 | 7.4346347E-09 | 1.5632996E-08 |
| A22= | 1.5804461E-13 | 1.9631195E-13 | 7.9699361E-11 | -2.7287818E-10 | -6.3517384E-10 |
| A24= | -1.0510880E-15 | -1.3346929E-15 | -2.6861589E-12 | 6.3816948E-12 | 1.6761426E-11 |
| A26= | | | 5.1903378E-14 | -8.4612098E-14 | -2.5831443E-13 |
| A28= | | | -4.3957973E-16 | 4.7065067E-16 | 1.7579039E-15 |
| Surface # | 11 | 12 | 13 | 15 | 16 |
| k = | -1.0000000E+00 | 0.0000000E+00 | 0.0000000E+00 | -1.0000000E+00 | 0.0000000E+00 |
| A4 = | -9.8465800E-03 | 5.4348075E-04 | 8.6296488E-04 | 2.8900092E-02 | 2.8241546E-02 |
| A6 = | 6.9334405E-04 | -3.4491894E-04 | -5.8741329E-04 | -7.3554536E-03 | -6.9454836E-03 |
| A8 = | 5.2485894E-04 | 1.2762235E-04 | 2.9122625E-04 | 2.6039875E-03 | 2.8064969E-03 |
| A10= | -3.2074635E-04 | -4.8380251E-06 | -9.1445436E-05 | -8.3723269E-04 | -8.9496823E-04 |

(continued)

| Surface # | 11 | 12 | 13 | 15 | 16 |
|---|---|---|---|---|---|
| A12= | 9.4260910E-05 | -1.2556692E-05 | 1.9201338E-05 | 2.0295175E-04 | 1.9900543E-04 |
| A14= | -1.7383926E-05 | 5.0705869E-06 | -2.7412263E-06 | -3.6077168E-05 | -3.1973013E-05 |
| A16= | 2.1357523E-06 | -1.0461160E-06 | 2.6599182E-07 | 4.7145058E-06 | 3.8153162E-06 |
| A18= | -1.7653210E-07 | 1.3480240E-07 | -1.7258409E-08 | -4.5199115E-07 | -3.3670371E-07 |
| A20= | 9.6053527E-09 | -1.1413123E-08 | 7.1786695E-10 | 3.1358398E-08 | 2.1234518E-08 |
| A22= | -3.2121039E-10 | 6.3661790E-10 | -1.7367160E-11 | -1.5281959E-09 | -8.9704714E-10 |
| A24= | 5.3964926E-12 | -2.2588571E-11 | 1.8693922E-13 | 4.9478688E-11 | 2.2561352E-11 |
| A26= | -6.2372581E-15 | 4.6334733E-13 | | -9.5312060E-13 | -2.5391723E-13 |
| A28= | -7.9579818E-16 | -4.1938300E-15 | | 8.2457135E-15 | |
| Surface # | 18 | 19 | 20 | 21 | |
| k = | 0.0000000E+00 | 0.0000000E+00 | 0.0000000E+00 | 0.0000000E+00 | |
| A4 = | -2.0902519E-03 | -9.2104307E-03 | -1.0049841E-02 | -7.0202572E-03 | |
| A6 = | -4.2762911E-04 | 3.7254399E-03 | 2.2131623E-03 | -2.5661661E-04 | |
| A8 = | 1.7153299E-03 | -1.6899093E-04 | -5.3701242E-04 | 2.0632582E-04 | |
| A10= | -7.2164086E-04 | -1.0919215E-04 | 1.1909519E-04 | -5.2805999E-05 | |
| A12= | 1.7190411E-04 | 3.4545014E-05 | -2.3892723E-05 | 8.6108839E-06 | |
| A14= | -2.8789594E-05 | -7.3125287E-06 | 3.7836512E-06 | -1.0065142E-06 | |
| A16= | 3.5949071E-06 | 1.2422100E-06 | -4.3750942E-07 | 8.7610869E-08 | |
| A18= | -3.3214881E-07 | -1.5428277E-07 | 3.6168160E-08 | -5.7158315E-09 | |
| A20= | 2.1888690E-08 | 1.3088299E-08 | -2.1152225E-09 | 2.7523776E-10 | |
| A22= | -9.7544291E-10 | -7.3219463E-10 | 8.5549004E-11 | -9.4423104E-12 | |
| A24= | 2.7076032E-11 | 2.5831679E-11 | -2.2764507E-12 | 2.1671097E-13 | |
| A26= | -3.9936952E-13 | -5.2148527E-13 | 3.5836988E-14 | -2.9561648E-15 | |
| A28= | 2.0356062E-15 | 4.5992450E-15 | -2.5266360E-16 | 1.7935250E-17 | |

It should be mentioned that, the position of stop is not disclosed in Table 12A because the position of stop can be adjusted according to different object distances. That is, in each state, the image capturing optical lens assembly can have different object distances. In the second mode of the 6th embodiment, the position of stop of the first state is at surface 1, and the position of stop of a second state is at surface 1.

In the second mode of the 6th embodiment, the equation of the aspheric surface profiles of the aforementioned lens elements is the same as the equation in the first mode of the 1st embodiment. Also, the definitions of these parameters shown in the following table are the same as those stated in the first mode and the second mode of the 1st embodiment with corresponding values for the first mode of the 6th embodiment, so an explanation in this regard will not be provided again.

Fig. 11D is a schematic view of the imaging apparatus 6 according to the 6th embodiment of Fig. 11C in the second state of the second mode, Fig. 12D shows, in order from left to right, spherical aberration curves, astigmatic field curves and a distortion curve of the imaging apparatus 6 according to the 6th embodiment in the second state of the second mode. Moreover, these parameters can be calculated from Table 12A and Table 12B as the following values and satisfy the following conditions:

| Table 12C | | | |
|---|---|---|---|
| | First State | | Second State |
| fM2-1 [mm] | 30.79 | fM2-2 [mm] | 29.40 |
| FnoM2-1 | 3.12 | FnoM2-2 | 3.07 |

(continued)

| Table 12C | | | |
|---|---|---|---|
| | First State | | Second State |
| HFOVM2-1 [deg.] | 5.7 | HFOVM2-2 [deg.] | 5.8 |
| Object Distance [mm] | Infinity | Object Distance [mm] | 999.471 |
| D0 [mm] | Infinity | D0 [mm] | 1000.000 |
| D1 [mm] | 14.186 | D1 [mm] | 13.593 |
| D2 [mm] | 1.307 | D2 [mm] | 1.799 |
| FOVM2-1 [deg.] | 11.4 | FOVM2-2 [deg.] | 11.6 |
| DGA(DGA2) | 1.88 | DGA(DGA2) | 1.88 |
| DGA/CT1 | 1.46 | DGA/CT1 | 1.46 |
| TGAB/DGB | 2.55 | TGAB/DGB | 2.38 |
| ΣPGn | -1.67 | | |

Moreover, the image capturing optical lens assembly of the 6th embodiment can further satisfy the conditions in the following Table 12D:

| Table 12D | |
|---|---|
| TPM12/CTP1 | 1.22 |
| ImgH1/ImgH2 | 2.00 |
| (\|f1\|+\|f2\|)/\|f4\| | 0.93 |
| f1/f4 | -0.55 |
| \|f1/f3\|+\|f1/f4\| | 1.68 |
| 10×(N1/V1+N5/V5) | 1.20 |
| TLmax [mm] | 47.97 |
| CTmax [mm] | 1.59 |
| YGAR1min [mm] | 4.94 |
| \|10×T12/f4\| | 0.09 |
| CT1/CT6 | 0.98 |
| (CT1 + T12)/CT5 | 2.69 |
| N5 | 1.62 |

<7th Embodiment>

Fig. 17 is a three-dimensional schematic view of an imaging apparatus 100 according to the 7th embodiment of the present disclosure. In Fig. 17, the imaging apparatus 100 of the 7th embodiment is a camera module, the imaging apparatus 100 includes an imaging lens assembly 101, a driving apparatus 102 and an image sensor 103, wherein the imaging lens assembly 101 includes the image capturing optical system of the present disclosure and a lens barrel (its reference number is omitted) for carrying the image capturing optical system. The imaging apparatus 100 can focus light from an imaged object via the imaging lens assembly 101, perform image focusing by the driving apparatus 102, and generate an image on the image sensor 103, and the imaging information can be transmitted.

The driving apparatus 102 can be an auto-focus module, which can be driven by driving systems, such as voice coil motors (VCM), micro electro-mechanical systems (MEMS), piezoelectric systems, and shape memory alloys etc. The image capturing optical system can obtain a favorable imaging position by the driving apparatus 102 to capture clear images when the imaged object is disposed at different object distances.

The imaging apparatus 100 can include the image sensor 103 located on the image surface of the image capturing optical system, such as CMOS and CCD, with superior photosensitivity and low noise. Thus, it is favorable for providing realistic images with high definition image quality thereof. Moreover, the imaging apparatus 100 can further include an image stabilization module 104, which can be a kinetic energy sensor, such as an accelerometer, a gyro sensor, and a Hall Effect sensor. In the 7th embodiment, the image stabilization module 104 is a gyro sensor, but is not limited thereto. Therefore, the variation of different axial directions of the image capturing optical system can adjusted to compensate the image blur generated by motion at the moment of exposure, and it is further favorable for enhancing the image quality while photographing in motion and low light situation. Furthermore, advanced image compensation functions, such as optical image stabilizations (OIS) and electronic image stabilizations (EIS) etc., can be provided.

<8th Embodiment>

Fig. 18A is a schematic view of one side of an electronic device 200 according to the 8th embodiment of the present disclosure. Fig. 18B is a schematic view of another side of the electronic device 200 of Fig. 18A. Fig. 18C is a system schematic view of the electronic device 200 of Fig. 18A. In Fig. 18A, Fig. 18B and Fig. 18C, the electronic device 200 according to the 8th embodiment is a smartphone, which include imaging apparatuses 100, 110, 120, 130, 140, a flash module 201, a focusing assisting module 202, an image signal processor (ISP) 203, a user interface 204 and an image software processor 205, wherein each of the imaging apparatuses 120, 130, 140 is a front camera. When the user captures images of an imaged object 206 via the user interface 204, the electronic device 200 focuses and generates an image via at least one of the imaging apparatuses 100, 110, 120, 130, 140, while compensating for low illumination via the flash module 201 when necessary. Then, the electronic device 200 quickly focuses on the imaged object 206 according to its object distance information provided by the focusing assisting module 202, and optimizes the image via the image signal processor 203 and the image software processor 205. Thus, the image quality can be further enhanced. The focusing assisting module 202 can adopt conventional infrared or laser for obtaining quick focusing, and the user interface 204 can utilize a touch screen or a physical button for capturing and processing the image with various functions of the image processing software.

Each of the imaging apparatuses 100, 110, 120, 130, 140 according to the 8th embodiment can include the image capturing optical system of the present disclosure, and can be the same or similar to the imaging apparatus 100 according to the aforementioned 7th embodiment, and will not describe again herein. In detail, according to the 8th embodiment, the imaging apparatuses 100, 110 can be wide angle imaging apparatus and ultra-wide angle imaging apparatus, respectively. The imaging apparatuses 100, 110 can also be wide angle imaging apparatus and telephoto imaging apparatus, respectively. The imaging apparatuses 120, 130, 140 can be wide angle imaging apparatus, ultra-wide angle imaging apparatus and TOF (Time-Of-Flight) module, respectively, or can be others imaging apparatuses, which will not be limited thereto. Further, the connecting relationships between each of the imaging apparatuses 110, 120, 130, 140 and other elements can be the same as the imaging apparatus 100 in Fig. 18C, or can be adaptively adjusted according to the type of the imaging apparatuses, which will not be shown and detailed descripted again.

<9th Embodiment>

Fig. 19 is a schematic view of one side of an electronic device 300 according to the 9th embodiment of the present disclosure. According to the 9th embodiment, the electronic device 300 is a smartphone, which include imaging apparatuses 310, 320, 330 and a flash module 301.

The electronic device 300 according to the 9th embodiment can include the same or similar elements to that according to the 8th embodiment, and each of the imaging apparatuses 310, 320, 330 according to the 9th embodiment can have a configuration which is the same or similar to that according to the 8th embodiment, and will not describe again herein. In detail, according to the 9th embodiment, each of the imaging apparatuses 310, 320, 330 can include the image capturing optical system of the present disclosure, and can be the same or similar to the imaging apparatus 100 according to the aforementioned 7th embodiment, and will not describe again herein. In detail, the imaging apparatus 310 can be ultra-wide angle imaging apparatus, the imaging apparatus 320 can be wide angle imaging apparatus, the imaging apparatus 330 can be telephoto imaging apparatus (which can include light path folding element), or can be adaptively adjusted according to the type of the imaging apparatuses, which will not be limited to the arrangement.

<10th Embodiment>

Fig. 20 is a schematic view of one side of an electronic device 400 according to the 10th embodiment of the present disclosure. According to the 10th embodiment, the electronic device 400 is a smartphone, which include imaging apparatuses 410, 420, 430, 440, 450, 460, 470, 480, 490 and a flash module 401.

The electronic device 400 according to the 10th embodiment can include the same or similar elements to that according to the 8th embodiment, and each of the imaging apparatuses 410, 420, 430, 440, 450, 460, 470, 480, 490 and the flash module 401 can have a configuration which is the same or similar to that according to the 8th embodiment, and will not describe again herein. In detail, according to the 10th embodiment, each of the imaging apparatuses 410, 420, 430, 440, 450, 460, 470, 480, 490 can include the image capturing optical system of the present disclosure, and can be the same or similar to the imaging apparatus 100 according to the aforementioned 7th embodiment, and will not describe again herein.

In detail, each of the imaging apparatuses 410, 420 can be ultra-wide angle imaging apparatus, each of the imaging apparatuses 430, 440 can be wide angle imaging apparatus, each of the imaging apparatuses 450, 460 can be telephoto imaging apparatus, each of the imaging apparatuses 470, 480 can be telephoto imaging apparatus (which can include light path folding element), the imaging apparatus 490 can be TOF module, or can be adaptively adjusted according to the type of the imaging apparatuses, which will not be limited to the arrangement.

<11th Embodiment>

Fig. 21A is a schematic view of one side of an electronic device 500 according to the 11th embodiment of the present disclosure. Fig. 21B is a schematic view of another side of the electronic device 500 of Fig. 21A. In Fig. 21A and Fig. 21B, according to the 11th embodiment, the electronic device 500 is a smartphone, which include imaging apparatuses 510, 520, 530, 540 and a user interface 504.

The electronic device 500 according to the 11th embodiment can include the same or similar elements to that according to the 8th embodiment, and each of the imaging apparatuses 510, 520, 530, 540 and the user interface 504 can have a configuration which is the same or similar to that according to the 8th embodiment, and will not describe again herein. In detail, according to the 11th embodiment, the imaging apparatus 510 corresponds to a non-circular opening located on an outer side of the electronic device 500 for capturing the image, and the imaging apparatuses 520, 530, 540 can be telephoto imaging apparatus, wide angle imaging apparatus and ultra-wide angle imaging apparatus, respectively, or can be adaptively adjusted according to the type of the imaging apparatuses, which will not be limited to the arrangement.

## Claims

1. An image capturing optical system, **characterized in** comprising an image capturing optical lens assembly and at least two opening holes (H1, H2), respectively corresponding to a first mode and a second mode;

    wherein the image capturing optical lens assembly comprises, in order from an object side to an image side, an object-side lens group (GA), a first light path folding element (P1) and a joint lens group (GB), wherein the object-side lens group (GA) is a first mode object-side lens group (GA1) or a second mode object-side lens group (GA2), the joint lens group (GB) sequentially comprises a middle lens group (Gm) and a last lens group (Gn);
    wherein when the image capturing optical lens assembly in the first mode, the light is received by one of the at least two opening holes (H1, H2), and the image capturing optical lens assembly comprises, in order along an optical path, the first mode object-side lens group (GA1), the first light path folding element (P1) and the joint lens group (GB);
    when the image capturing optical lens assembly is in the second mode, the light is received by another one of the at least two opening holes (H1, H2), and the image capturing optical lens assembly comprises, in order along the optical path, the second mode object-side lens group (GA2), the first light path folding element (P1) and the joint lens group (GB);
    wherein the first light path folding element (P1) moves along the optical path, which makes the image capturing optical lens assembly switch between the first mode and the second mode;
    wherein the first mode object-side lens group (GA1), the second mode object-side lens group (GA2), the middle lens group (Gm) and the last lens group (Gn) all comprise at least one lens element, each of the at least one lens element has an object-side surface facing toward the object side and an image-side surface facing toward the image side;
    wherein at least two of the lens elements in the image capturing optical lens assembly are made of plastic material.

2. The image capturing optical system of claim 1, wherein at least one of the first mode and the second mode has a plurality of capturing states, the plurality of capturing states respectively capture images at a distance longer than an object distance of 1000 mm and within an object distance of 350 mm, the lens element of the image capturing optical lens assembly closest to an image surface (IMG) comprises at least one inflection point (IP).

3. The image capturing optical system of claim 1 or claim 2, wherein there is without additional one or more lens elements inserted between the joint lens group (GB) and an image surface (IMG); when an object distance is set as a capturing state of infinite, when the image capturing optical lens assembly is switch between the first mode and the second mode, a moving distance along the optical path of the first light path folding element (P1) related to the last lens group (Gn) is TPM12, an axial length in the first light path folding element (P1) is CTP1, and the following condition is satisfied:

$$0.65 < TPM12/CTP1 < 2.70.$$

**4.** The image capturing optical system of any one of claims 1-3, wherein a maximum image height of the image capturing optical lens assembly in the first mode is ImgH1, a maximum image height of the image capturing optical lens assembly in the second mode is ImgH2, and the following condition is satisfied:

$$1.50 < ImgH1/ImgH2 < 3.00.$$

**5.** The image capturing optical system of any one of claims 1-4, wherein there is a second light path folding element (P2) between the last lens group (Gn) and an image surface (IMG), a maximum lens element number of the first mode object-side lens group (GA1) is two, a maximum lens element number of the second mode object-side lens group (GA2) is three, a lens element number of the joint lens group (GB) is six.

**6.** The image capturing optical system of any one of claims 1-5, wherein the lens element of the image capturing optical lens assembly closest to the object side is a positive lens element, the lens element of the joint lens group (GB) closest to the object side is a positive lens element, a difference between maximum field of views of the first mode and the second mode is at least 2.0 times or more than 2.0 times.

**7.** The image capturing optical system of any one of claims 1-6, wherein the first mode object-side lens group (GA1) and the second mode object-side lens group (GA2) are both fixed related to the last lens group (Gn), the middle lens group (Gm) moves along the optical path related to the last lens group (Gn).

**8.** The image capturing optical system of any one of claims 1-7, wherein in the first mode and the second mode, when an object distance is set as a capturing state of infinite, a sum of three values of a total focal length of the image capturing optical lens assembly respectively divided by focal lengths of the three lens elements closest to an image surface (IMG) is ΣPGn, and the following condition is satisfied:

$$-5.00 < \Sigma PGn < 1.80.$$

**9.** The image capturing optical system of any one of claims 1-8, wherein the first mode and the second mode use the same image sensor (IS), the lens element of the image capturing optical lens assembly closest to an image surface (IMG) is a negative lens element.

**10.** The image capturing optical system of any one of claims 1-9, wherein at least one of the lens elements in the image capturing optical lens assembly comprises at least one critical point (CP); when the image capturing optical lens assembly is in a single mode, an axial distance between a lens element surface of the object-side lens group (GA) closest to the object side and a lens element surface of the object-side lens group (GA) closest to the image side is DGA, and the following condition is satisfied:

$$DGA < 4.50 \text{ mm}.$$

**11.** The image capturing optical system of any one of claims 1-10, wherein at least three of the lens elements in the image capturing optical lens assembly are made of plastic material; in all modes and all states of the image capturing optical lens assembly, a maximum of axial distances between a lens element surface closest to the object side to an image surface (IMG) is TLmax, in all central thicknesses of all the lens elements in the image capturing optical lens assembly, a maximum value of lens element central thickness is CTmax, in all modes and all states of the image capturing optical lens assembly, a minimum of optical effective radii of the lens element surface closest to the object side is YGAR1min, and the following conditions are satisfied:

$$TLmax < 80\ mm;$$

$$CTmax < 3.0\ mm;$$

and

$$3.80\ mm < YGAR1min.$$

**12.** The image capturing optical system of any one of claims 1-11, wherein the first light path folding element (P1) and the second light path folding element (P2) are both prisms, there is an air gap along an optical axis between adjacent two of the lens elements in the image capturing optical lens assembly.

**13.** An imaging apparatus (1), **characterized in** comprising:

the image capturing optical system of any one of claims 1-12; and
an image sensor (IS) disposed on an image surface (IMG) of the image capturing optical system.

**14.** An electronic device (200), **characterized in** comprising:
the imaging apparatus (1) of claim 13.

**15.** An image capturing optical system, **characterized in** comprising an image capturing optical lens assembly, respectively corresponding to a first mode and a second mode;

wherein the image capturing optical lens assembly comprises, in order from an object side to an image side, an object-side lens group (GA) and a joint lens group (GB), wherein the object-side lens group (GA) is a first mode object-side lens group (GA1) or a second mode object-side lens group (GA2), the joint lens group (GB) sequentially comprises a middle lens group (Gm) and a last lens group (Gn);
wherein when the image capturing optical lens assembly is in the first mode, there are, in order along an optical path, the first mode object-side lens group (GA1) and the joint lens group (GB);
when the image capturing optical lens assembly is in the second mode, there are, in order along the optical path, the second mode object-side lens group (GA2) and the joint lens group (GB);
wherein the first mode object-side lens group (GA1), the second mode object-side lens group (GA2), the middle lens group (Gm) and the last lens group (Gn) all comprise at least one lens element, each of the at least one lens element has an object-side surface facing toward the object side and an image-side surface facing toward the image side;
wherein at least two of the lens elements in the image capturing optical lens assembly are made of plastic material;
wherein a maximum lens element number of the first mode object-side lens group (GA1) is two, a maximum lens element number of the second mode object-side lens group (GA2) is two, a lens element number of the joint lens group (GB) is six, the six lens elements are sequentially a first lens element (E1), a second lens element (E2), a third lens element (E3), a fourth lens element (E4), a fifth lens element (E5) and a sixth lens element (E6);
wherein a central thickness of the first lens element (E1) is CT1, a central thickness of the fifth lens element (E5) is CT5, an axial distance between the first lens element (E1) and the second lens element (E2) is T12, and the following condition is satisfied:

$$1.60 < (CT1+T12)/CT5 < 11.0.$$

**16.** The image capturing optical system of claim 15, wherein the lens element of the image capturing optical lens assembly closest to the object side is a positive lens element, the fourth lens element (E4) has negative refractive power, the image-side surface of the second lens element (E2) is concave.

**17.** The image capturing optical system of claim 15 or claim 16, wherein the image capturing optical lens assembly only comprises the object-side lens group (GA) and the joint lens group (GB); when the image capturing optical lens assembly is in a single mode, an axial distance between a lens element surface of the object-side lens group (GA) closest to the image side and a lens element surface of the joint lens group (GB) closest to the object side is TGAB, in the joint lens group (GB), an axial distance between a lens element surface closest to the object side and a lens element surface closest to the image side is DGB, and the following condition is satisfied:

$$0.75 < TGAB/DGB < 4.0.$$

**18.** The image capturing optical system of any one of claims 15-17, wherein a refractive index of the fifth lens element (E5) at a d-line is N5, a focal length of the first lens element (E1) is f1, a focal length of the second lens element (E2) is f2, a focal length of the fourth lens element (E4) is f4, and the following conditions are satisfied:

$$1.20 \leq N5 \leq 1.65;$$

and

$$0.80 < (|f1|+|f2|)/|f4| < 2.0.$$

**19.** The image capturing optical system of any one of claims 15-18, wherein the central thickness of the first lens element (E1) is CT1, a central thickness of the sixth lens element (E6) is CT6, and the following condition is satisfied:

$$0.35 < CT1/CT6 < 2.20.$$

**20.** The image capturing optical system of any one of claims 15-19, wherein when the image capturing optical lens assembly is in a single mode, an axial distance between a lens element surface of the object-side lens group (GA) closest to the object side and a lens element surface of the object-side lens group (GA) closest to the image side is DGA, in the first mode and the second mode, the central thickness of the first lens element (E1) is CT1, and the following condition is satisfied:

$$0.90 < DGA/CT1 < 3.00.$$

**21.** The image capturing optical system of any one of claims 15-20, wherein the lens element of the image capturing optical lens assembly closest to an image surface (IMG) comprises at least one inflection point (IP), the middle lens group (Gm) sequentially comprises one positive lens element, one negative lens element and another one positive lens element.

**22.** The image capturing optical system of any one of claims 15-21, wherein the last lens group (Gn) sequentially comprises a negative lens element and another one lens element, and there is without additional one or more lens elements inserted between the last lens group (Gn) and an image surface (IMG); the fifth lens element (E5) has at least one inflection point (IP); a refractive index of the first lens element (E1) at a d-line is N1, a refractive index of the fifth lens element (E5) at the d-line is N5, an Abbe number of the first lens element (E1) is V1, an Abbe number of the fifth lens element (E5) is V5, and the following condition is satisfied:

$$0.20 < 10\times(N1/V1+N5/V5) < 1.35.$$

**23.** The image capturing optical system of any one of claims 15-22, wherein between the object-side lens group (GA) and the joint lens group (GB) has a first light path folding element (P1), the first light path folding element (P1) is in a way of rotating or a way of moving along the optical path to make the image capturing optical lens assembly switch between the first mode and the second mode.

**24.** The image capturing optical system of any one of claims 15-23, wherein the axial distance between the first lens element (E1) and the second lens element (E2) is T12, a focal length of the first lens element (E1) is f1, a focal length of the fourth lens element (E4) is f4, and the following conditions are satisfied:

$$0.08 < |10\times T12/f4| < 1.50;$$

and

$$-1.20 < f1/f4 < 0.00.$$

**25.** The image capturing optical system of any one of claims 15-24, wherein at least one of the first mode and the second mode has a plurality of capturing states, the plurality of capturing states respectively capture images at a distance longer than an object distance of 1000 mm and within an object distance of 250 mm.

**26.** The image capturing optical system of any one of claims 15-25, wherein the image-side surface of the third lens element (E3) is convex; the first mode object-side lens group (GA1) and the second mode object-side lens group (GA2) are both fixed related to the last lens group (Gn), the middle lens group (Gm) moves along the optical path related to the last lens group (Gn).

**27.** The image capturing optical system of any one of claims 15-26, wherein a difference between maximum field of views of the first mode and the second mode is at least 2.0 times or more than 2.0 times.

**28.** The image capturing optical system of any one of claims 15-27, wherein the central thickness of the first lens element (E1) is CT1, the central thickness of the fifth lens element (E5) is CT5, a central thickness of the sixth lens element (E6) is CT6, the axial distance between the first lens element (E1) and the second lens element (E2) is T12, when the image capturing optical lens assembly is in a single mode, an axial distance between a lens element surface of the object-side lens group (GA) closest to the image side and a lens element surface of the joint lens group (GB) closest to the object side is TGAB, in the joint lens group (GB), an axial distance between a lens element surface closest to the object side and a lens element surface closest to the image side is DGB, a focal length of the first lens element (E1) is f1, a focal length of the second lens element (E2) is f2, a focal length of the fourth lens element (E4) is f4, a refractive index of the first lens element (E1) at a d-line is N1, a refractive index of the fifth lens element (E5) at the d-line is N5, an Abbe number of the first lens element (E1) is V1, an Abbe number of the fifth lens element (E5) is V5, and the following conditions are satisfied:

$$2.63 \leq (CT1+T12)/CT5 \leq 4.24;$$

$$0.96 \leq TGAB/DGB \leq 3.04;$$

$$0.90 < (|f1|+|f2|)/|f4| <1.80;$$

$$0.86 \leq CT1/CT6 \leq 1.46;$$

$$0.15 \leq |10\times T12/f4| \leq 0.30;$$

$$-0.85 \leq f1/f4 \leq -0.67;$$

and

$$0.50 < 10\times(N1/V1+N5/V5) < 1.20.$$

**29.** The image capturing optical system of any one of claims 15-28, wherein a refractive index of the first lens element (E1) at a d-line is N1, a refractive index of the fifth lens element (E5) at the d-line is N5, an Abbe number of the first lens element (E1) is V1, an Abbe number of the fifth lens element (E5) is V5, a focal length of the first lens element (E1) is f1, a focal length of the third lens element (E3) is f3, a focal length of the fourth lens element (E4) is f4, and the following conditions are satisfied:

$$0.50 < 10\times(N1/V1+N5/V5) < 1.40;$$

and

$$0.60 < |f1/f3|+|f1/f4| < 3.00.$$

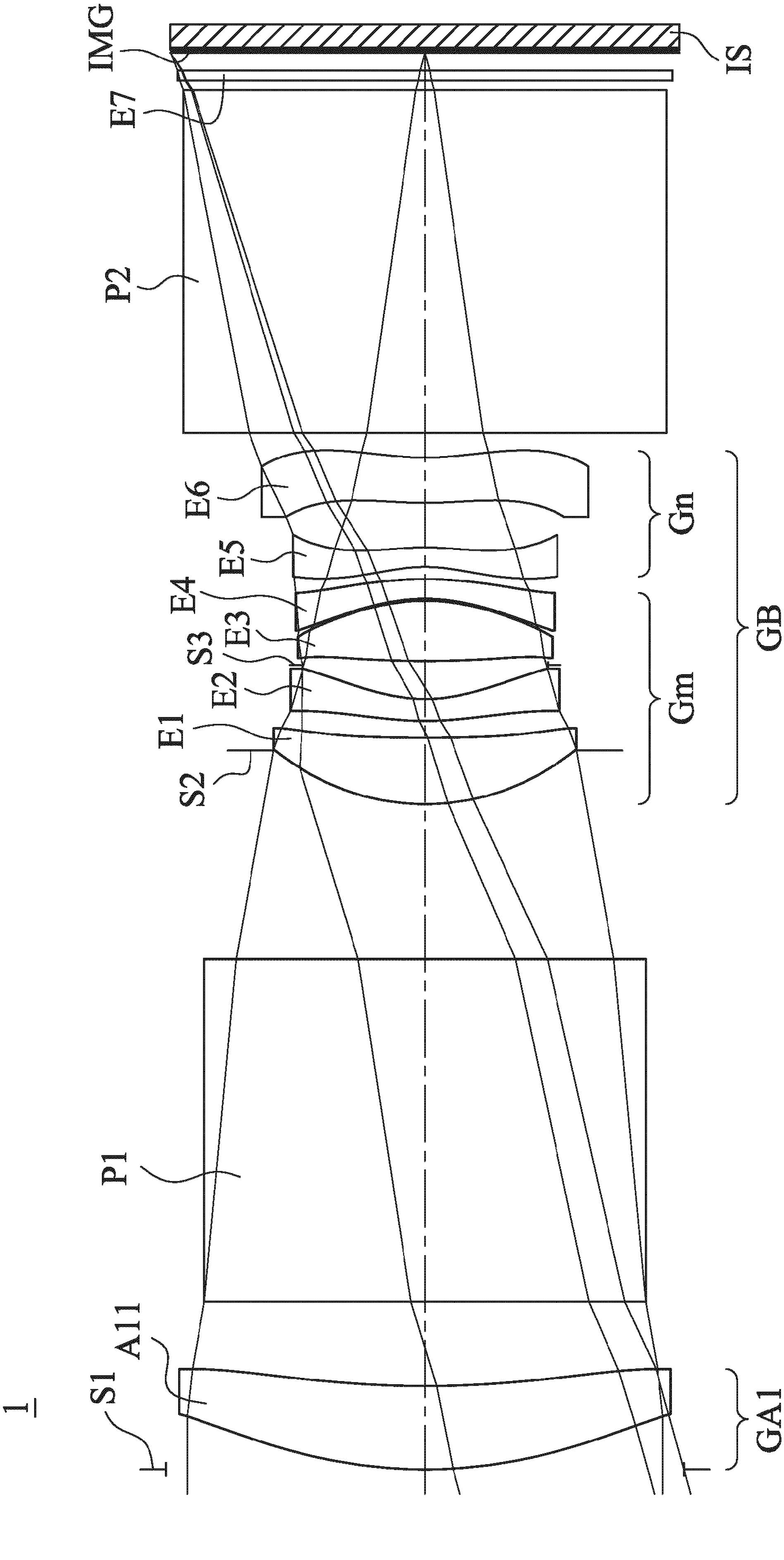


Fig. 1A

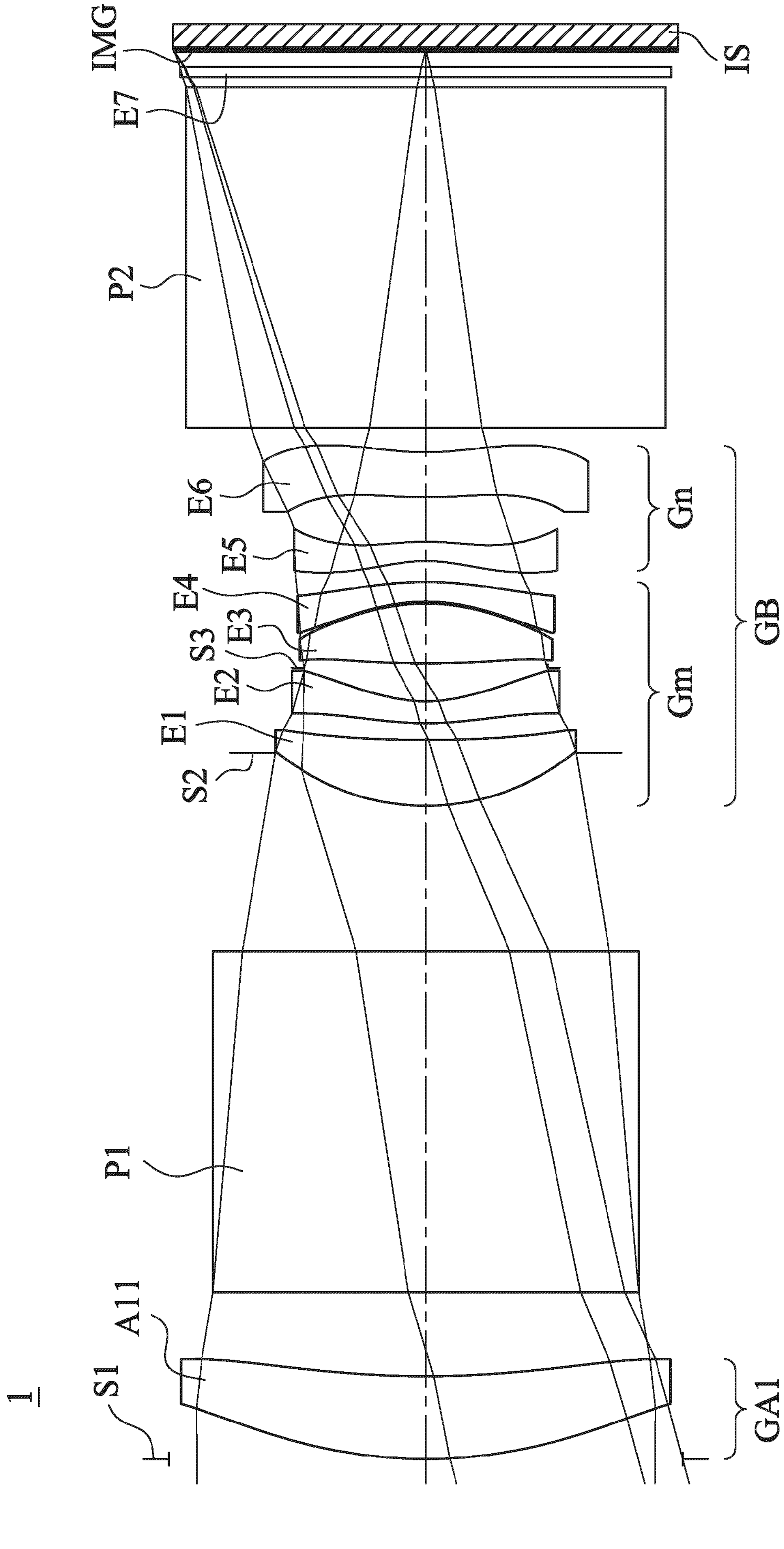


Fig. 1B

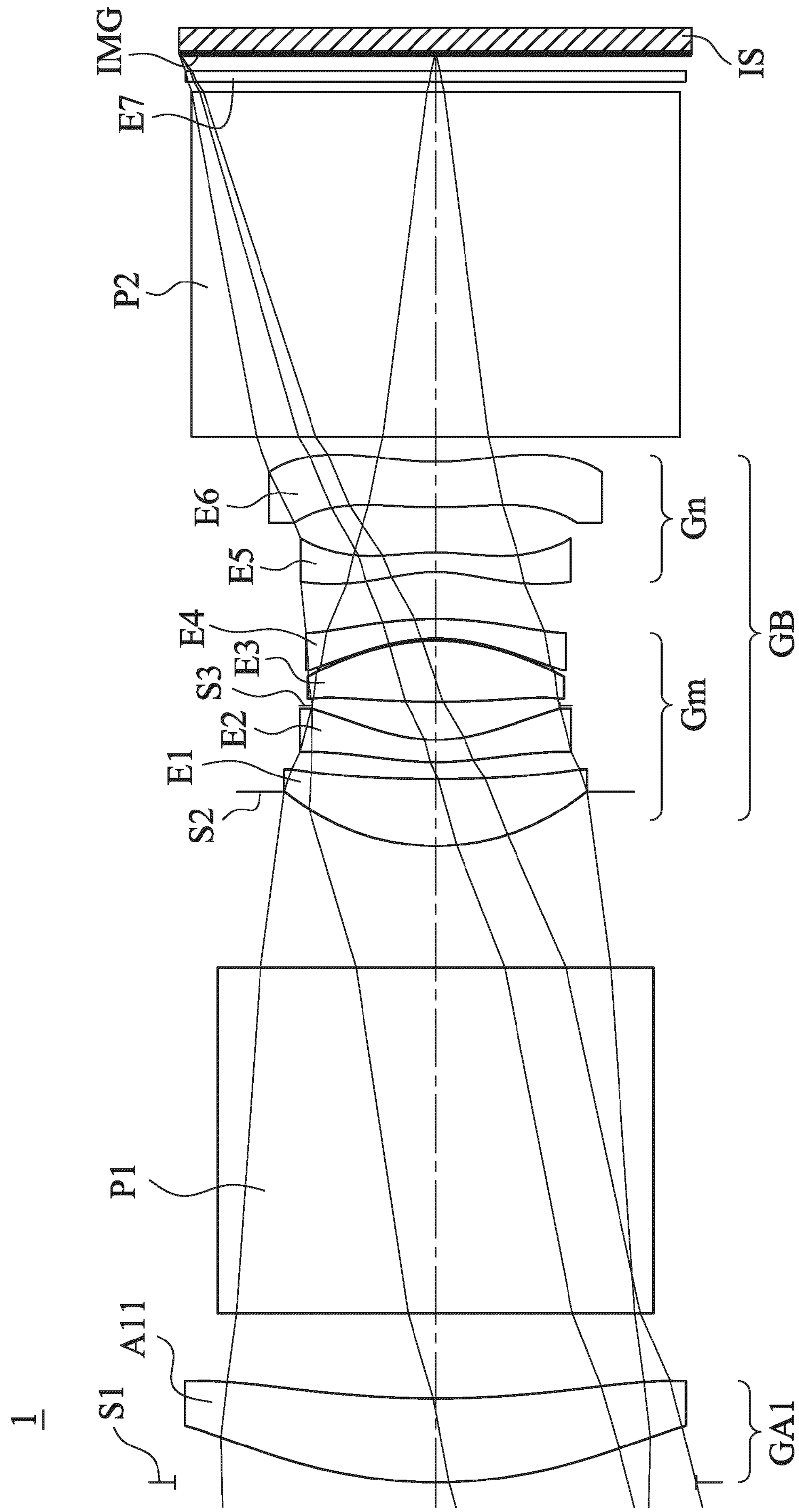


Fig. 1C

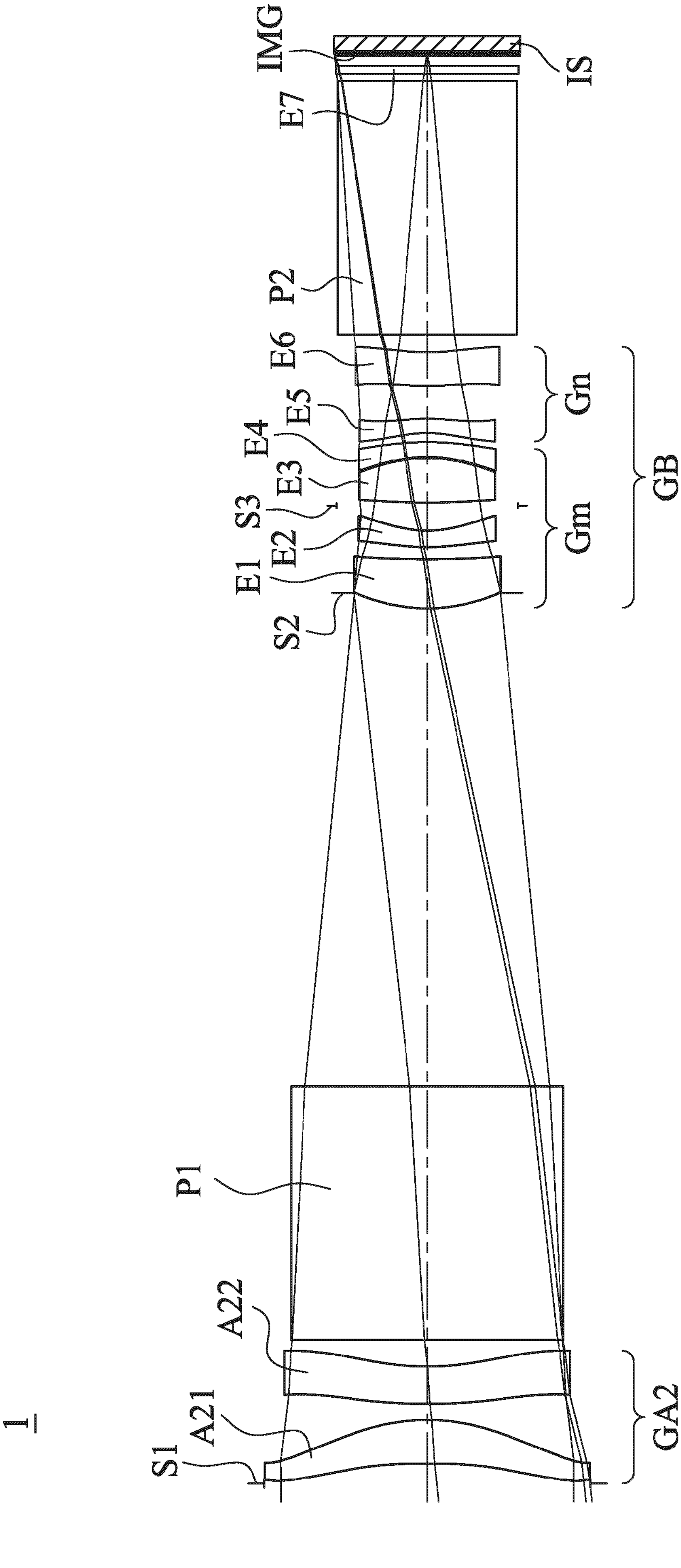


Fig. 1D

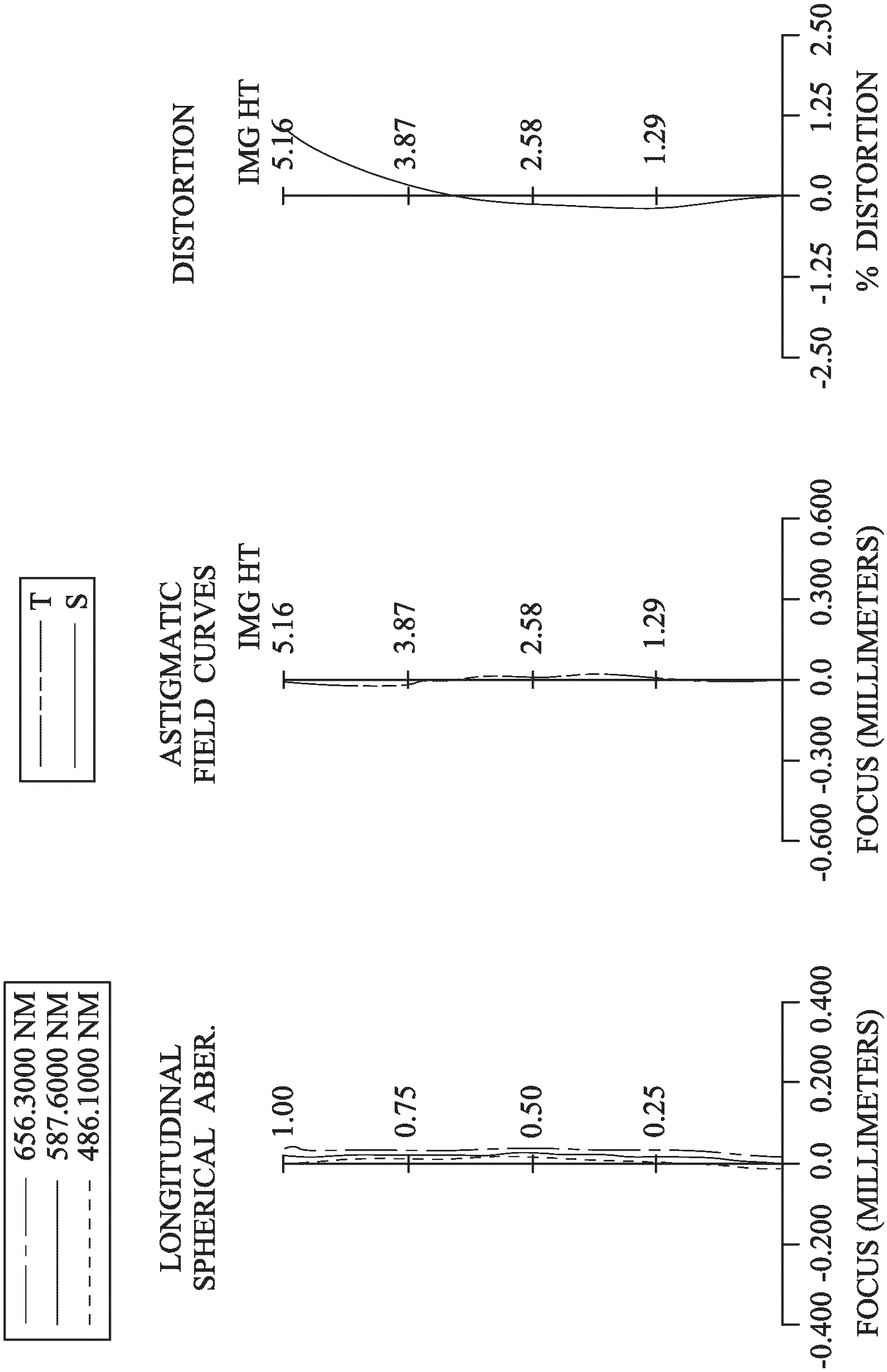
LONGITUDINAL SPHERICAL ABER.
656.3000 NM
587.6000 NM
486.1000 NM
1.00
0.75
0.50
0.25
-0.400 -0.200 0.0 0.200 0.400
FOCUS (MILLIMETERS)
ASTIGMATIC FIELD CURVES
T
S
IMG HT
5.16
3.87
2.58
1.29
-0.600 -0.300 0.0 0.300 0.600
FOCUS (MILLIMETERS)
DISTORTION
IMG HT
5.16
3.87
2.58
1.29
-2.50 -1.25 0.0 1.25 2.50
% DISTORTION

Fig. 2A

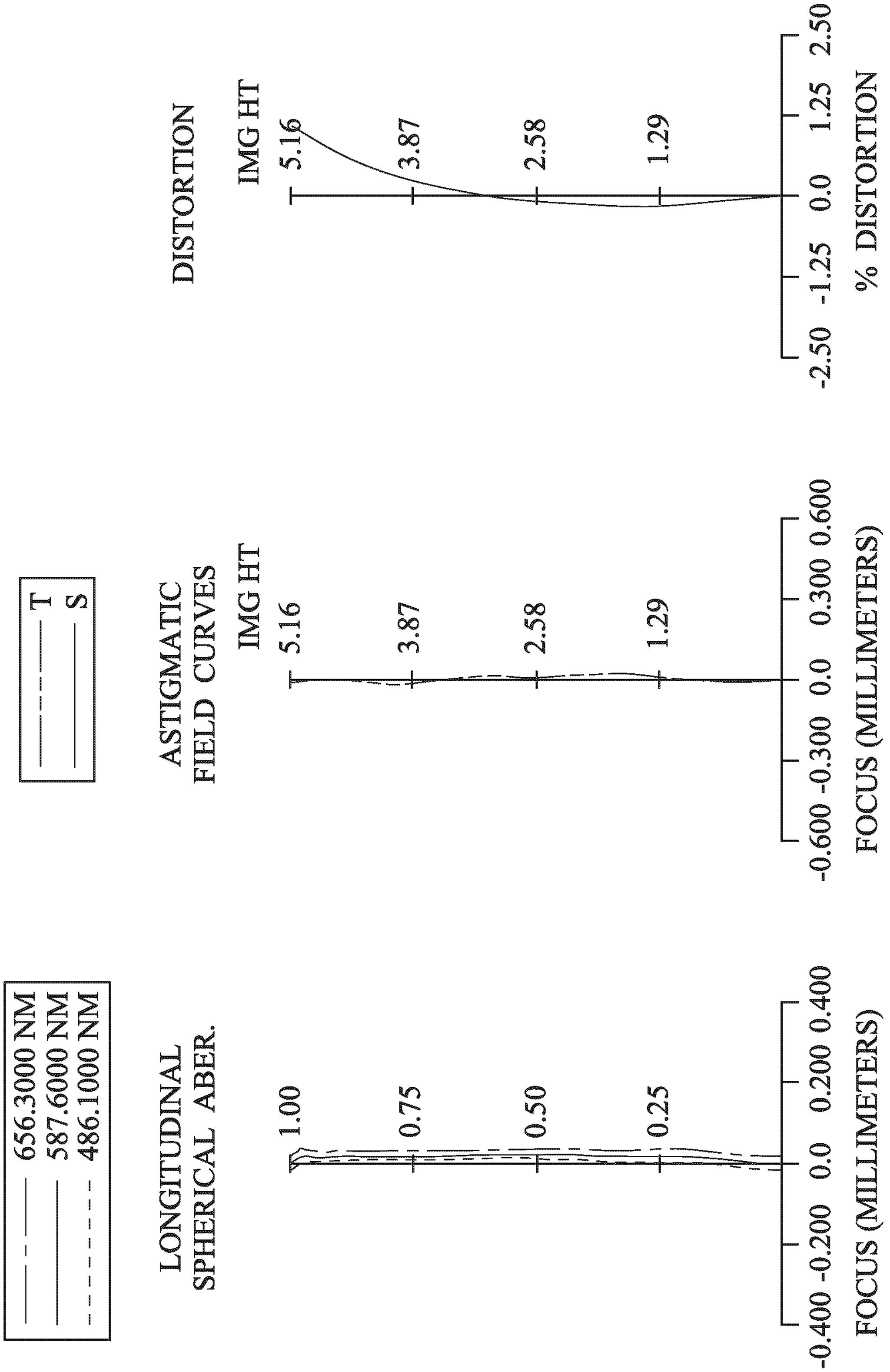
LONGITUDINAL SPHERICAL ABER.
656.3000 NM
587.6000 NM
486.1000 NM
1.00
0.75
0.50
0.25
-0.400 -0.200 0.0 0.200 0.400
FOCUS (MILLIMETERS)
ASTIGMATIC FIELD CURVES
T
S
IMG HT
5.16
3.87
2.58
1.29
-0.600 -0.300 0.0 0.300 0.600
FOCUS (MILLIMETERS)
DISTORTION
IMG HT
5.16
3.87
2.58
1.29
-2.50 -1.25 0.0 1.25 2.50
% DISTORTION

Fig. 2B

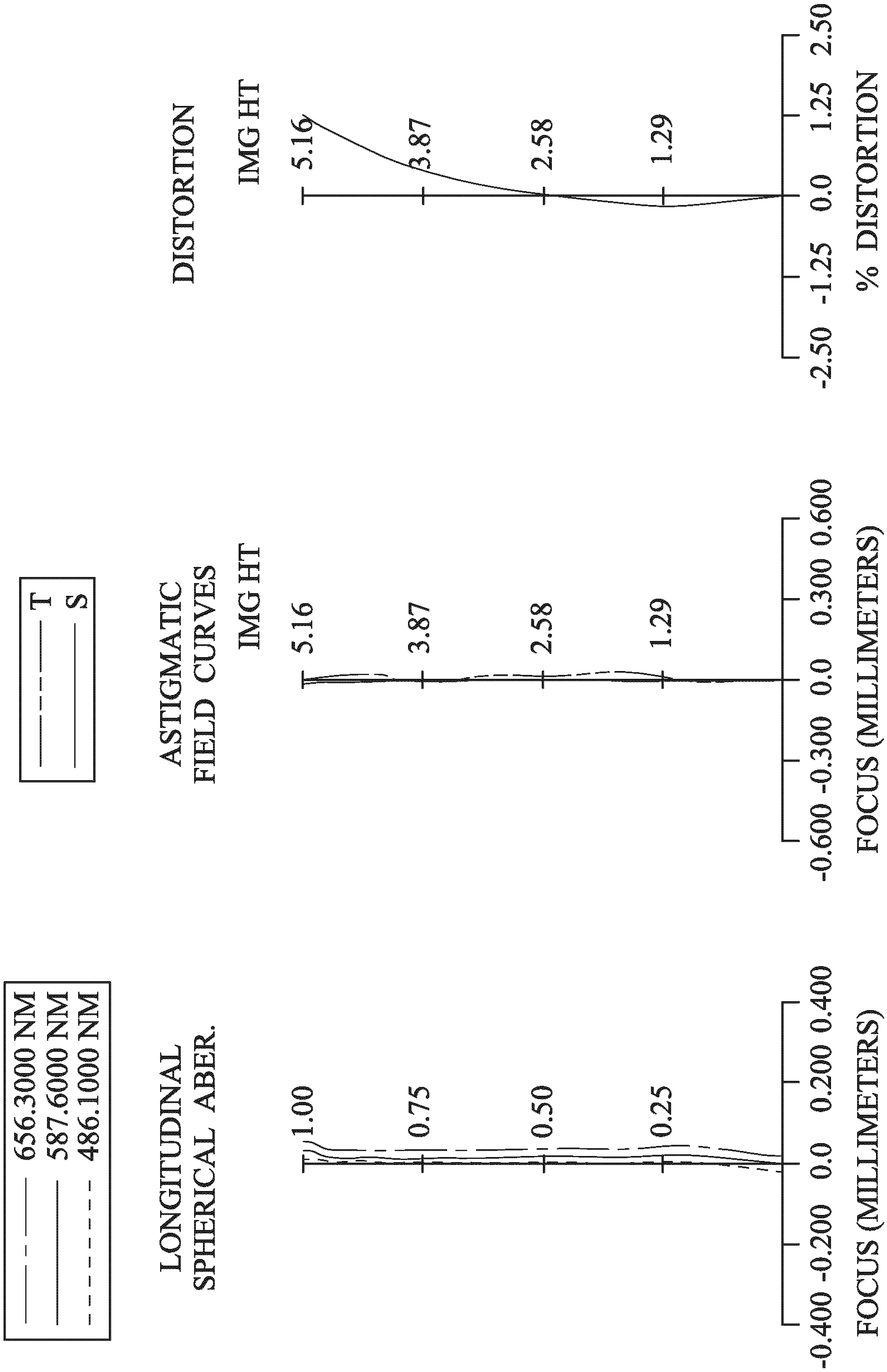
656.3000 NM
587.6000 NM
486.1000 NM
LONGITUDINAL SPHERICAL ABER.
1.00
0.75
0.50
0.25
-0.400 -0.200 0.0 0.200 0.400
FOCUS (MILLIMETERS)
T
S
ASTIGMATIC FIELD CURVES
IMG HT
5.16
3.87
2.58
1.29
-0.600 -0.300 0.0 0.300 0.600
FOCUS (MILLIMETERS)
DISTORTION
IMG HT
5.16
3.87
2.58
1.29
-2.50 -1.25 0.0 1.25 2.50
% DISTORTION

Fig. 2C

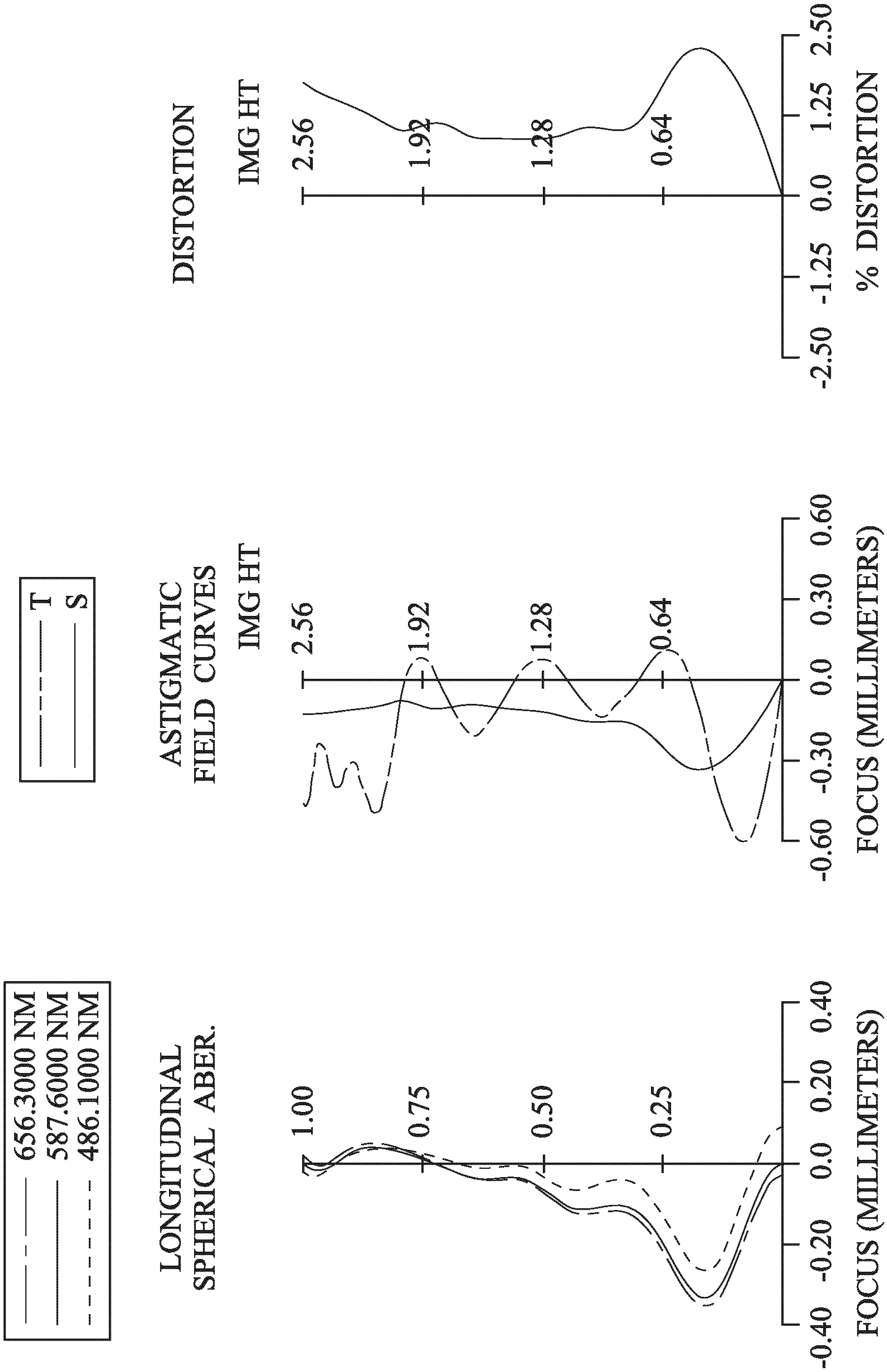
LONGITUDINAL SPHERICAL ABER.
656.3000 NM
587.6000 NM
486.1000 NM
1.00
0.75
0.50
0.25
-0.40 -0.20 0.0 0.20 0.40
FOCUS (MILLIMETERS)
ASTIGMATIC FIELD CURVES
IMG HT
T
S
2.56
1.92
1.28
0.64
-0.60 -0.30 0.0 0.30 0.60
FOCUS (MILLIMETERS)
DISTORTION
IMG HT
2.56
1.92
1.28
0.64
-2.50 -1.25 0.0 1.25 2.50
% DISTORTION

Fig. 2D

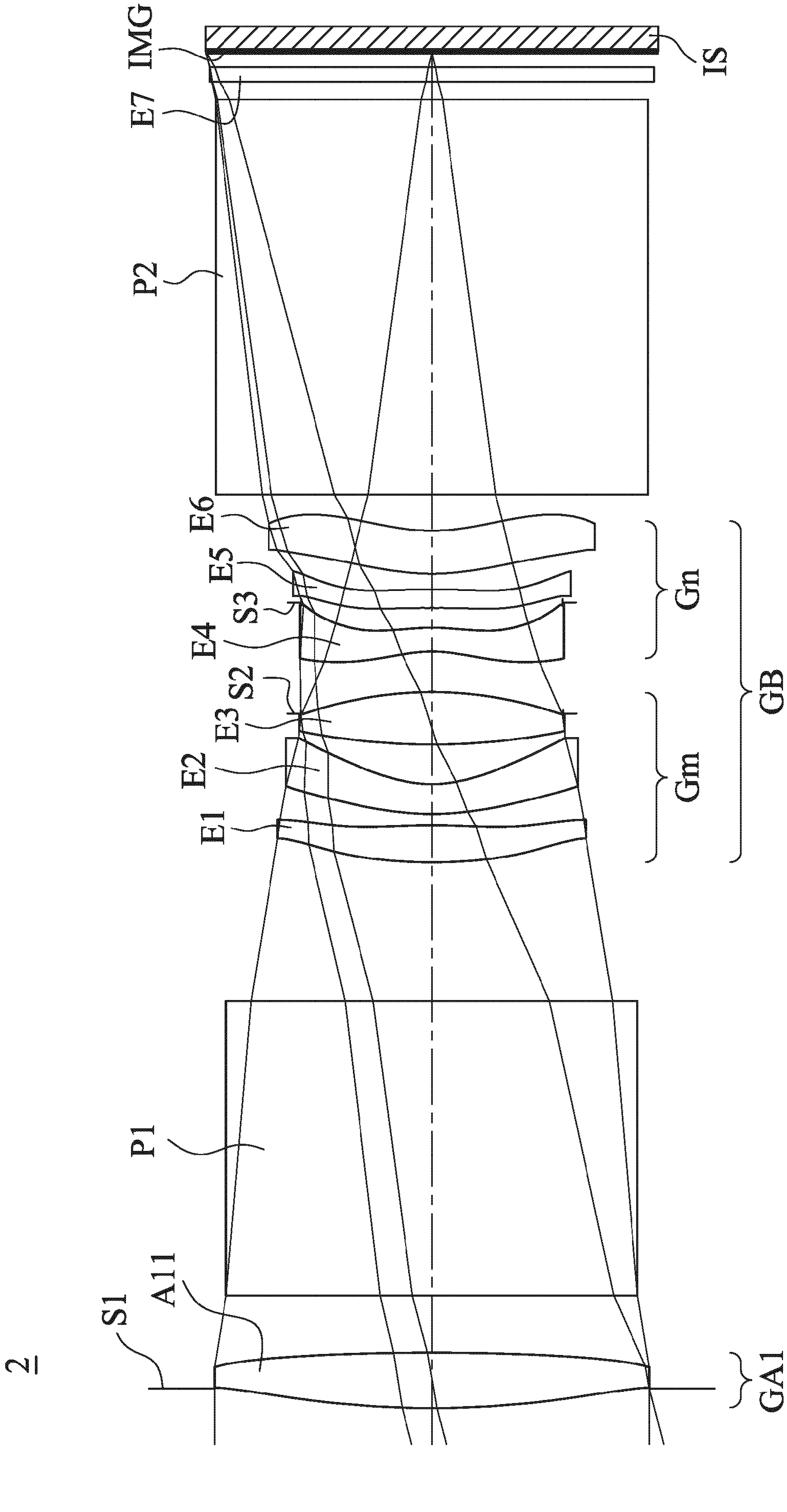


Fig. 3A

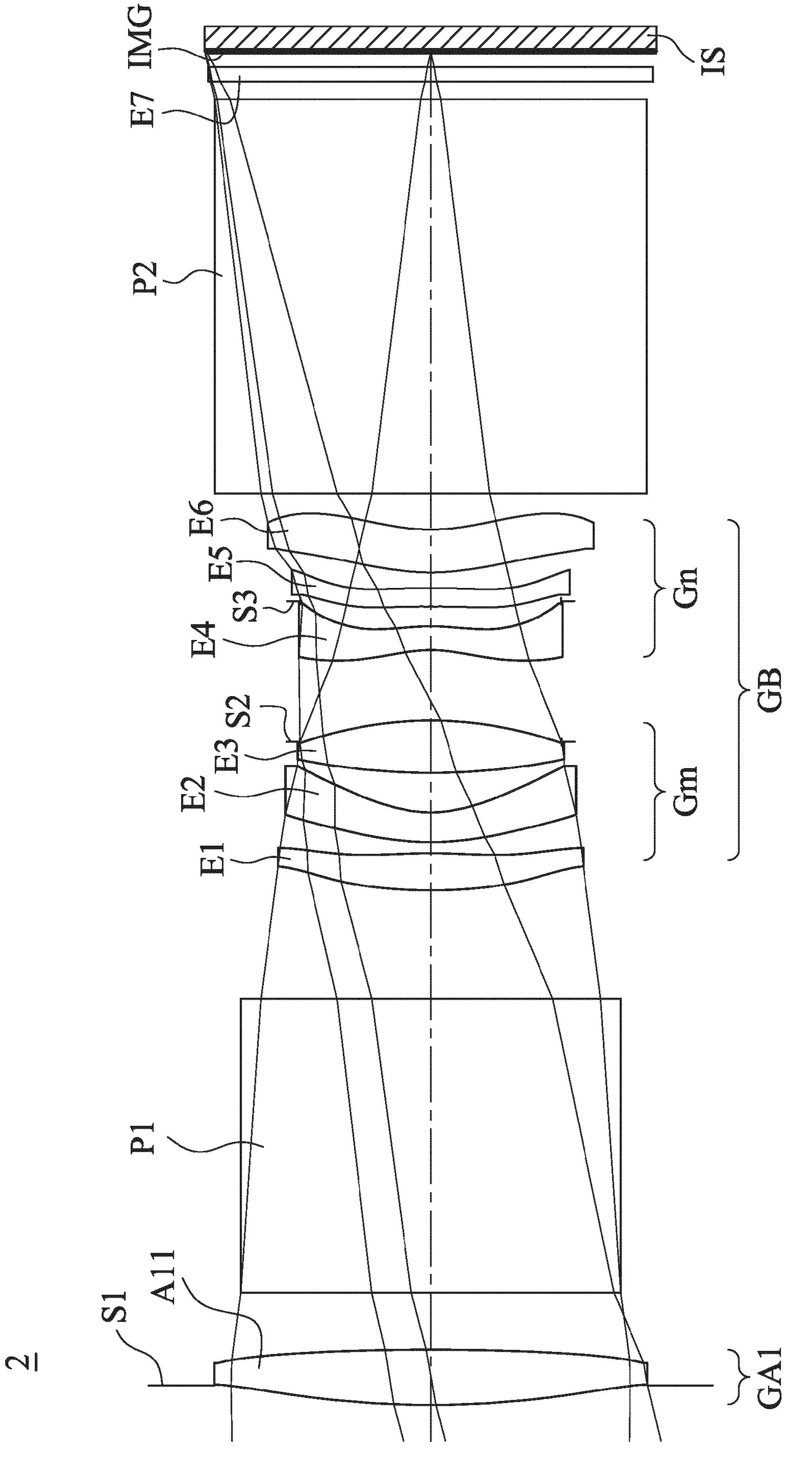


Fig. 3B

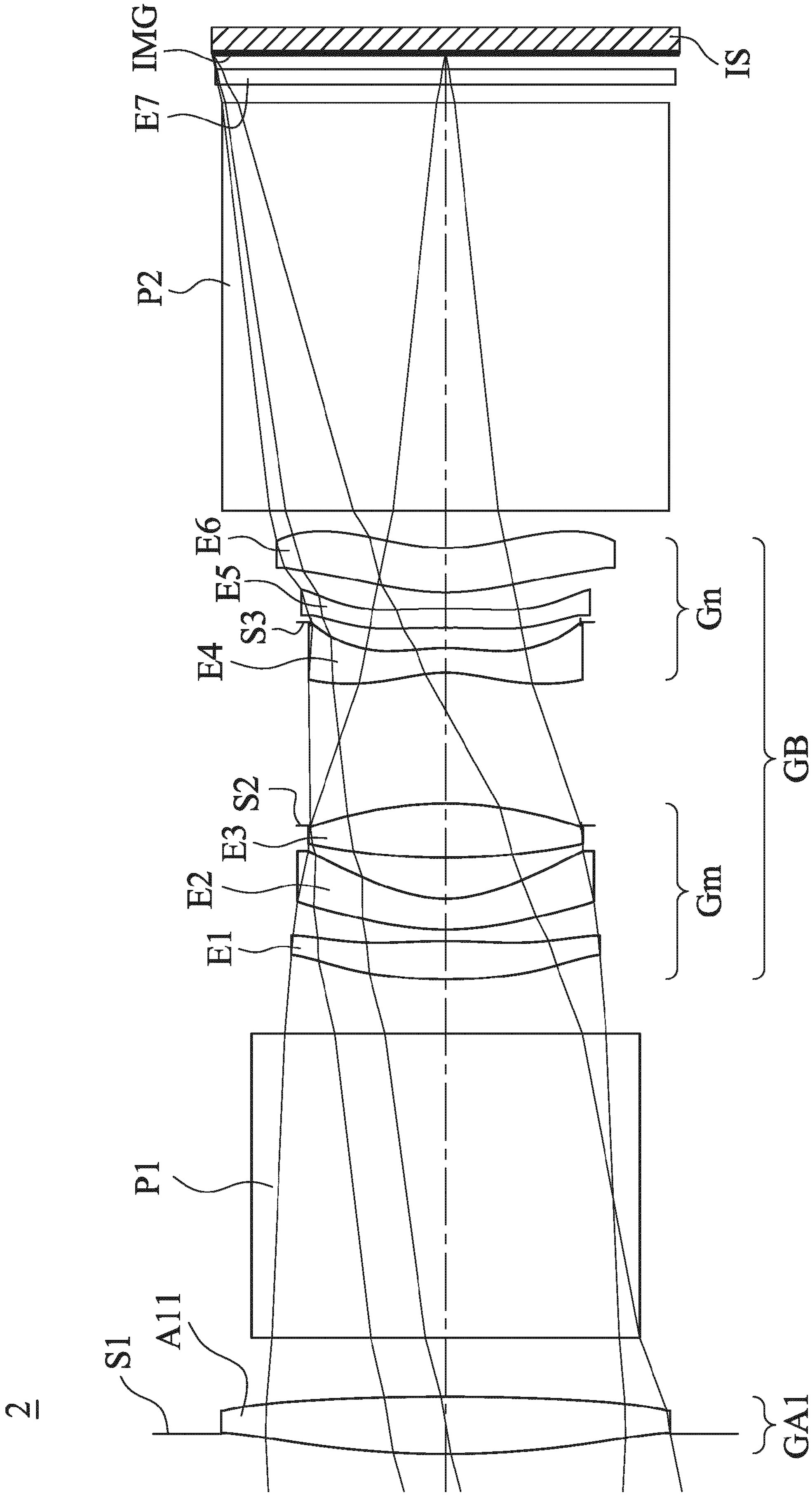


Fig. 3C

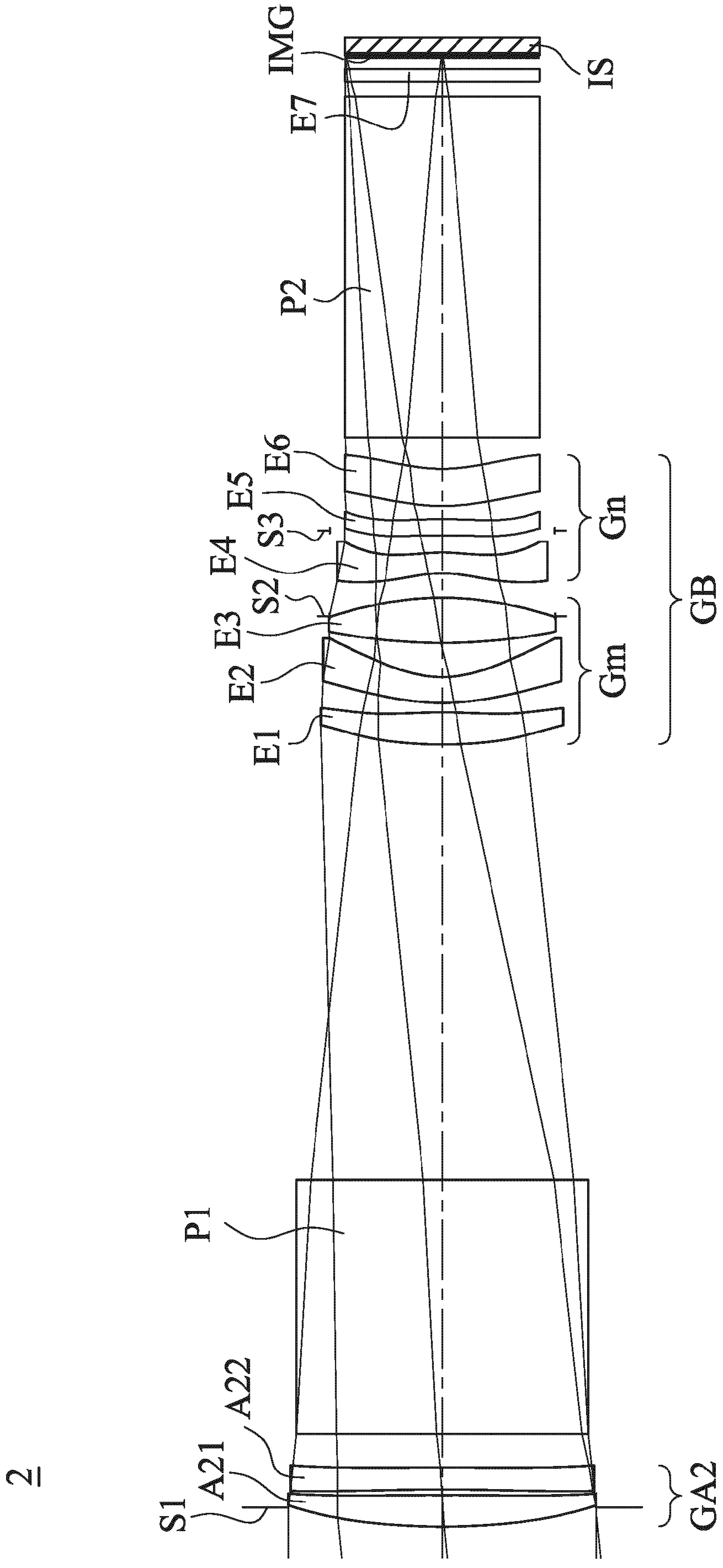


Fig. 3D

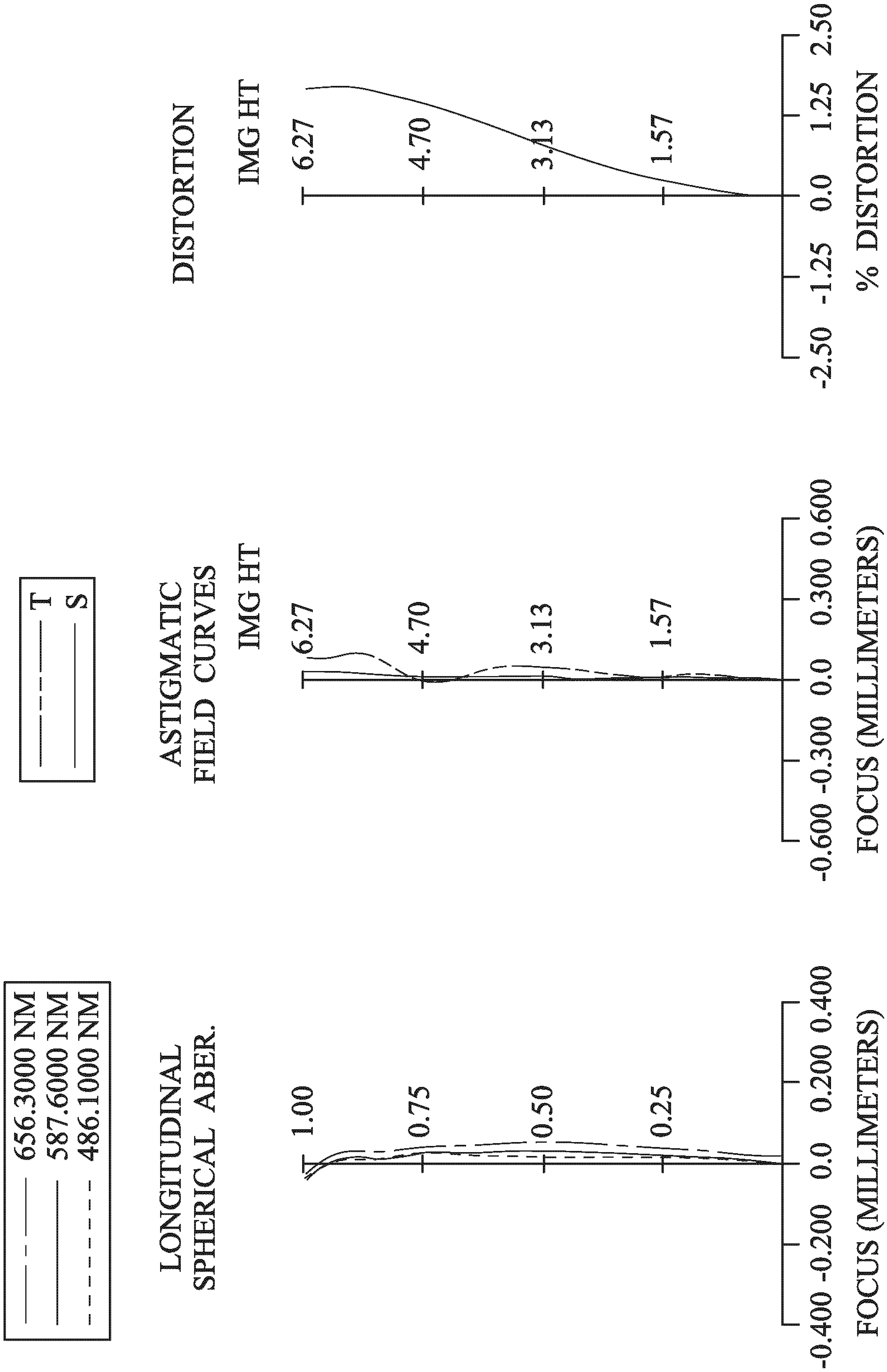
656.3000 NM
587.6000 NM
486.1000 NM
LONGITUDINAL SPHERICAL ABER.
1.00
0.75
0.50
0.25
-0.400 -0.200 0.0 0.200 0.400
FOCUS (MILLIMETERS)
T
S
ASTIGMATIC FIELD CURVES
IMG HT
6.27
4.70
3.13
1.57
-0.600 -0.300 0.0 0.300 0.600
FOCUS (MILLIMETERS)
DISTORTION
IMG HT
6.27
4.70
3.13
1.57
-2.50 -1.25 0.0 1.25 2.50
% DISTORTION

Fig. 4A

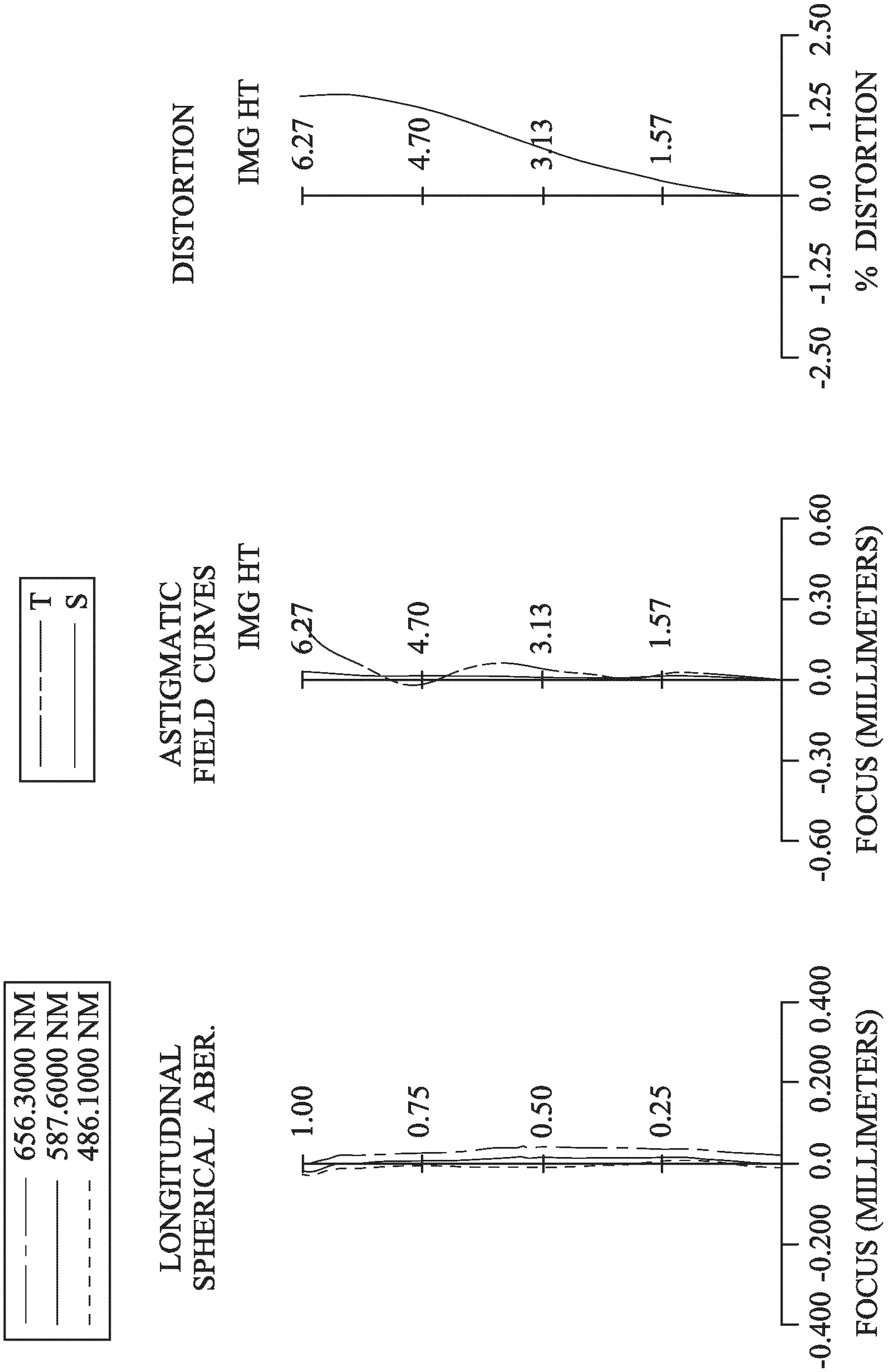
656.3000 NM
587.6000 NM
486.1000 NM
LONGITUDINAL SPHERICAL ABER.
1.00
0.75
0.50
0.25
-0.400 -0.200 0.0 0.200 0.400
FOCUS (MILLIMETERS)
T
S
ASTIGMATIC FIELD CURVES
IMG HT
6.27
4.70
3.13
1.57
-0.60 -0.30 0.0 0.30 0.60
FOCUS (MILLIMETERS)
DISTORTION
IMG HT
6.27
4.70
3.13
1.57
-2.50 -1.25 0.0 1.25 2.50
% DISTORTION

Fig. 4B

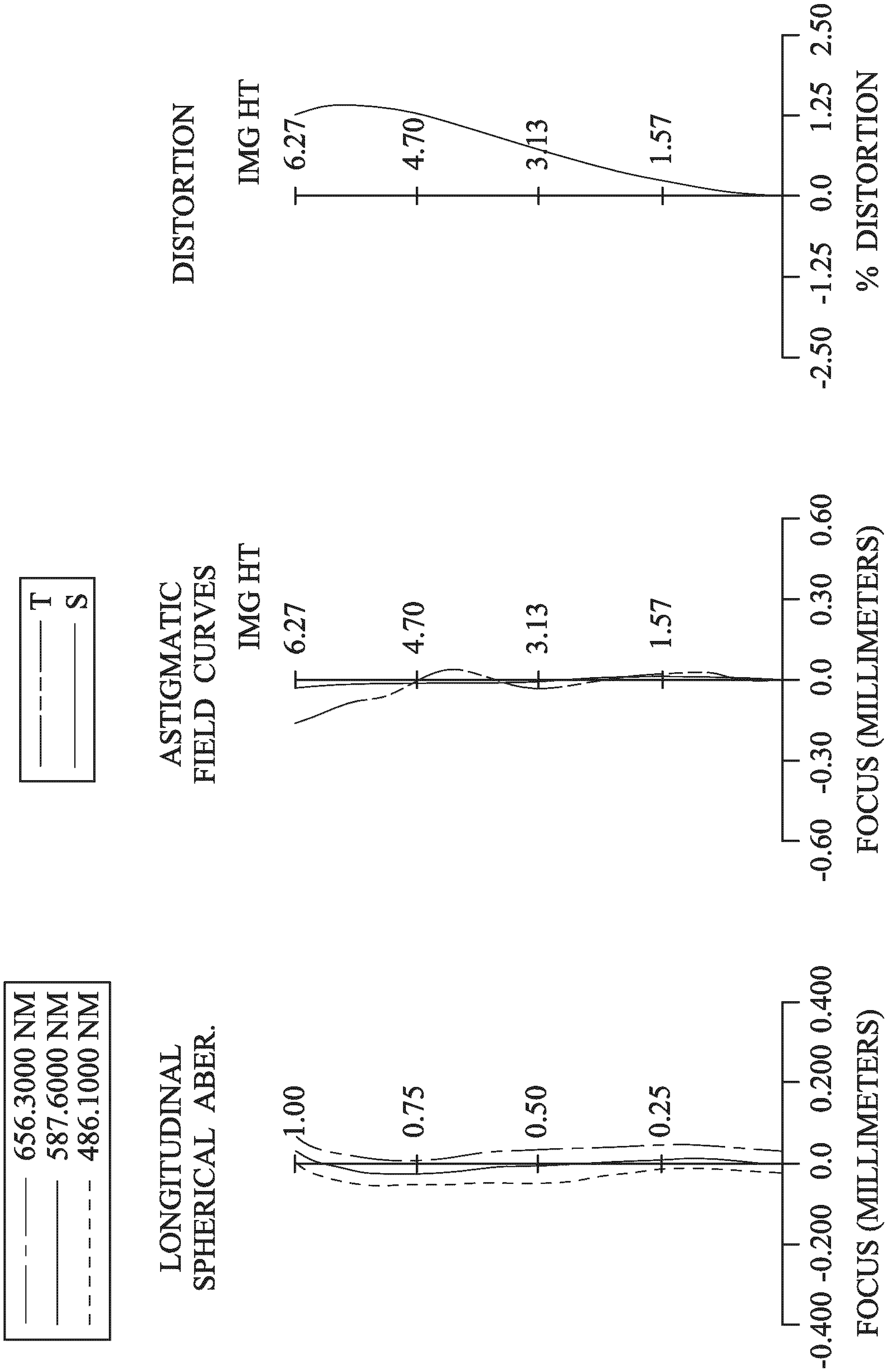
LONGITUDINAL SPHERICAL ABER.
656.3000 NM
587.6000 NM
486.1000 NM
1.00
0.75
0.50
0.25
-0.400 -0.200 0.0 0.200 0.400
FOCUS (MILLIMETERS)
ASTIGMATIC FIELD CURVES
IMG HT
T
S
6.27
4.70
3.13
1.57
-0.60 -0.30 0.0 0.30 0.60
FOCUS (MILLIMETERS)
DISTORTION
IMG HT
6.27
4.70
3.13
1.57
-2.50 -1.25 0.0 1.25 2.50
% DISTORTION

Fig. 4C

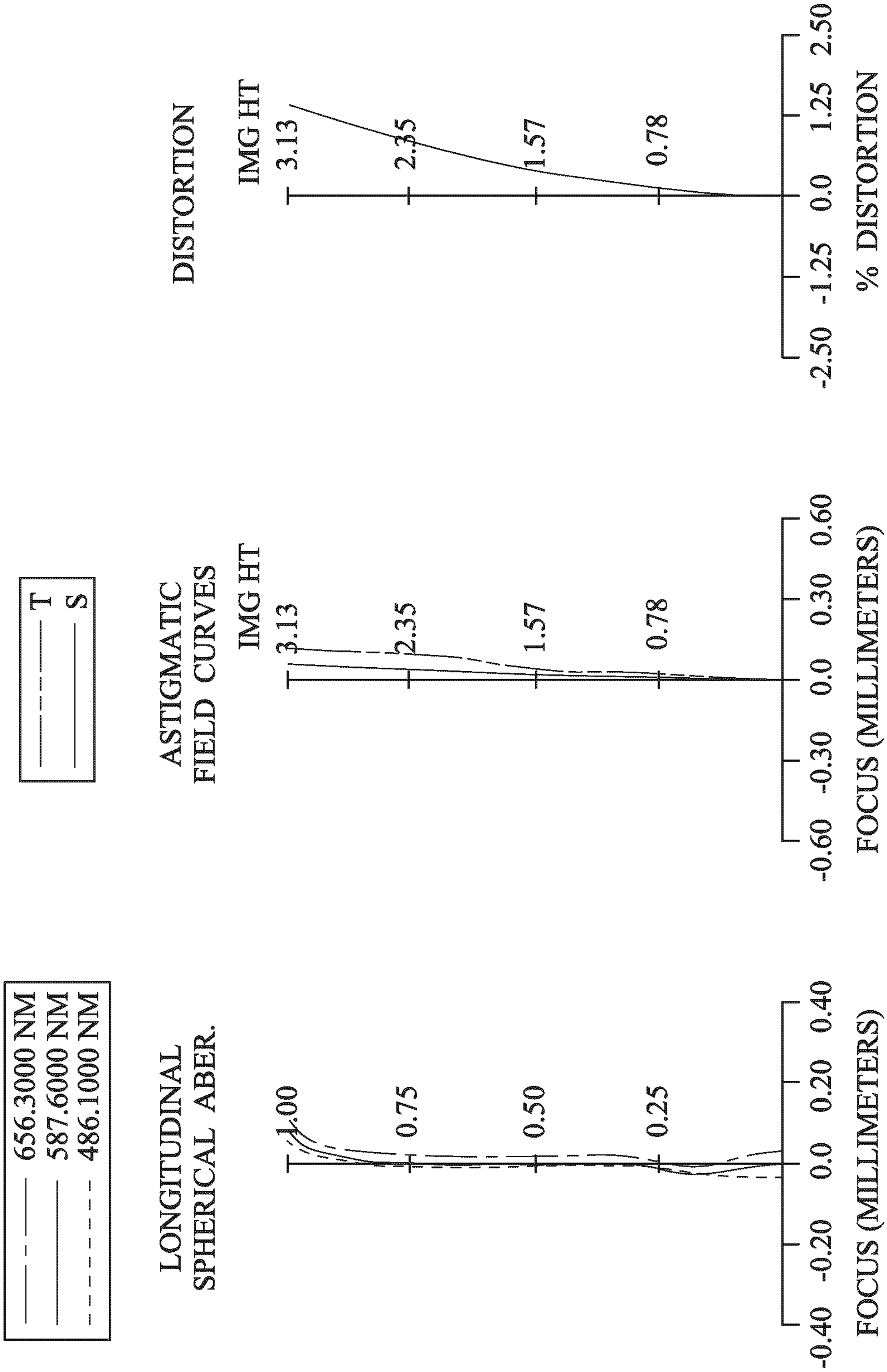
LONGITUDINAL SPHERICAL ABER.
656.3000 NM
587.6000 NM
486.1000 NM
1.00
0.75
0.50
0.25
-0.40 -0.20 0.0 0.20 0.40
FOCUS (MILLIMETERS)
ASTIGMATIC FIELD CURVES
T
S
IMG HT
3.13
2.35
1.57
0.78
-0.60 -0.30 0.0 0.30 0.60
FOCUS (MILLIMETERS)
DISTORTION
IMG HT
3.13
2.35
1.57
0.78
-2.50 -1.25 0.0 1.25 2.50
% DISTORTION

Fig. 4D

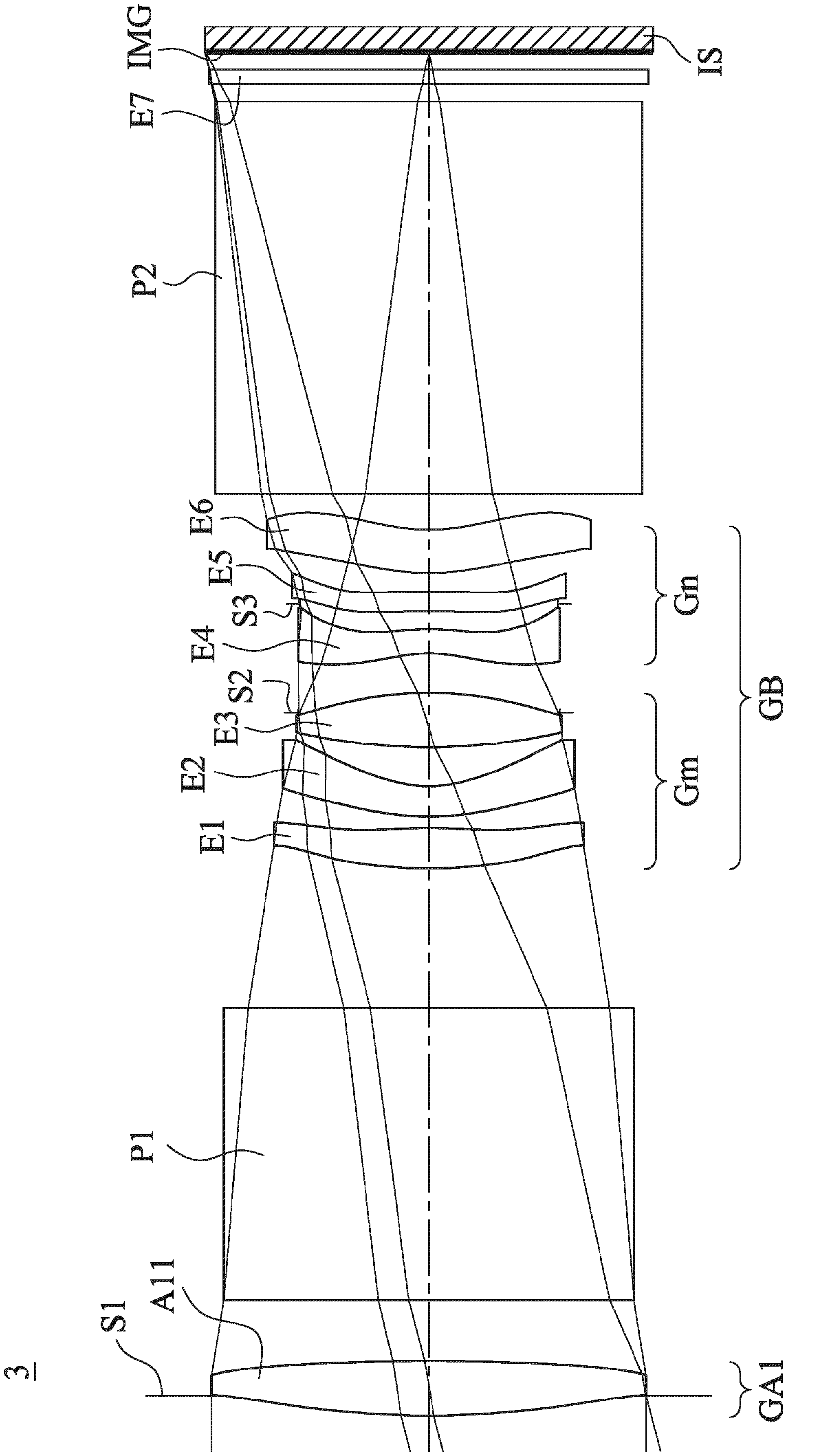


Fig. 5A

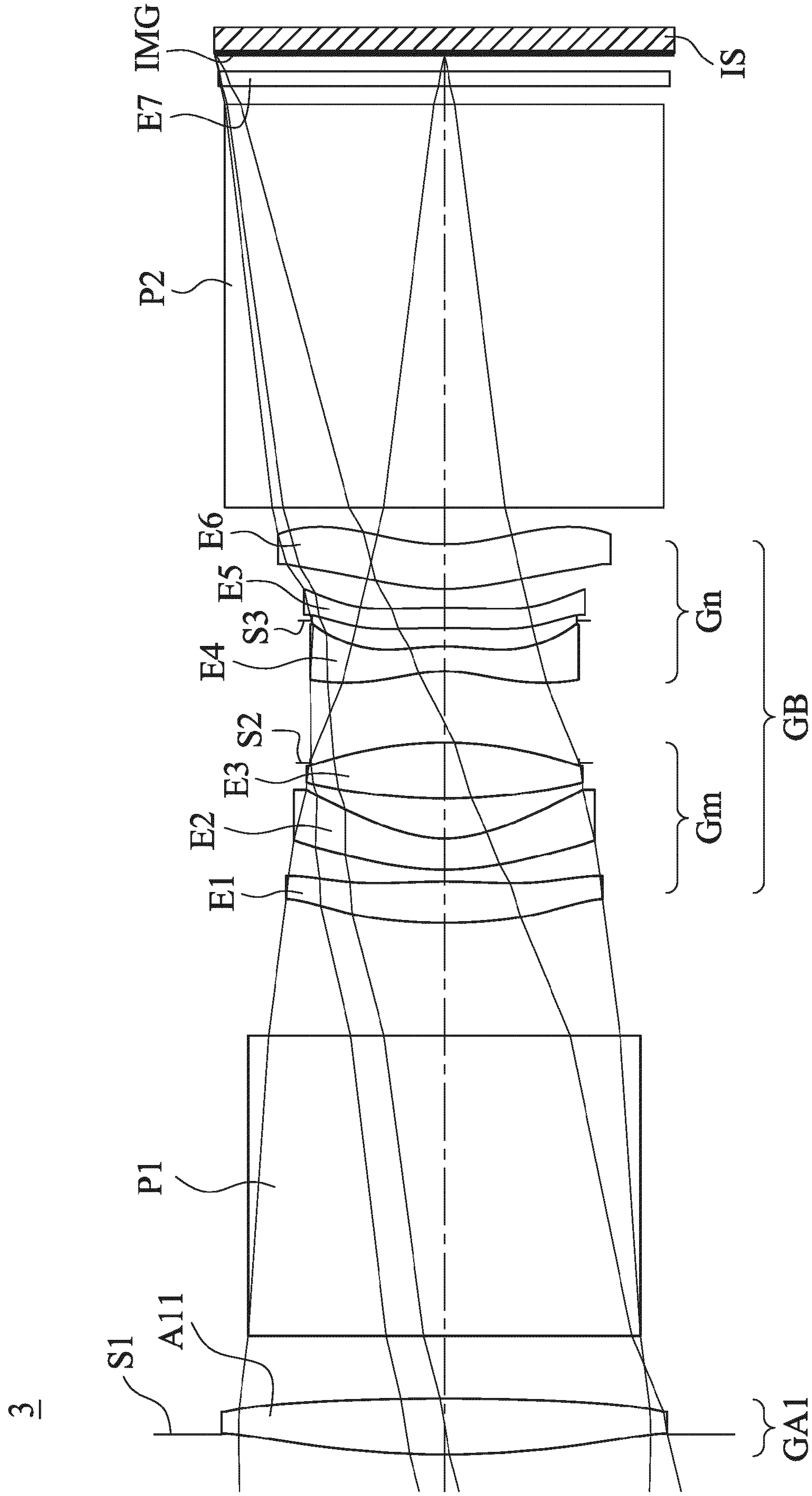


Fig. 5B

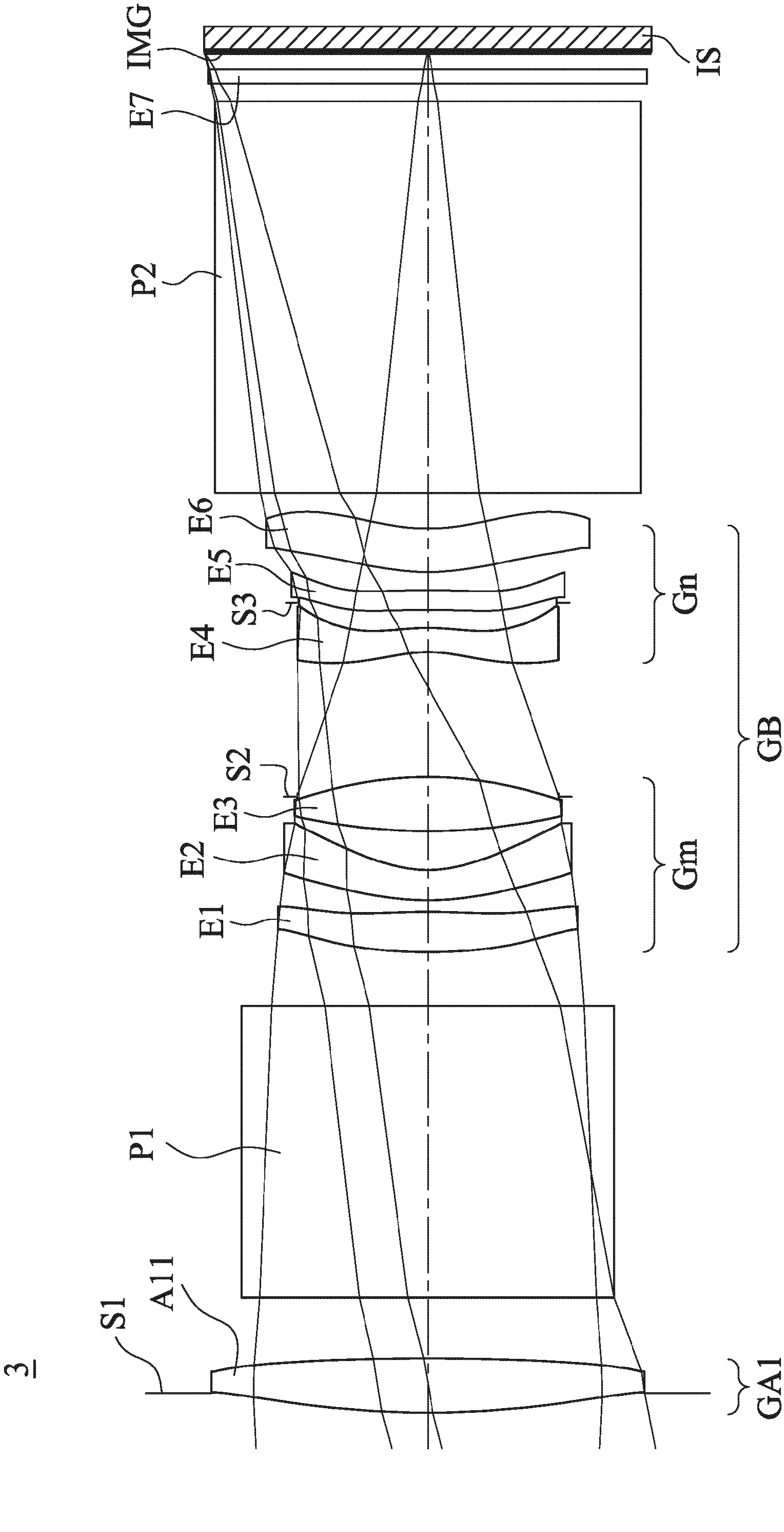


Fig. 5C

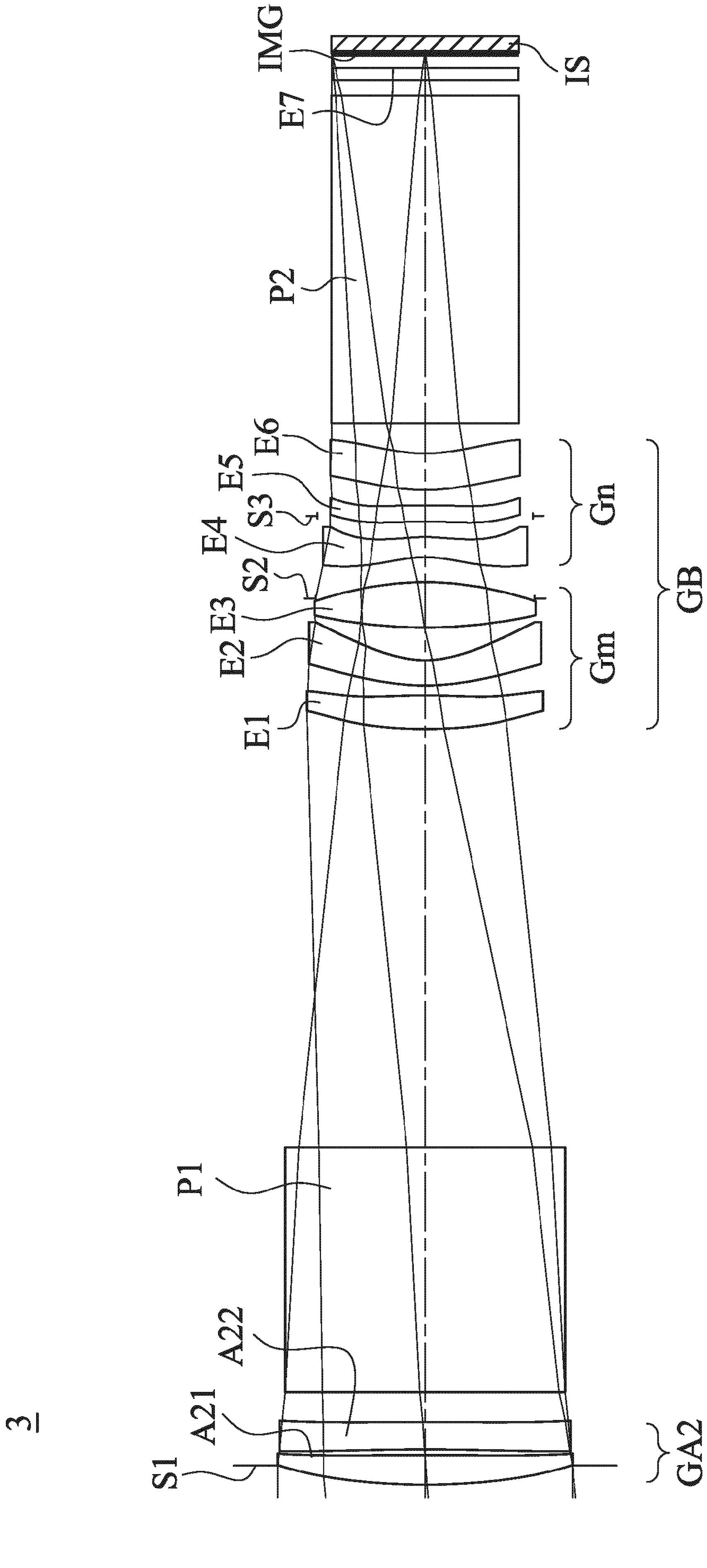


Fig. 5D

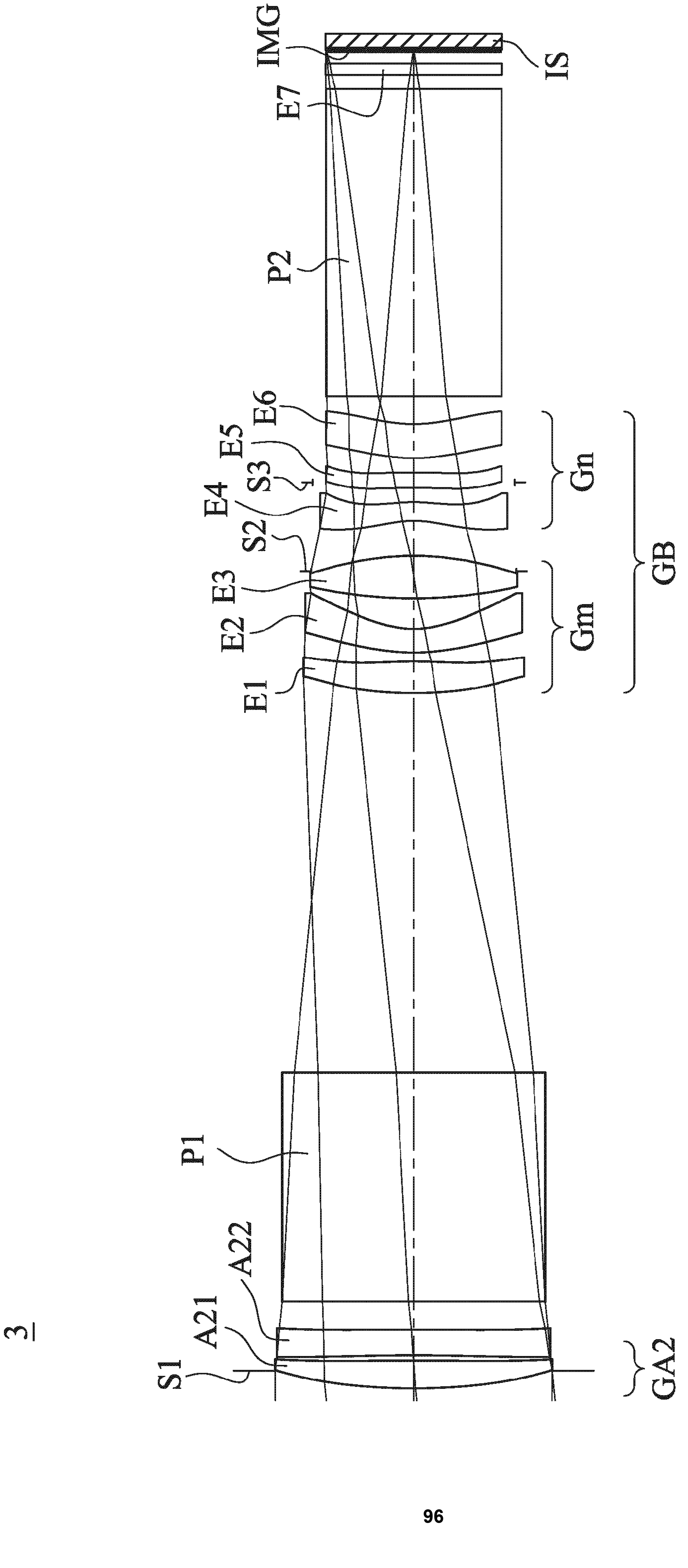


Fig. 5E

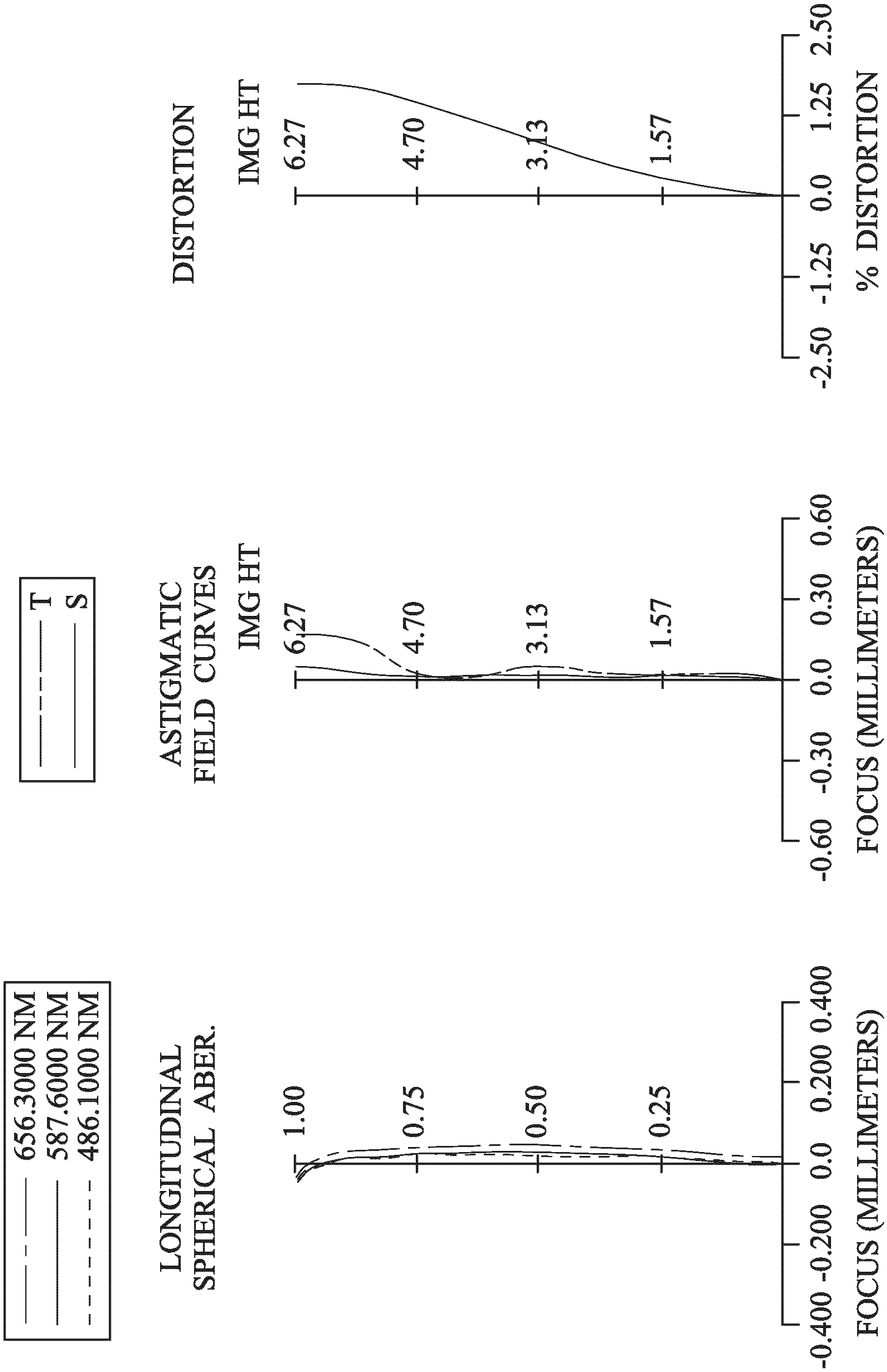
656.3000 NM
587.6000 NM
486.1000 NM
LONGITUDINAL SPHERICAL ABER.
1.00
0.75
0.50
0.25
-0.400 -0.200 0.0 0.200 0.400
FOCUS (MILLIMETERS)
T
S
ASTIGMATIC FIELD CURVES
IMG HT
6.27
4.70
3.13
1.57
-0.60 -0.30 0.0 0.30 0.60
FOCUS (MILLIMETERS)
DISTORTION
IMG HT
6.27
4.70
3.13
1.57
-2.50 -1.25 0.0 1.25 2.50
% DISTORTION

Fig. 6A

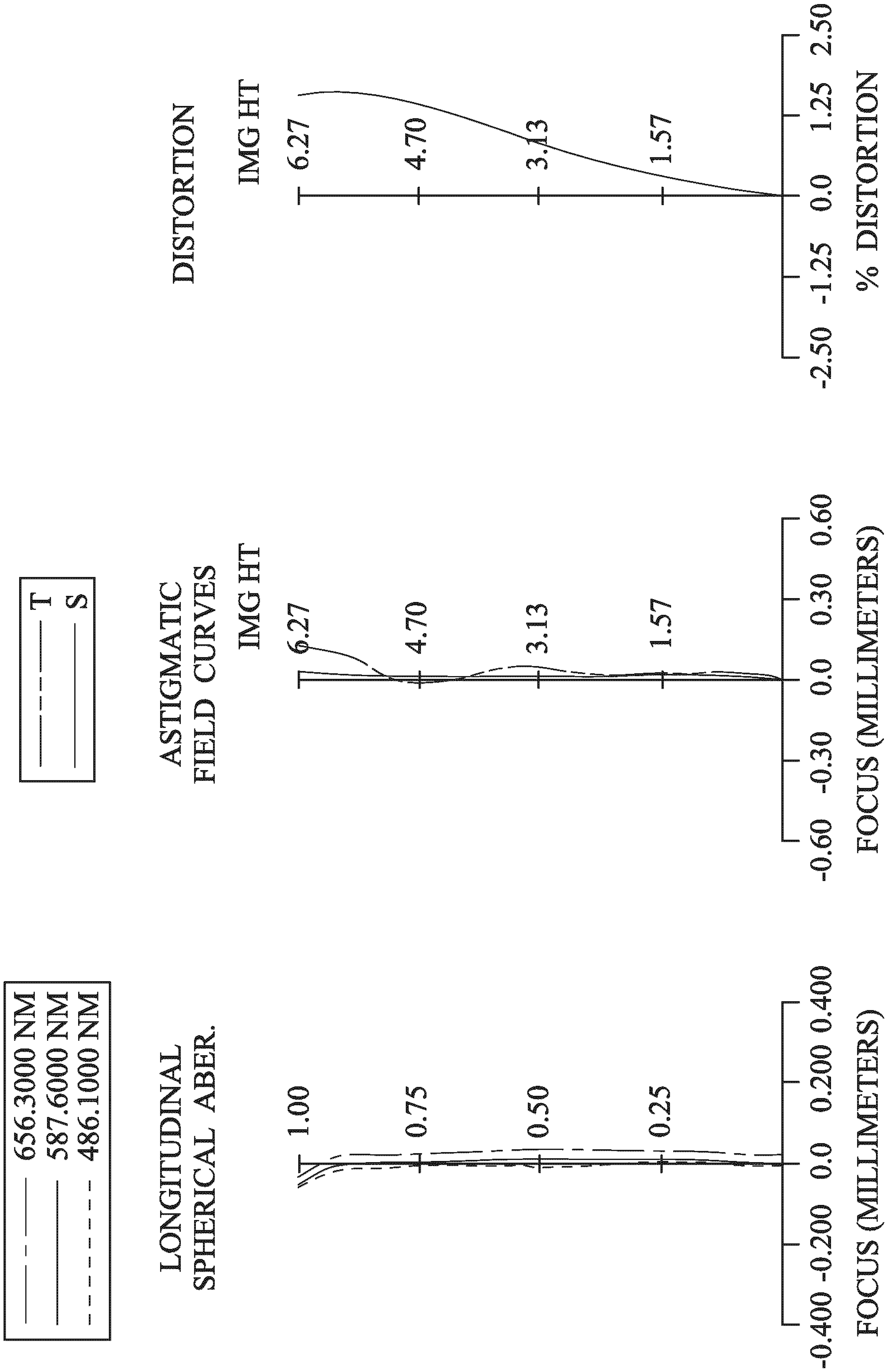
LONGITUDINAL SPHERICAL ABER.
656.3000 NM
587.6000 NM
486.1000 NM
1.00
0.75
0.50
0.25
-0.400 -0.200 0.0 0.200 0.400
FOCUS (MILLIMETERS)
ASTIGMATIC FIELD CURVES
T
S
IMG HT
6.27
4.70
3.13
1.57
-0.60 -0.30 0.0 0.30 0.60
FOCUS (MILLIMETERS)
DISTORTION
IMG HT
6.27
4.70
3.13
1.57
-2.50 -1.25 0.0 1.25 2.50
% DISTORTION

Fig. 6B

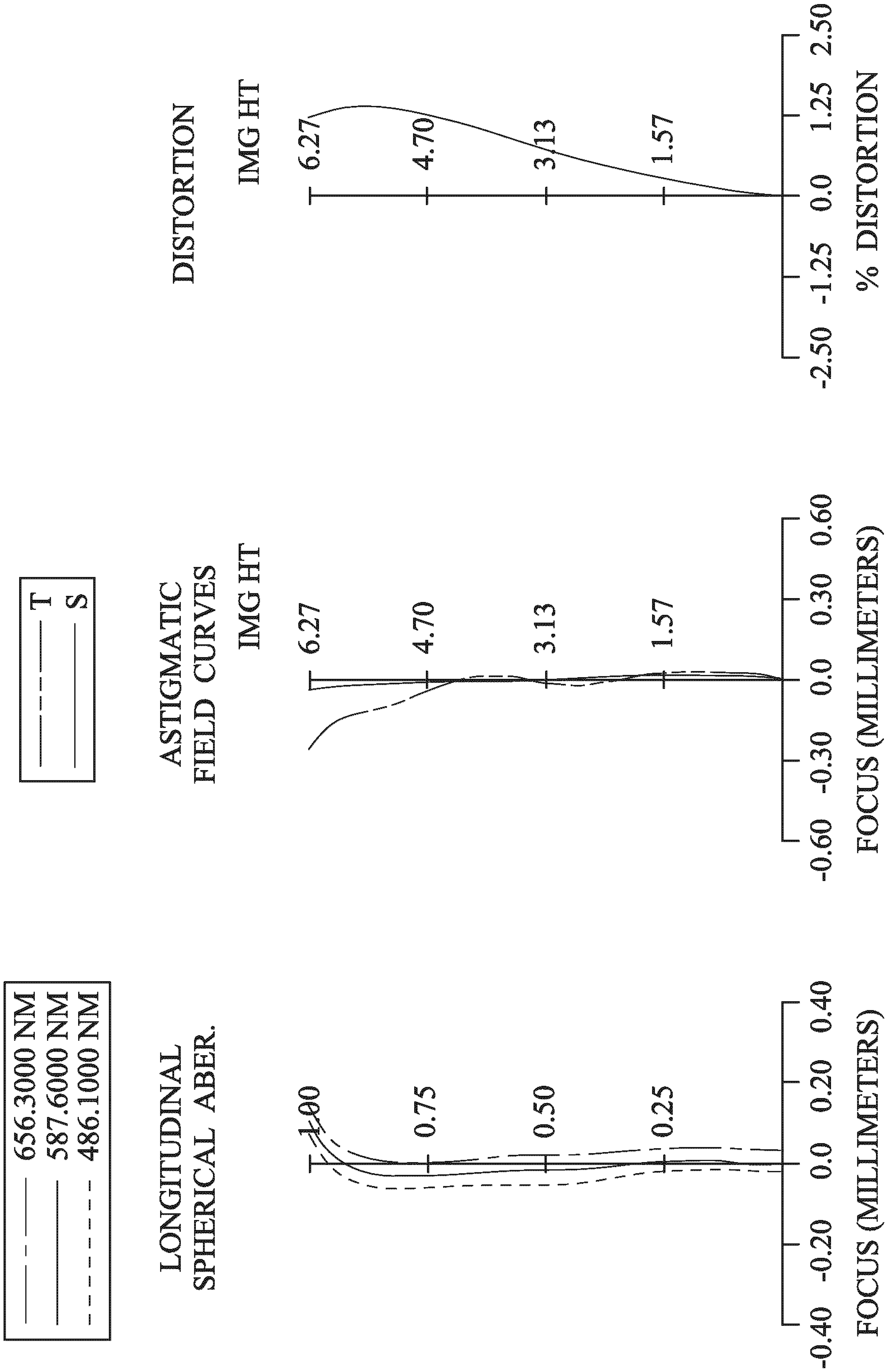
656.3000 NM
587.6000 NM
486.1000 NM
LONGITUDINAL SPHERICAL ABER.
1.00
0.75
0.50
0.25
-0.40 -0.20 0.0 0.20 0.40
FOCUS (MILLIMETERS)
T
S
ASTIGMATIC FIELD CURVES
IMG HT
6.27
4.70
3.13
1.57
-0.60 -0.30 0.0 0.30 0.60
FOCUS (MILLIMETERS)
DISTORTION
IMG HT
6.27
4.70
3.13
1.57
-2.50 -1.25 0.0 1.25 2.50
% DISTORTION

Fig. 6C

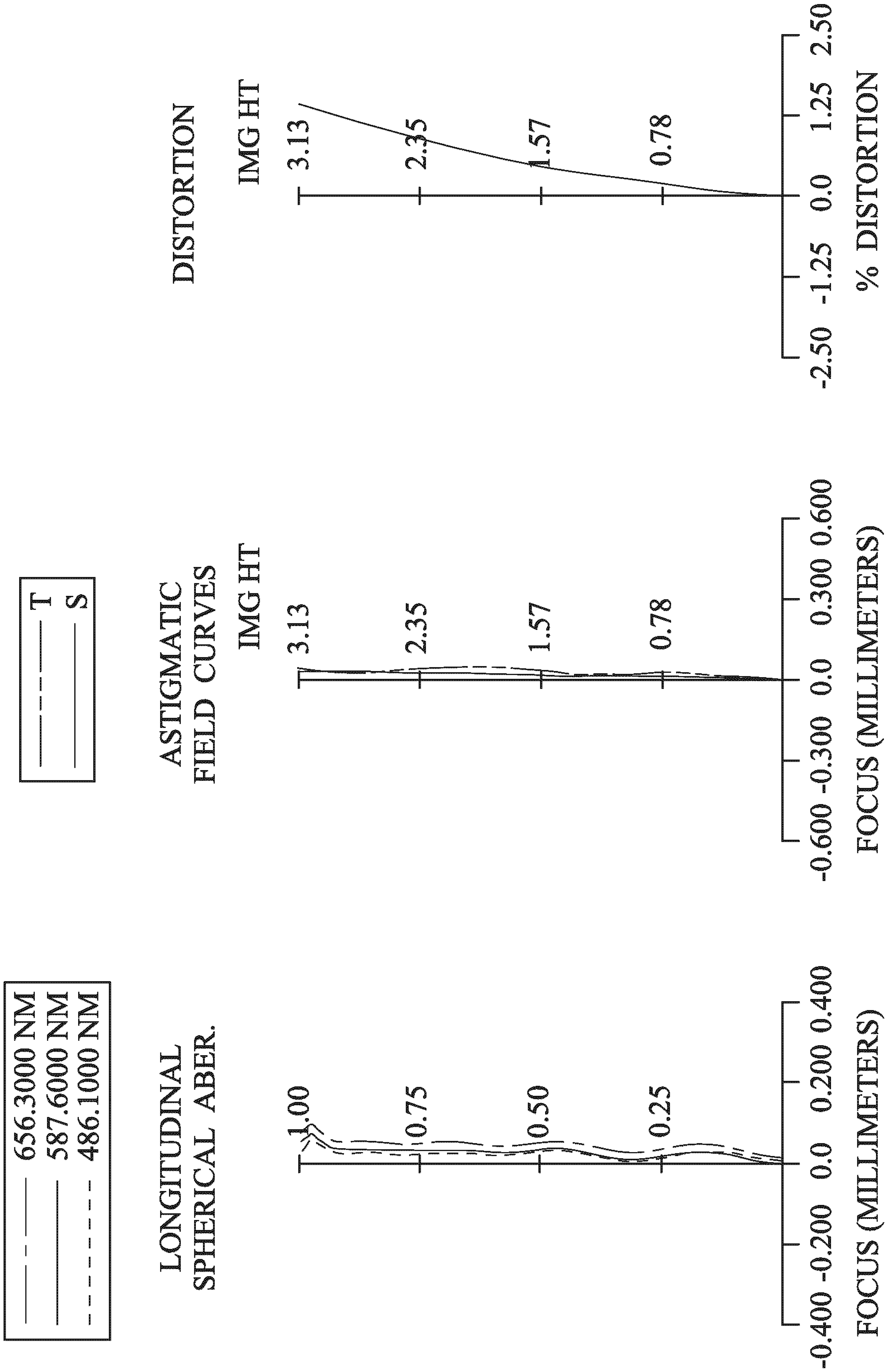

656.3000 NM
587.6000 NM
486.1000 NM
LONGITUDINAL
SPHERICAL ABER.
1.00
0.75
0.50
0.25
-0.400 -0.200 0.0 0.200 0.400
FOCUS (MILLIMETERS)
T
S
ASTIGMATIC
FIELD CURVES
IMG HT
3.13
2.35
1.57
0.78
-0.600 -0.300 0.0 0.300 0.600
FOCUS (MILLIMETERS)
DISTORTION
IMG HT
3.13
2.35
1.57
0.78
-2.50 -1.25 0.0 1.25 2.50
% DISTORTION


Fig. 6D

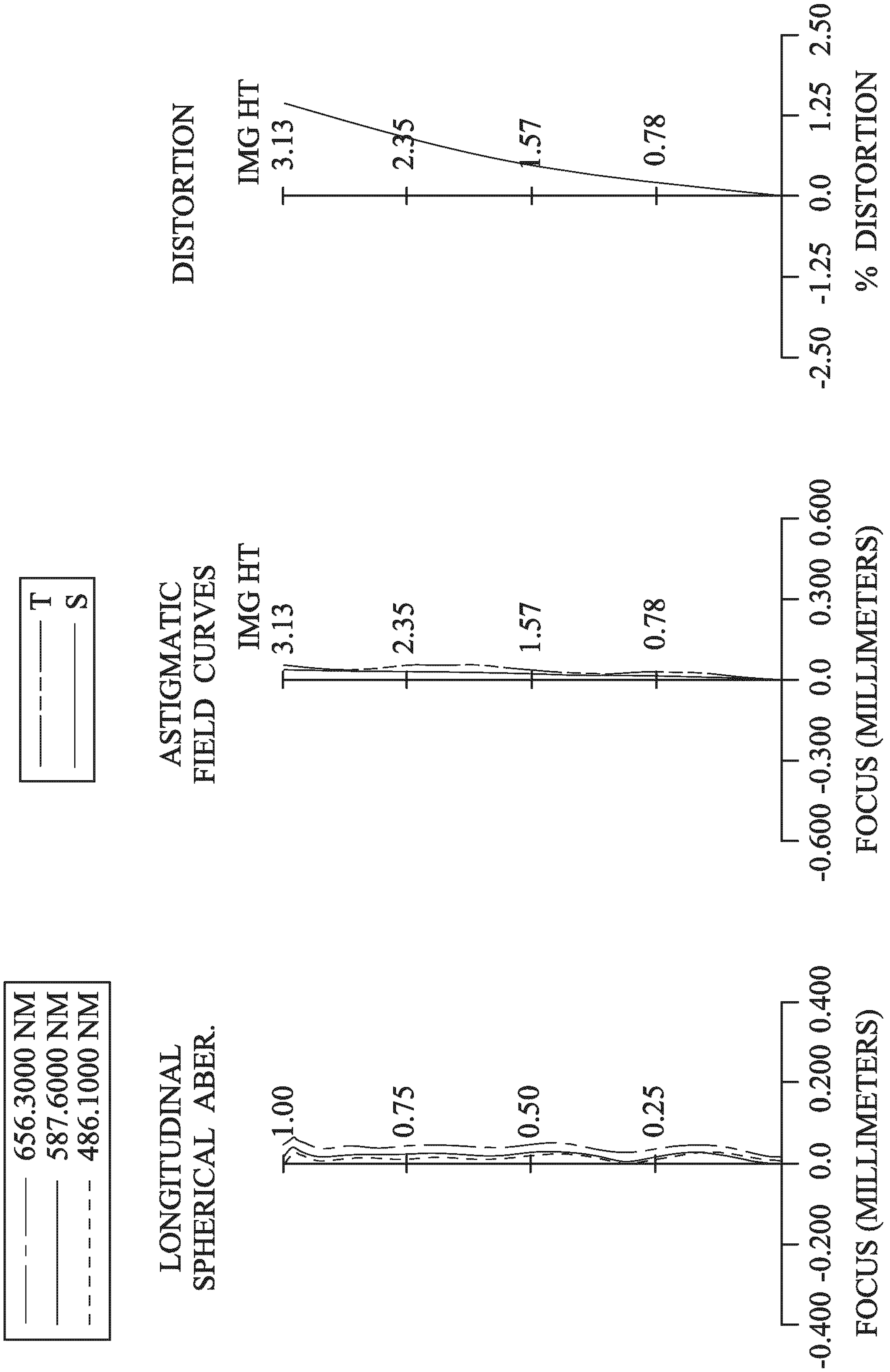
656.3000 NM
587.6000 NM
486.1000 NM
LONGITUDINAL
SPHERICAL ABER.
1.00
0.75
0.50
0.25
-0.400 -0.200 0.0 0.200 0.400
FOCUS (MILLIMETERS)
T
S
ASTIGMATIC
FIELD CURVES
IMG HT
3.13
2.35
1.57
0.78
-0.600 -0.300 0.0 0.300 0.600
FOCUS (MILLIMETERS)
DISTORTION
IMG HT
3.13
2.35
1.57
0.78
-2.50 -1.25 0.0 1.25 2.50
% DISTORTION

Fig. 6E

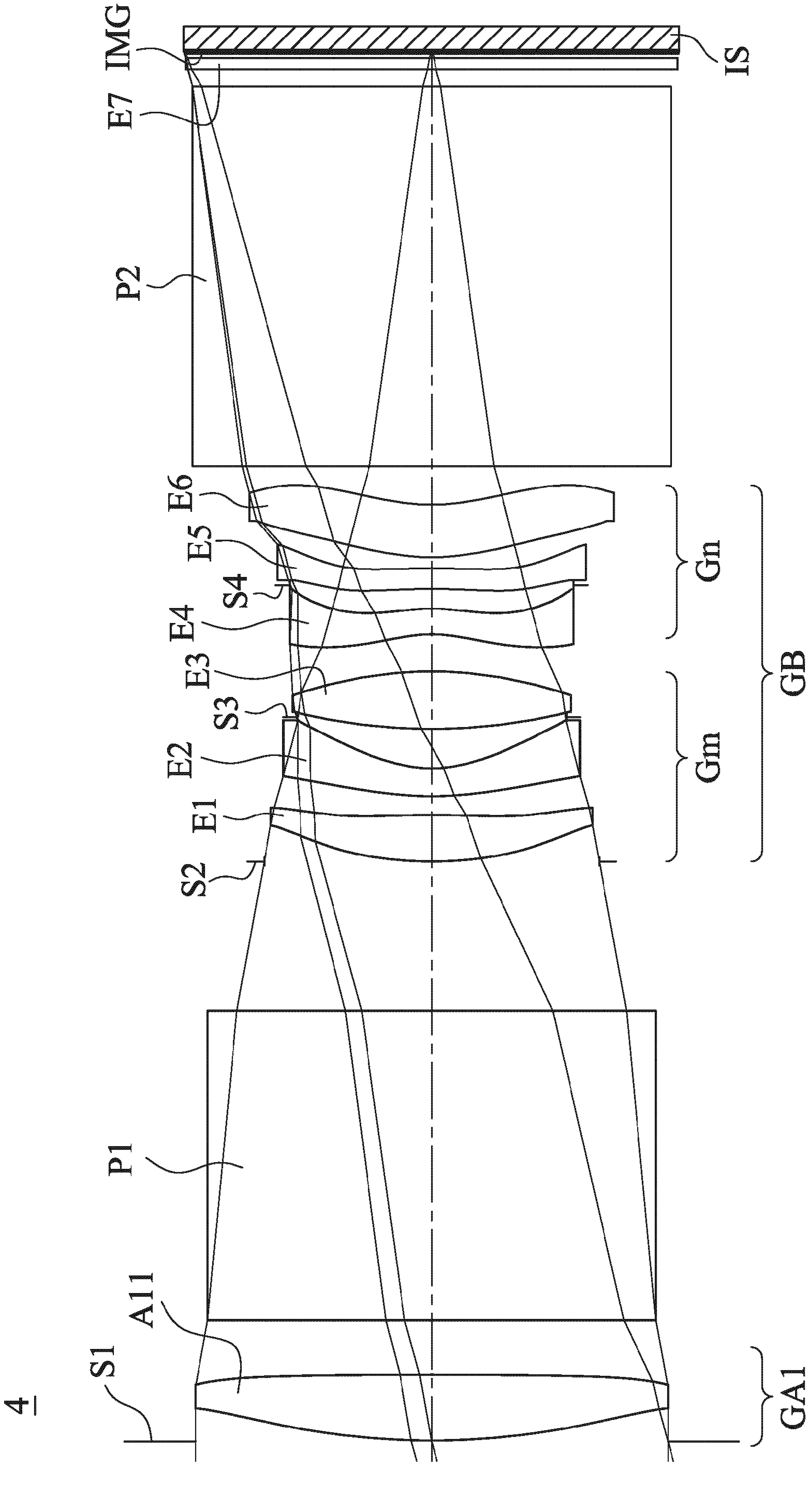


Fig. 7A

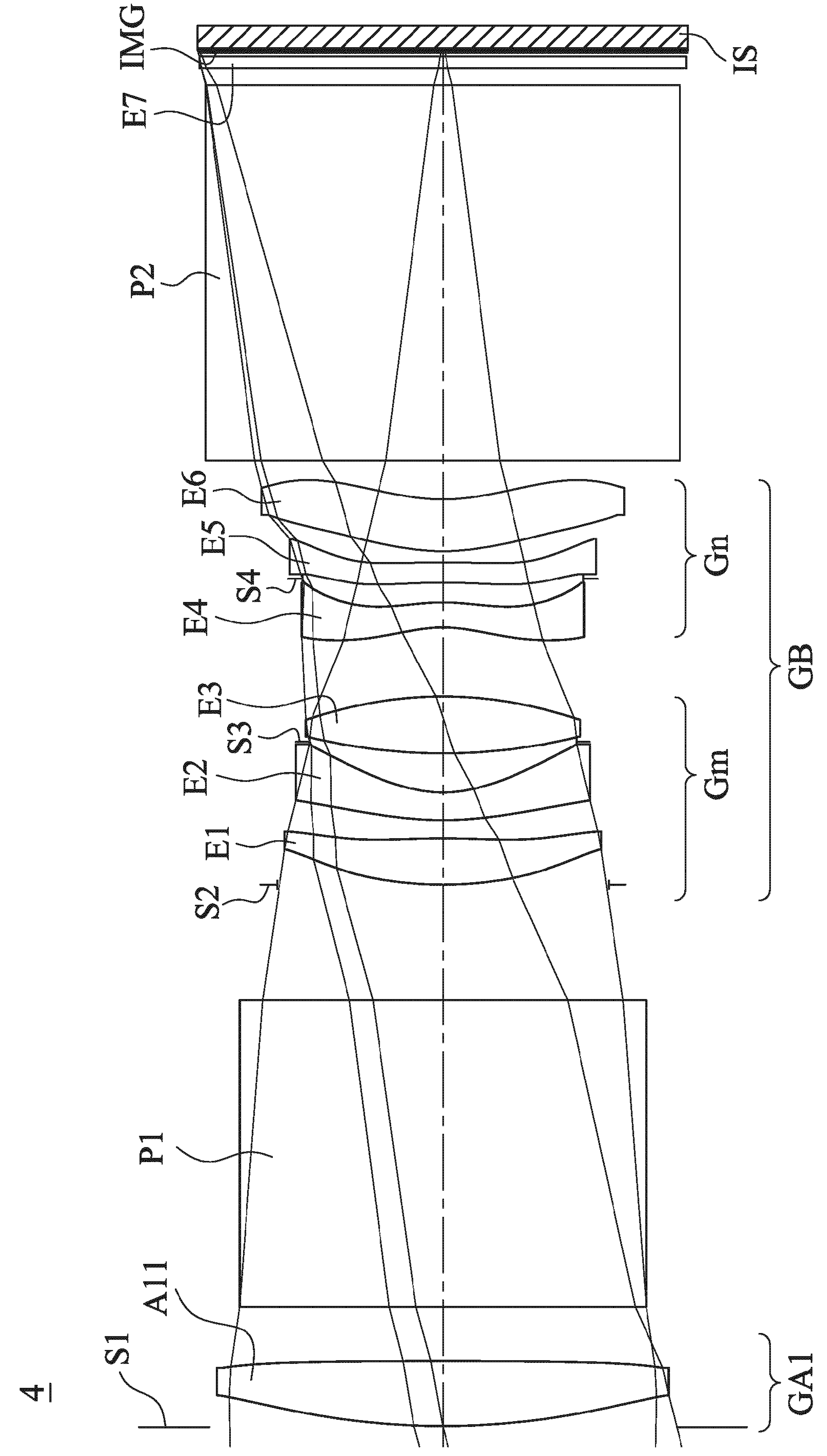


Fig. 7B

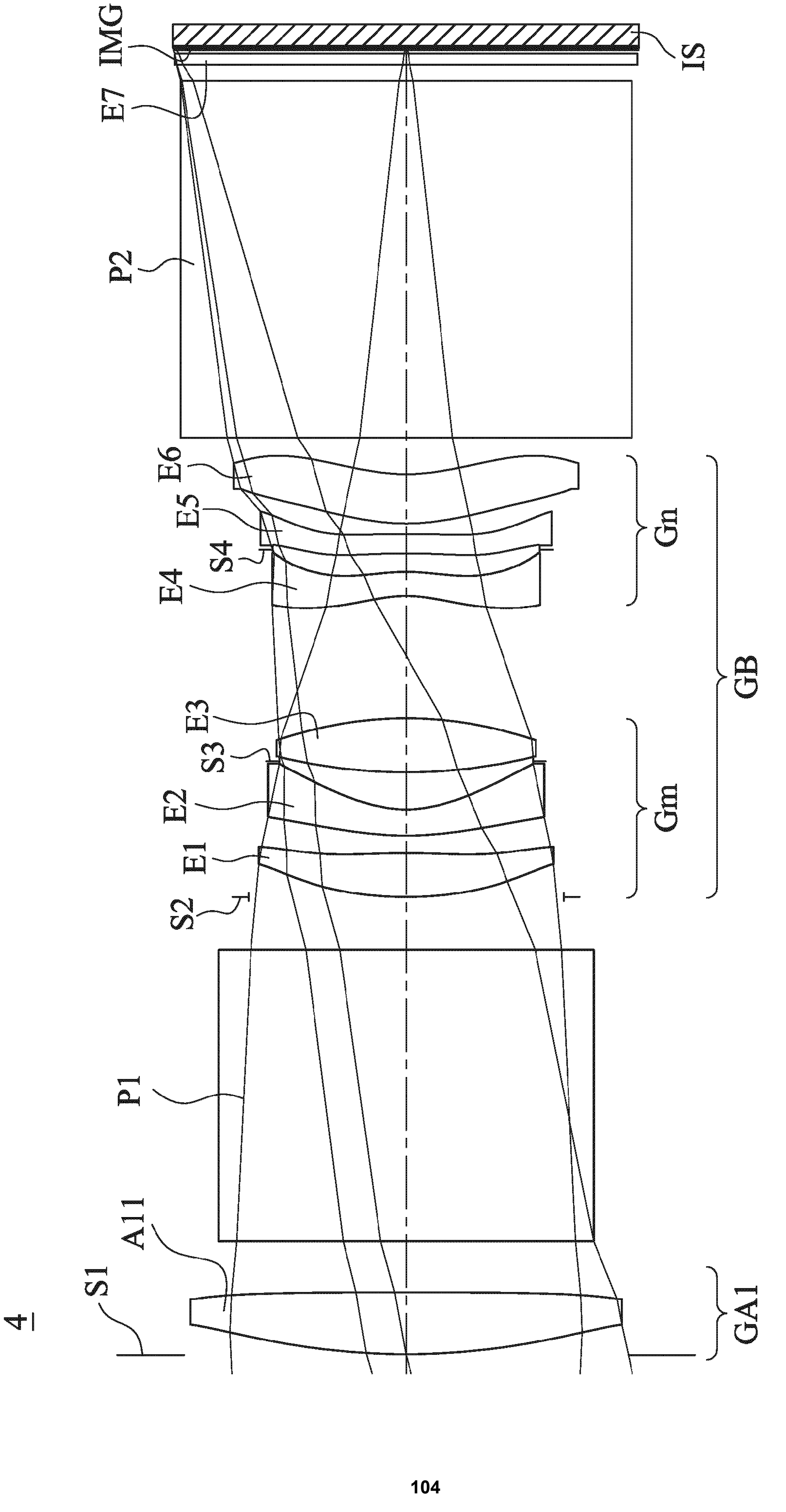


Fig. 7C

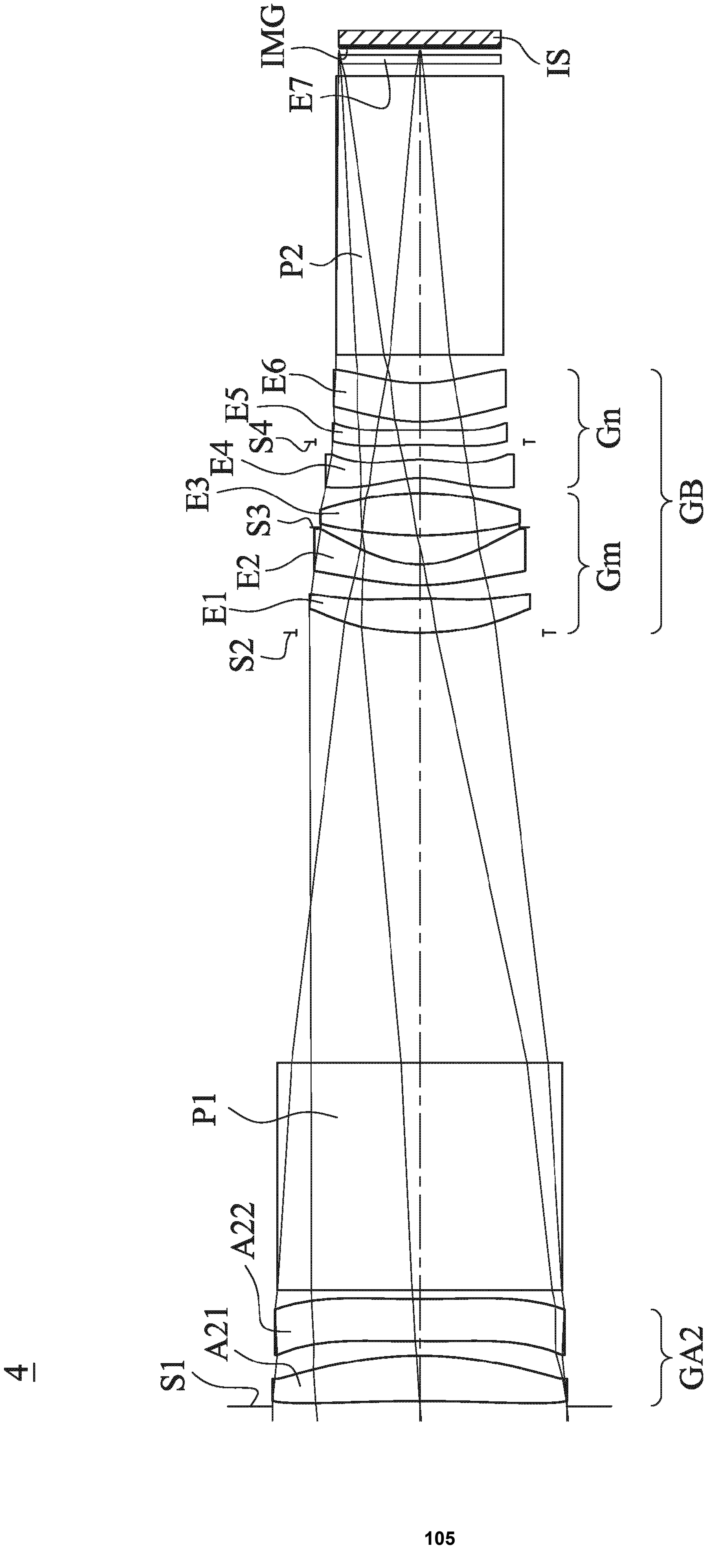


Fig. 7D

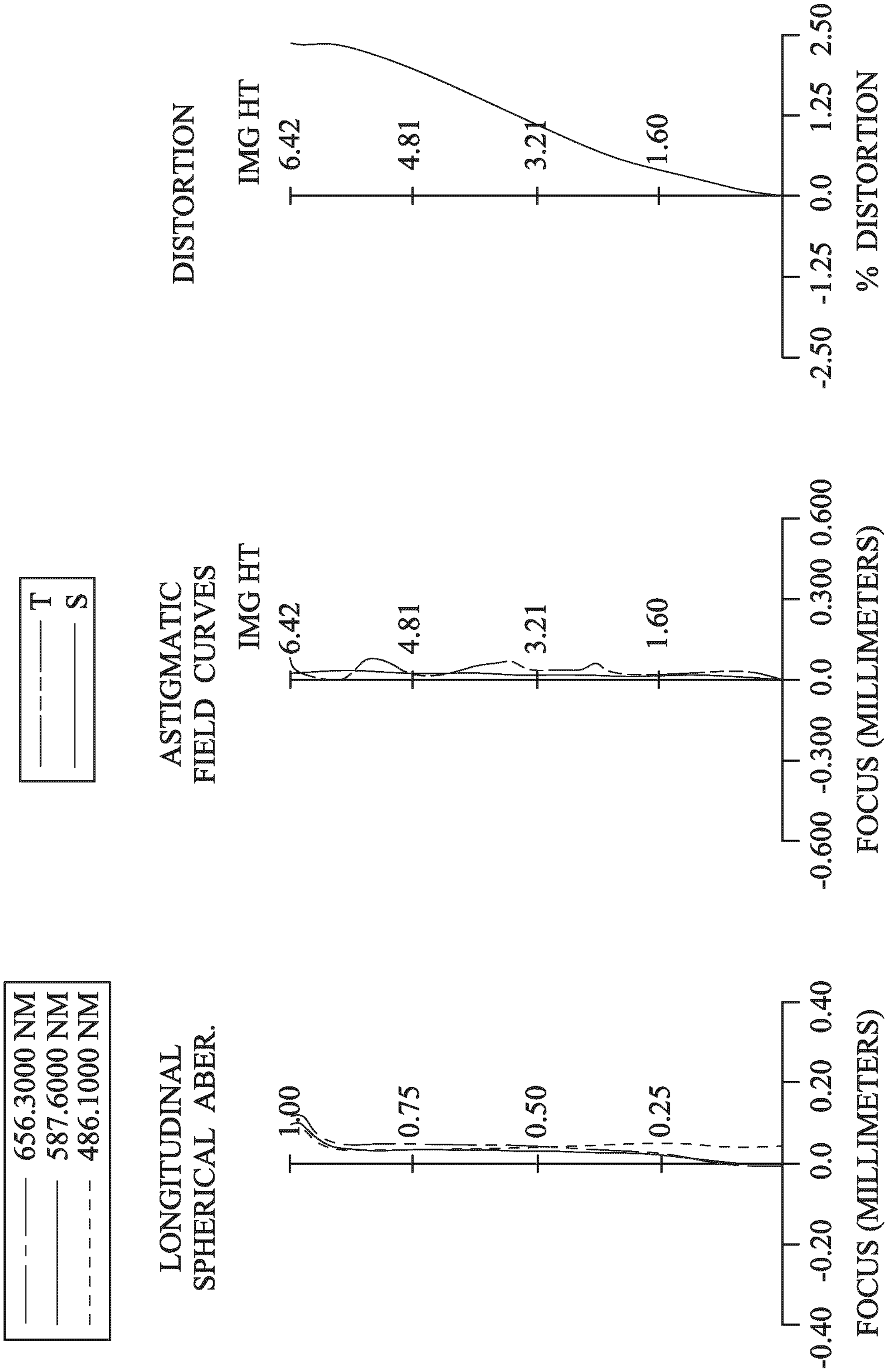
656.3000 NM
587.6000 NM
486.1000 NM
LONGITUDINAL
SPHERICAL ABER.
1.00
0.75
0.50
0.25
-0.40 -0.20 0.0 0.20 0.40
FOCUS (MILLIMETERS)
T
S
ASTIGMATIC
FIELD CURVES
IMG HT
6.42
4.81
3.21
1.60
-0.600 -0.300 0.0 0.300 0.600
FOCUS (MILLIMETERS)
DISTORTION
IMG HT
6.42
4.81
3.21
1.60
-2.50 -1.25 0.0 1.25 2.50
% DISTORTION

Fig. 8A

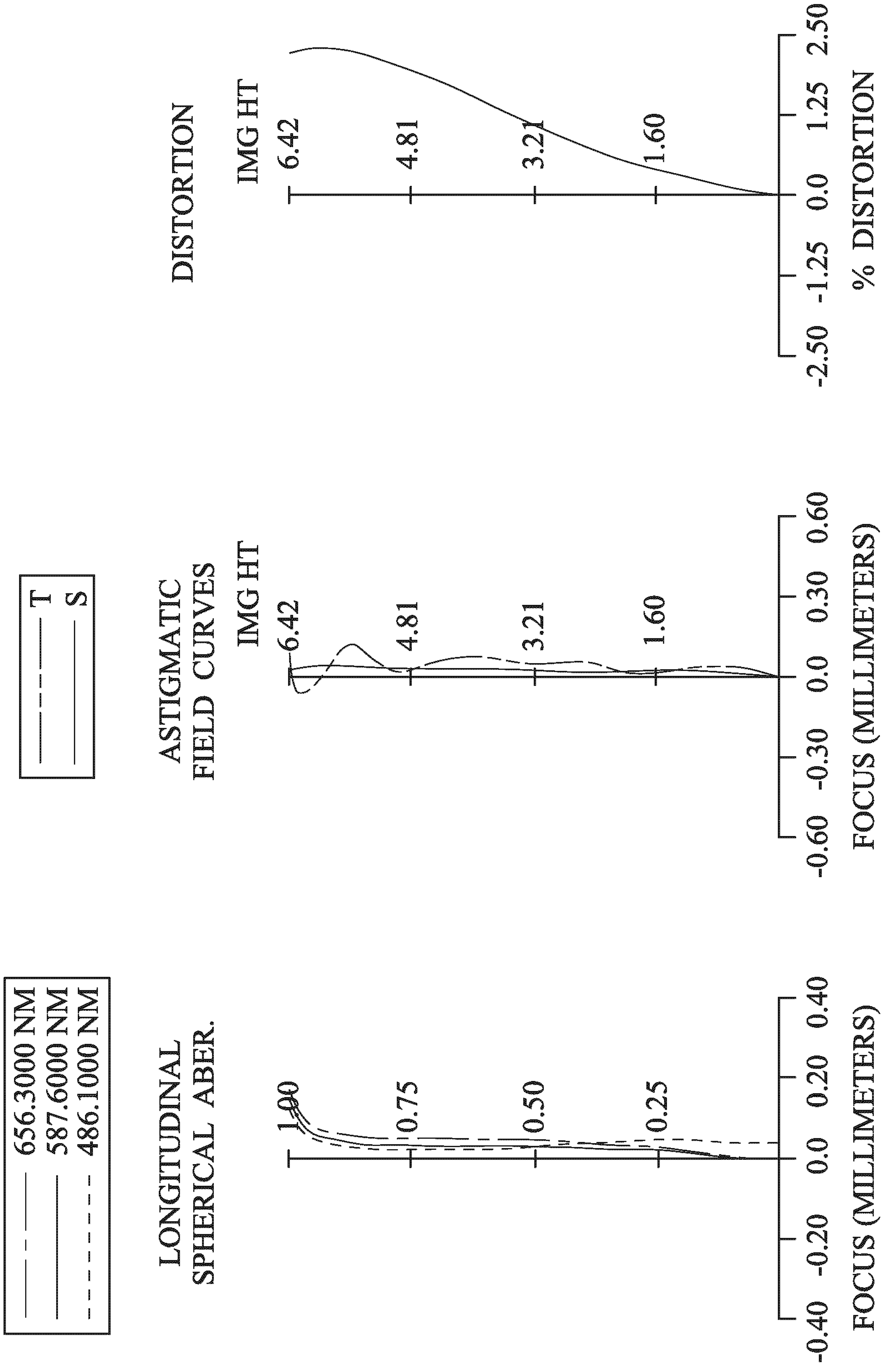
656.3000 NM
587.6000 NM
486.1000 NM
LONGITUDINAL SPHERICAL ABER.
1.00
0.75
0.50
0.25
-0.40 -0.20 0.0 0.20 0.40
FOCUS (MILLIMETERS)
T
S
ASTIGMATIC FIELD CURVES
IMG HT
6.42
4.81
3.21
1.60
-0.60 -0.30 0.0 0.30 0.60
FOCUS (MILLIMETERS)
DISTORTION
IMG HT
6.42
4.81
3.21
1.60
-2.50 -1.25 0.0 1.25 2.50
% DISTORTION

Fig. 8B

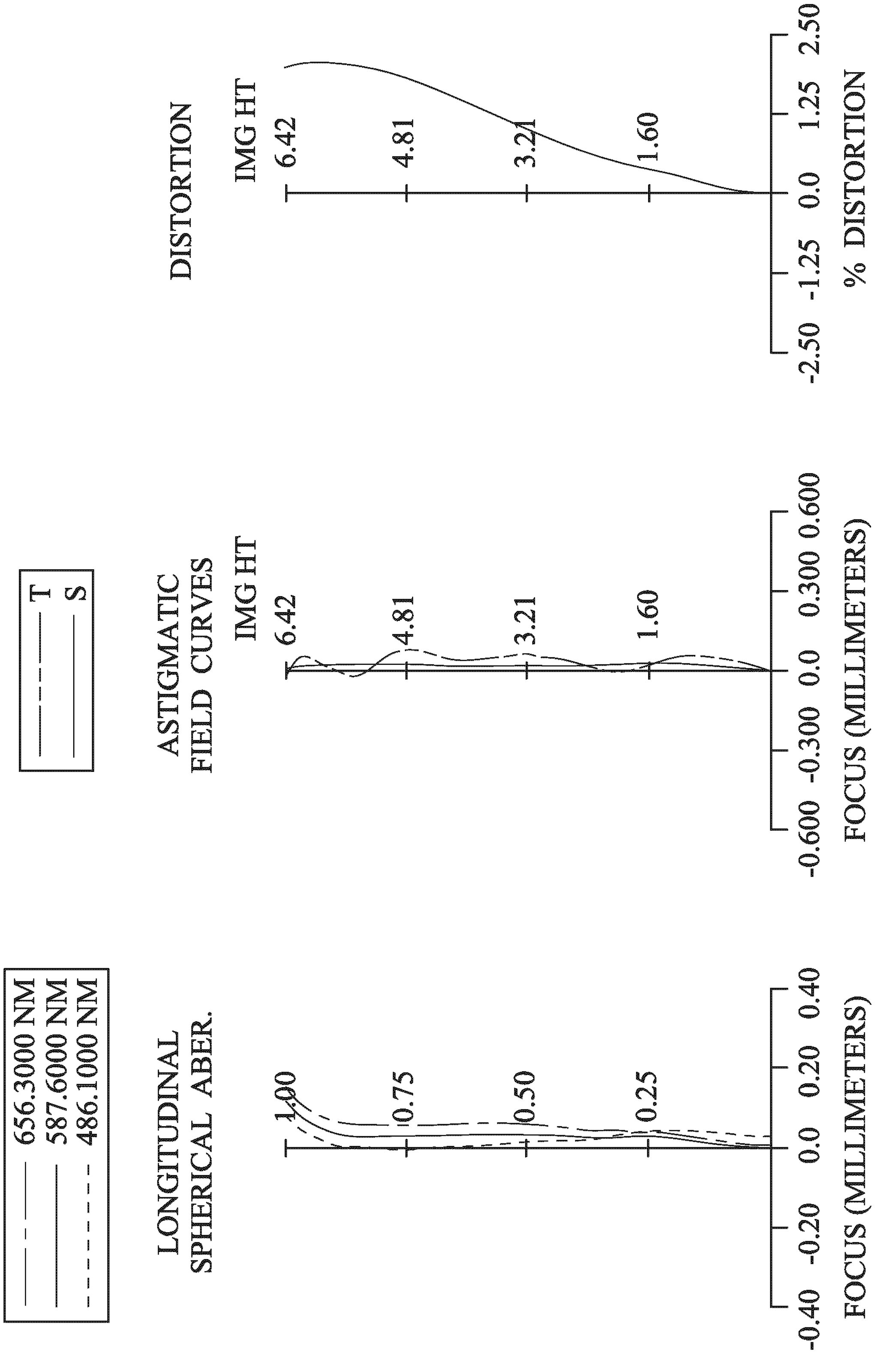
656.3000 NM
587.6000 NM
486.1000 NM
LONGITUDINAL SPHERICAL ABER.
1.00
0.75
0.50
0.25
-0.40 -0.20 0.0 0.20 0.40
FOCUS (MILLIMETERS)
T
S
ASTIGMATIC FIELD CURVES
IMG HT
6.42
4.81
3.21
1.60
-0.600 -0.300 0.0 0.300 0.600
FOCUS (MILLIMETERS)
DISTORTION
IMG HT
6.42
4.81
3.21
1.60
-2.50 -1.25 0.0 1.25 2.50
% DISTORTION

Fig. 8C

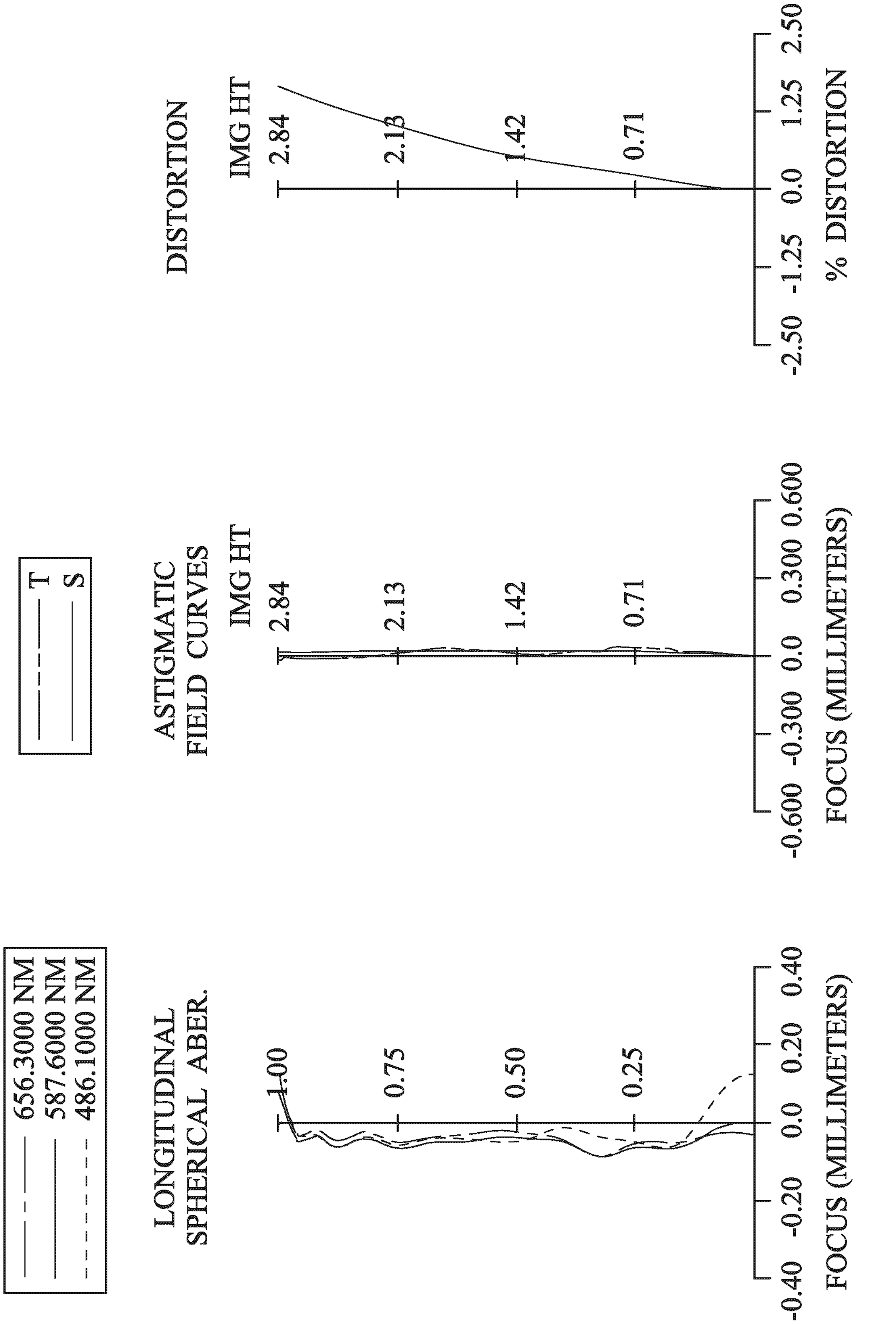

656.3000 NM
587.6000 NM
486.1000 NM
LONGITUDINAL SPHERICAL ABER.
1.00
0.75
0.50
0.25
-0.40 -0.20 0.0 0.20 0.40
FOCUS (MILLIMETERS)
T
S
ASTIGMATIC FIELD CURVES
IMG HT
2.84
2.13
1.42
0.71
-0.600 -0.300 0.0 0.300 0.600
FOCUS (MILLIMETERS)
DISTORTION
IMG HT
2.84
2.13
1.42
0.71
-2.50 -1.25 0.0 1.25 2.50
% DISTORTION


Fig. 8D

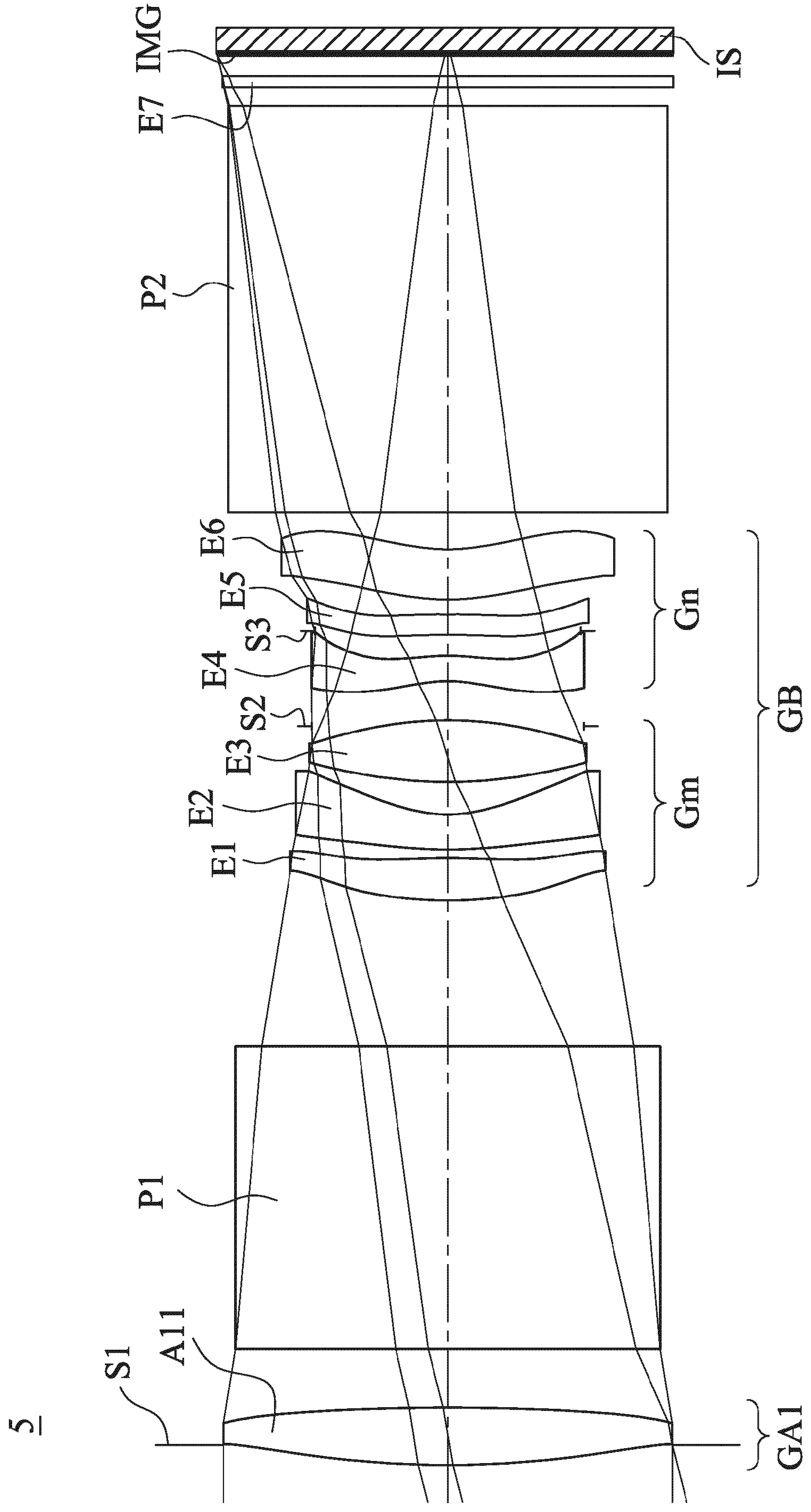


Fig. 9A

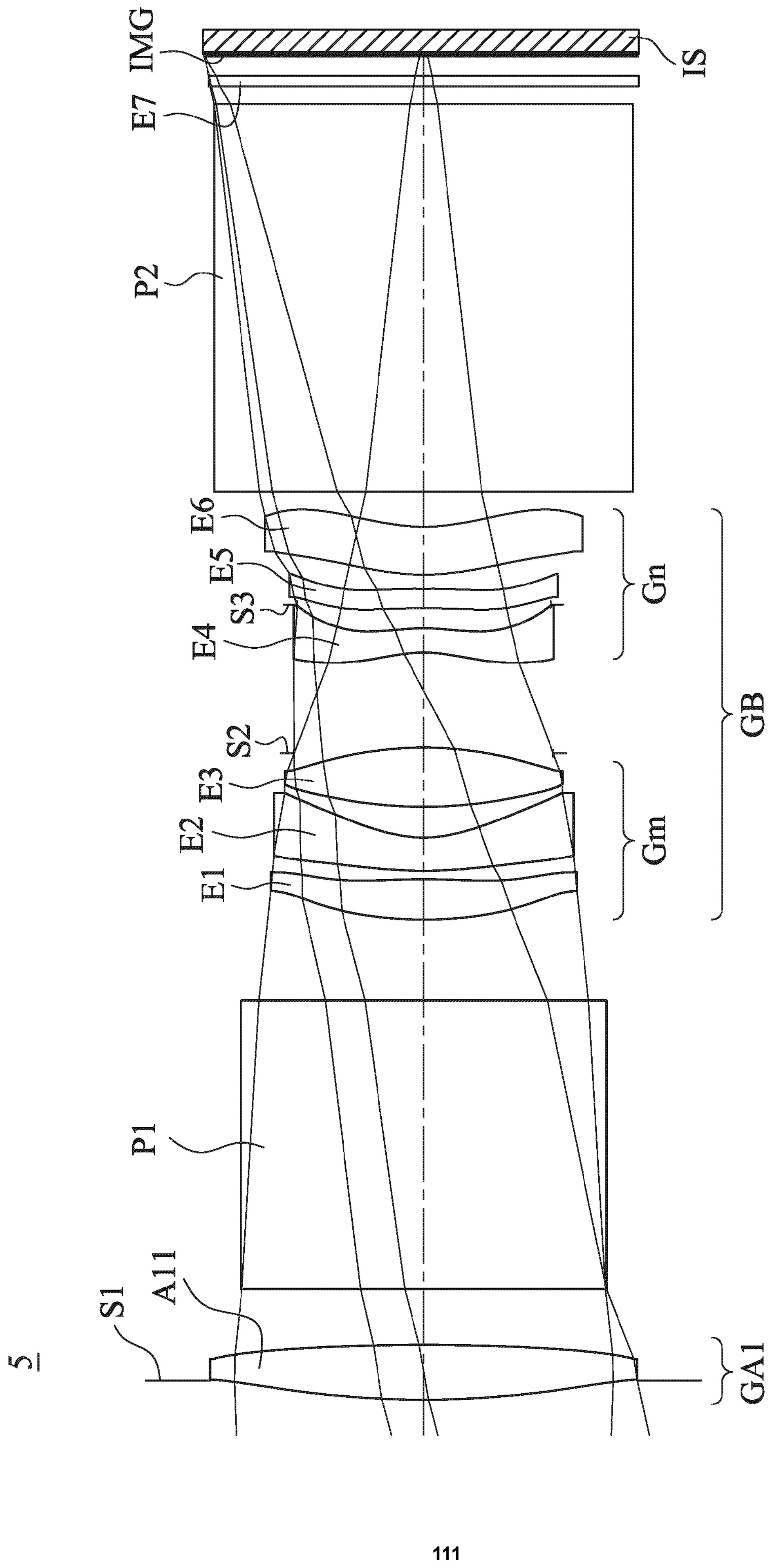


Fig. 9B

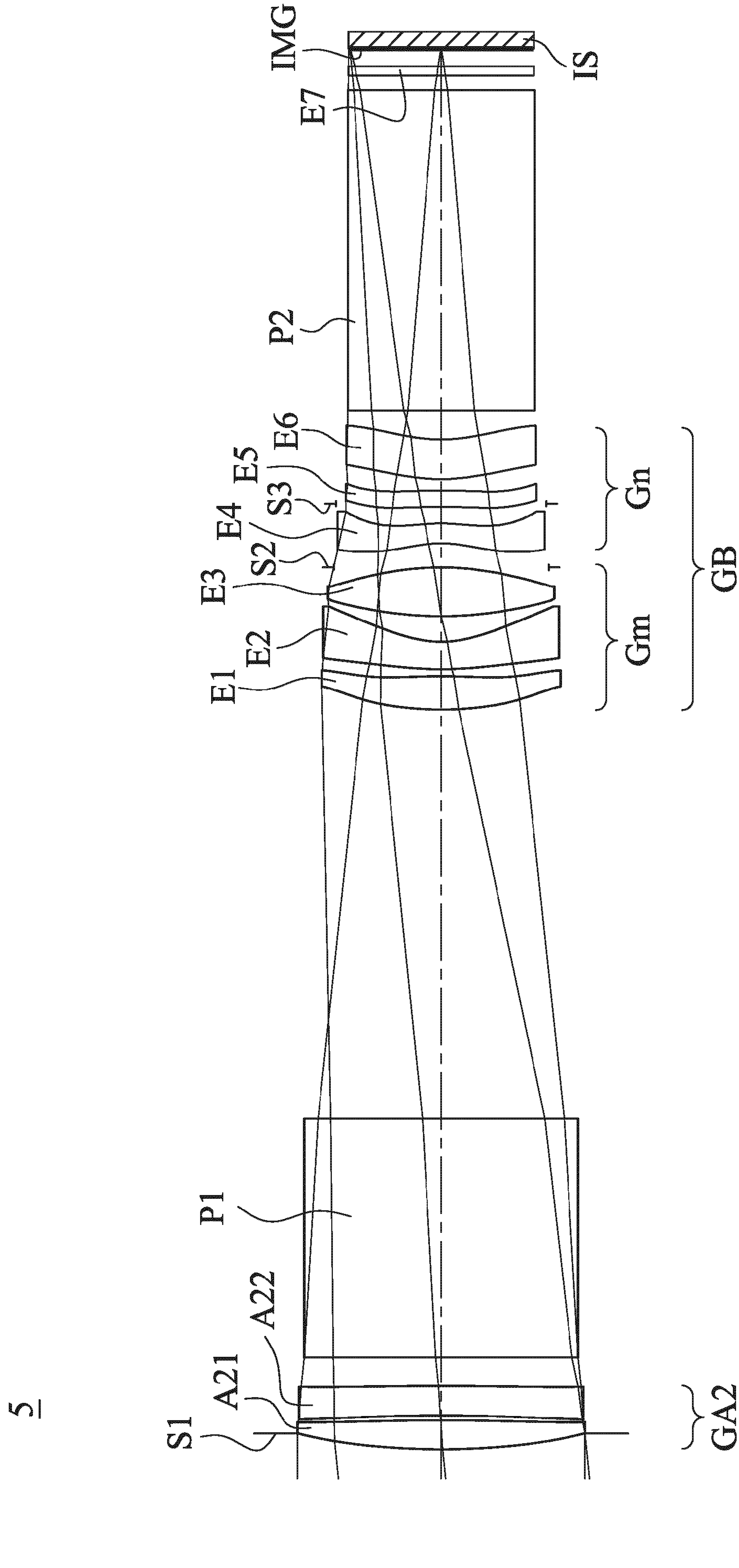


Fig. 9C

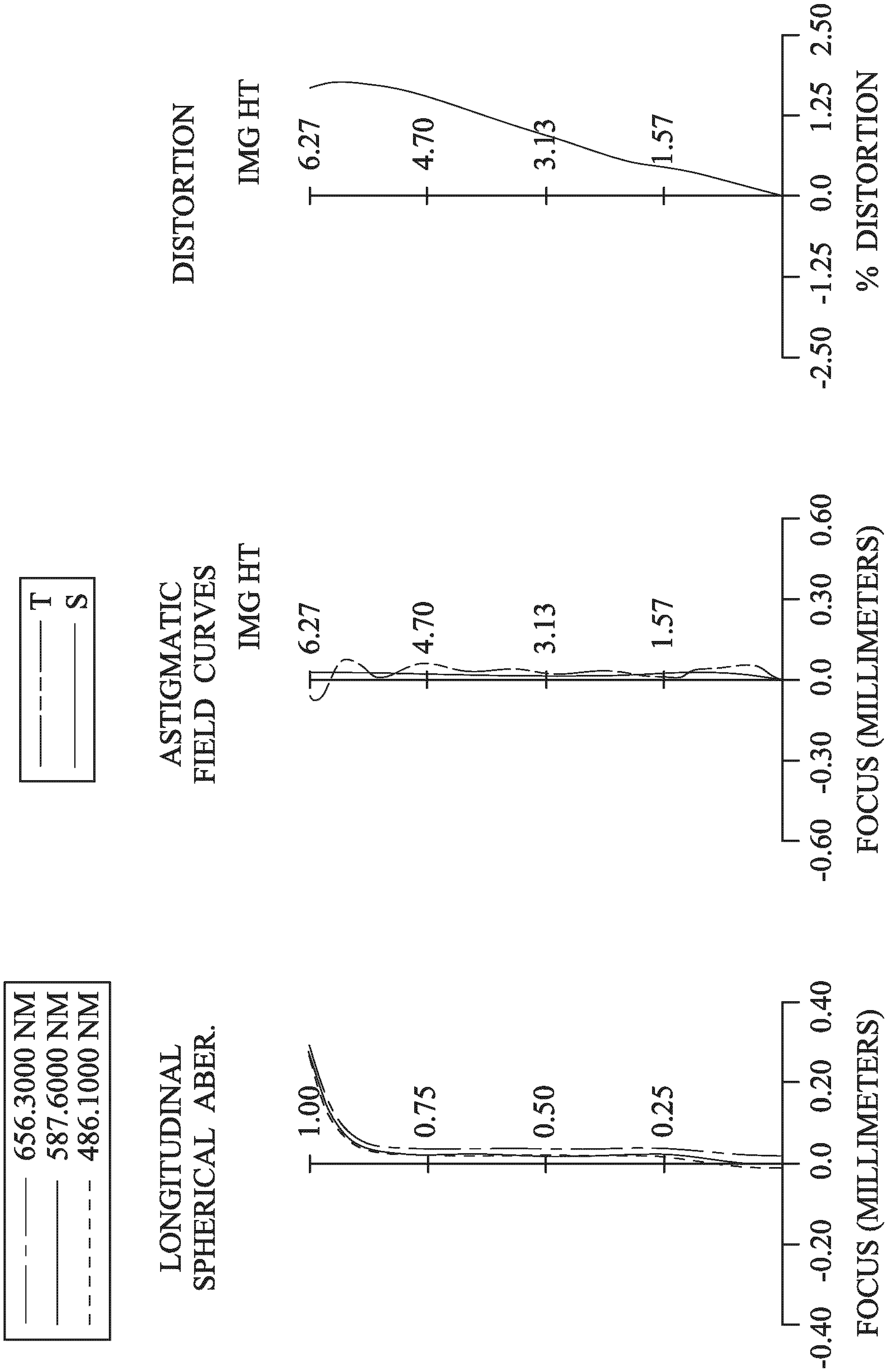
LONGITUDINAL SPHERICAL ABER.
656.3000 NM
587.6000 NM
486.1000 NM
1.00
0.75
0.50
0.25
-0.40 -0.20 0.0 0.20 0.40
FOCUS (MILLIMETERS)
ASTIGMATIC FIELD CURVES
T
S
IMG HT
6.27
4.70
3.13
1.57
-0.60 -0.30 0.0 0.30 0.60
FOCUS (MILLIMETERS)
DISTORTION
IMG HT
6.27
4.70
3.13
1.57
-2.50 -1.25 0.0 1.25 2.50
% DISTORTION

Fig. 10A

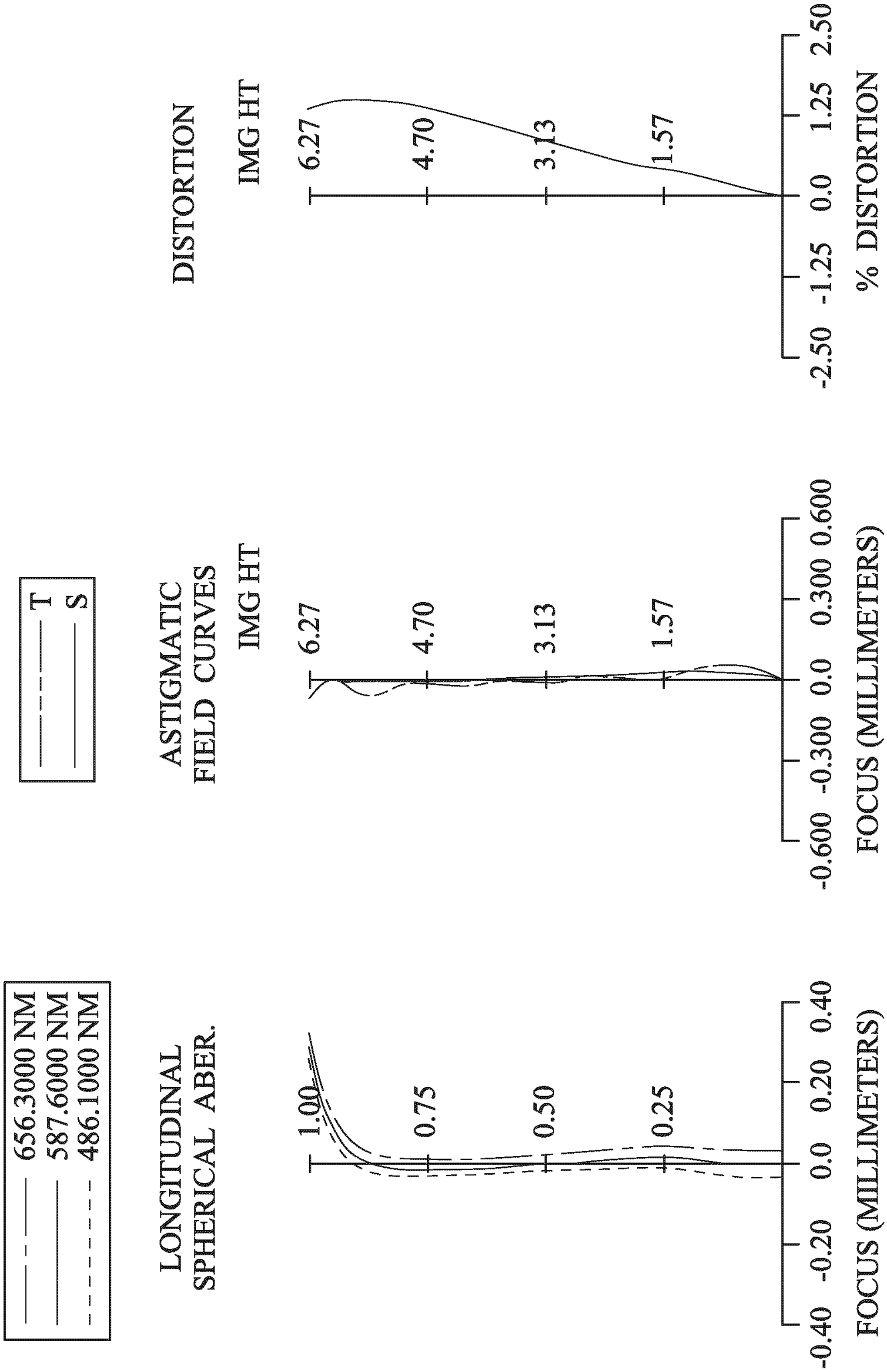
LONGITUDINAL
SPHERICAL ABER.
656.3000 NM
587.6000 NM
486.1000 NM
1.00
0.75
0.50
0.25
-0.40 -0.20 0.0 0.20 0.40
FOCUS (MILLIMETERS)
ASTIGMATIC
FIELD CURVES
IMG HT
T
S
6.27
4.70
3.13
1.57
-0.600 -0.300 0.0 0.300 0.600
FOCUS (MILLIMETERS)
DISTORTION
IMG HT
6.27
4.70
3.13
1.57
-2.50 -1.25 0.0 1.25 2.50
% DISTORTION

Fig. 10B

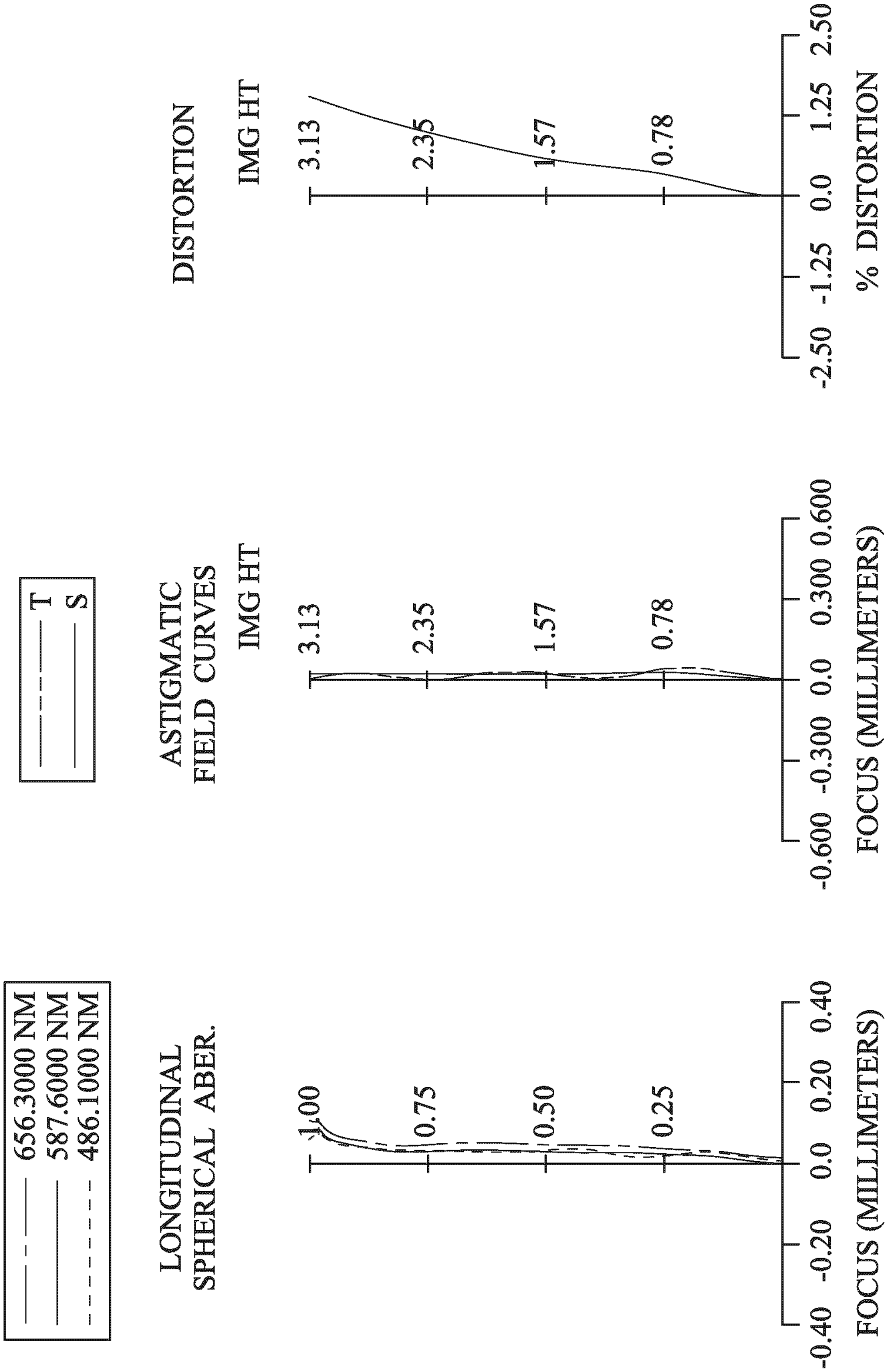
656.3000 NM
587.6000 NM
486.1000 NM
LONGITUDINAL
SPHERICAL ABER.
1.00
0.75
0.50
0.25
-0.40 -0.20 0.0 0.20 0.40
FOCUS (MILLIMETERS)
T
S
ASTIGMATIC
FIELD CURVES
IMG HT
3.13
2.35
1.57
0.78
-0.600 -0.300 0.0 0.300 0.600
FOCUS (MILLIMETERS)
DISTORTION
IMG HT
3.13
2.35
1.57
0.78
-2.50 -1.25 0.0 1.25 2.50
% DISTORTION

Fig. 10C

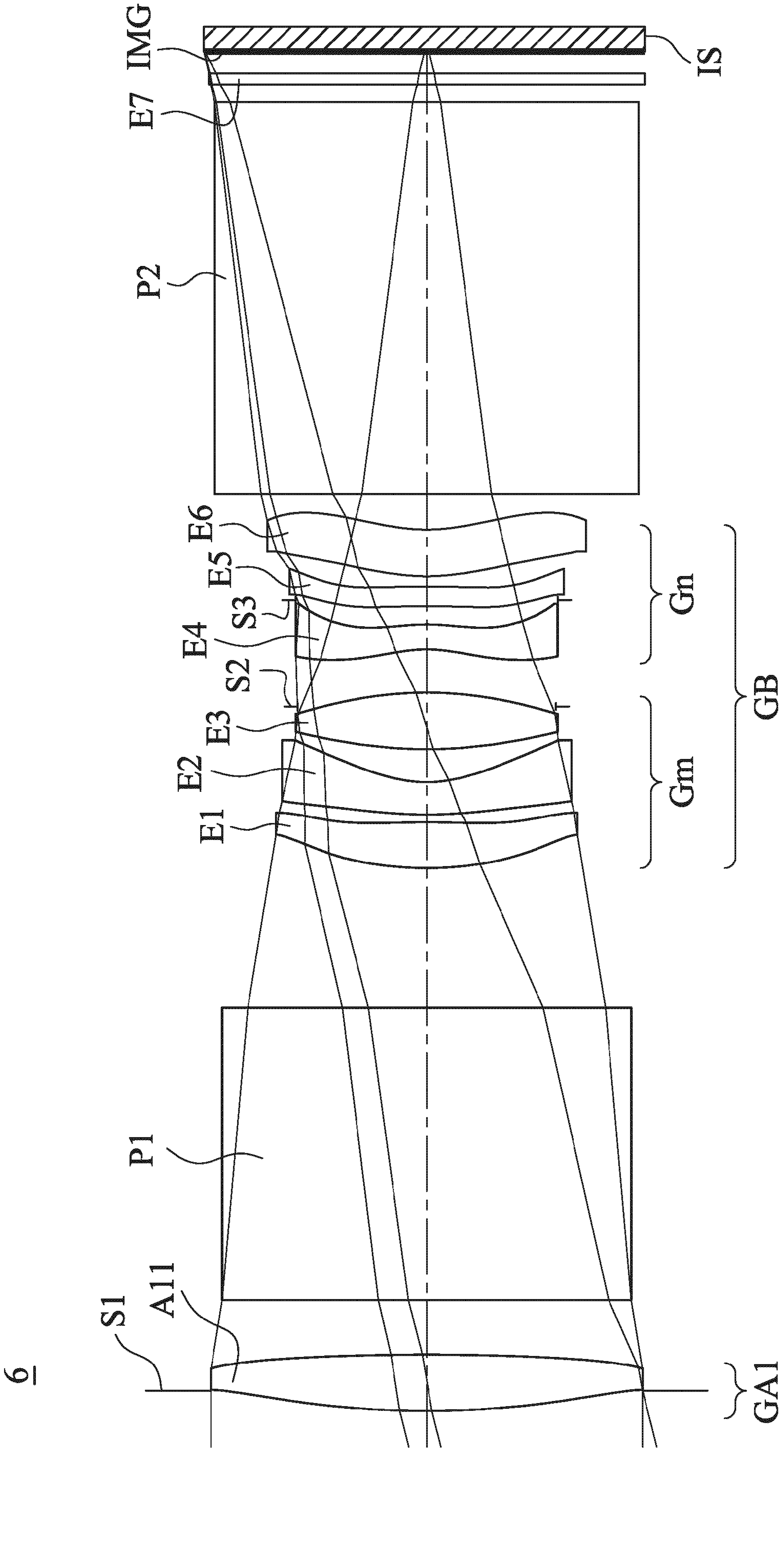


Fig. 11A

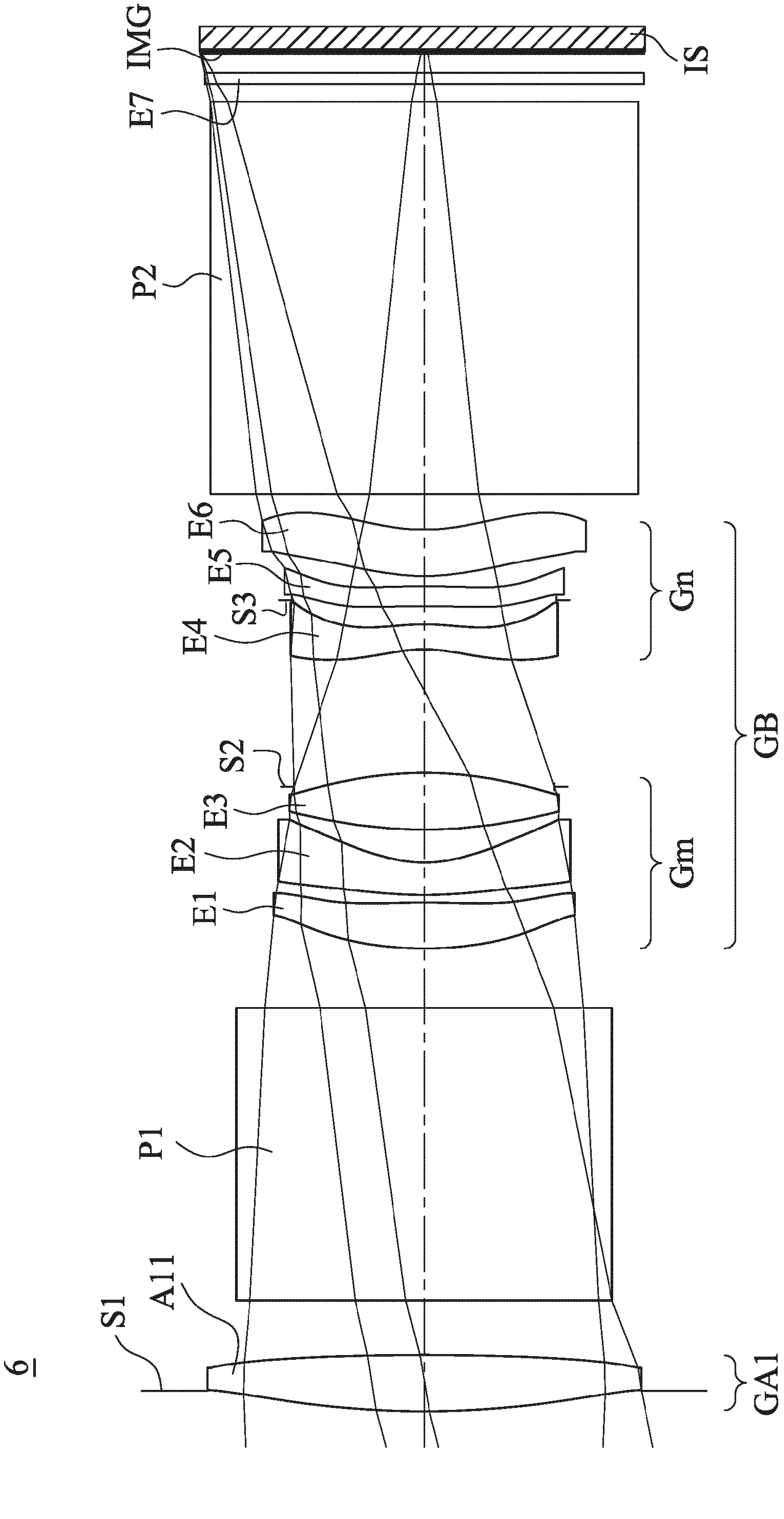


Fig. 11B

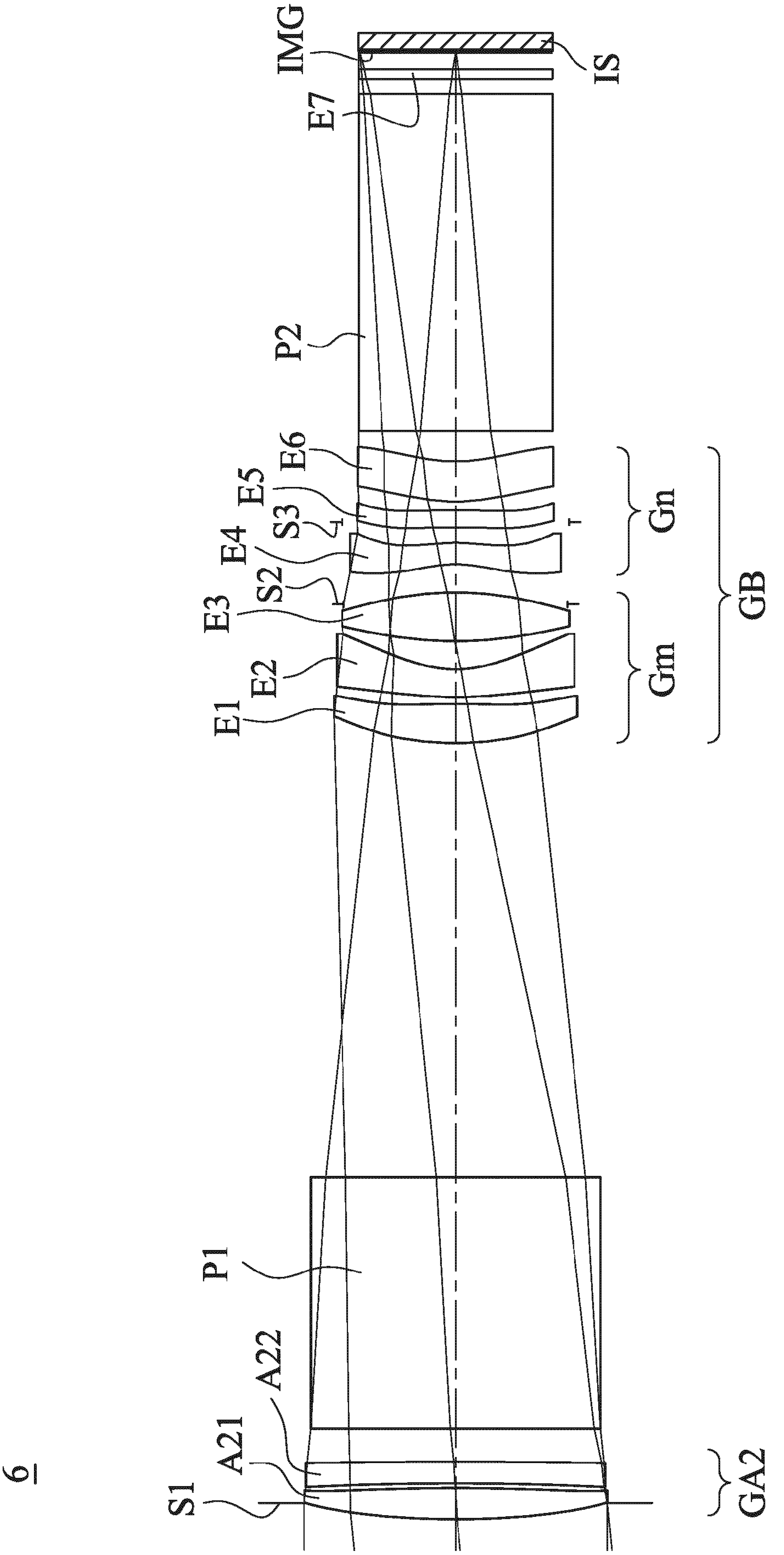


Fig. 11C

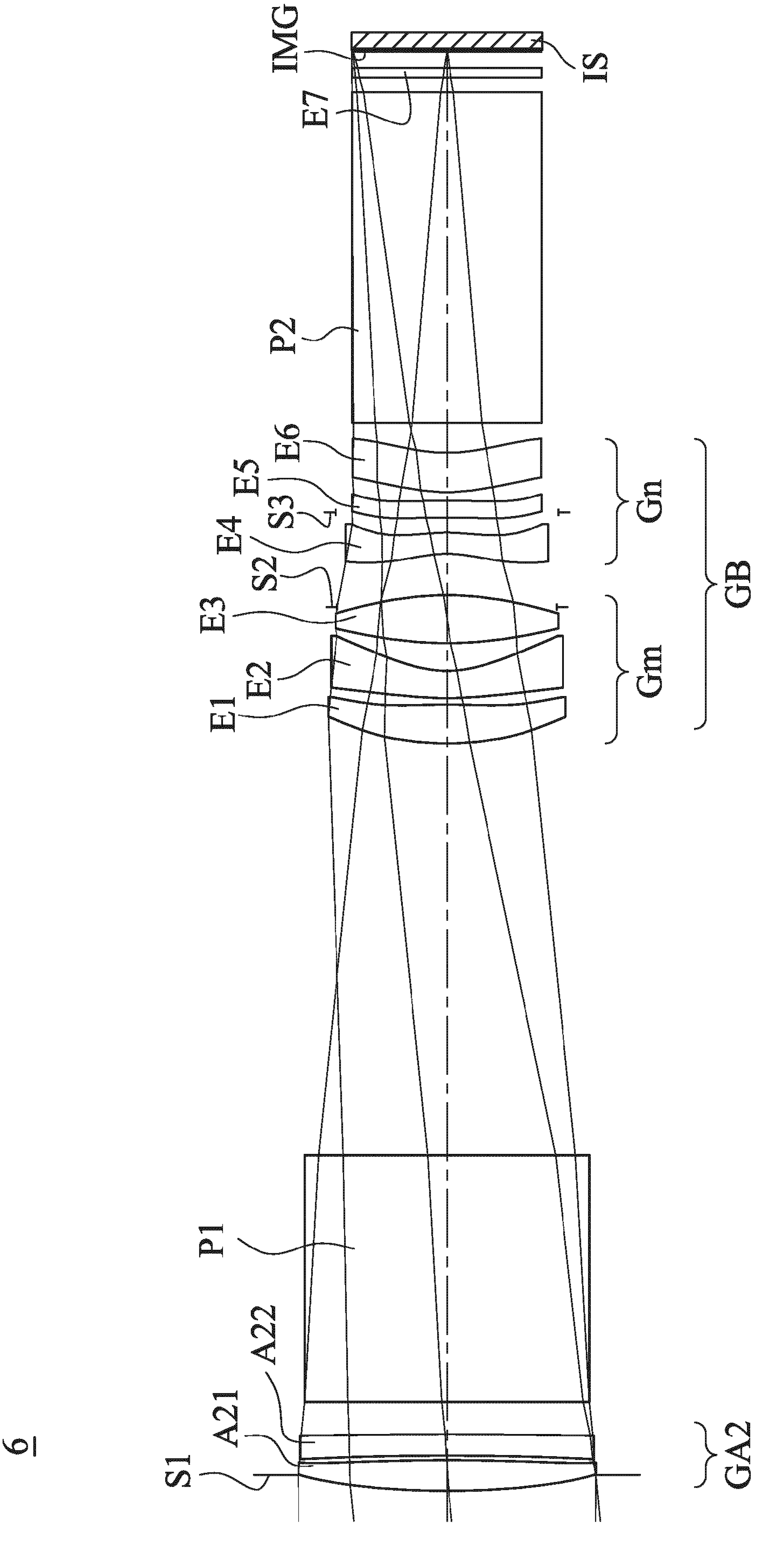


Fig. 11D

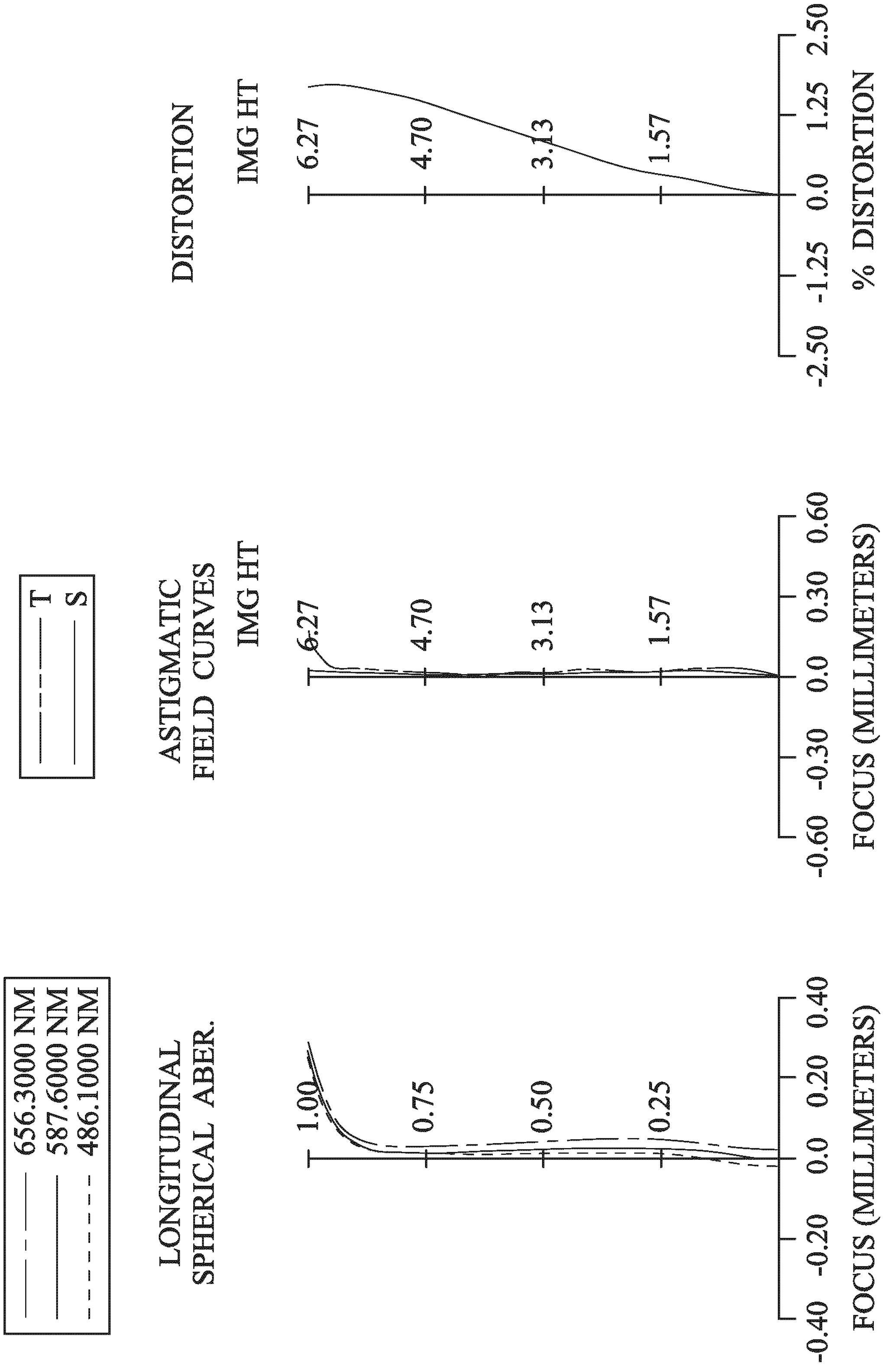
656.3000 NM
587.6000 NM
486.1000 NM
LONGITUDINAL SPHERICAL ABER.
1.00
0.75
0.50
0.25
-0.40 -0.20 0.0 0.20 0.40
FOCUS (MILLIMETERS)
T
S
ASTIGMATIC FIELD CURVES
IMG HT
6.27
4.70
3.13
1.57
-0.60 -0.30 0.0 0.30 0.60
FOCUS (MILLIMETERS)
DISTORTION
IMG HT
6.27
4.70
3.13
1.57
-2.50 -1.25 0.0 1.25 2.50
% DISTORTION

Fig. 12A

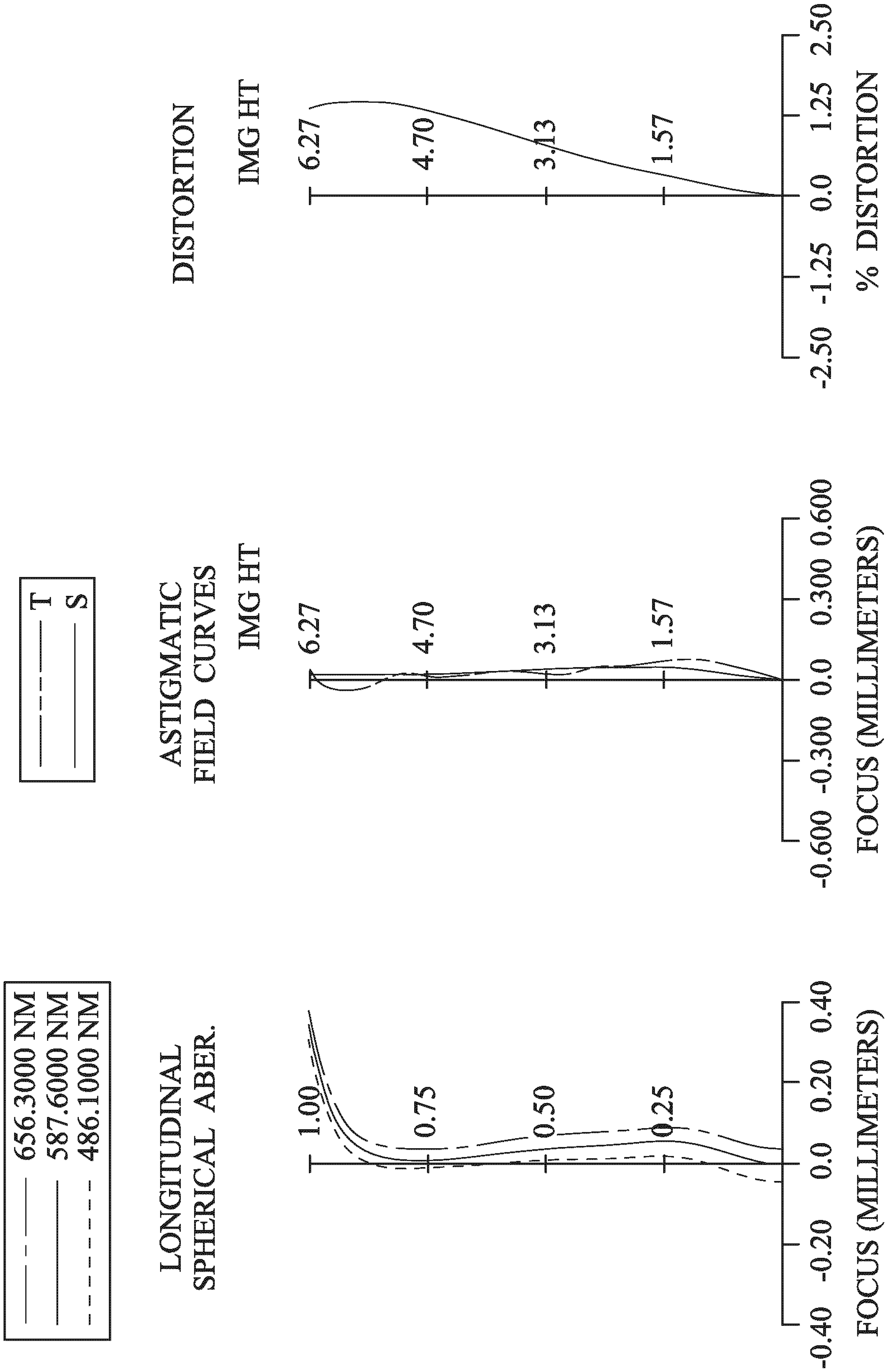
LONGITUDINAL SPHERICAL ABER.
656.3000 NM
587.6000 NM
486.1000 NM
1.00
0.75
0.50
0.25
-0.40 -0.20 0.0 0.20 0.40
FOCUS (MILLIMETERS)
ASTIGMATIC FIELD CURVES
T
S
IMG HT
6.27
4.70
3.13
1.57
-0.600 -0.300 0.0 0.300 0.600
FOCUS (MILLIMETERS)
DISTORTION
IMG HT
6.27
4.70
3.13
1.57
-2.50 -1.25 0.0 1.25 2.50
% DISTORTION

Fig. 12B

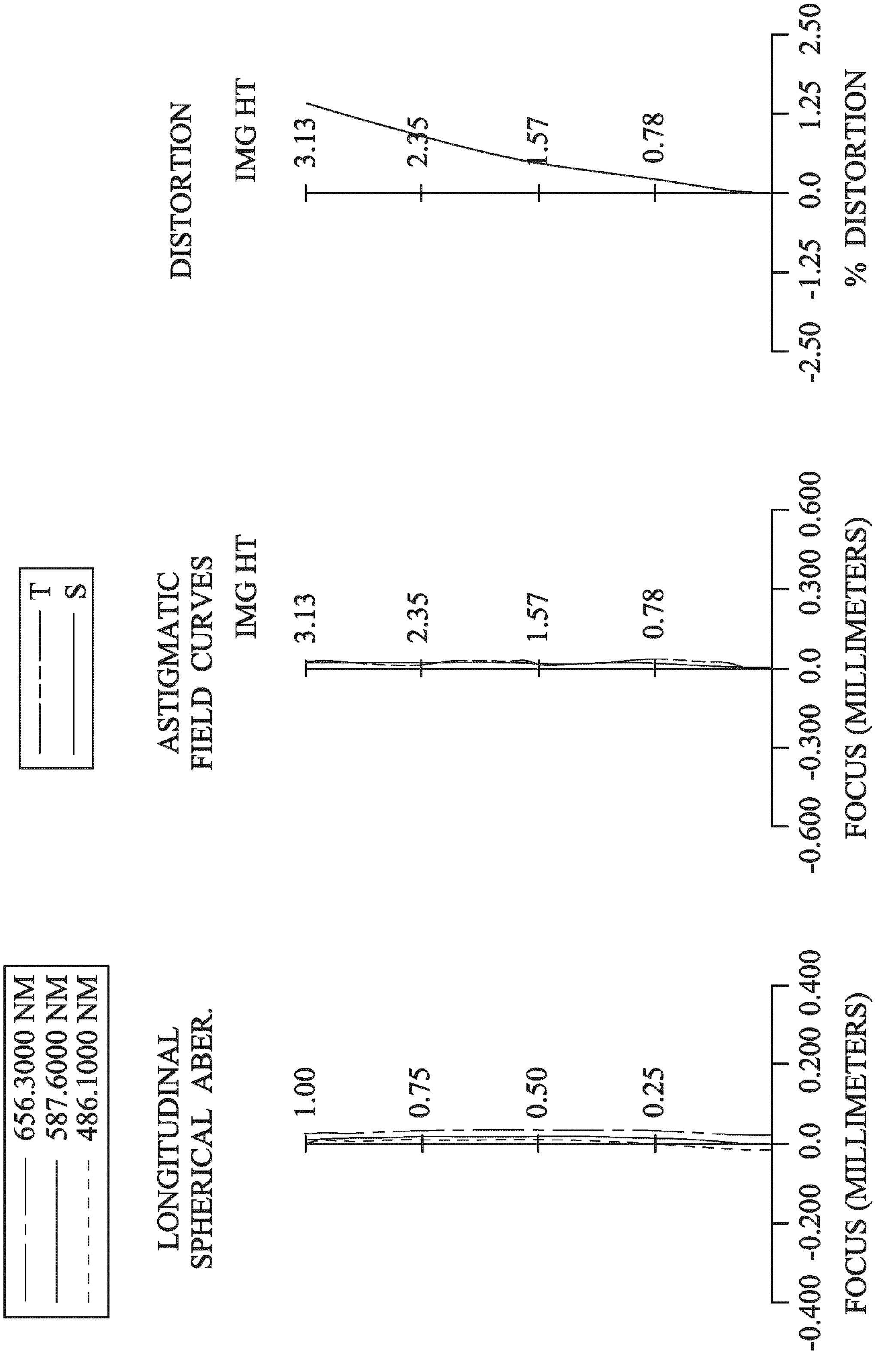
656.3000 NM
587.6000 NM
486.1000 NM
LONGITUDINAL
SPHERICAL ABER.
1.00
0.75
0.50
0.25
-0.400 -0.200 0.0 0.200 0.400
FOCUS (MILLIMETERS)
T
S
ASTIGMATIC
FIELD CURVES
IMG HT
3.13
2.35
1.57
0.78
-0.600 -0.300 0.0 0.300 0.600
FOCUS (MILLIMETERS)
DISTORTION
IMG HT
3.13
2.35
1.57
0.78
-2.50 -1.25 0.0 1.25 2.50
% DISTORTION

Fig. 12C

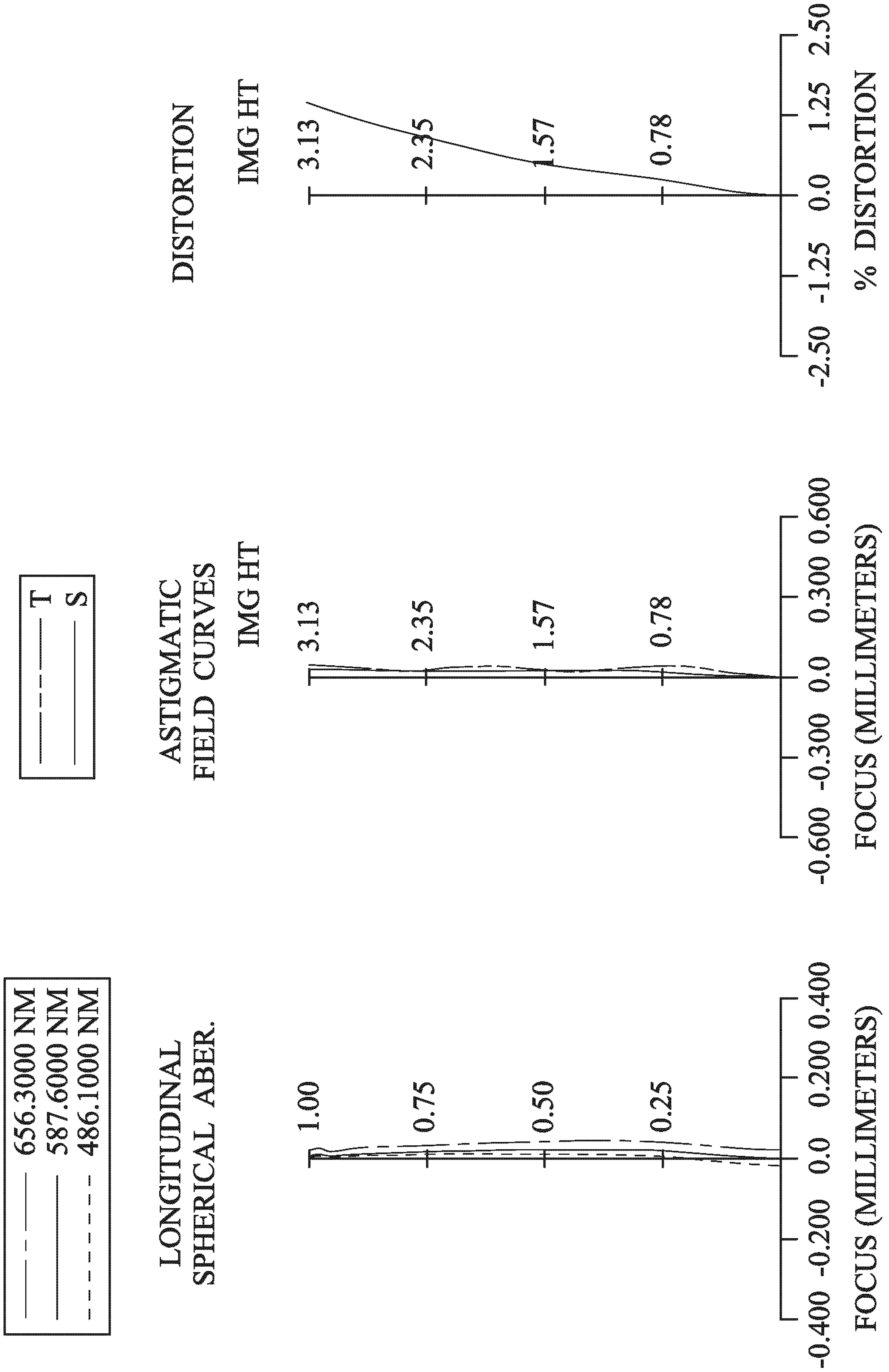

656.3000 NM
587.6000 NM
486.1000 NM
LONGITUDINAL
SPHERICAL ABER.
1.00
0.75
0.50
0.25
-0.400 -0.200 0.0 0.200 0.400
FOCUS (MILLIMETERS)
T
S
ASTIGMATIC
FIELD CURVES
IMG HT
3.13
2.35
1.57
0.78
-0.600 -0.300 0.0 0.300 0.600
FOCUS (MILLIMETERS)
DISTORTION
IMG HT
3.13
2.35
1.57
0.78
-2.50 -1.25 0.0 1.25 2.50
% DISTORTION


Fig. 12D

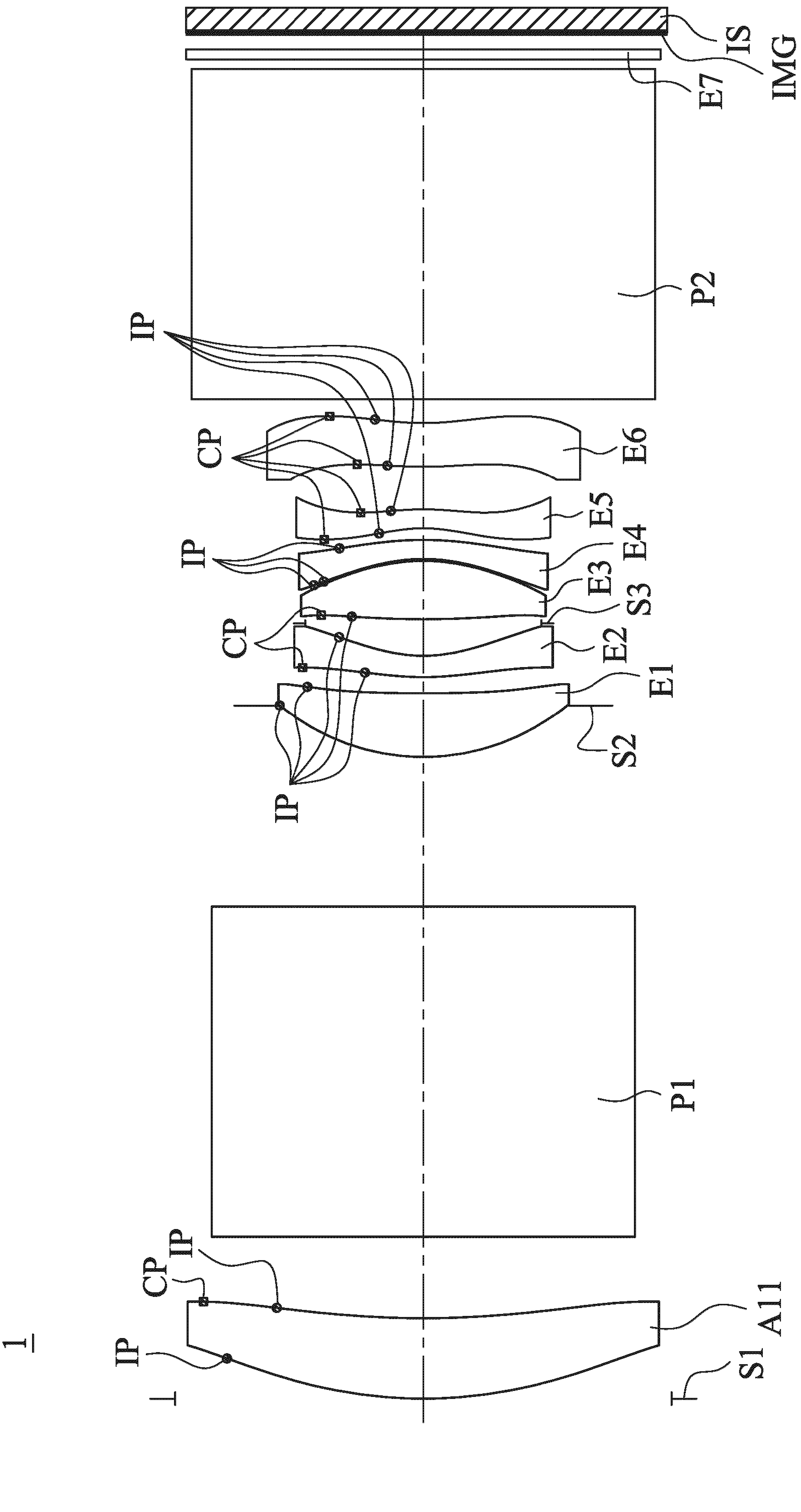


Fig. 13A

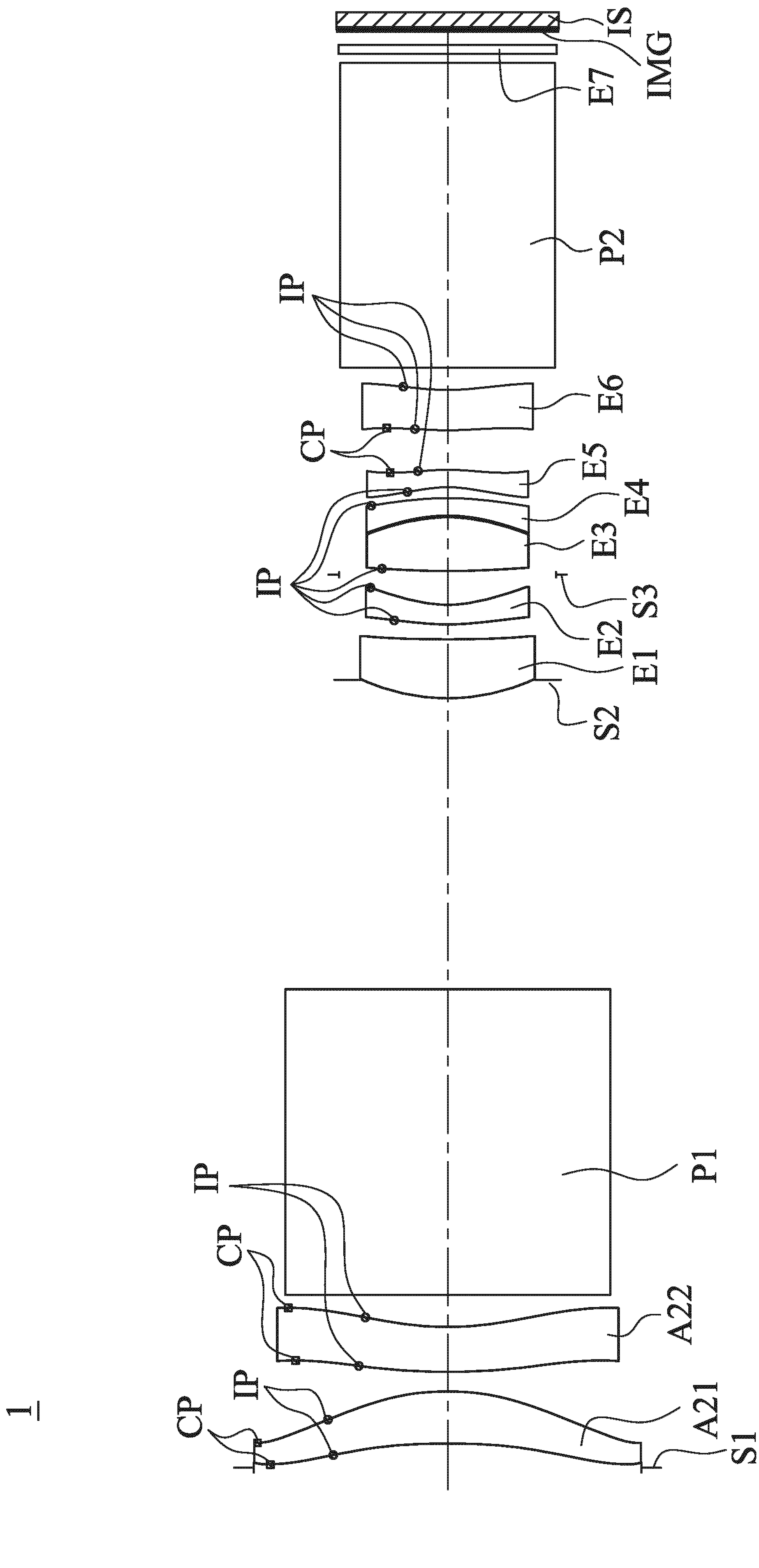


Fig. 13B

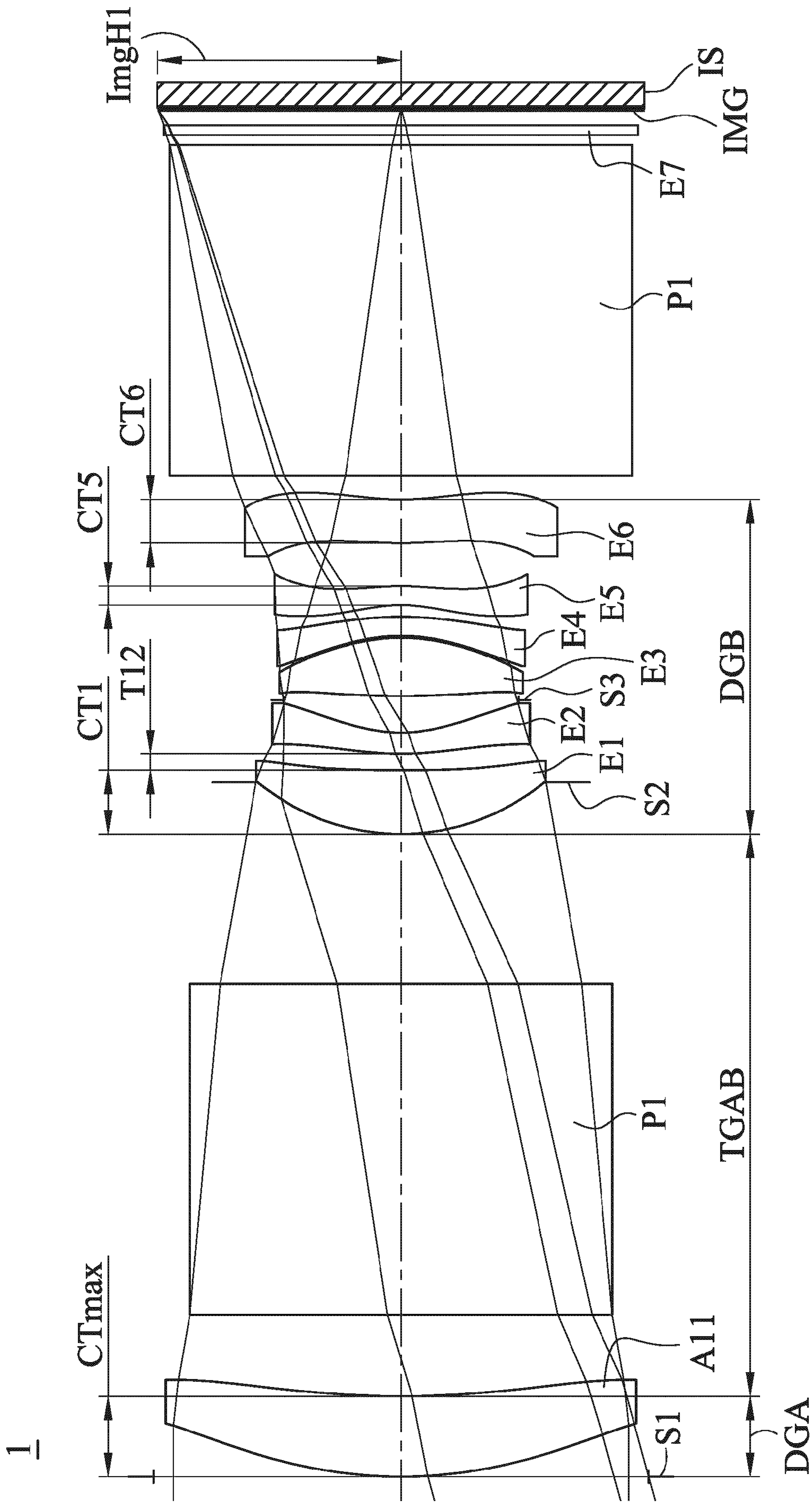
1
ImgH1
IS
IMG
E7
P1
CT6
CT5
E6
E5
E4
E3
DGB
T12
CT1
S3
E2
E1
S2
TGAB
P1
CTmax
A11
S1
DGA

Fig. 13C

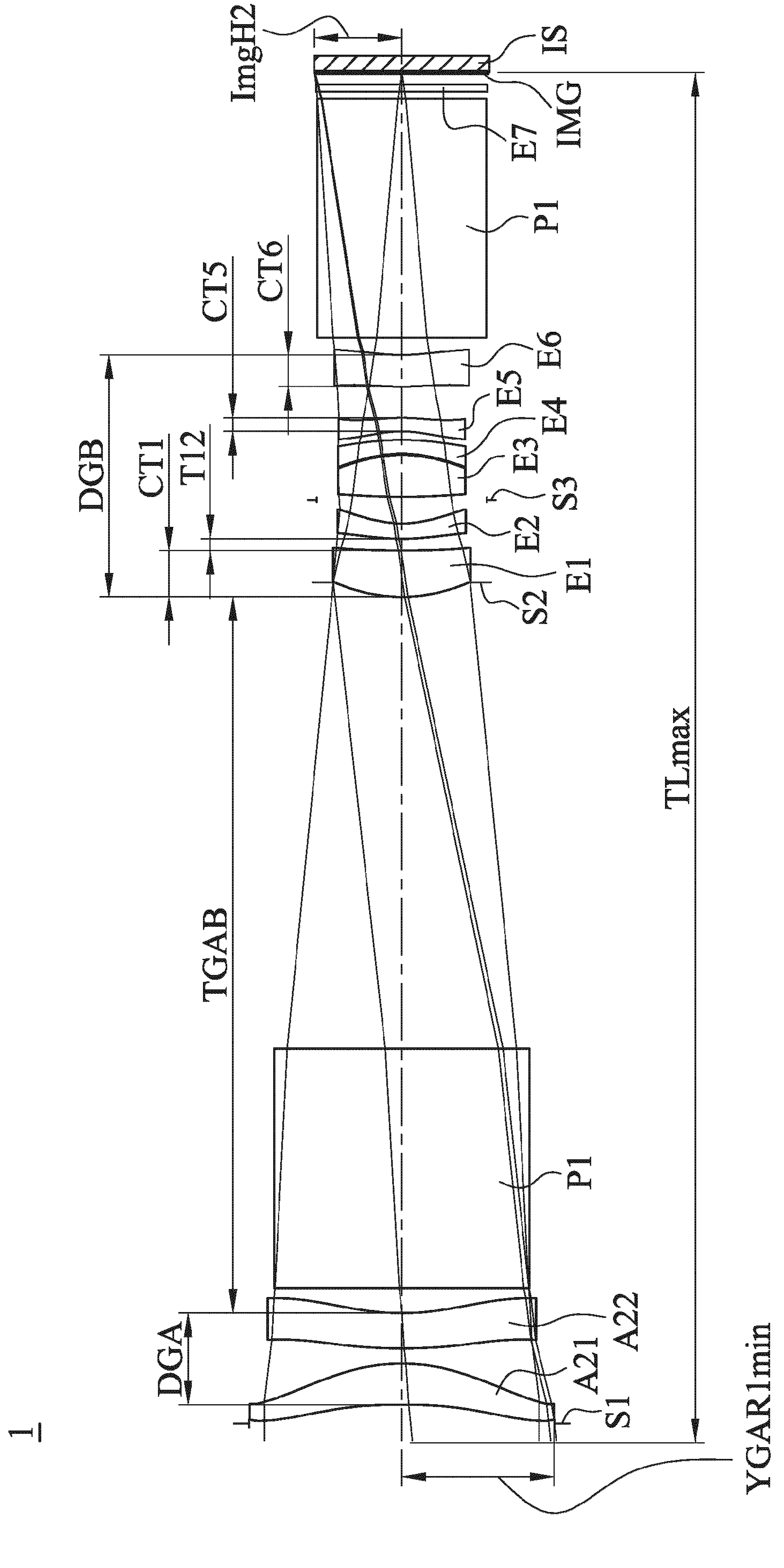
1
ImgH2
IS
IMG
E7
P1
CT5
CT6
E6
E5
E4
DGB
CT1
T12
E3
S3
E2
E1
S2
TLmax
TGAB
P1
A22
A21
DGA
A1
S1
YGAR1min

Fig. 13D

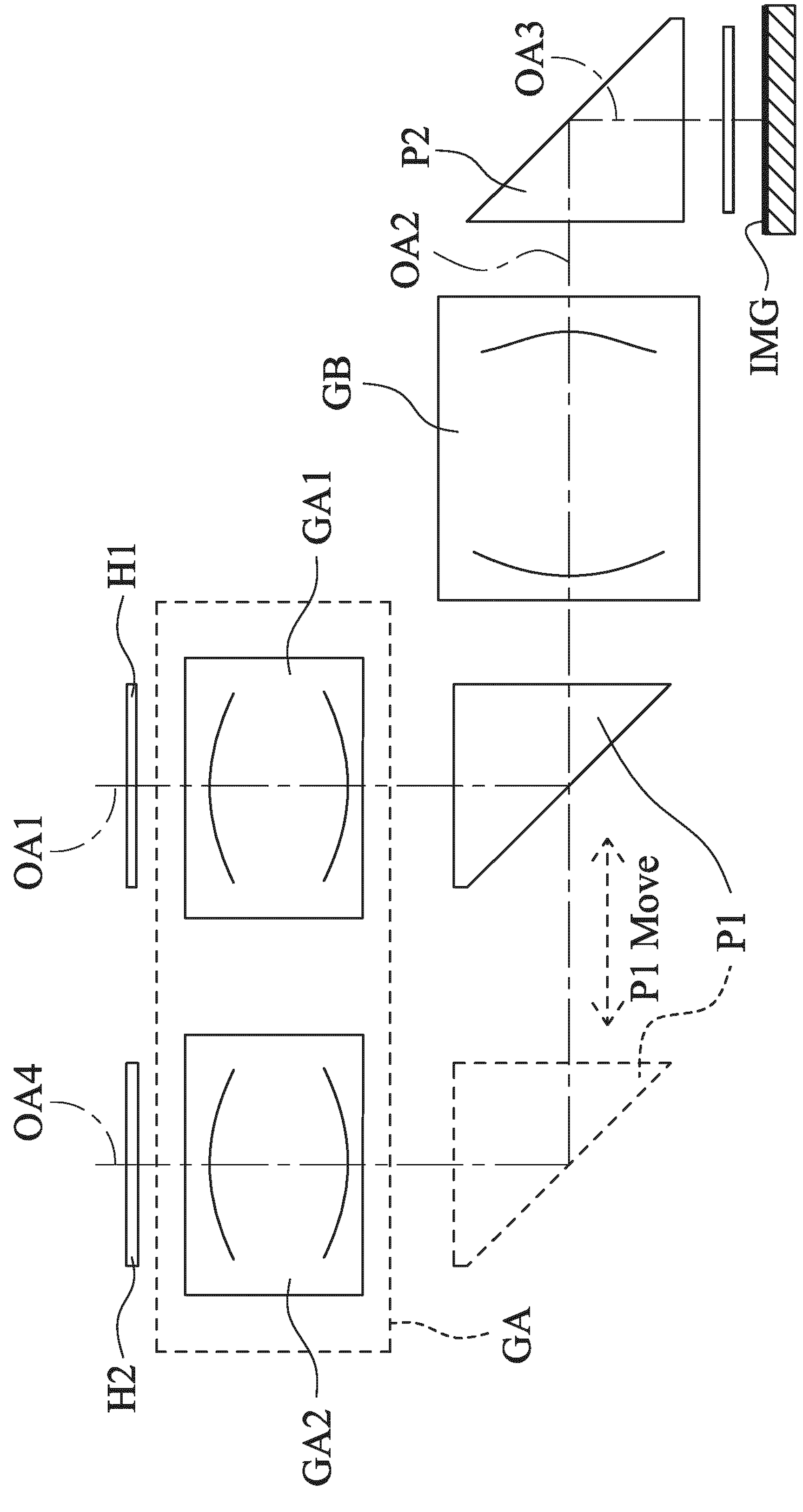


Fig. 14A

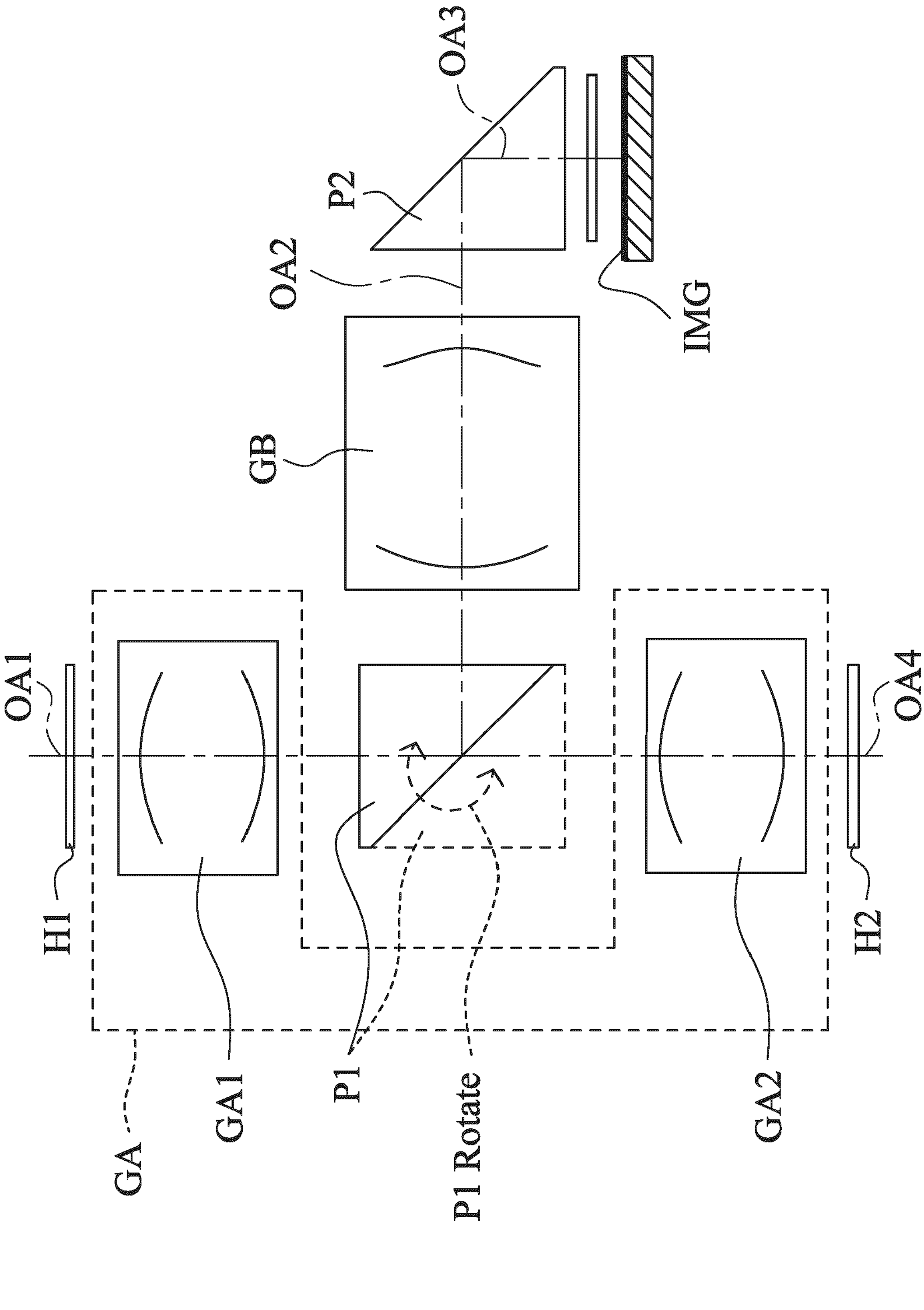


Fig. 14B

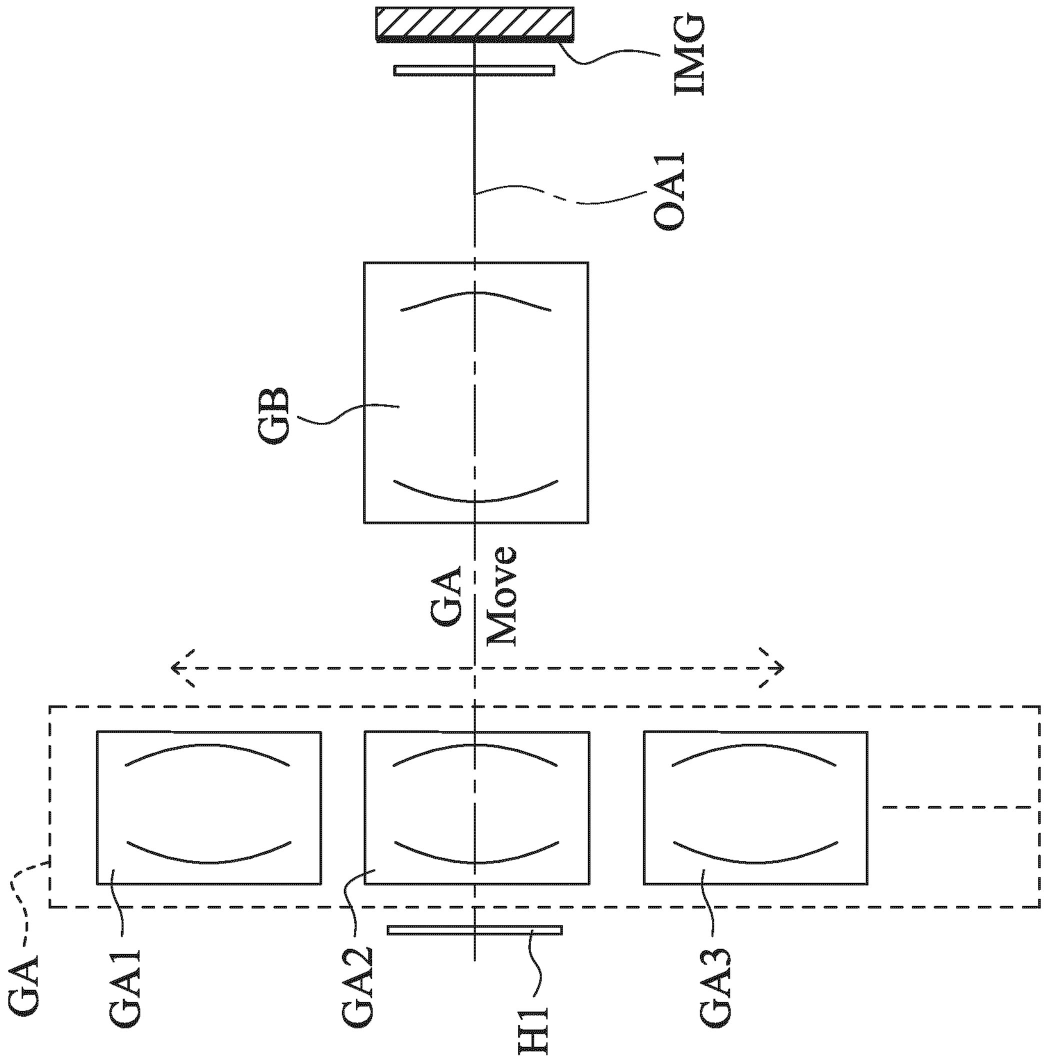


Fig. 14C

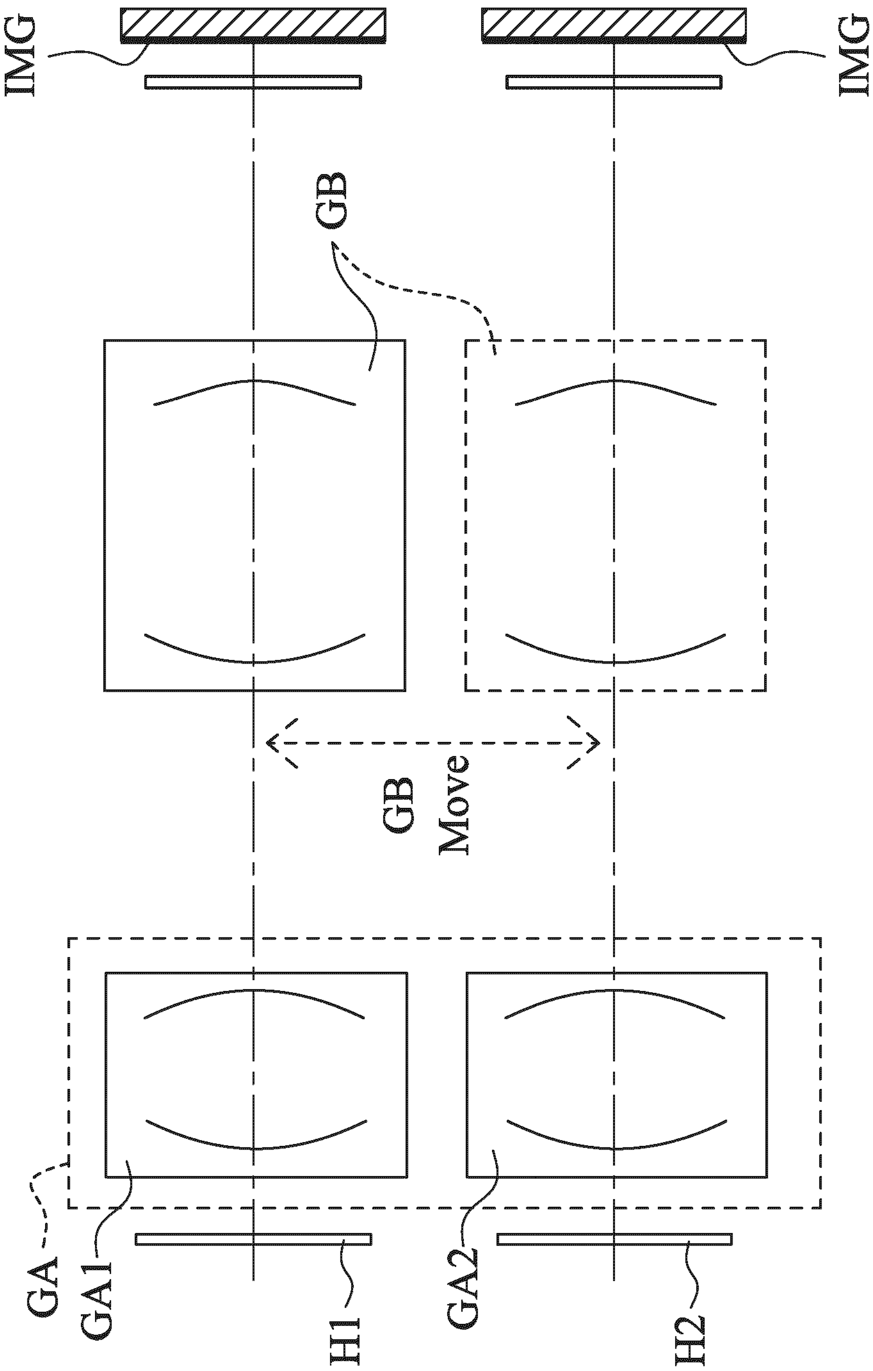


Fig. 14D

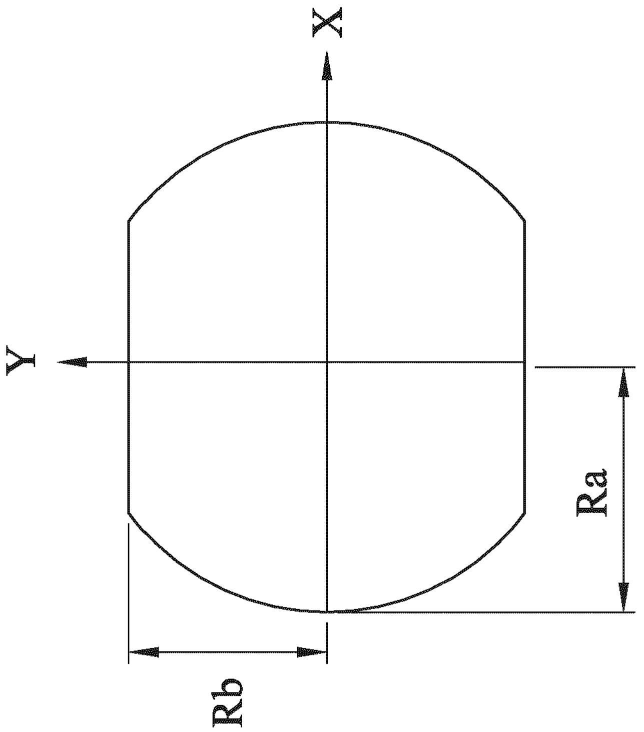


Fig. 15B

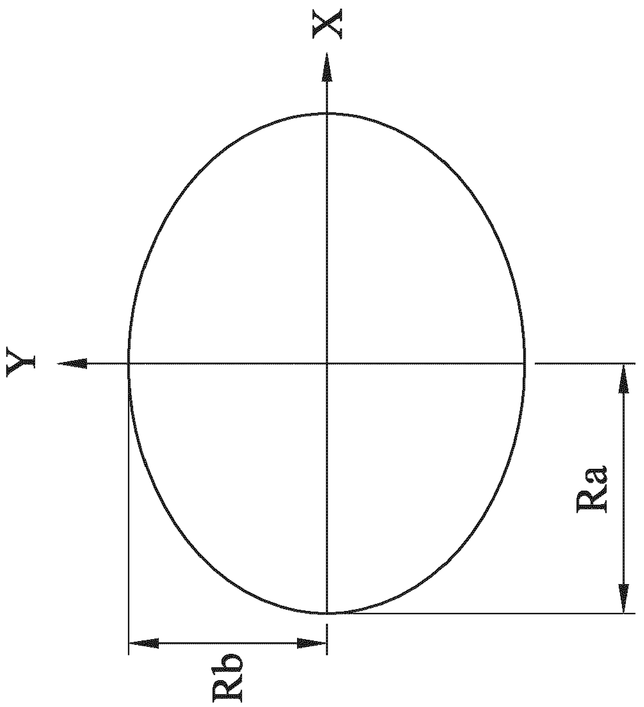


Fig. 15A

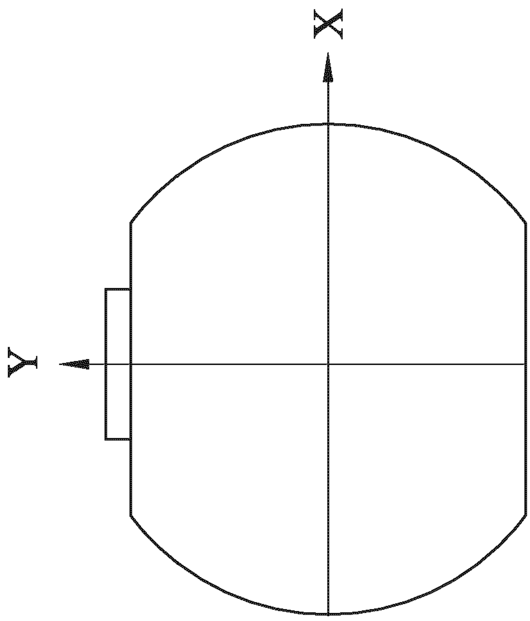


Fig. 16A

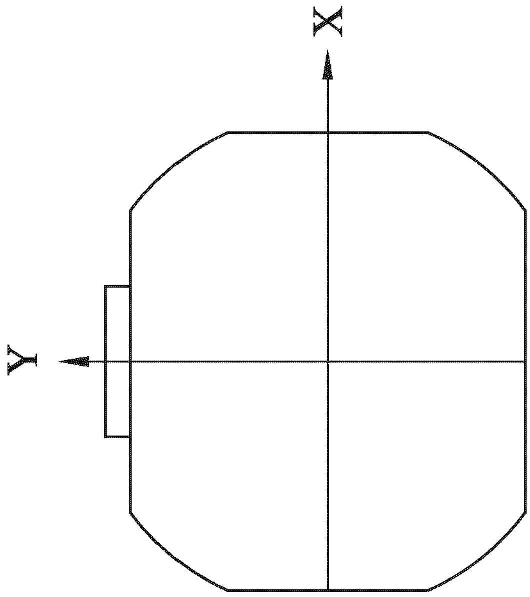


Fig. 16B

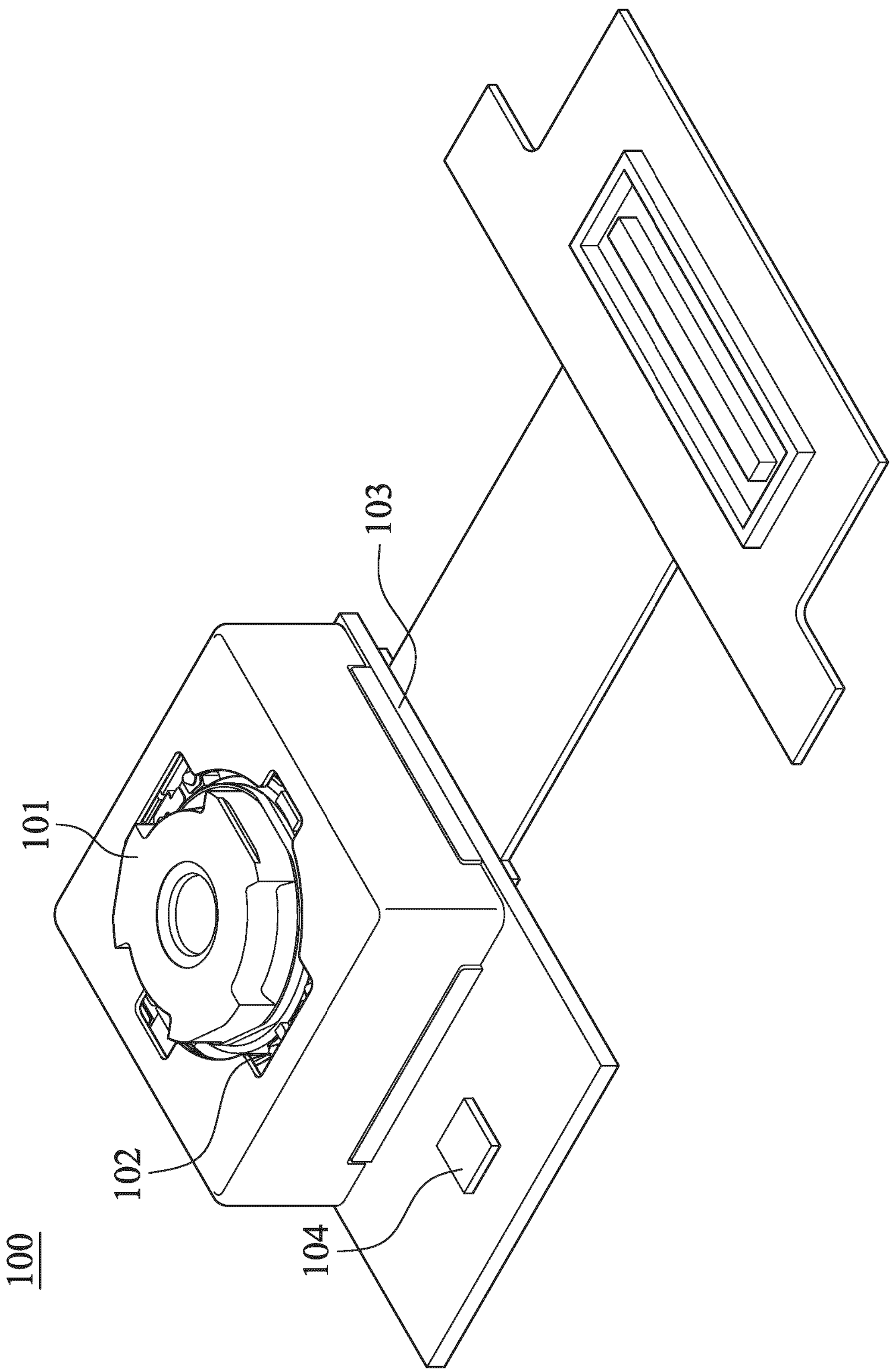


Fig. 17

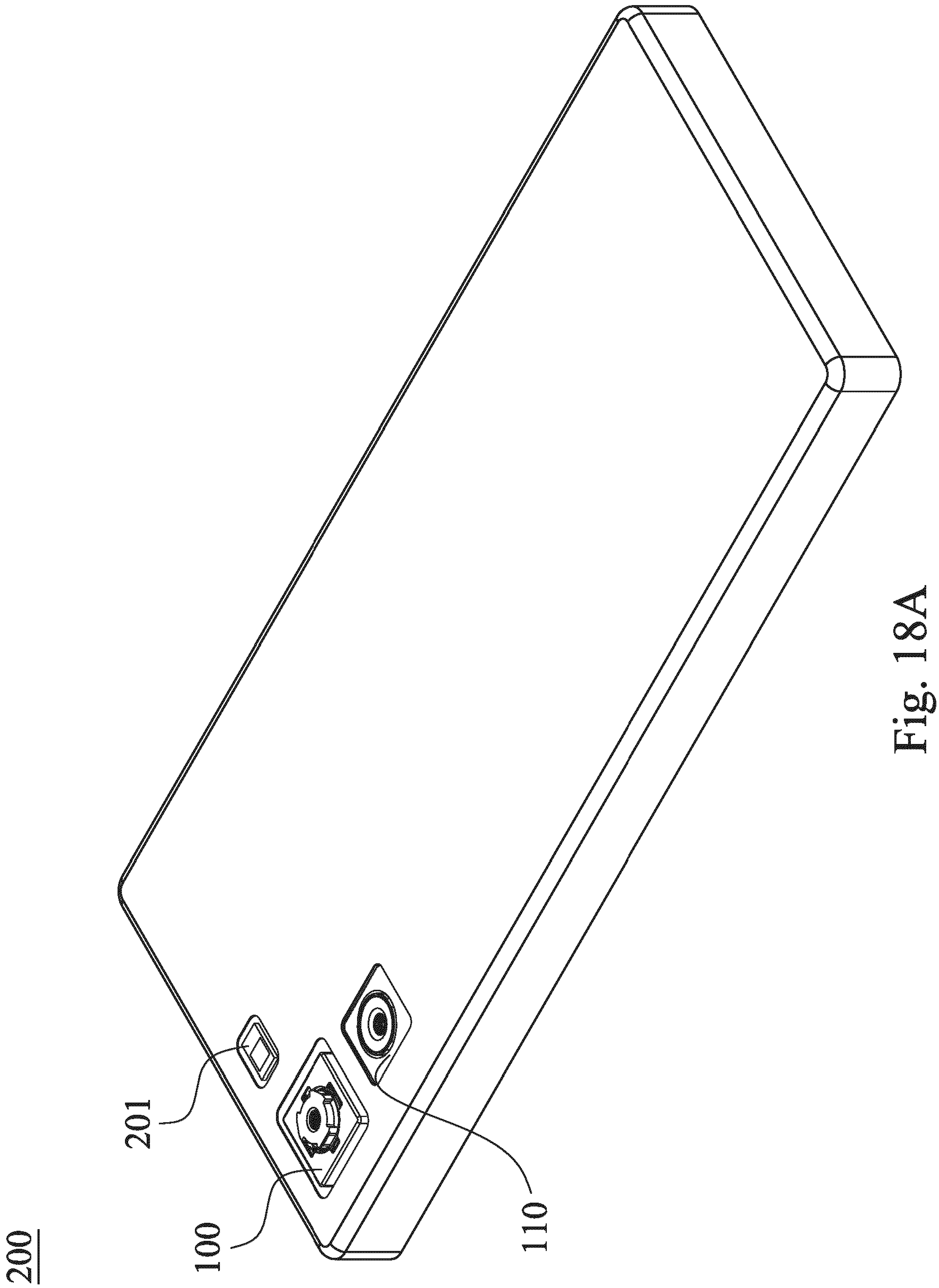


Fig. 18A

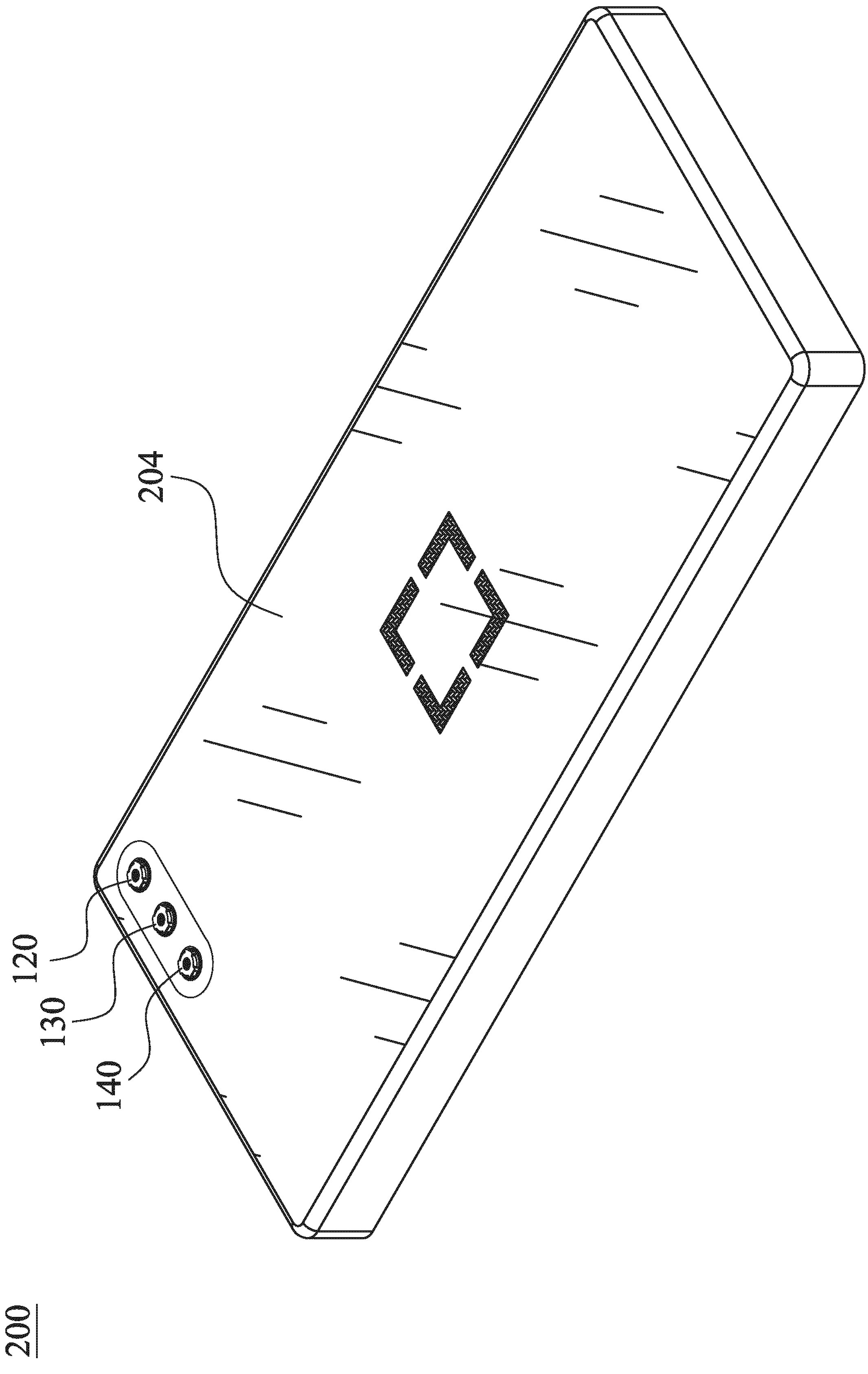


Fig. 18B

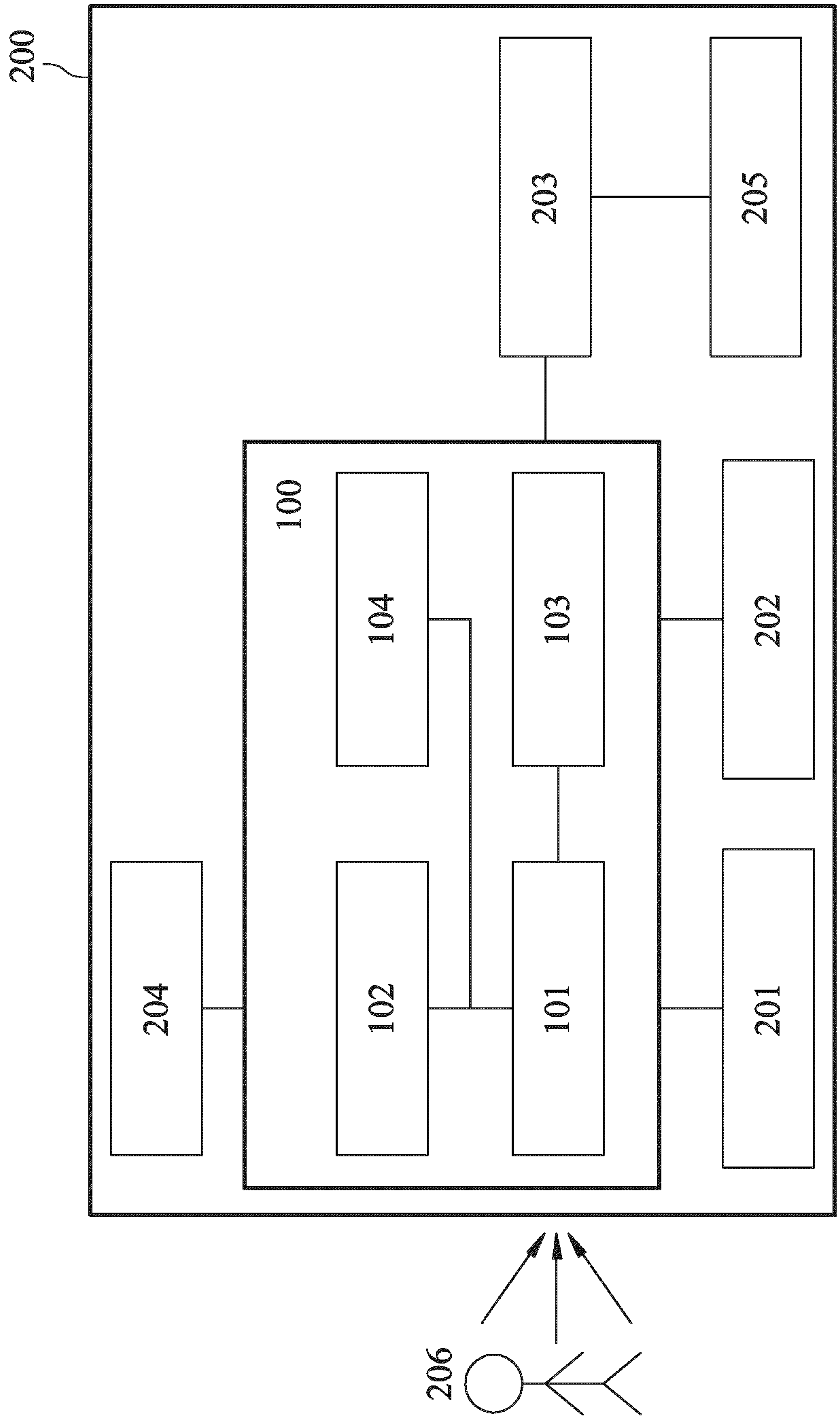


Fig. 18C

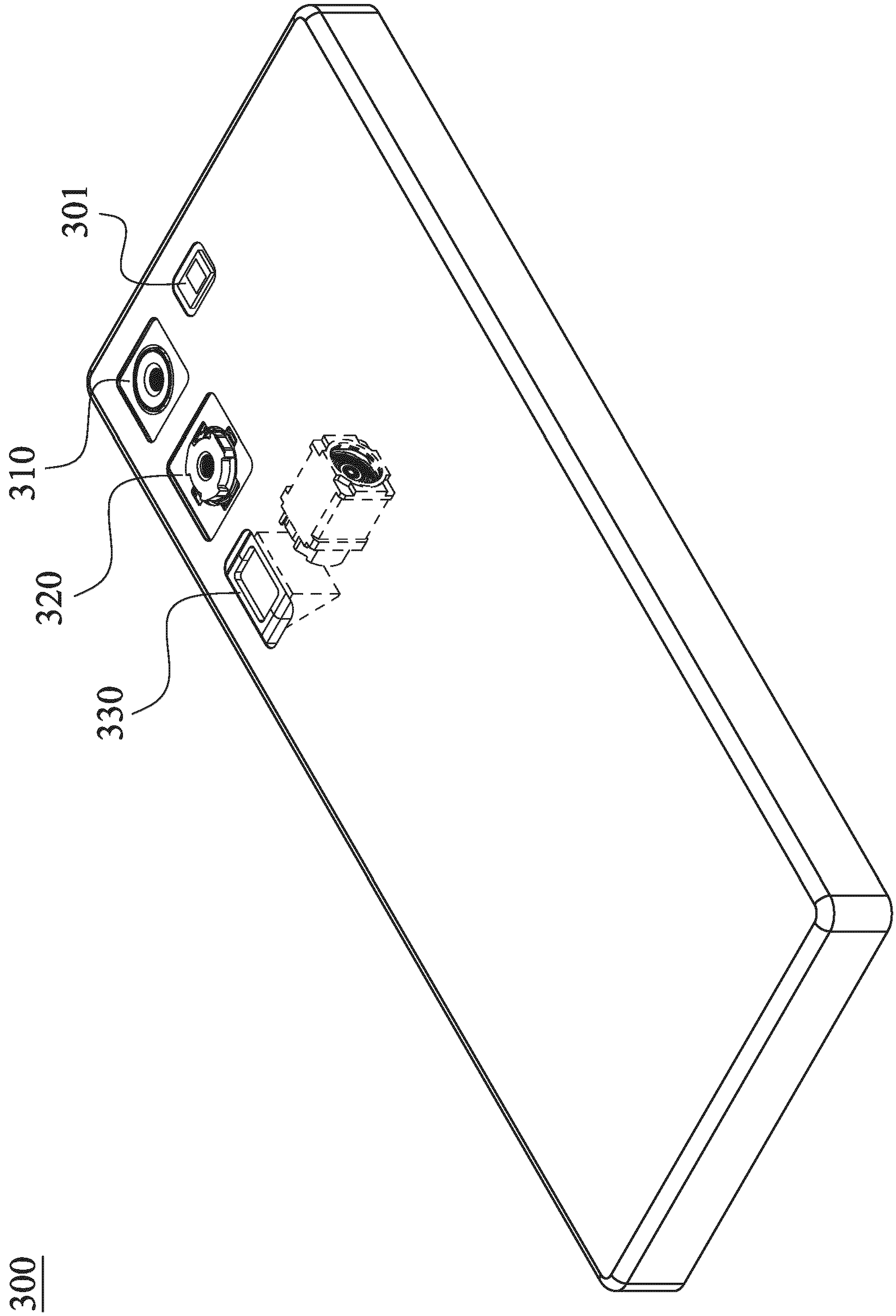


Fig. 19

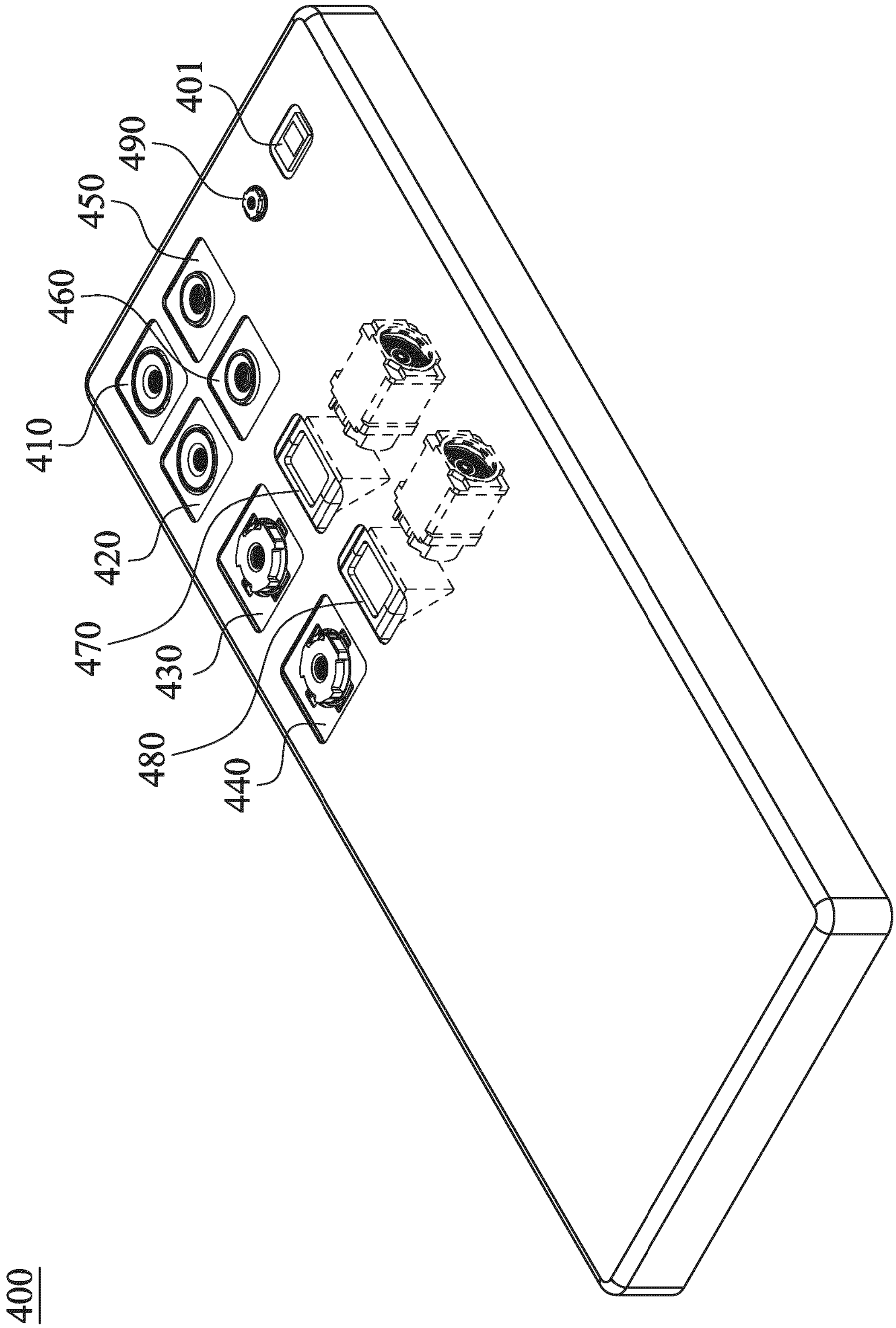


Fig. 20

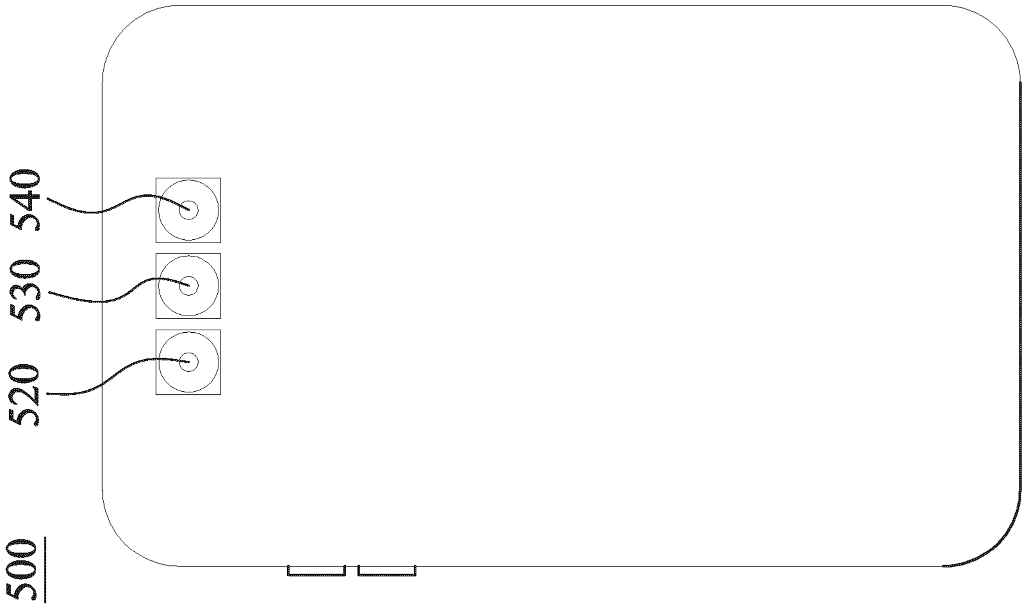


Fig. 21B

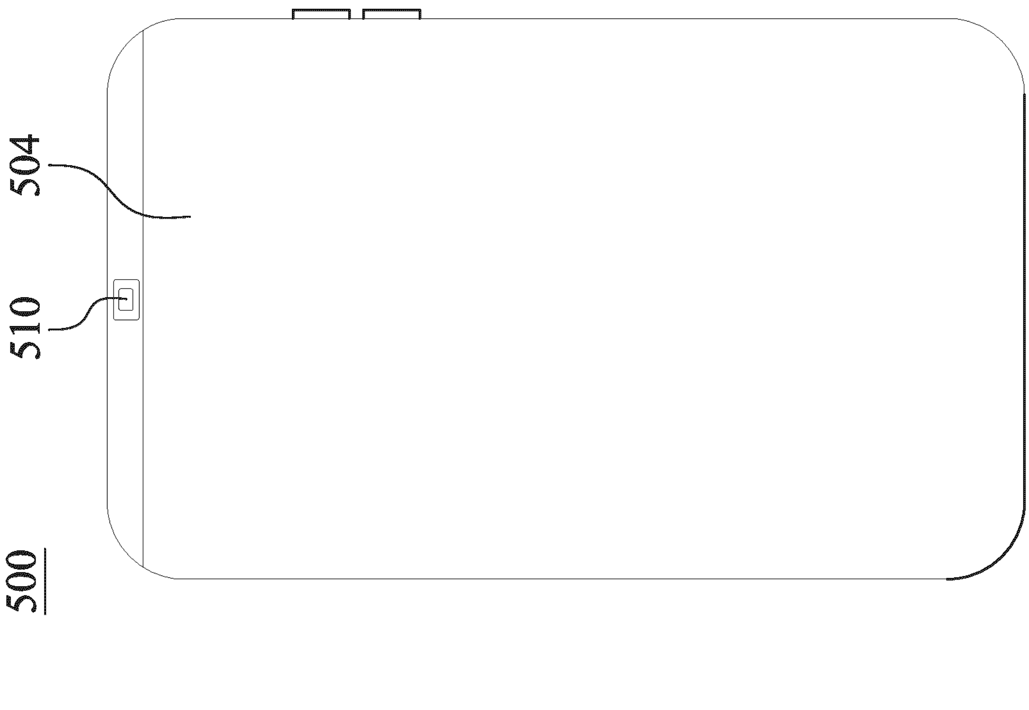


Fig. 21A